(19) Europäisches Patentamt
European Patent Office
Office européen des brevets

(11) EP 4 259 748 B1

(12) EUROPEAN PATENT SPECIFICATION

(45) Date of publication and mention of the grant of the patent:
**30.07.2025 Bulletin 2025/31**

(21) Application number: **21820275.2**

(22) Date of filing: **08.12.2021**

(51) International Patent Classification (IPC):
***C09K 19/20** (2006.01)* ***C09K 19/16** (2006.01)*
***C09K 19/04** (2006.01)* ***C09K 19/30** (2006.01)*
***C09K 19/12** (2006.01)*

(52) Cooperative Patent Classification (CPC):
**C09K 19/2014; C09K 19/16;** C09K 2019/0448; C09K 2019/0466; C09K 2019/123; C09K 2019/3004; C09K 2019/301

(86) International application number:
**PCT/EP2021/084684**

(87) International publication number:
**WO 2022/122780 (16.06.2022 Gazette 2022/24)**

# (54) LIQUID CRYSTAL MIXTURE AND LIQUID CRYSTAL DISPLAY

FLÜSSIGKRISTALLMISCHUNG UND FLÜSSIGKRISTALLANZEIGE

MÉLANGE DE CRISTAUX LIQUIDES ET ÉCRAN À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2020 EP 20213542**

(43) Date of publication of application:
**18.10.2023 Bulletin 2023/42**

(73) Proprietor: **Merck Patent GmbH**
**64293 Darmstadt (DE)**

(72) Inventors:
- **LIETZAU, Lars**
**64293 DARMSTADT (DE)**
- **SIEMIANOWSKI, Simon**
**64293 DARMSTADT (DE)**

(74) Representative: **Merck Patent Association**
**Merck Patent GmbH**
**64271 Darmstadt (DE)**

(56) References cited:
**WO-A1-2019/206791 WO-A1-2020/245084**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

The invention relates to compounds of formula I,

$$R^{11}\text{-}Sp^{11}\text{-}X^{11}[\text{-}A\text{-}Z]_o\text{-}A^{11}\text{-}CY^{11}\text{=}CY^{12}[\text{-}C\text{=}O]_x[\text{-}O]_y\text{-}A[\text{-}Z\text{-}A]_p\text{-}X^{21}\text{-}Sp^{21}\text{-}R^{21} \qquad I$$

wherein $R^{11}$, $R^{21}$, $A^{11}$, A, Z, $X^{11}$, $X^{21}$, $Y^{11}$, $Y^{12}$, $Sp^{11}$, $Sp^{21}$, o and p have one of the meanings as given in claim 1. The invention further relates to a method of production of said compounds, to the use of said compounds in LC media and to LC media comprising one or more compounds of formula I. Further, the invention relates to a method of production of such LC media, to the use of such media in LC devices, and to a LC device comprising a LC medium according to the present invention. The present invention further relates to a process for the fabrication such liquid crystal display and to the use of the liquid crystal mixtures according to the invention for the fabrication of such liquid crystal display.

### Background and Prior Art

Liquid-crystalline media have been used for decades in electro-optical displays for information display. The liquid crystal displays used at present are usually those of the TN ("twisted nematic") type. However, these have the disadvantage of a strong viewing-angle dependence of the contrast.

In addition, so-called VA ("vertically aligned") displays are known which have a broader viewing angle. The LC cell of a VA display contains a layer of an LC medium between two transparent electrodes, where the LC medium usually has a negative value of the dielectric (DC) anisotropy. In the switched-off state, the molecules of the LC layer are aligned perpendicular to the electrode surfaces (homeotropically) or have a tilted homeotropic alignment. On application of an electrical voltage to the two electrodes, a realignment of the LC molecules parallel to the electrode surfaces takes place. Furthermore, so-called IPS ("in plane switching") displays and later, FFS ("fringe-field switching") displays have been reported (see, inter alia, S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, i.e. a strong electric field close to the edge of the electrodes, and, throughout the cell, an electric field which has both a strong vertical component and a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

Furthermore, FFS displays have been disclosed (see S.H. Lee et al., Appl. Phys. Lett. 73(20), 1998, 2882-2883 and S.H. Lee et al., Liquid Crystals 39(9), 2012, 1141-1148), which have similar electrode design and layer thickness as FFS displays, but comprise a layer of an LC medium with negative dielectric anisotropy instead of an LC medium with positive dielectric anisotropy. The LC medium with negative dielectric anisotropy shows a more favorable director orientation that has less tilt and more twist orientation compared to the LC medium with positive dielectric anisotropy, as a result of which these displays have a higher transmission.

A further development are the so-called PS (polymer sustained) or PSA (polymer sustained alignment) displays, for which the term "polymer stabilised" is also occasionally used. The PSA displays are distinguished by the shortening of the response times without significant adverse effects on other parameters, such as, in particular, the favourable viewing-angle dependence of the contrast.

In these displays, a small amount (for example 0.3% by weight, typically < 1% by weight) of one or more polymerizable compound(s) is added to the LC medium and, after introduction into the LC cell, is polymerised or crosslinked *in situ,* usually by UV photopolymerization, between the electrodes with or without an applied electrical voltage. The addition of polymerizable mesogenic or liquid-crystalline compounds, also known as reactive mesogens or "RMs", to the LC mixture has proven particularly suitable. PSA technology has hitherto been employed principally for LC media having negative dielectric anisotropy.

Unless indicated otherwise, the term "PSA" is used below as representative of PS displays and PSA displays.

In the meantime, the PSA principle is being used in diverse classical LC displays. Thus, for example, PSA-VA, PSA-OCB, PSA-IPS, PSA-FFS and PSA-TN displays are known. The polymerisation of the polymerizable compound(s) preferably takes place with an applied electrical voltage in the case of PSA-VA and PSA-OCB displays, and with or without an applied electrical voltage in the case of PSA-IPS displays. As can be demonstrated in test cells, the PS(A) method results in a 'pretilt' in the cell. In the case of PSA-OCB displays, for example, it is possible for the bend structure to be stabilised so that an offset voltage is unnecessary or can be reduced. In the case of PSA-VA displays, the pretilt has a positive effect on the response times. A standard MVA or PVA pixel and electrode layout can be used for PSA-VA displays. In addition, however, it is also possible, for example, to manage with only one structured electrode side and no protrusions, which significantly simplifies production and at the same time results in very good contrast at the same time as very good light transmission.

PSA-VA displays are described, for example, in JP 10-036847 A, EP 1 170 626 A2, US 6,861,107, US 7,169,449, US 2004/0191428 A1, US 2006/0066793 A1 and US 2006/0103804 A1. PSA-OCB displays are described, for example, in T.-J- Chen et al., Jpn. J. Appl. Phys. 45, 2006, 2702-2704 and S. H. Kim, L.-C- Chien, Jpn. J. Appl. Phys. 43, 2004, 7643-7647. PSA-IPS displays are described, for example, in US 6,177,972 and Appl. Phys. Lett. 1999, 75(21), 3264. PSA-TN displays are described, for example, in Optics Express 2004, 12(7), 1221. PSA-VA-IPS displays are disclosed, for example, in WO 2010/089092 A1.

Like the conventional LC displays described above, PSA displays can be operated as active-matrix or passive-matrix displays. In the case of active-matrix displays, individual pixels are usually addressed by integrated, non-linear active elements, such as, for example, transistors (for example thin-film transistors or "TFTs"), while in the case of passive-matrix displays, individual pixels are usually addressed by the multiplex method, both methods being known from the prior art.

In the prior art, polymerizable compounds of the following formula, for example, are used for PSA-VA:

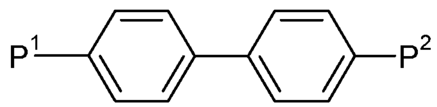

in which P denotes a polymerizable group, usually an acrylate or methacrylate group, as described, for example, in US 7,169,449.

Below the polymer layer which induces the above mentioned pretilt, an orientation layer - usually a polyimide - provides the initial alignment of the liquid crystal regardless of the polymer stabilisation step of the production process.

The effort for the production of a polyimide layer, treatment of the layer and improvement with bumps or polymer layers is relatively great. A simplifying technology which on the one hand reduces production costs and on the other hand helps to optimise the image quality (viewing-angle dependence, contrast, response times) would therefore be desirable. Rubbed polyimide has been used for a long time to align liquid crystals. The rubbing process causes a number of problems: mura, contamination, problems with static discharge, debris, etc.

Photoalignment is a technology for achieving liquid crystal (LC) alignment that avoids rubbing by replacing it with a light-induced orientational ordering of the alignment surface. This can be achieved through the mechanisms of photodecomposition, photodimerization, and photo isomerization (N.A. Clark et al. Langmuir 2010, 26(22), 17482-17488, and literature cited therein) by means of polarised light. However, still a suitably derivatised polyimide layer is required that comprises the photoreactive group. A further improvement would be to avoid the use of polyimide at all. For VA displays this was achieved by adding a self-alignment agent to the LC that induces homeotropic alignment *in situ* by a self-assembling mechanism as disclosed in WO 2012/104008 and WO 2012/038026.

N.A. Clark et al. Langmuir 2010, 26(22), 17482-17488 have shown that it is possible to self-assemble a compound of the following structure

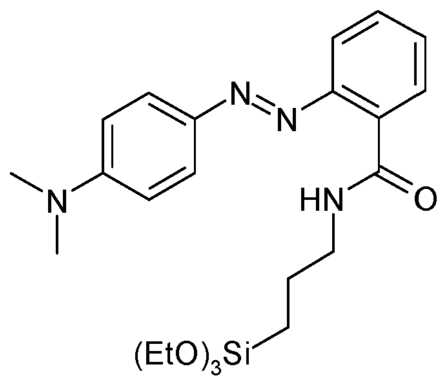

onto a substrate to give a monolayer that is able to be photoaligned to induce homogeneous alignment of a liquid crystal. However, a separate step of self-assembly before manufacture of the LC cell is required and the nature of the azo-group causes reversibility of the alignment when exposed to light.

Another functional group known to enable photoalignment is the phenylethenylcarbonyloxy group (cinnamate). Photocrosslinkable cinnamates are known from the prior art, e.g. of the following structure

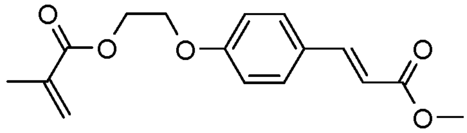

as disclosed in EP0763552. From such compounds, polymers can be obtained, for example the following

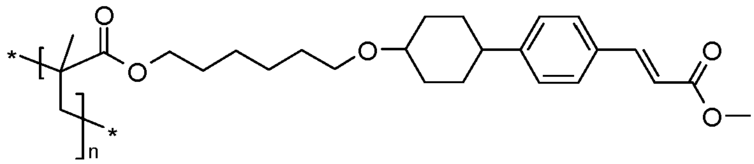

This material was used in a photoalignment process, as disclosed in WO 99/49360, to give an orientation layer for liquid crystals. A disadvantage of orientation layers obtained by this process is that they give lower voltage holding ratios (VHR) than polyimides.

In WO 00/05189 polymerizable direactive mesogenic cinnamates are disclosed for the use in polymerizable LC mixtures for e.g. optical retarders.

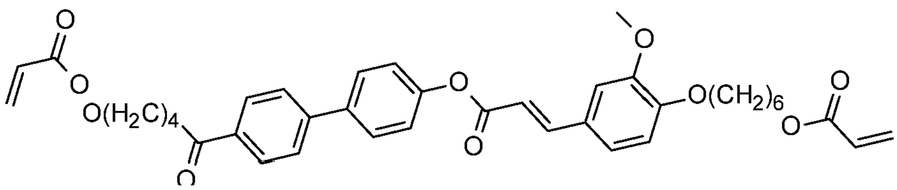

A structurally related compound of the following formula

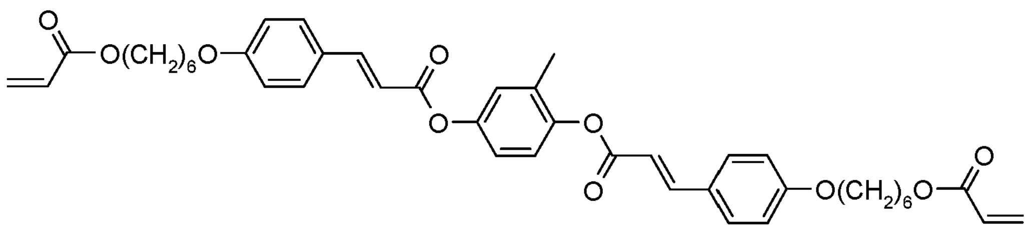

comprising two cinnamic acid moieties is disclosed in GB 2 306 470 A for the use as component in liquid crystalline polymer films. This type of compound has not been used or proposed for the use as photoaligment agent. Further polymerizable multireactive mesogenic dinnamates are now from WO 2020/245084 A1 and WO 2019/206791 A1.

A very similar compound is published in B.M.I. van der Zande et al., Liquid Crystals, Vol. 33, No. 6, June 2006, 723-737, in the field of liquid crystalline polymers for patterned retarders, and has the following structure:

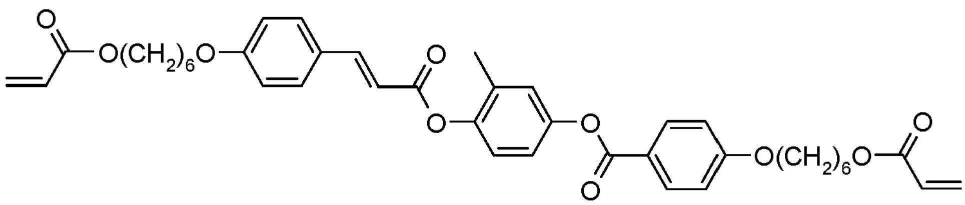

WO 2017/102068 A1 discloses the same structure for the purpose of a polyimide-free homogeneous photoalignment method.

Further, M.H. Lee et al. published in Liquid Crystals (https://doi.org/10.1080/02678292.2018.1441459) a polyimide-free homogeneous photoalignment method induced by polymerizable liquid crystal containing cinnamate moiety of the following formula:

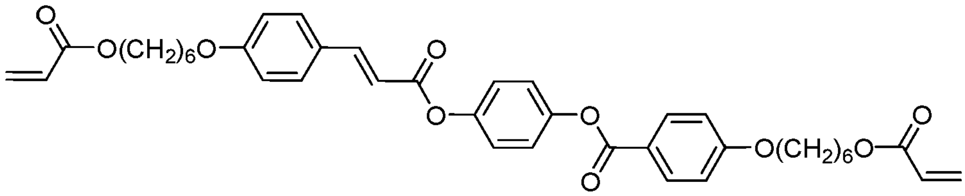

WO 2018/008581 A1 provides a liquid crystal display device that is equipped with: a liquid crystal layer containing a liquid crystal material; a sealing material positioned so as to surround the liquid crystal layer when seen from a planar view; a pair of substrates which sandwich the liquid crystal layer and are joined to one another by the sealing material; and an alignment control layer positioned so as to contact the liquid crystal layer in the region surrounded by the sealing material when seen from a planar view. Therein, the alignment control layer aligns the liquid crystal material in the horizontal direction relative to the substrate surface, and contains a polymer containing a unit derived from at least a specific first monomer of the following formulae:

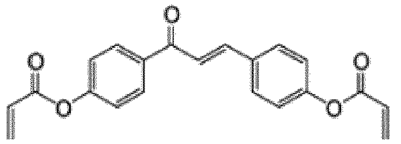
(2-1)

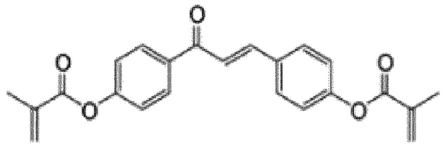
(2-2)

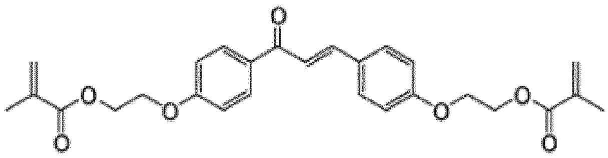
(2-3)

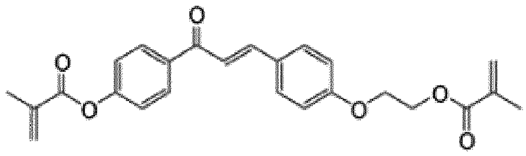
(2-4)

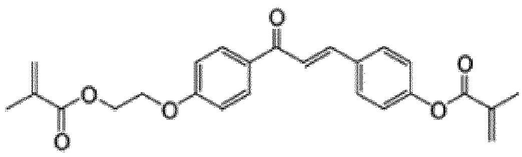
(2-5)

WO 2018/139507 A1 addresses the problem of controlling the alignment of liquid crystal molecules of a liquid crystal display element not having an alignment film by using a non-coloured alignable monomer of the following formulae:

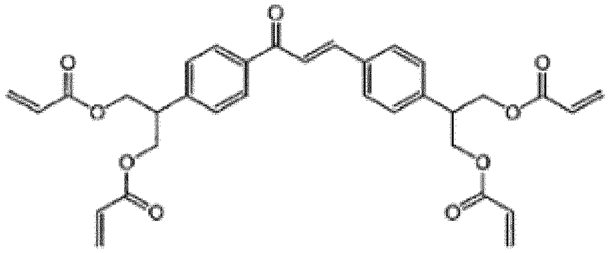
(A-2-3)

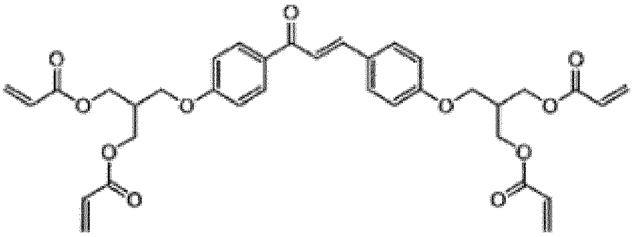

(A-2-4)

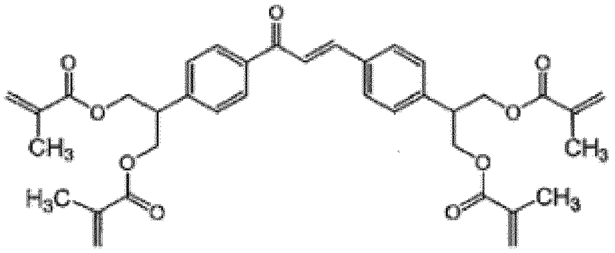

(A-2-5)

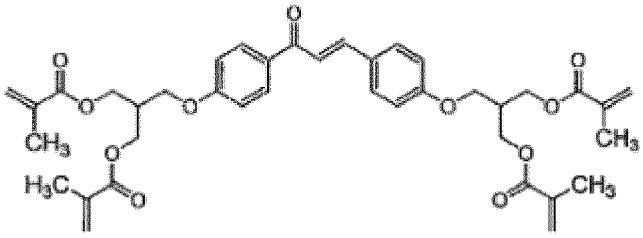

(A-2-6)

Both types of the above-suggested monomers are limited in their solubility in modern liquid crystalline mixtures and limited in their processability especially in view of modern methods for mass production.

Thus, there is a great demand for new photoreactive mesogens that enable photoalignment of a liquid crystal mixture in *situ, i.e.* after assembly of the display, by means of linearly polarized light.

In addition to this requirement, the corresponding photoreactive mesogen should provide, preferably at the same time, a liquid crystal display having favourable high dark state and a favourable high voltage holding ratio. Furthermore, the amount of photoreactive mesogens in the nematic LC medium should be a low as possible and the process for the production should be obtainable from a process that is compatible with common mass production processes, e.g. in terms of favourable short processing times.

Other aims of the present invention are immediately evident to the person skilled in the art from the following detailed description.

Surprisingly, the inventors have found out that one or more of the above-mentioned aims can be achieved by providing a compound according to claim 1.

Terms and Definitions

A photoreactive group according to the present invention is a functional group of a molecule that causes a change of the geometry of the molecule either by bond rotation, skeletal rearrangement or atom- or group- transfer, or by dimerization, upon irradiation with light of a suitable wavelength that can be absorbed by the molecule.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerisation. Typical mesogenic groups are, for example, rigid rod- or disc-shaped units. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

A photoreactive mesogen according to the present invention is a mesogenic compound comprising one or more photoreactive groups.

Examples of photoreactive groups are -C=C- double bonds and azo groups (-N=N-).

Examples of molecular structures and sub-structures comprising such photoreactive groups are stilbene, (1,2-difluoro-2-phenyl-vinyl)-benzene, cinnamate, 4-phenylbut-3-en-2-one, chalcone, coumarin, chromone, pentalenone and azobenzene.

According to the present application, the term "linearly polarised light" means light, which is at least partially linearly polarized. Preferably, the aligning light is linearly polarized with a degree of polarization of more than 5:1. Wavelengths, intensity and energy of the linearly polarised light are chosen depending on the photosensitivity of the photoalignable material. Typically, the wavelengths are in the UV-A, UV-B and/or UV-C range or in the visible range. Preferably, the linearly polarised light comprises light of wavelengths less than 450 nm, more preferably less than 420 nm at the same time the linearly polarised light preferably comprises light of wavelengths longer than 280nm, preferably more than 320nm, more preferably over 350nm.

The term "organic group" denotes a carbon or hydrocarbon group.

The term "carbon group" denotes a mono- or polyvalent organic group containing at least one carbon atom, where this either contains no further atoms (such as, for example, -C≡C-) or optionally contains one or more further atoms, such as, for example, N, O, S, P, Si, Se, As, Te or Ge (for example carbonyl, etc.). The term "hydrocarbon group" denotes a carbon group which additionally contains one or more H atoms and optionally one or more heteroatoms, such as, for example, N, O, S, P, Si, Se, As, Te or Ge.

"Halogen" denotes F, Cl, Br or I.

A carbon or hydrocarbon group can be a saturated or unsaturated group. Unsaturated groups are, for example, aryl, alkenyl or alkynyl groups. A carbon or hydrocarbon radical having 3 or more atoms can be straight-chain, branched and/or cyclic and may also contain spiro links or condensed rings.

The terms "alkyl", "aryl", "heteroaryl", etc., also encompass polyvalent groups, for example alkylene, arylene, heteroarylene, etc.

The term "aryl" denotes an aromatic carbon group or a group derived therefrom. The term "heteroaryl" denotes "aryl" as defined above, containing one or more heteroatoms.

Preferred carbon and hydrocarbon groups are optionally substituted alkyl, alkenyl, alkynyl, alkoxy, alkylcarbonyl, alkoxycarbonyl, alkylcarbonyloxy and alkoxycarbonyloxy having 1 to 40, preferably 1 to 25, particularly preferably 1 to 18, C atoms, optionally substituted aryl or aryloxy having 6 to 40, preferably 6 to 25, C atoms, or optionally substituted alkylaryl, arylalkyl, alkylaryloxy, arylalkyloxy, arylcarbonyl, aryloxycarbonyl, aryl-carbonyloxy and aryloxycarbonyloxy having 6 to 40, preferably 6 to 25, C atoms.

Further preferred carbon and hydrocarbon groups are $C_1$-$C_{40}$ alkyl, $C_2$-$C_{40}$ alkenyl, $C_2$-$C_{40}$ alkynyl, $C_3$-$C_{40}$ allyl, $C_4$-$C_{40}$ alkyldienyl, $C_4$-$C_{40}$ polyenyl, $C_6$-$C_{40}$ aryl, $C_6$-$C_{40}$ alkylaryl, $C_6$-$C_{40}$ arylalkyl, $C_6$-$C_{40}$ alkylaryloxy, $C_6$-$C_{40}$ arylalkyloxy, $C_2$-$C_{40}$ heteroaryl, $C_4$-$C_{40}$ cycloalkyl, $C_4$-$C_{40}$ cycloalkenyl, etc. Particular preference is given to $C_1$-$C_{22}$ alkyl, $C_2$-$C_{22}$ alkenyl, $C_2$-$C_{22}$ alkynyl, $C_3$-$C_{22}$ allyl, $C_4$-$C_{22}$ alkyldienyl, $C_6$-$C_{12}$ aryl, $C_6$-$C_{20}$ arylalkyl and $C_2$-$C_{20}$ heteroaryl.

Further preferred carbon and hydrocarbon groups are straight-chain, branched or cyclic alkyl radicals having 1 to 40, preferably 1 to 25, C atoms, which are unsubstituted or mono- or polysubstituted by F, Cl, Br, I or CN and in which one more non-adjacent $CH_2$ groups may each be replaced, independently of one another, by -C($R^z$)=C($R^z$)-, -C≡C-, -N($R^z$)-, -O-, -S-, -CO-, -CO-O-, -O-CO-, -O-CO-O- in such a way that O and/or S atoms are not linked directly to one another.

$R^z$ preferably denotes H, halogen, a straight-chain, branched or cyclic alkyl chain having 1 to 25 C atoms, in which, in addition, one or more non-adjacent C atoms may be replaced by -O-, -S-, -CO-, -CO-O-, -O-CO- or -O-CO-O- and in which one or more H atoms may be replaced by fluorine, an optionally substituted aryl or aryloxy group having 6 to 40 C atoms, or an optionally substituted heteroaryl or heteroaryloxy group having 2 to 40 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, trifluoromethyl, perfluoro-n-butyl, 2,2,2-trifluoroethyl, perfluorooctyl and perfluorohexyl.

Preferred alkenyl groups are, for example, ethenyl, propenyl, butenyl, pentenyl, cyclopentenyl, hexenyl, cyclohexenyl, heptenyl, cycloheptenyl, octenyl and cyclooctenyl.

Preferred alkynyl groups are, for example, ethynyl, propynyl, butynyl, pentynyl, hexynyl and octynyl.

Preferred alkoxy groups are, for example, methoxy, ethoxy, 2-methoxy-ethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy and n-dodecoxy.

Preferred amino groups are, for example, dimethylamino, methylamino, methylphenylamino and phenylamino.

Aryl and heteroaryl groups can be monocyclic or polycyclic, i.e. they can contain one ring (such as, for example, phenyl) or two or more rings, which may also be fused (such as, for example, naphthyl) or covalently bonded (such as, for example, biphenyl), or contain a combination of fused and linked rings. Heteroaryl groups contain one or more heteroatoms, preferably selected from O, N, S and Se. A ring system of this type may also contain individual non-conjugated units, as is the case, for example, in the fluorene basic structure.

Particular preference is given to mono-, bi- or tricyclic aryl groups having 6 to 25 C atoms and mono-, bi- or tricyclic heteroaryl groups having 2 to 25 C atoms, which optionally contain fused rings and are optionally substituted. Preference is

furthermore given to 5-, 6- or 7-membered aryl and heteroaryl groups, in which, in addition, one or more CH groups may be replaced by N, S or O in such a way that O atoms and/or S atoms are not linked directly to one another.

Preferred aryl groups are derived, for example, from the parent structures benzene, biphenyl, terphenyl, [1,1':3',1"]terphenyl, naphthalene, anthracene, binaphthyl, phenanthrene, pyrene, dihydropyrene, chrysene, perylene, tetracene, pentacene, benzopyrene, fluorene, indene, indenofluorene, spirobifluorene, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimid-azole, phenanthrimidazole, pyridimidazole, pyrazinimidazole, quinoxalin-imidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno [2,3b]thiophene, thieno[3,2b]thiophene, dithienothiophene, dihydrothieno [3,4-b]-1,4-dioxin, isobenzothiophene, dibenzothiophene, benzothiadiazothiophene, or combinations of these groups. The heteroaryl groups may also be substituted by alkyl, alkoxy, thioalkyl, fluorine, fluoroalkyl or further aryl or heteroaryl groups.

The (non-aromatic) alicyclic and heterocyclic groups encompass both saturated rings, i.e. those containing exclusively single bonds, and also partially unsaturated rings, i.e. those which may also contain multiple bonds. Heterocyclic rings contain one or more heteroatoms, preferably selected from Si, O, N, S and Se.

The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 3 to 25 C atoms, which optionally contain fused rings and are optionally substituted. Preference is furthermore given to 5-, 6-, 7- or 8-membered carbocyclic groups, in which, in addition, one or more C atoms may be replaced by Si and/or one or more CH groups may be replaced by N and/or one or more non-adjacent $CH_2$ groups may be replaced by -O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]pentane-1,3-diyl, bicyclo[2.2.2]octane-1,4-diyl, spiro[3.3]heptane-2,6-diyl, octahydro-4,7-methanoindane-2,5-diyl.

The aryl, heteroaryl, carbon and hydrocarbon radicals optionally have one or more substituents, which are preferably selected from the group comprising silyl, sulfo, sulfonyl, formyl, amine, imine, nitrile, mercapto, nitro, halogen, $C_{1-12}$ alkyl, $C_{6-12}$ aryl, $C_{1-12}$ alkoxy, hydroxyl, or combinations of these groups.

Preferred substituents are, for example, solubility-promoting groups, such as alkyl or alkoxy, and electron-withdrawing groups, such as fluorine, nitro or nitrile.

Preferred substituents, unless stated otherwise, also referred to as "L" above and below, are F, Cl, Br, I, -CN, $-NO_2$ , -NCO, -NCS, -OCN, -SCN, - $C(=O)N(R^z)_2$, $-C(=O)Y^1$, $-C(=O)R^z$, $-N(R^z)_2$, in which $R^z$ has the meaning indicated above, and $Y^1$ denotes halogen, optionally substituted silyl or aryl having 6 to 40, preferably 6 to 20, C atoms, and straight-chain or branched alkyl, alkoxy, alkylcarbonyl, alkoxycarbonyl, alkylcarbonyloxy or alkoxycarbonyloxy having 1 to 25 C atoms, preferably 2 to 12, in which one or more H atoms may optionally be replaced by F or Cl.

"Substituted silyl or aryl" preferably means substituted by halogen, -CN, $R^{y1}$, $-OR^{y1}$, $-CO-R^{y1}$, $-CO-O-R^{y1}$, $-O-CO-R^{y1}$ or $-O-CO-O-R^{y1}$, in which $R^{y1}$ has the meaning indicated above.

Particularly preferred substituents L are, for example, F, Cl, CN, $CH_3$, $C_2H_5$, $-CH(CH_3)_2$, $OCH_3$, $OC_2H_5$, $CF_3$, $OCF_3$, $OCHF_2$, $OC_2F_5$, furthermore phenyl.

Above and below "halogen" denotes F, Cl, Br or I.

Above and below, the terms "alkyl", "aryl", "heteroaryl", etc., also encompass polyvalent groups, for example alkylene, arylene, heteroarylene, etc.

The term "director" is known in prior art and means the preferred orientation direction of the long molecular axes (in case of calamitic compounds) or short molecular axes (in case of discotic compounds) of the liquid-crystalline molecules. In case of uniaxial ordering of such anisotropic molecules, the director is the axis of anisotropy.

The term "alignment" or "orientation" relates to alignment (orientation ordering) of anisotropic units of material such as small molecules or fragments of big molecules in a common direction named "alignment direction". In an aligned layer of liquid-crystalline material, the liquid-crystalline director coincides with the alignment direction so that the alignment direction corresponds to the direction of the anisotropy axis of the material.

The term "planar orientation/alignment", for example in a layer of an liquid-crystalline material, means that the

long molecular axes (in case of calamitic compounds) or the short molecular axes (in case of discotic compounds) of a proportion of the liquid-crystalline molecules are oriented substantially parallel (about 180°) to the plane of the layer.

The term "homeotropic orientation/alignment", for example in a layer of a liquid-crystalline material, means that the long molecular axes (in case of calamitic compounds) or the short molecular axes (in case of discotic compounds) of a proportion of the liquid-crystalline molecules are oriented at an angle θ ("tilt angle") between about 80° to 90° relative to the plane of the layer.

The terms "uniform orientation" or "uniform alignment" of an liquid-crystalline material, for example in a layer of the material, mean that the long molecular axes (in case of calamitic compounds) or the short molecular axes (in case of discotic compounds) of the liquid-crystalline molecules are oriented substantially in the same direction. In other words, the lines of liquid-crystalline director are parallel.

The wavelength of light generally referred to in this application is 550 nm, unless explicitly specified otherwise.

The birefringence Δn herein is defined by the following equation

$$\Delta n = n_e - n_o$$

wherein $n_e$ is the extraordinary refractive index and $n_o$ is the ordinary refractive index and the effective average refractive index $n_{av.}$ is given by the following equation

$$n_{av.} = [(2\, n_o^2 + n_e^2)/3]^{1/2}$$

The extraordinary refractive index $n_e$ and the ordinary refractive index $n_o$ can be measured using an Abbe refractometer.

In the present application the term "dielectrically positive" is used for compounds or components with $\Delta\varepsilon > 3.0$, "dielectrically neutral" with $-1.5 \leq \Delta\varepsilon \leq 3.0$ and "dielectrically negative" with $\Delta\varepsilon < -1.5$. $\Delta\varepsilon$ is determined at a frequency of 1 kHz and at 20°C. The dielectric anisotropy of the respective compound is determined from the results of a solution of 10 % of the respective individual compound in a nematic host mixture. In case the solubility of the respective compound in the host medium is less than 10 % its concentration is reduced by a factor of 2 until the resultant medium is stable enough at least to allow the determination of its properties. Preferably, the concentration is kept at least at 5 %, however, to keep the significance of the results as high as possible. The capacitance of the test mixtures are determined both in a cell with homeotropic and with homogeneous alignment. The cell gap of both types of cells is approximately 20 μm. The voltage applied is a rectangular wave with a frequency of 1 kHz and a root mean square value typically of 0.5 V to 1.0 V; however, it is always selected to be below the capacitive threshold of the respective test mixture.

$\Delta\varepsilon$ is defined as $(\varepsilon_\| - \varepsilon_\perp)$, whereas $\varepsilon_{av.}$ is $(\varepsilon_\| + 2\,\varepsilon_\perp) / 3$. The dielectric permittivity of the compounds is determined from the change of the respective values of a host medium upon addition of the compounds of interest. The values are extrapolated to a concentration of the compounds of interest of 100 %. A typical host medium is ZLI-4792 or ZLI-2857 both commercially available from Merck, Darmstadt.

For the present invention,

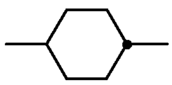 , 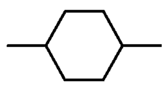 , 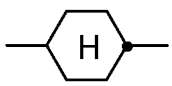 and 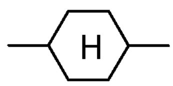

denote trans-1,4-cyclohexylene,

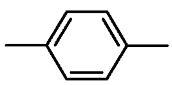 and 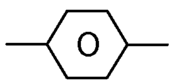

denote 1,4-phenylene.

For the present invention the groups -CO-O-, -COO- -C(=O)O- or $-CO_2$-denote an ester group of formula

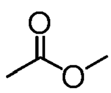 ,

and the groups -O-CO- -OCO-, -OC(=O)-, $-O_2C$- or -OOC- denote an ester group of formula

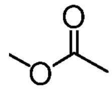
.

Furthermore, the definitions as given in C. Tschierske, G. Pelzl and S. Diele, Angew. Chem. 2004, 116, 6340-6368 shall apply to non-defined terms related to liquid crystal materials in the instant application.

Detailed description

In detail, the present invention relates to compounds or photoreactive mesogens of formula I,

$$R^{11}\text{-}Sp^{11}\text{-}X^{11}[\text{-}A\text{-}Z]_o\text{-}A^{11}\text{-}CY^{11}{=}CY^{12}[\text{-}C{=}O]_x[\text{-}O]_y\text{-}A[\text{-}Z\text{-}A]_p\text{-}X^{21}\text{-}Sp^{21}\text{-}R^{21} \qquad \text{I}$$

wherein

$A^{11}$ denotes a radical selected from the following groups:

a) a group consisting of 1,4-phenylene and 1,3-phenylene, wherein, in addition, one or two CH groups are optionally replaced by N and wherein, in addition, one or more H atoms are optionally replaced by L,
b) a group selected from the group consisting of

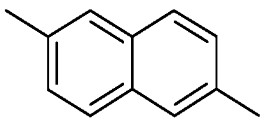 , 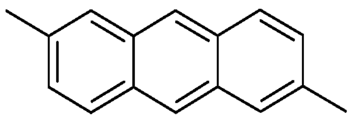 ,

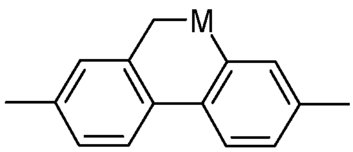 , 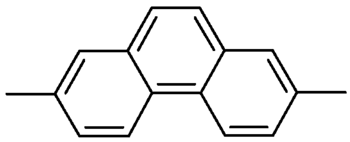 ,

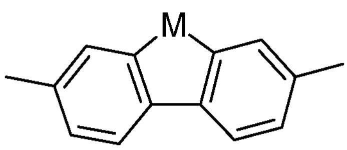 , 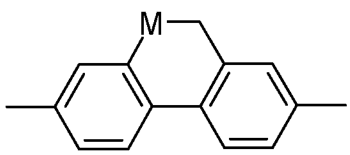 ,

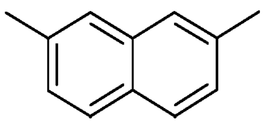 , 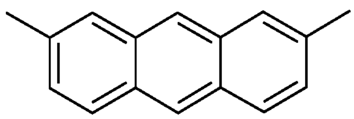 ,

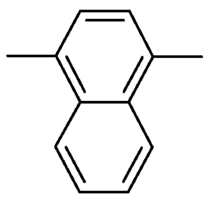 , 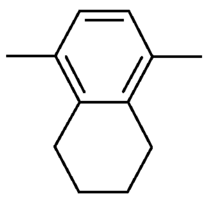 ,

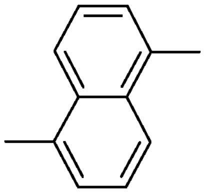,

where, in addition, one or more H atoms in these radicals are optionally replaced by L, and/or one or more double bonds are optionally replaced by single bonds, and/or one or more CH groups are optionally replaced by N,

A have each, independently of one another, in each occurrence one of the meanings for $A^{11}$ or

a) group consisting of trans-1,4-cyclohexylene, 1,4-cyclohexenylene, wherein, in addition, one or more non-adjacent $CH_2$ groups are optionally replaced by -O- and/or -S- and wherein, in addition, one or more H atoms are optionally replaced by F, or

b) a group consisting of tetrahydropyran-2,5-diyl, 1,3-dioxane-2,5-diyl, tetrahydrofuran-2,5-diyl, cyclobutane-1,3-diyl, piperidine-1,4-diyl, thiophene-2,5-diyl and selenophene-2,5-diyl, each of which may also be mono- or polysubstituted by L,

L on each occurrence, identically or differently, denotes -OH, -F, -Cl, -Br, -I, -CN, $-NO_2$, $SF_5$, -NCO, -NCS, -OCN, -SCN, $-C(=O)N(R^z)_2$, $-C(=O)R^z$, $-N(R^z)_2$, optionally substituted silyl, optionally substituted aryl having 6 to 20 C atoms, or straight-chain or branched or cyclic alkyl, alkoxy, alkylcarbonyl, alkoxycarbonyl, alkylcarbonyloxy or alkoxycarbonyloxy having 1 to 25 C atoms, or $X^{21}$-$Sp^{21}$-$R^{21}$,

M denotes -O-, -S-, $-CH_2-$, $-CHR^z-$ or $-CR^yR^z-$,

$R^y$ and $R^z$ each, independently of one another, denote H, CN, F or alkyl having 1-12 C atoms, wherein one or more H atoms are optionally replaced by F,

$Y^{11}$ and $Y^{12}$ each, independently of one another, denote H, F, phenyl or optionally fluorinated alkyl having 1-12 C atoms,

Z denotes, independently of each other, in each occurrence, a single bond, -COO-, -OCO-, -O-CO-O-, $-OCH_2-$, $-CH_2O-$, $-OCF_2-$, $-CF_2O-$, $-(CH_2)_n-$, $-CF_2CF_2-$, -CH=CH-, -CF=CF-, -CH=CH-COO-, -OCO-CH=CH-, -CO-S-, -S-CO-, -CS-S-, -S-CS-, -S-CSS- or -C≡C-,

n denotes an integer between 2 and 8, o denotes 0, 1 or 2

p denotes 1 or 2,

x and y denote each and independently 0 or 1, however under the condition that if x denotes 0, y cannot denote 1.

$Sp^{11}$ denotes a spacer group comprising 2 to 20 C atoms, wherein one or more $CH_2$ groups are optionally replaced by -O-, -S-, -NH-, $-N(CH_3)-$, -CO-, -O-CO-, -S-CO-, -O-COO-, -CO-S-, -CO-O-, $-CF_2-$, $-CF_2O-$, $-OCF_2-$ -C(OH)-, -CH(alkyl)-, -CH(alkenyl)-, -CH(alkoxyl)-, -CH(oxaalkyl)-, -CH=CH- or -C≡C-, however in such a way that no two O-atoms are adjacent to one another and no two groups selected from -O-CO-, -S-CO-, -O-COO-, -CO-S-, -CO-O- and -CH=CH- are adjacent to each other, and $Sp^{21}$ denotes $-S^1-A^{Sp}-S^2--S^1-X^{Sp}-A^{Sp}-X^{Sp}-S^2-$, $-S^1-A^{Sp}-X^{Sp}-S^2$ or $-S^1-X^{Sp}-A^{Sp}-S^2$ wherein $S^1$ is $C_{3-12}$-alkylene and $S^2$ is a single bond or $C_{3-12}$-alkylene, wherein in $S^1$ or $S^2$ one or more $CH_2$ groups are optionally replaced by -O-, -S-, -NH-, $-N(CH_3)-$, -CO-, -O-CO-, -S-CO-, -O-COO-, -CO-S-, -CO-O-, $-CF_2-$, $-CF_2O-$, $-OCF_2-$, -C(OH)-, -CH(alkyl)-, -CH(alkenyl)-, -CH(alkoxyl)-, -CH(oxaalkyl)-, -CH=CH- or -C≡C-, however in such a way that no two O-atoms are adjacent to one another and no two groups selected from -O-CO-, -S-CO-, -O-COO-, -CO-S-, -CO-O- and -CH=CH- are adjacent to each other, and

$A^{Sp}$ denotes 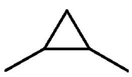, 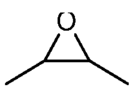, 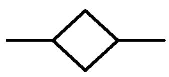, 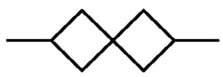, 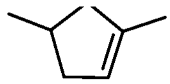,

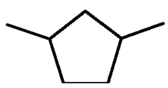 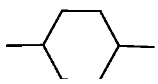 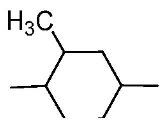 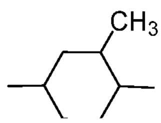

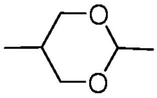 , 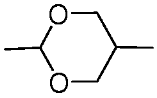 , 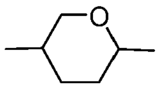 , 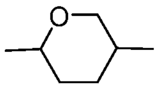 ,

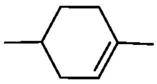 , 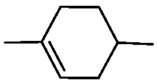 , 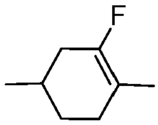 , 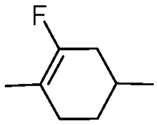 ,

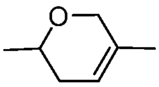 , 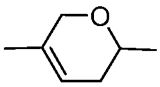 , 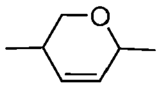 , 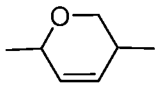 ,

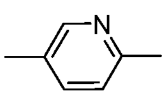 , 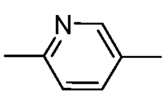 , 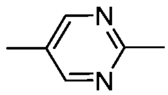 , 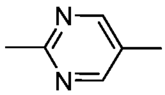 , 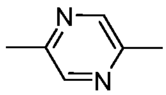 ,

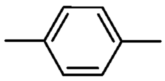 , 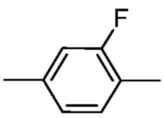 , 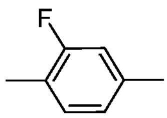 , 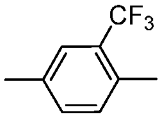 , 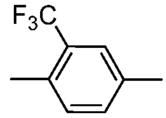 ,

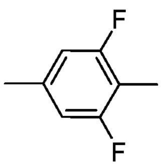 , 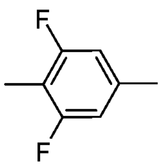 , 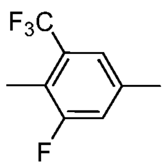 , 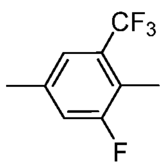 , 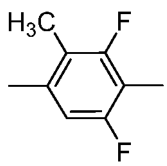 ,

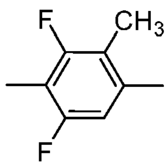 .

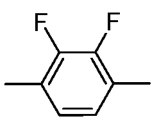 , 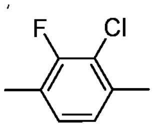 , 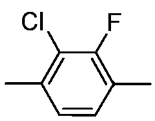 , 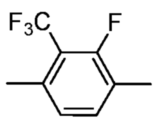 , 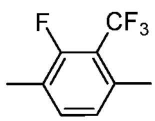 ,

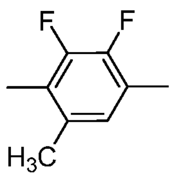 , 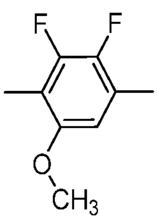 , 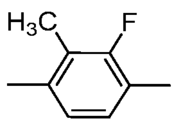 , 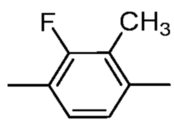 ,

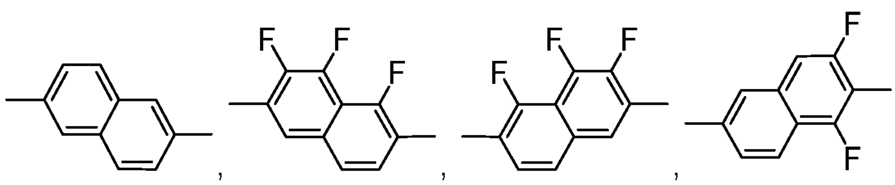 ,

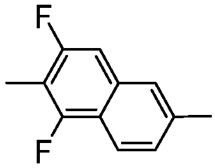, 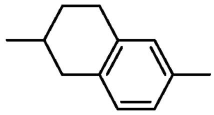, 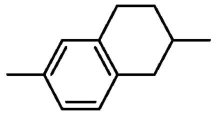, 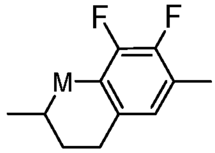,

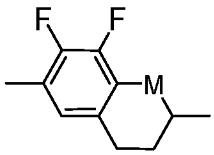, 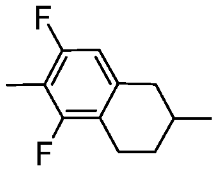, 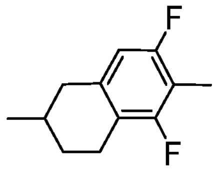, 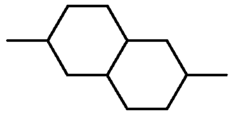,

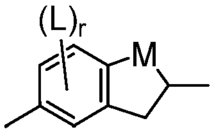, 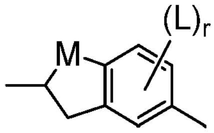, 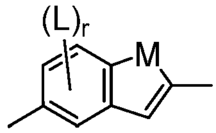, 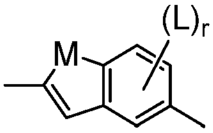,

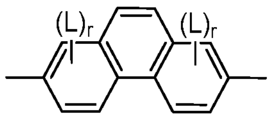, 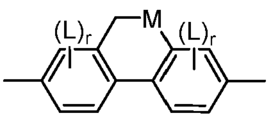,

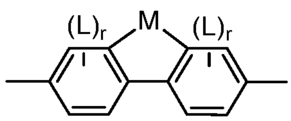, 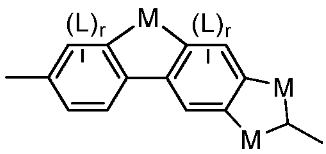, 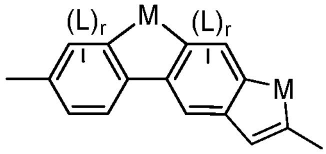

| | |
|---|---|
| L | each, independently of one another, denotes alkyl, alkoxy, halogen, $OCF_3$, $CF_3$, $CH_2F$, $CHF_2$, |
| r | denotes 0,1, 2, or 3, |
| M | denotes $CH_2$, CHF, $CF_2$, S or O, |
| $X^{Sp}$, $X^{11}$ and $X^{21}$ | -CO-O-, -O-CO-, -O-COO-, -O-, -CH=CH-, -C≡C-, $-CF_2-O-$, $-O-CF_2-$, $-CF_2-CF_2-$, $-CH_2-O-$, $-O-CH_2-$, -CO-S-, -S-CO-, -CS-S-, -S-CS-, -S-CSS- or -S-, |
| $R^{11}$ and $R^{21}$ | denotes P, halogen, CN, or optionally fluorinated alkyl or alkenyl with up to 15 C atoms in which one or more non- adjacent $CH_2$-groups may be replaced by -O-, -S-, -CO-, -C(O)O-, -O-C(O)-, O-C(O)-O-, under the condition that at least one of $R^{11}$ or $R^{21}$ denotes P, preferably both $R^{11}$ and $R^{21}$ denotes P |
| P | denotes a polymerisable group. |

Further preferred are compounds of formula I, wherein

$Sp^{11}$ denotes a spacer group comprising 1 to 20 C atoms, preferably 2 to 20 C atoms, wherein one or more non-adjacent $CH_2$ groups may also be replaced by -O-, -S-, -NH-, $-N(CH_3)-$, -CO-, -O-CO-, -S-CO-, -O-COO-, -CO-S-, -CO-O-, $-CF_2-$, $-CF_2O-$, $-OCF_2-$ -CH(OH)-, -CH(alkyl)-, -CH(alkenyl)-, -CH(alkoxyl)-, -CH(oxaalkyl)-, -CH=CH- or -C≡C-, however in such a way that no two O-atoms are adjacent to one another and no two groups selected from -O-CO-, -S-CO-, -O-COO-, -CO-S-, -CO-O- and -CH=CH- are adjacent to each other.

Further preferred are compounds of formula I, wherein $Sp^{21}$ denotes $-S^1-A^{Sp}-S^2-$, $-S^1-X^{Sp}-A^{Sp}-X^{Sp}-S^2-$, $-S^1-A^{Sp}-X^{Sp}-S^2$ or $-S^1-X^{Sp}-A^{Sp}-S^2$ wherein $S^1$ is $C_{3-12}$-alkylene and $S^2$ is a single bond or $C_{3-12}$-alkylene, wherein in $S^1$ or $S^2$ one or more $CH_2$ groups are optionally replaced by -O-, -S-, -NH-, $-N(CH_3)-$, -CO-, -O-CO-, -S-CO-, -O-COO-, -CO-S-, -CO-O-, $-CF_2-$, $-CF_2O-$, $-OCF_2-$, -C(OH)-, -CH(alkyl)-, -CH(alkenyl)-, -CH(alkoxyl)-, -CH(oxaalkyl)-, -CH=CH- or -C≡C-, however in such a way that no two O-atoms are adjacent to one another and no two groups selected from -O-CO-, -S-CO-, -O-COO-, -CO-S-, -CO-O- and -CH=CH- are adjacent to each other, and

$A^{Sp}$ denotes

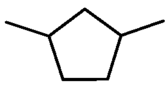, 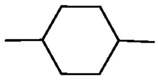, 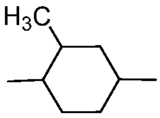, 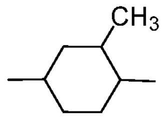,

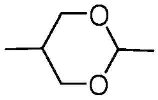, 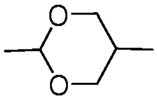, 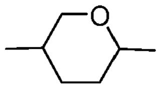, 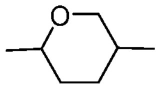,

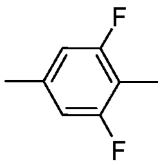, 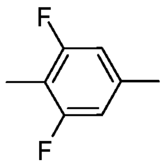, 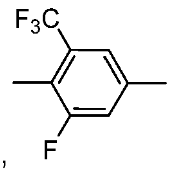, 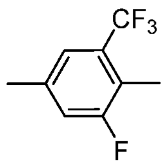, 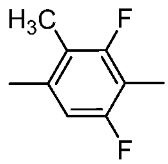,

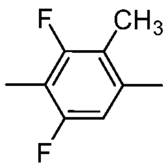,

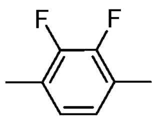, 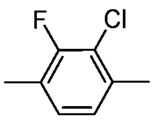, 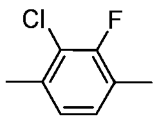, 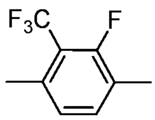, 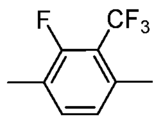,

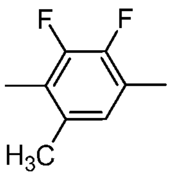, 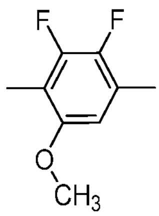, 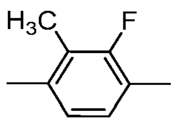, 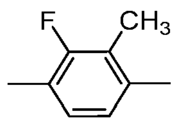,

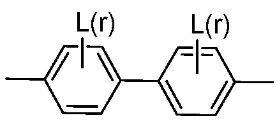, 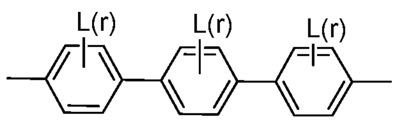

L each, independently of one another, denotes F, Cl, $OCF_3$, $CF_3$, $CH_3$, $CH_2$-$CH_3$, CH2F, $CHF_2$, and
r denotes 0,1, 2, or 3.

In the instant application, polymerizable groups (P) are groups that are suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C-triple bond, and groups which are suitable for polymerisation with ring opening, such as, for example, oxetane or epoxide groups.

Preferred groups P are selected from the group consisting of $CH_2$=$CW^1$-CO-O-, $CH_2$=$CW^1$-CO-,

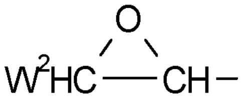, 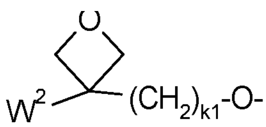,

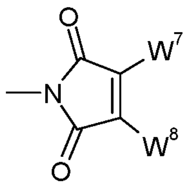, 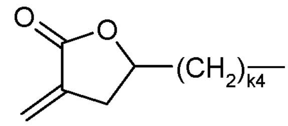,

$CH_2=CW^2-(O)_{k3}-$, $CW^1=CH-CO-(O)_{k3}-$, $CW^1=CH-CO-NH-$, $CH_2=CW^1-CO-NH-$, $CH_3-CH=CH-O-$, $(CH_2=CH)_2CH-OCO-$, $(CH_2=CH-CH_2)_2CH-OCO-$, $(CH_2=CH)_2CH-O-$, $(CH_2=CH-CH_2)_2N-$, $(CH_2=CH-CH_2)_2N-CO-$, $HO-CW^2W^3-$, $HS-CW^2W^3-$, $HW^2N-$, $HO-CW^2W^3-NH-$, $CH_2=CW^1-CO-NH-$, $CH_2=CH-(COO)_{k1}-Phe-(O)_{k2}-$, $CH_2=CH-(CO)_{k1}-Phe-(O)_{k2}-$, Phe-CH=CH-, HOOC-, OCN- and $W^4W^5W^6Si-$, wherein $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each, independently of one another, denote Cl, oxaalkyl or oxacarbonylalkyl having 1 to 5 C atoms, $W^7$ and $W^6$ each, independently of one another, denote H, Cl or alkyl having 1 to 5 C atoms, Phe denotes 1,4-phenylene, which is optionally substituted by one or more radicals L as defined above, $k_1$, $k_2$ and $k_3$ each, independently of one another, denote 0 or 1, $k_3$ preferably denotes 1, and $k_4$ denotes an integer from 1 to 10.

Further preferred, P denotes a group

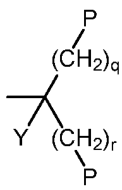,

preferably a group

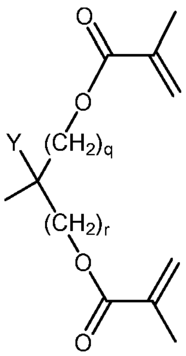, or 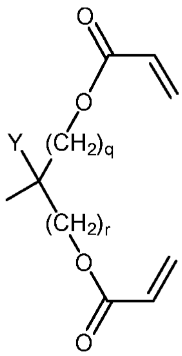

Y denotes H, F, phenyl or optionally fluorinated alkyl having 1-12 C atoms, preferably H, methyl, ethyl, propyl, butyl, more preferably H or methyl, in particular H,

q and r preferably denotes an integer between 0 and 8.

Particularly preferred groups P are selected from the group consisting of $CH_2=CW^1-CO-O-$, in particular $CH_2=CH-CO-O-$, $CH_2=C(CH_3)-CO-O-$ and $CH_2=CF-CO-O-$, furthermore $CH_2=CH-O-$, $(CH_2=CH)_2CH-O-CO-$, $(CH_2=CH)_2CH-O-$,

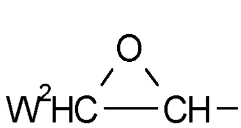 and 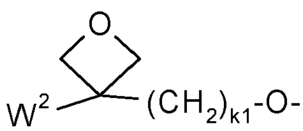

or a group

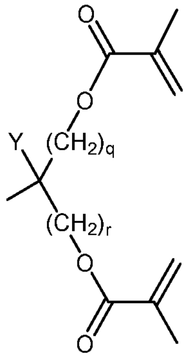
, or
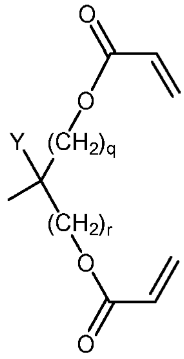

Y denotes H or methyl, in particular H.

Very particularly preferred groups P are selected from the group consisting of acrylate, methacrylate, fluoroacrylate, furthermore vinyloxy, chloroacrylate, oxetane, epoxide groups and a group,

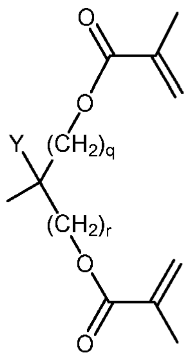
, or
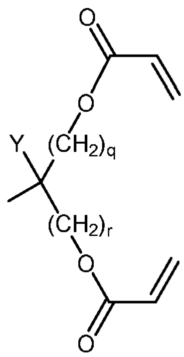

Y denotes H or methyl, in particular H, q and r preferably denotes an integer between 0 and 8, and of these preferably an acrylate or methacrylate group or a group,

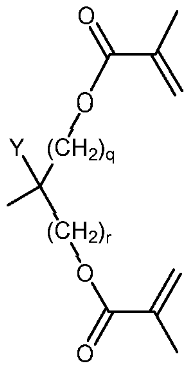
. or
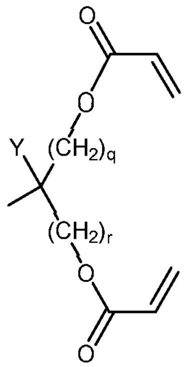

wherein Y denotes H or methyl and q and r denotes 1 or 2.

The compounds of formula I are preferably selected from compounds of the following sub-formulae,

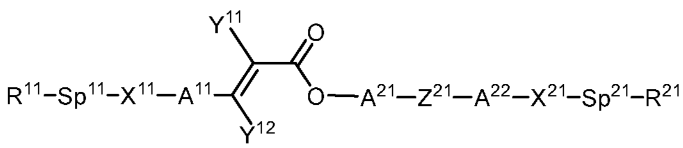
I-3

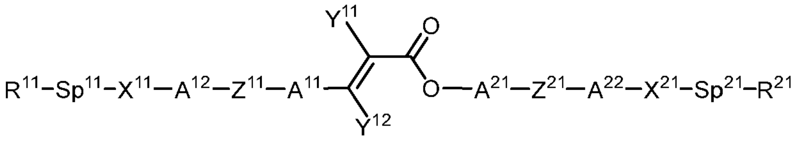

I-4

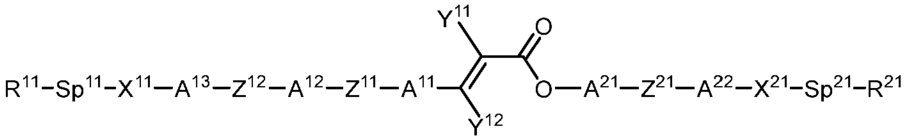

I-5

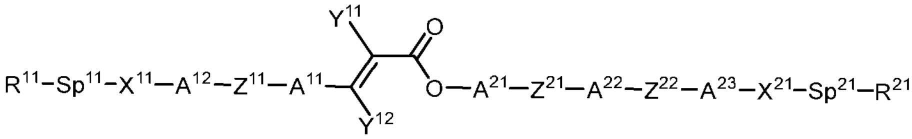

I-6

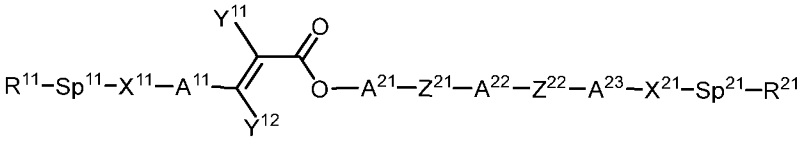

I-8

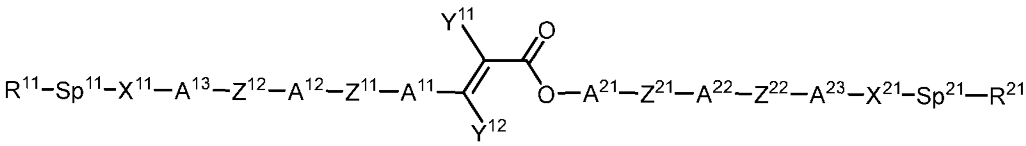

I-9

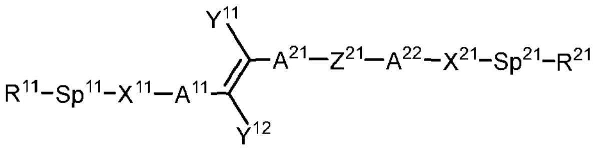

I-12

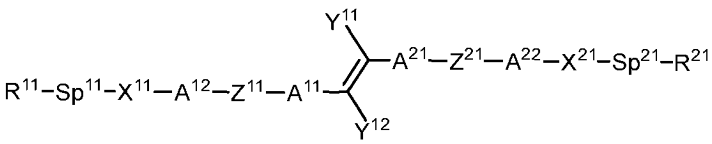

I-13

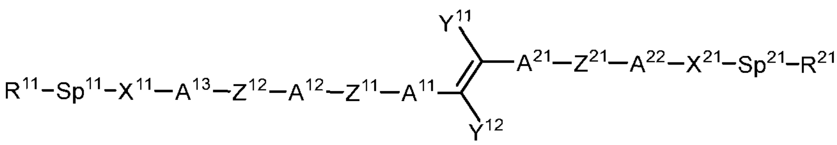

I-14

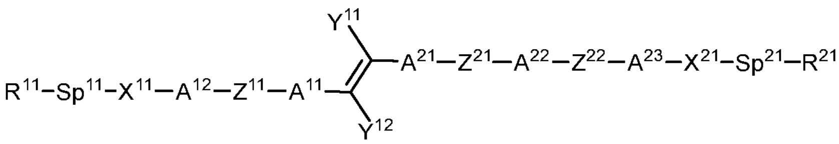

I-15

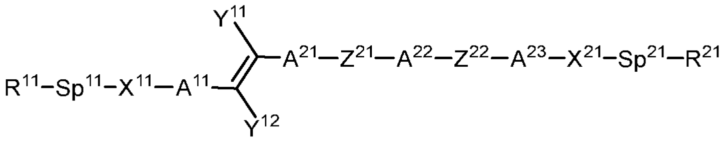

I-17

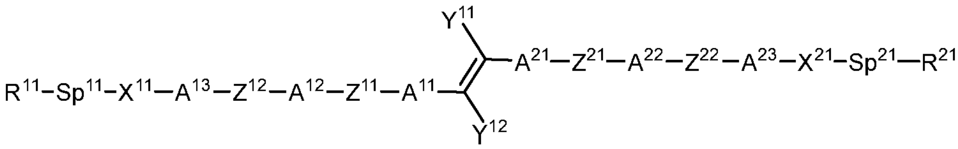

I-18

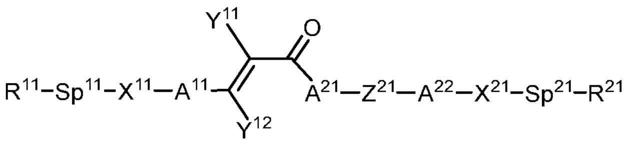

I-21

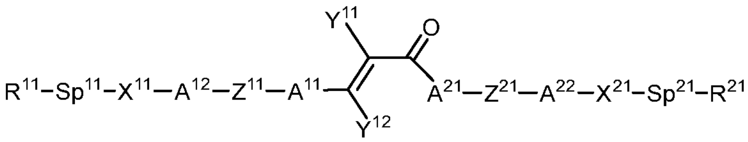

I-22

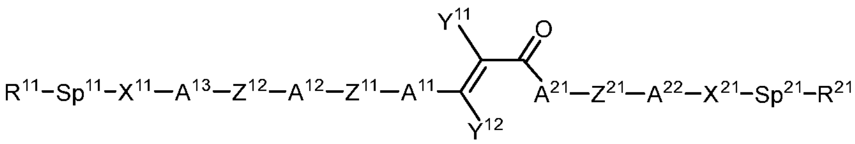

I-23

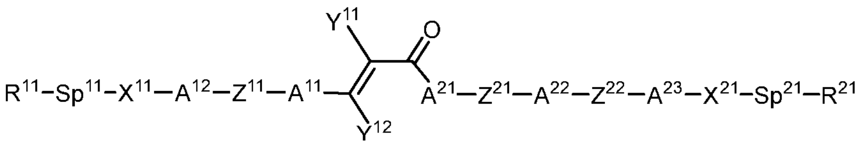

I-24

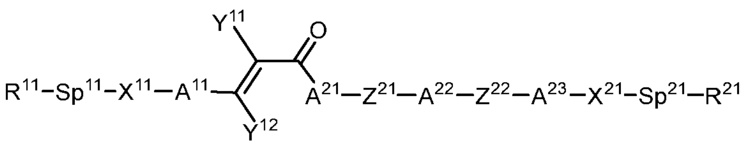

I-26

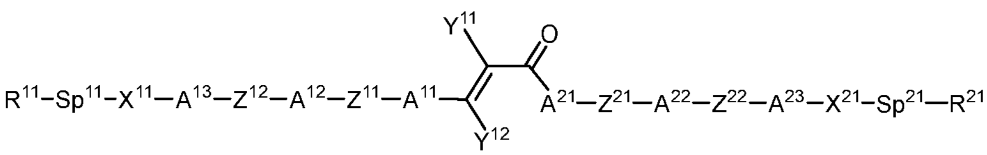

I-27

wherein

$R^{11}$ and $R^{12}$ preferably denotes P,
$A^{11}$ preferably denotes 1,4-phenylene and 1,3-phenylene, wherein, in addition, one or two CH groups are optionally replaced by N and wherein,
in addition, one or more H atoms are optionally replaced by L, as given below.

$A^{12}$ to $A^{23}$ have each and independently one of the meanings for A in formula I and preferably denotes 1,4-phenylene and 1,3-phenylene,

wherein, in addition, one or two CH groups are optionally replaced by N and wherein, in addition, one or more H atoms

are optionally replaced by L, as given below, or a group consisting of trans-1,4-cyclohexylene, 1,4-cyclohexenylene, wherein, in addition, one or more non-adjacent $CH_2$ groups may be replaced by -O- and/or -S- and wherein, in addition, one or more H atoms may be replaced by F,

L preferably denotes on each occurrence, identically or differently -OH, - F, -Cl, -Br, -I, -CN, $-NO_2$, $SF_5$, -NCO, -NCS, -OCN, -SCN, $-C(=O)N(R^z)_2$, - $C(=O)R^z$, $-N(R^z)_2$, or straight-chain or branched or cyclic alkyl, alkoxy, alkylcarbonyl, alkoxycarbonyl, alkylcarbonyloxy or alkoxycarbonyloxy having 1 to 25 C atoms, more preferably -OH, -F, -CN, -NCS, -OCN, - SCN, or straight-chain or branched or cyclic alkyl, alkoxy, alkylcarbonyl, alkoxycarbonyl, alkylcarbonyloxy or alkoxycarbonyloxy having 1 to 12 C atoms.

More preferably $A^{11}$ to $A^{23}$ preferably denotes on each occurrence, identically or differently the group

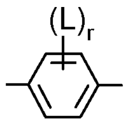

which is each and independently

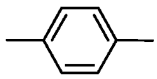,

or

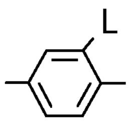, 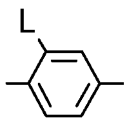 or 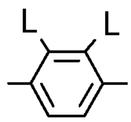,

furthermore

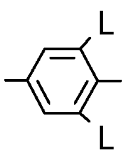,

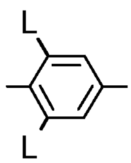, 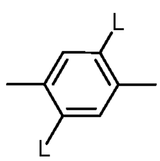, or 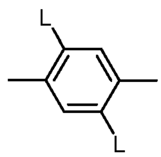,

wherein L is preferably F, Cl, $CH_3$, or alkylene or alkoxylene having 1 to 6 C Atoms,

$Y^{11}$ and $Y^{12}$ preferably denotes each, independently of one another, H, or F, more preferably H,

$Z^{11}$ to $Z^{22}$ preferably denotes, independently of each other, in each occurrence, a single bond, -COO-, -OCO-, -O-CO-O-, $-OCH_2-$, $-CH_2O-$, $-OCF_2-$, $-CF_2O-$, $-(CH_2)_n-$, $-CF_2CF_2-$, -CH=CH-, -CF=CF-, -CH=CH-COO-, -OCO-CH=CH-, or -C≡C-, more preferably -COO-, -OCO-, -O-CO-O-, $-OCF_2-$, $-CF_2O-$, $-CF_2CF_2-$,

$X^{11}$ and $X^{21}$ denote independently from one another, in each occurrence a single bond, or -CO-O-, -O-CO-, -O-, in particular O,

$R^{21}$ is preferably selected from the group consisting of $CH_2=CW^1-CO-O-$, $CH_2=CW^1-CO-$,

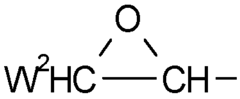 , 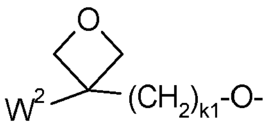 , 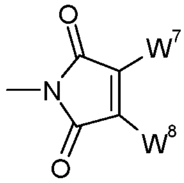 ,

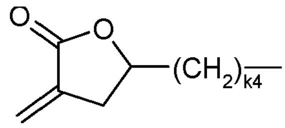 ,

$CH_2=CW^2-(O)_{k3}-$, $CW^1=CH-CO-(O)_{k3}-$, $CW^1=CH-CO-NH-$, $CH_2=CW^1-CO-NH-$, $CH_3-CH=CH-O-$, $(CH_2=CH)_2CH-OCO-$, $(CH_2=CH-CH_2)_2CH-OCO-$, $(CH_2=CH)_2CH-O-$, $(CH_2=CH-CH_2)_2N-$, $(CH_2=CH-CH_2)_2N-CO-$, $HO-CW^2W^3-$, $HS-CW^2W^3-$, $HW^2N-$, $HO-CW^2W^3-NH-$, $CH_2=CW^1-CO-NH-$, $CH_2=CH-(COO)_{k1}-Phe-(O)_{k2}-$, $CH_2=CH-(CO)_{k1}-Phe-(O)_{k2}-$, Phe-CH=CH-, HOOC-, OCN- and $W^4W^5W^6Si-$, wherein $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each, independently of one another, denote Cl, oxaalkyl or oxacarbonylalkyl having 1 to 5 C atoms, $W^7$ and $W^6$ each, independently of one another, denote H, Cl or alkyl having 1 to 5 C atoms, Phe denotes 1,4-phenylene, which is optionally substituted by one or more radicals L as defined above, $k_1$, $k_2$ and $k_3$ each, independently of one another, denote 0 or 1, $k_3$ preferably denotes 1, and $k_4$ denotes an integer from 1 to 10,

preferably $R^{21}$ denotes a preferred group P selected from the group consisting of $CH_2=CW^1-CO-O-$, in particular $CH_2=CH-CO-O-$, $CH_2=C(CH_3)-CO-O-$ and $CH_2=CF-CO-O-$, furthermore $CH_2=CH-O-$, $(CH_2=CH)_2CH-O-CO-$.

| | |
|---|---|
| $R^{11}$ | is |
| wherein Y | denotes H, F, phenyl or optionally fluorinated alkyl having 1-12 C atoms, preferably H, methyl, ethyl, propyl, butyl, more preferably H or methyl, in particular H and |
| q and r | denotes 1 or 2. |

Further preferred compounds of formula I are selected from the compounds of formulae I-3 to I-5.

Preferred compounds of formula I-3 are selected from the following subformulae,

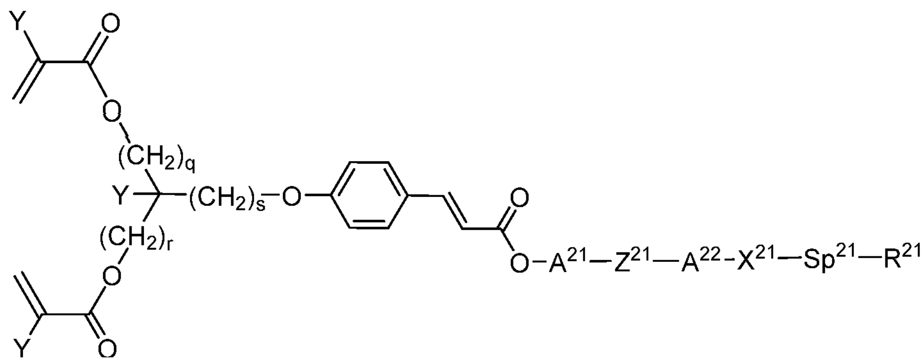

I-3-1

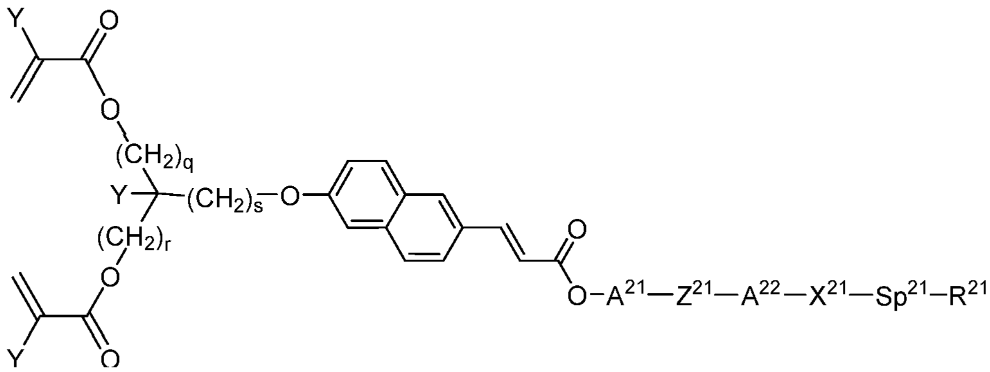

I-3-2

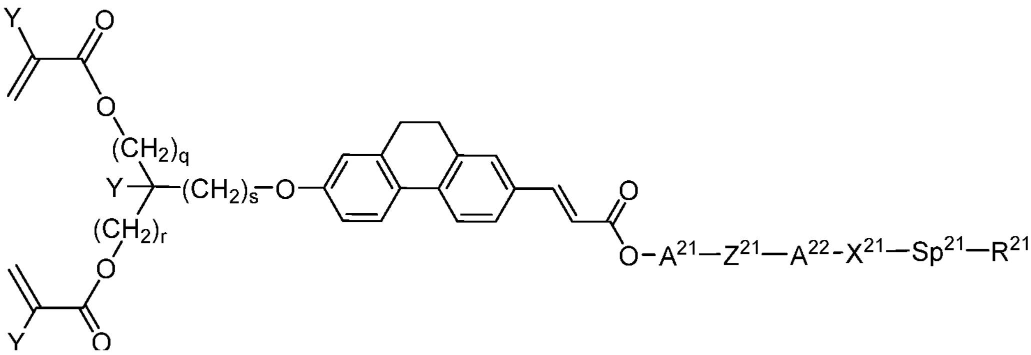

I-3-3

wherein Y, $R^{21}$, $X^{21}$, and $Sp^{21}$ have one of the meanings as given above, $Z^{21}$ has one of the meanings for Z as given above, r and q denote 1, 2 or 3, s denotes an integer from 1 to 6 and $A^{21}$ and $A^{22}$ have one of the meanings for A as given above under formula I. Preferably $A^{21}$ and $A^{22}$ denote each and independently a group consisting of 1,4-phenylene, wherein, in addition, one or two CH groups may be replaced by N and wherein, in addition, one or more H atoms may be replaced by L as given above under formula I, or a group consisting of trans-1,4-cyclohexylene, 1,4-cyclohexenylene, wherein, in addition, one or more non-adjacent $CH_2$ groups may be replaced by -O- and/or -S- and wherein, in addition, one or more H atoms may be replaced by F.

Preferred compounds of formula I-4 are selected from the following subformulae,

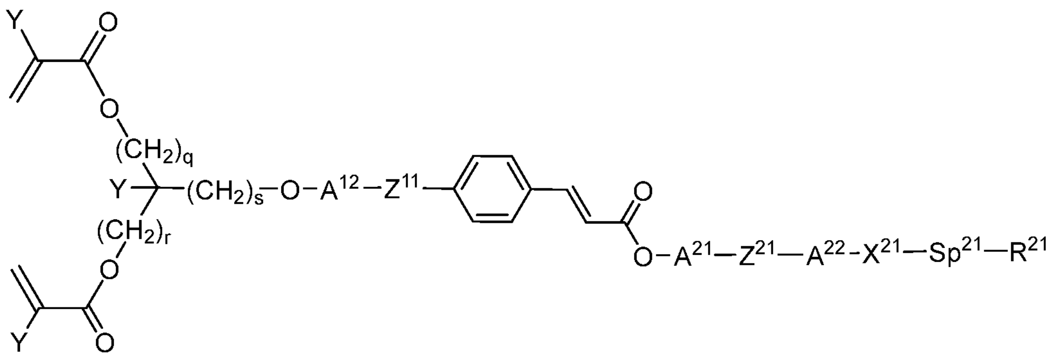

I-4-1

wherein Y, $R^{21}$, $X^{21}$, and $Sp^{21}$ have one of the meanings as given above , $A^{12}$, $A^{21}$ and $A^{22}$ have one of the meanings for A as given above under formula **I,** $Z^{11}$, and $Z^{21}$ have one of the meanings for Z as given above under formula I, r and q denote 1, 2 or 3, s denotes an integer from 1 to 6. Preferably $A^{12}$, $A^{21}$ and $A^{22}$ denote each and independently a group consisting of 1,4-phenylene, wherein one or two CH groups may be replaced by N and wherein, in addition, one or more H atoms may be replaced by L as given above under formula I, or a group consisting of trans-1,4-cyclohexylene, 1,4-cyclohexenylene, wherein, in addition, one or more non-adjacent $CH_2$ groups may be replaced by -O- and/or -S- and wherein, in addition, one or more H atoms may be replaced by F.

Preferred compounds of formula I-5 are selected from the following sub formula,

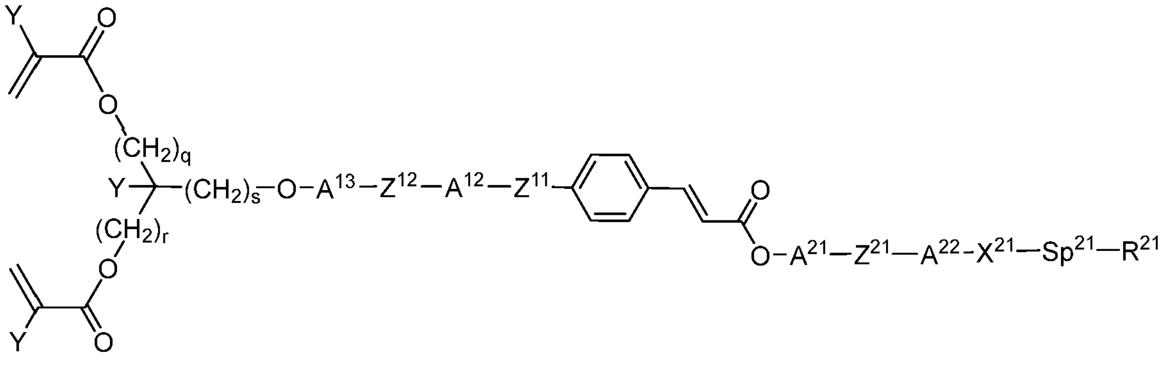

I-5-1

wherein Y, $R^{21}$, $X^{21}$, and $Sp^{21}$ have one of the meanings as given above , $Z^{11}$, $Z^{12}$ and $Z^{21}$ have one of the meanings for Z as given above under formula I, r and q denote 1, 2 or 3, s denotes an integer from 1 to 6, and $A^{12}$, $A^{13}$, $A^{21}$ and $A^{22}$ have one of the meanings for A as given above under formula I. Preferably, $A^{12}$, $A^{13}$, $A^{21}$ and $A^{22}$ denote each and independently a group consisting of 1,4-phenylene, wherein one or two CH groups may be replaced by N and wherein, in addition, one or more H atoms may be replaced by L as given above under formula I, or a group consisting of trans-1,4-cyclohexylene, 1,4-cyclohexenylene, wherein, in addition, one or more non-adjacent $CH_2$ groups may be replaced by -O- and/or -S- and wherein, in addition, one or more H atoms may be replaced by F.

Preferred compounds of formulae I-3-1 to I-3-3 are compounds of the following sub-formulae:

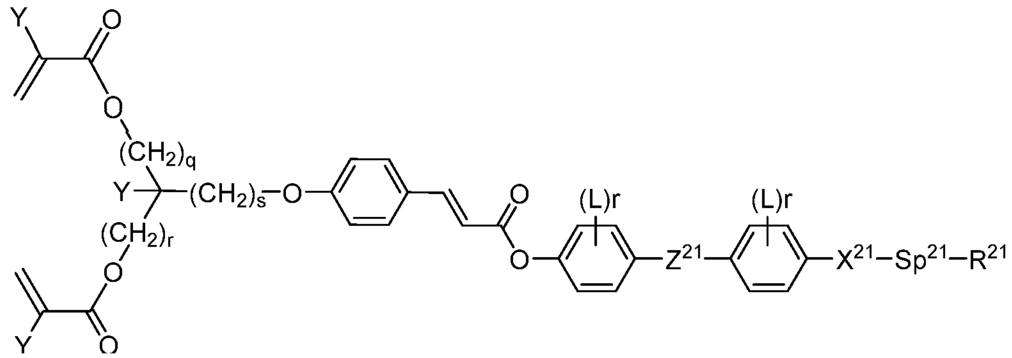

I-3-1a

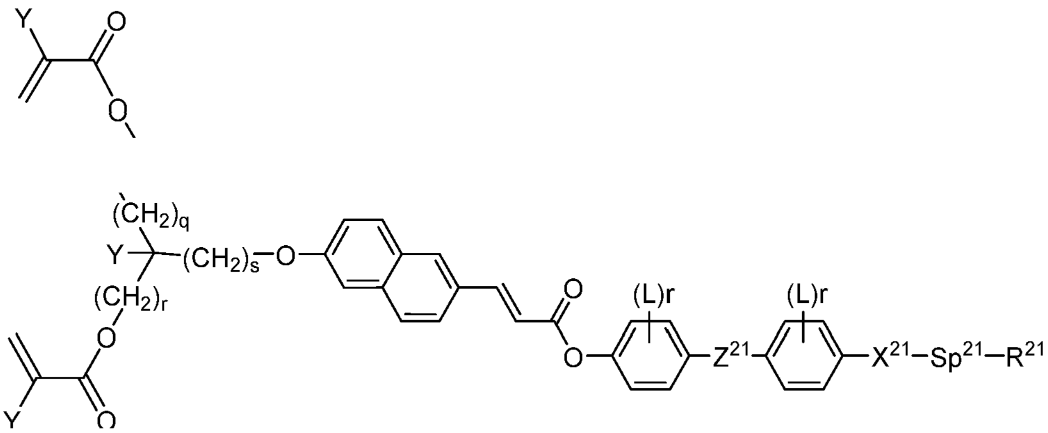

I-3-2a

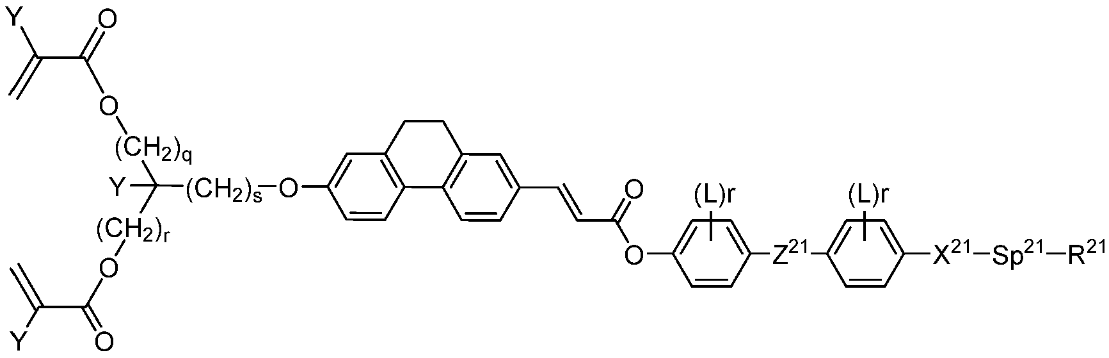

I-3-3a

wherein Y, $R^{21}$, $X^{21}$, and $Sp^{21}$ have one of the meanings as given above in formula I, $Z^{21}$ has one of the meanings for Z as given above under formula I, r and q denote 1, 2 or 3 and s denotes an integer from 1 to 6, and the group

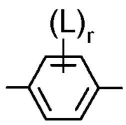

is each and independently

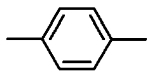

or denotes

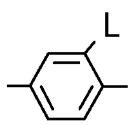 , 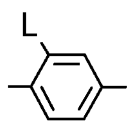 or 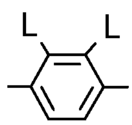 ,

furthermore

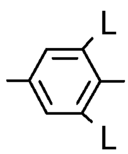 ,

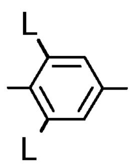 , 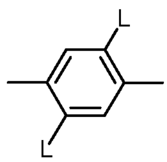 , or 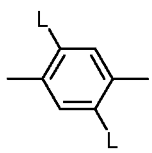 ,

wherein L have one of the meanings as given above in formula I, and
preferably is F, Cl, $OCH_3$, alkoxy or alkyl having 1 to 6 C Atoms or $X^{21}$-$Sp^{21}$-$R^{21}$.

Preferred compounds of formulae I-4-1 are compounds of the following sub-formula:

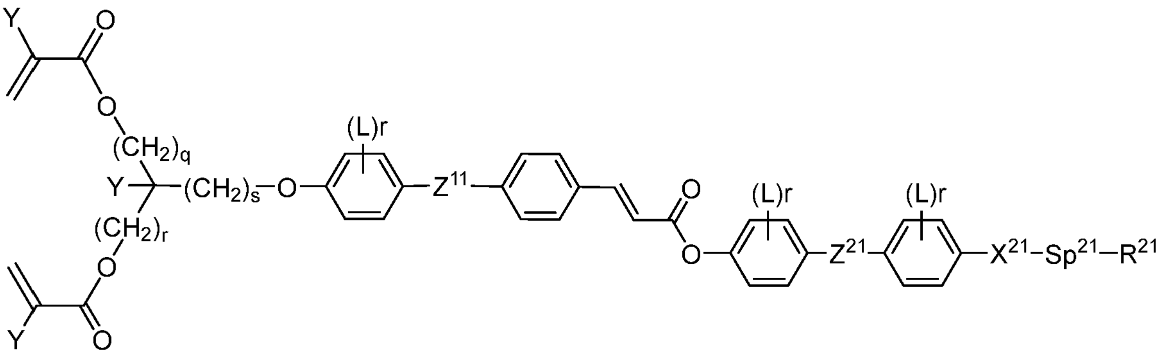

I-4-1a

wherein Y, $R^{21}$, $X^{21}$, and $Sp^{21}$ have one of the meanings as given above in formula I, $Z^{11}$ and $Z^{21}$ have one of the meanings for Z as given above under formula I, r and q denote 1, 2 or 3 and s denotes an integer from 1 to 6, and the group

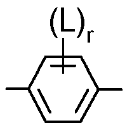

is each and independently

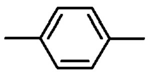

or denotes

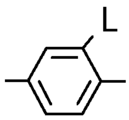 , 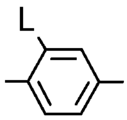 or 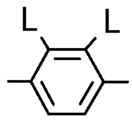 ,

furthermore

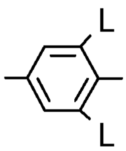 ,

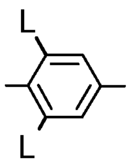 , 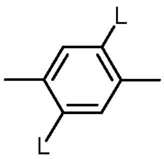 , or 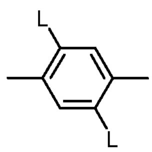 ,

wherein L have one of the meanings as given above in formula I, and preferably is F, Cl, $OCH_3$, alkoxy or alkyl having 1 to 6 C Atoms or $X^{21}$-$Sp^{21}$-$R^{21}$.

Preferred compounds of formulae I-5-1 are compounds of the following sub-formula:

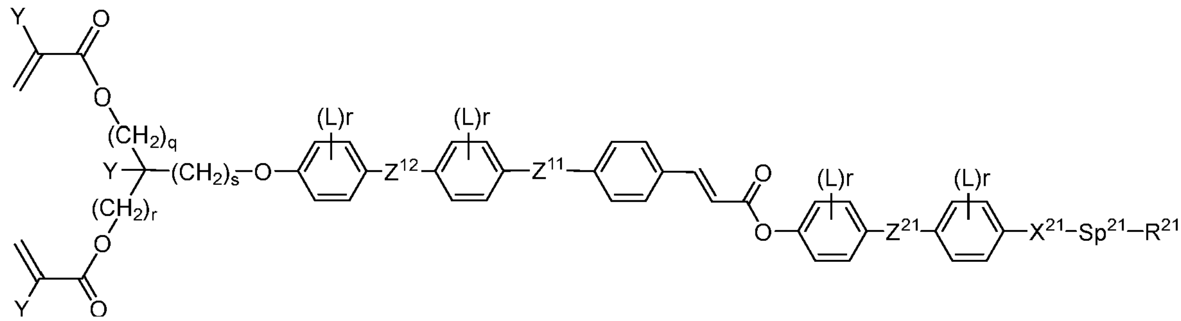

I-5-1a

wherein Y, $R^{21}$, $X^{21}$, and $Sp^{21}$ have one of the meanings as given above in formula I, $Z^{11}$, $Z^{12}$ and $Z^{21}$ have each and independently one of the meanings for Z as given above under formula I, r and q denote 1, 2 or 3 and s denotes an integer from 1 to 6, and the group

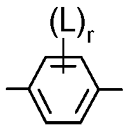

is each and independently

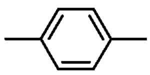

or denotes

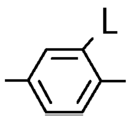 , 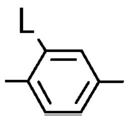 or 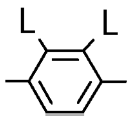 ,

furthermore

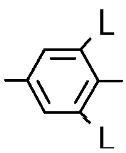 ,

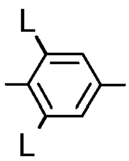 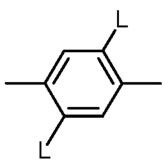 or 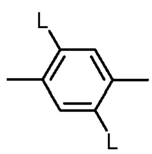 ,

wherein L have one of the meanings as given above in formula I, and preferably is F, Cl, $OCH_3$, alkoxy or alkyl having 1 to 6 C Atoms or $X^{21}$-$Sp^{21}$-$R^{21}$.

Further preferred compounds of formulae I-3-1 to I-3-3 are compounds of the following sub-formulae:

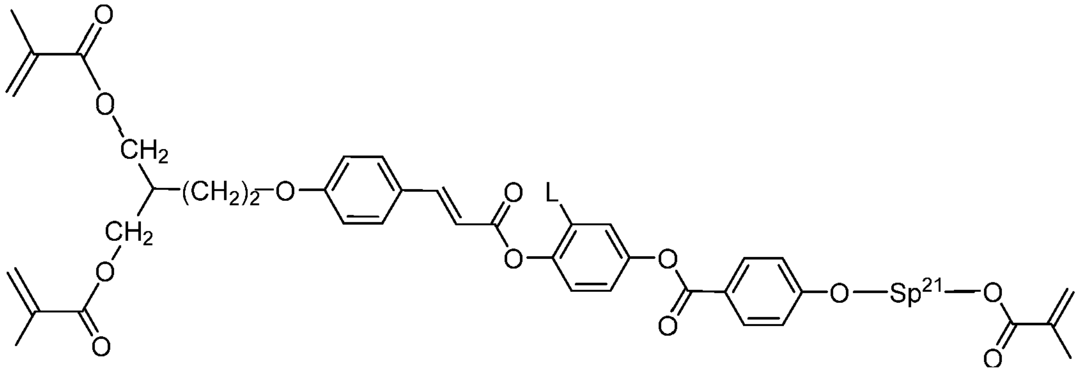

I-3-1a-1

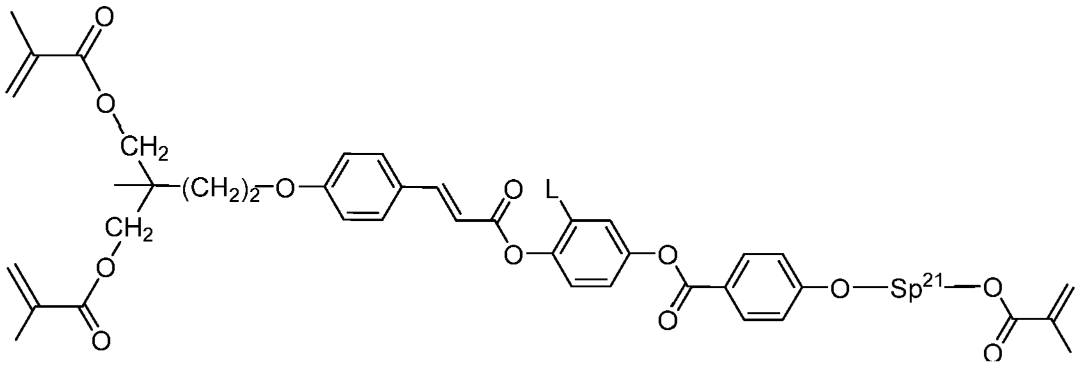

I-3-1a-2

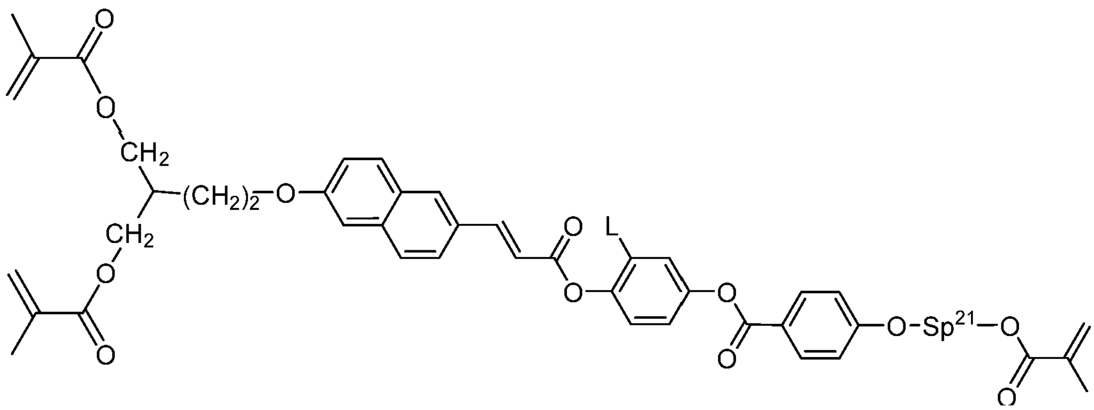

I-3-2a-3

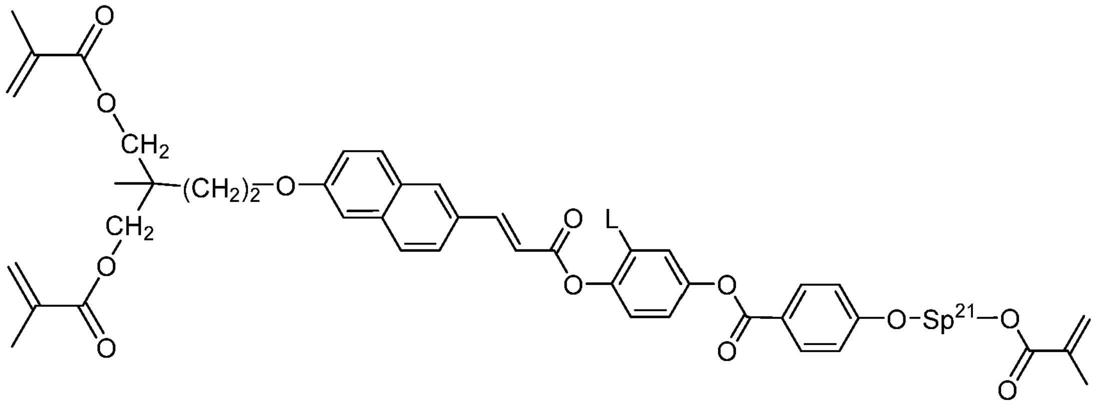

I-3-2a-4

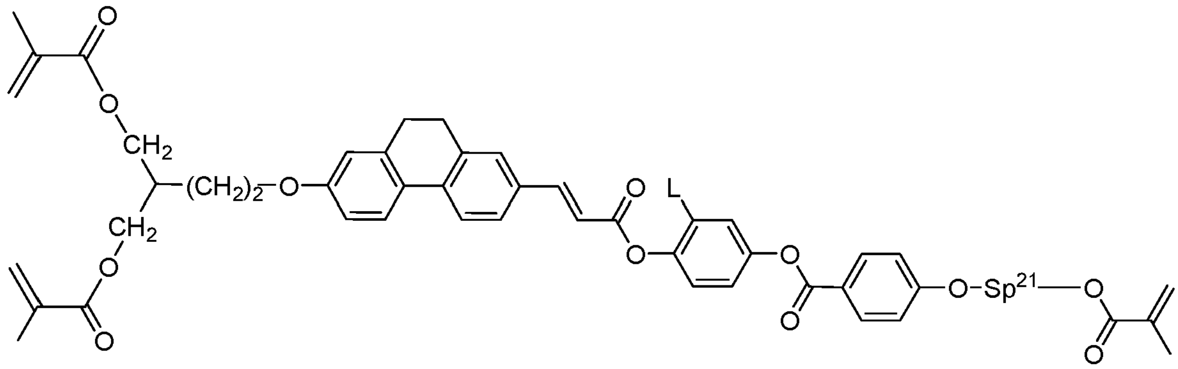

I-3-3a-5

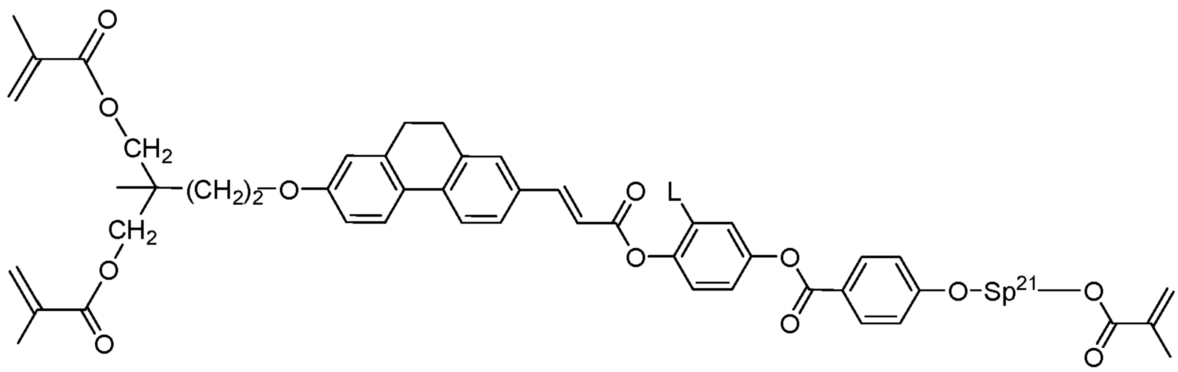

I-3-3a-6

wherein $Sp^{21}$ has one of the meanings as given above in formula I and L each and independently denotes F, Cl, alkoxy or alkyl both having 1 to 6 C Atoms, preferably, methyl, ethyl, propyl, butyl, pentyl, hexyl, cyclopropyl, cylobutyl, cyclopentyl, or cyclohexyl or $X^{21}$-$Sp^{21}$-$R^{21}$ and preferably $Sp^{21}$ denotes -$S^1$-O-$A^{Sp}$, or -$S^1$-O-$A^{Sp}$-O-$S^2$- wherein $S^1$ is propylene, butylene, pentylene, hexylene, heptylene, octylene, nonylene, decylene, undecylene, dodecylene, $S^2$ is propylene, butylene, pentylene, hexylene, heptylene, octylene, nonylene, decylene, undecylene, dodecylene,

$A^{Sp}$ denotes 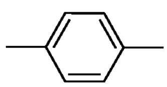 , 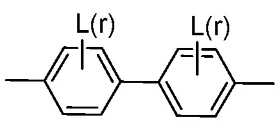 , 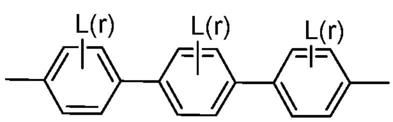

r denotes 0 or 1.

Further preferred compounds of formulae I-4-1 are compounds of the following sub-formulae:

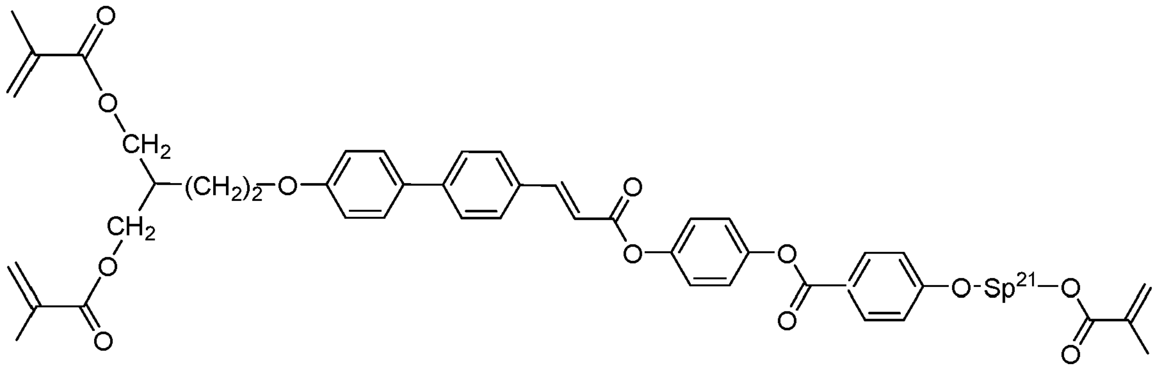

I-4-1a-1

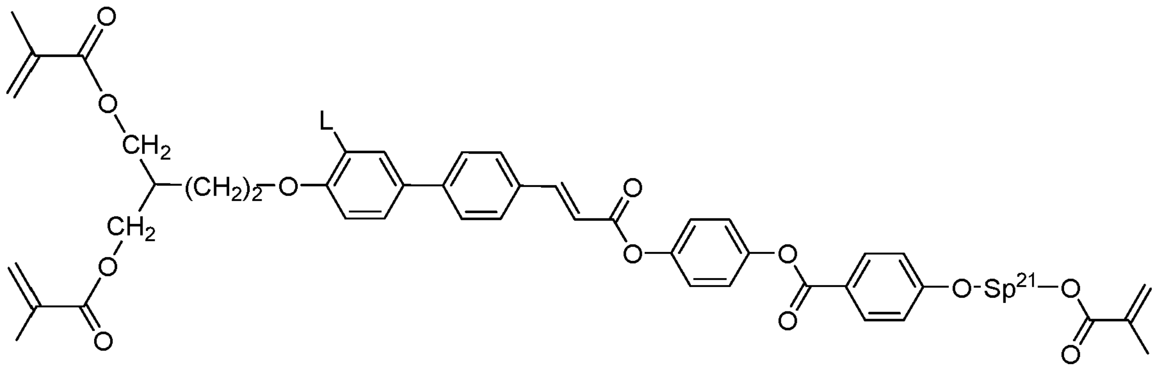

I-4-1a-2

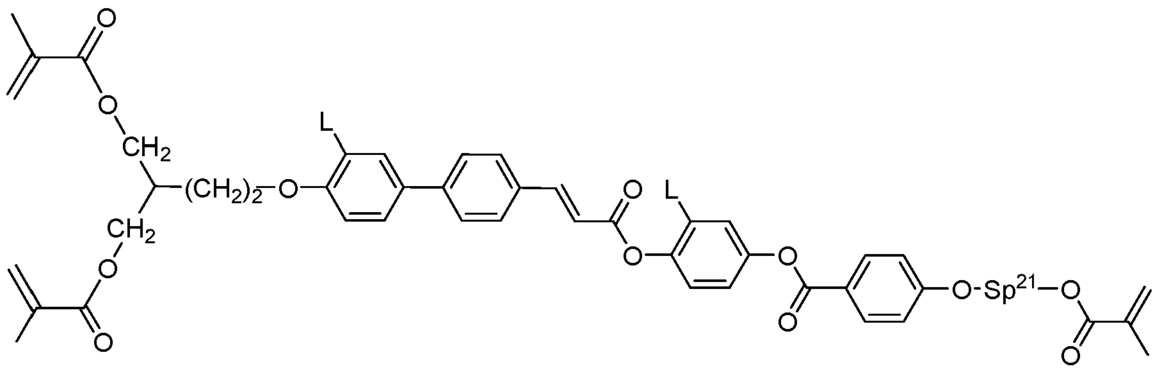

I-4-1a-3

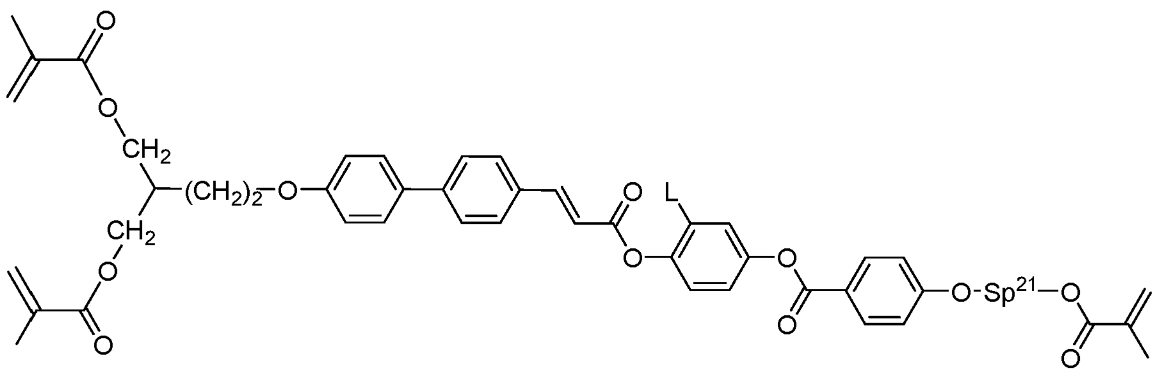

I-4-1a-4

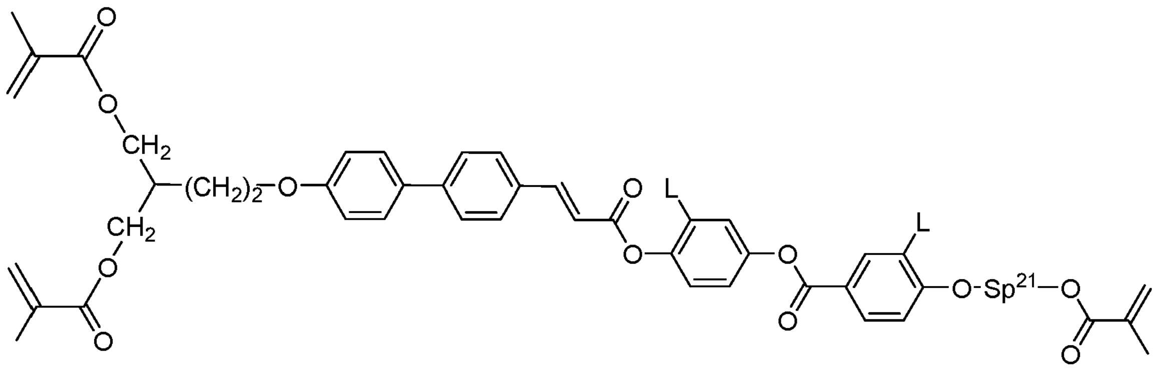

I-4-1a-5

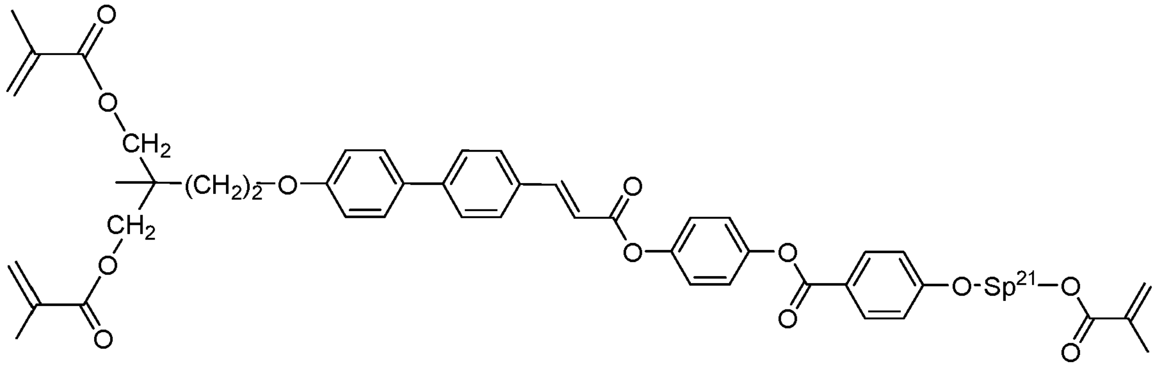

I-4-1a-6

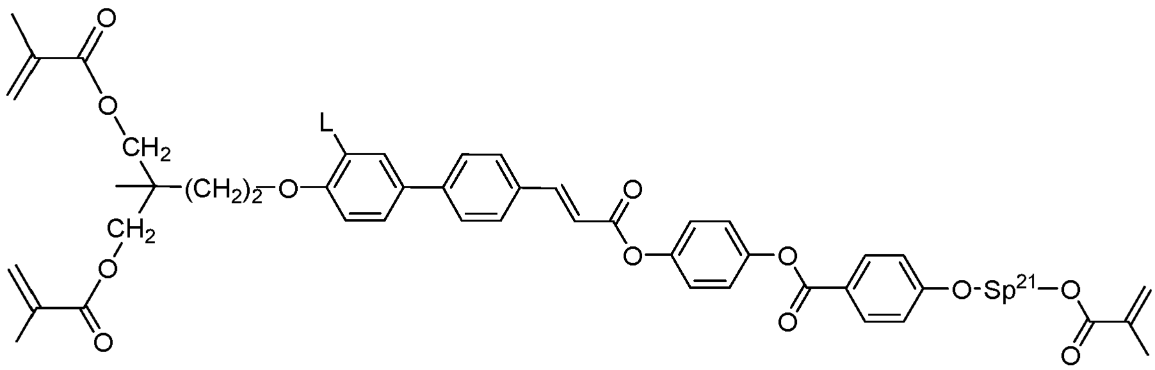

I-4-1a-7

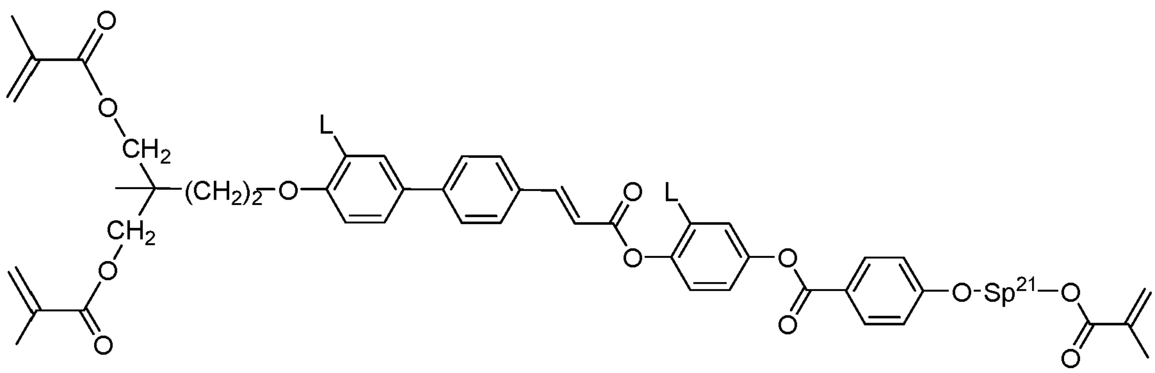

I-4-1a-8

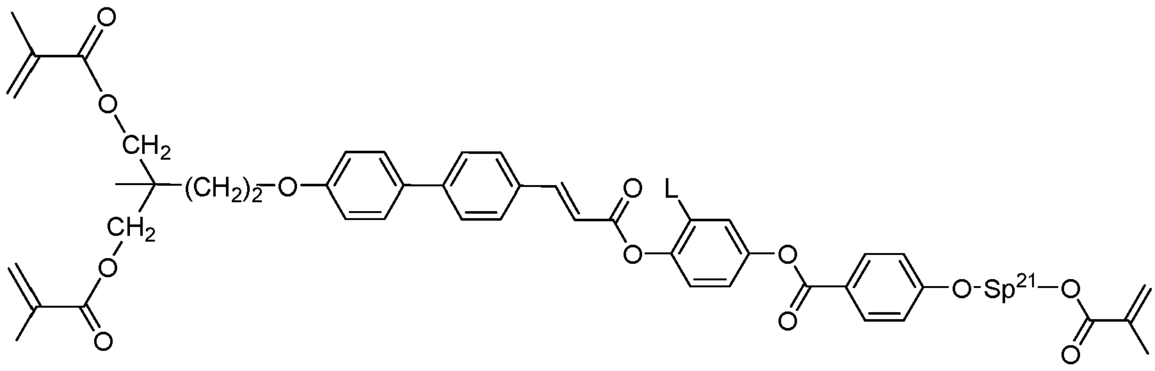

I-4-1a-9

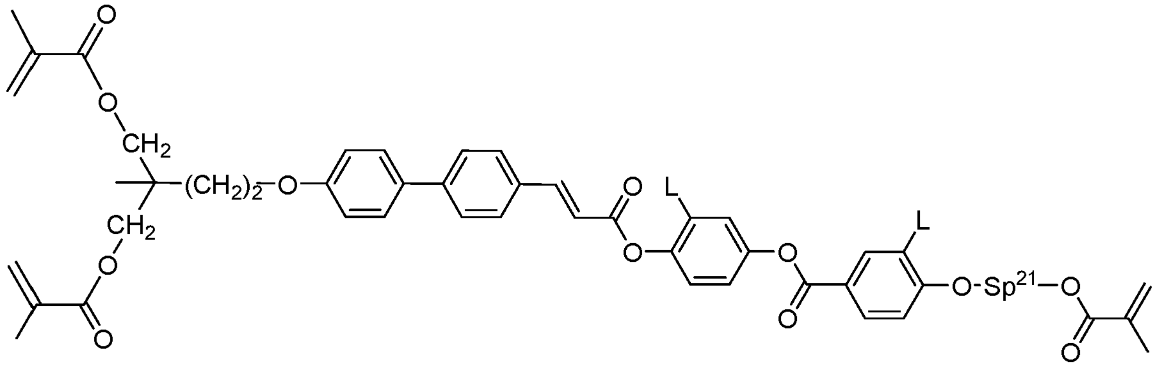

I-4-1a-10

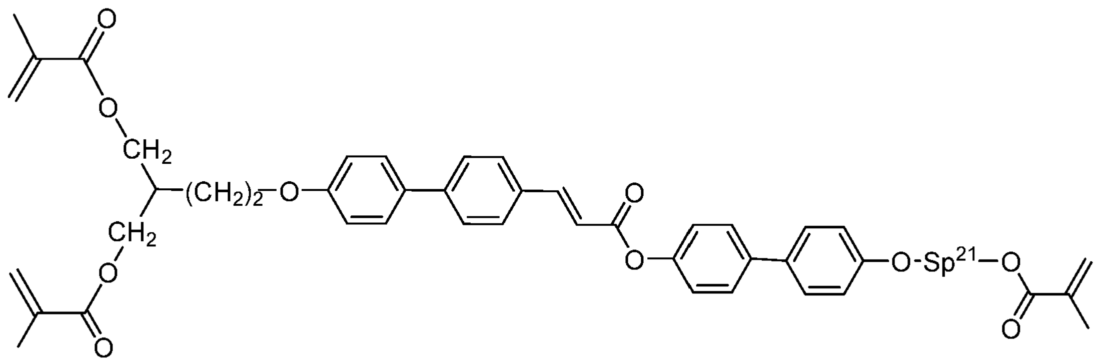

I-4-1a-1

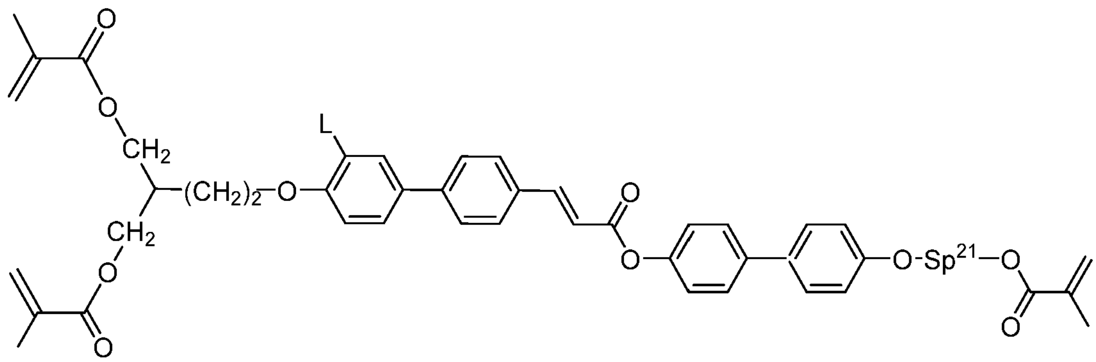

I-4-1a-2

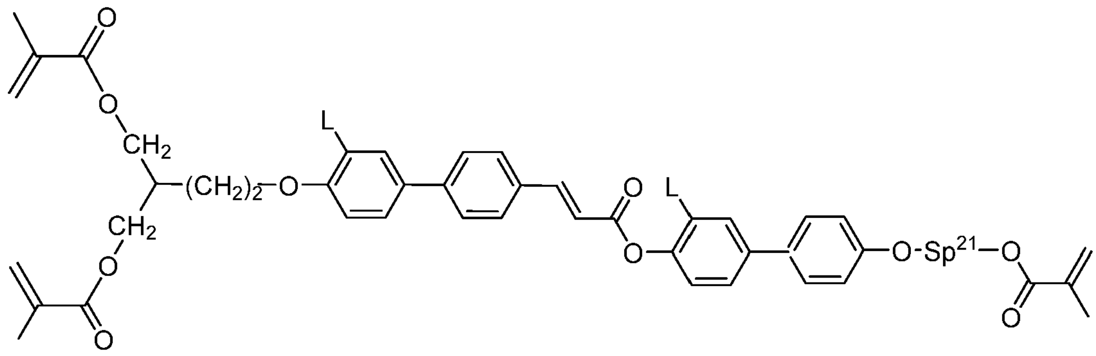

I-4-1a-3

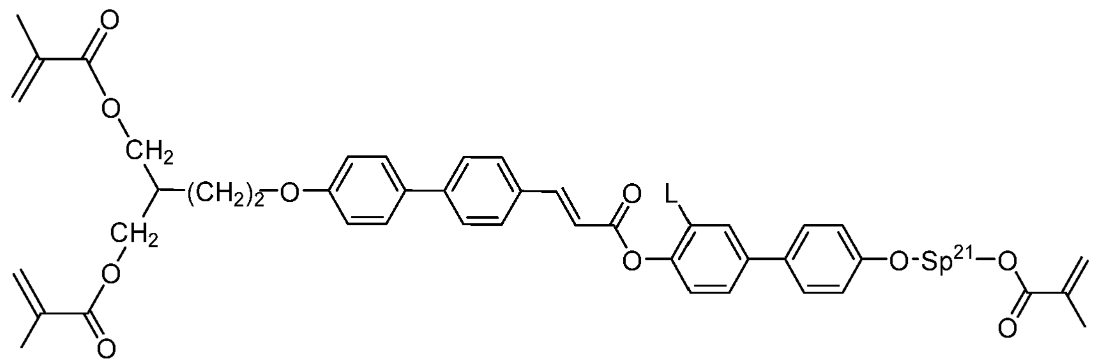

I-4-1a-4

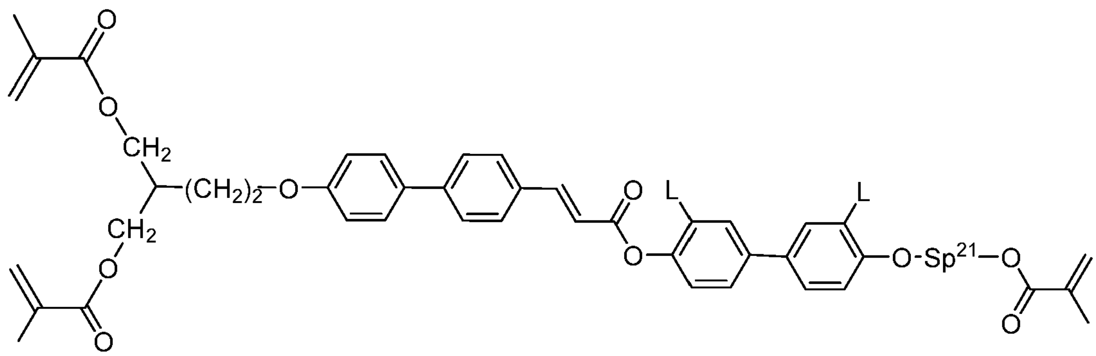

I-4-1a-5

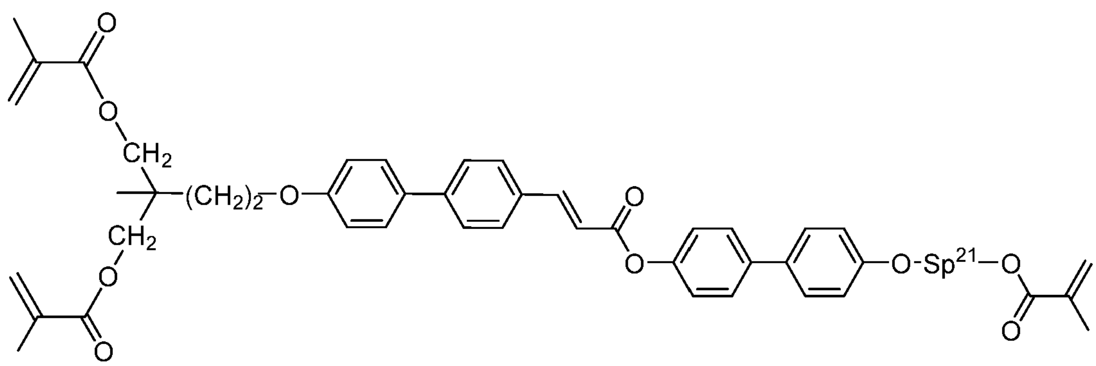

I-4-1a-6

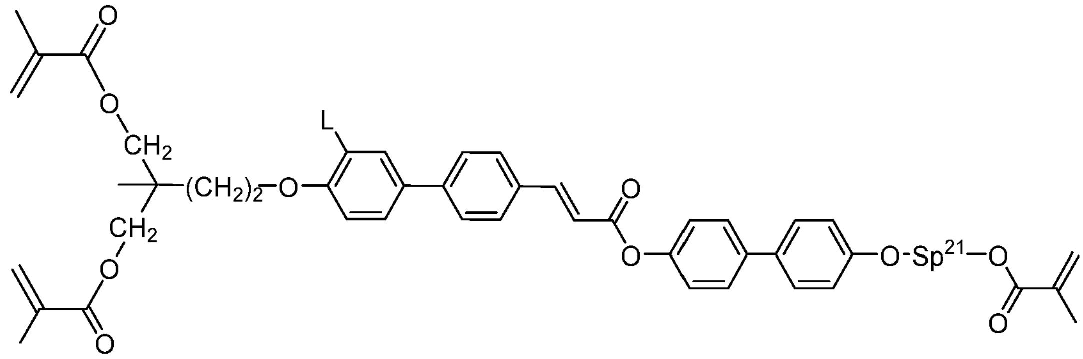

I-4-1a-7

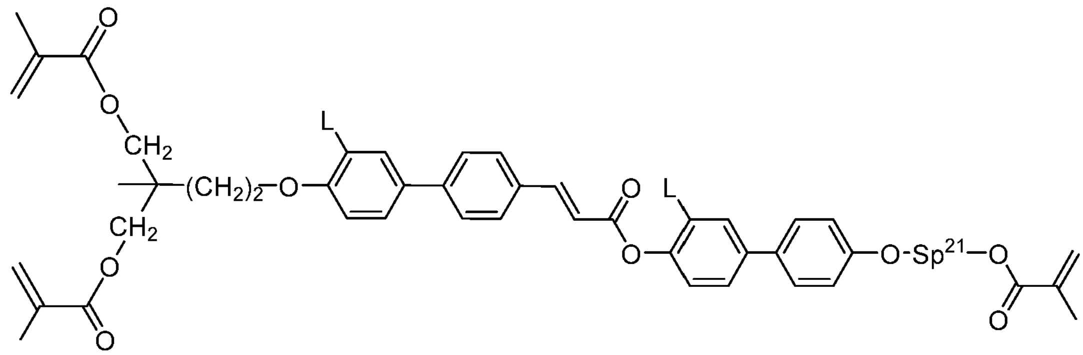

I-4-1a-8

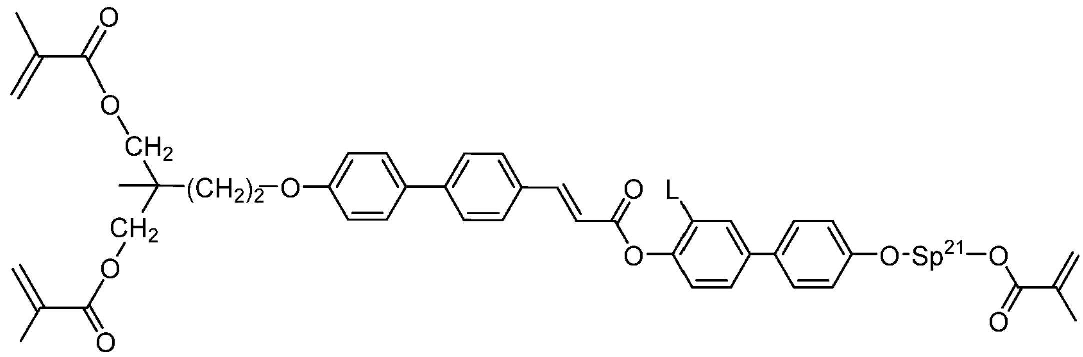

I-4-1a-9

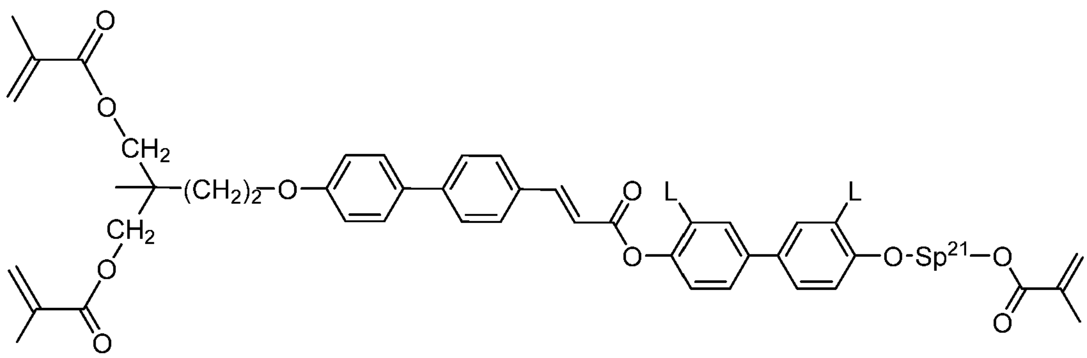

I-4-1a-10

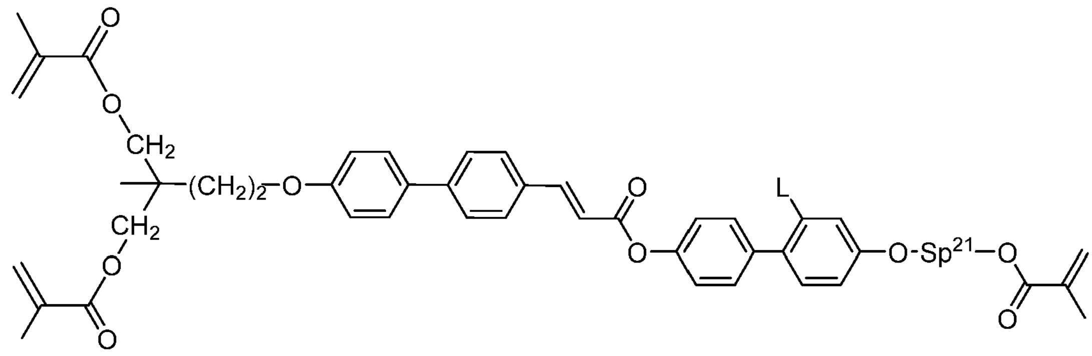

I-4-1a-11

wherein $Sp^{21}$ has one of the meanings as given above in formula I and L each and independently denotes F, Cl, alkoxy or alkyl both having 1 to 6 C Atoms, preferably, methyl, ethyl, propyl, butyl, pentyl, hexyl, cyclopropyl, cylobutyl, cyclopentyl, or cyclohexyl or $X^{21}$-$Sp^{21}$-$R^{21}$ and preferably $Sp^{21}$ denotes -$S^1$-O-$A^{Sp}$, or -$S^1$-O-$A^{Sp}$-O-$S^2$- wherein $S^1$ is propylene, butylene, pentylene, hexylene, heptylene, octylene, nonylene, decylene, undecylene, dodecylene, $S^2$ is propylene, butylene, pentylene, hexylene, heptylene, octylene, nonylene, decylene, undecylene, dodecylene,

$A^{Sp}$ denotes 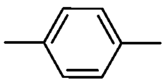 , 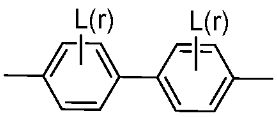 , 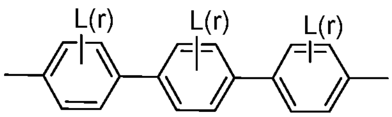

r denotes 0 or 1.

Further preferred compounds of formulae I-5-1 are compounds of the following sub-formulae:

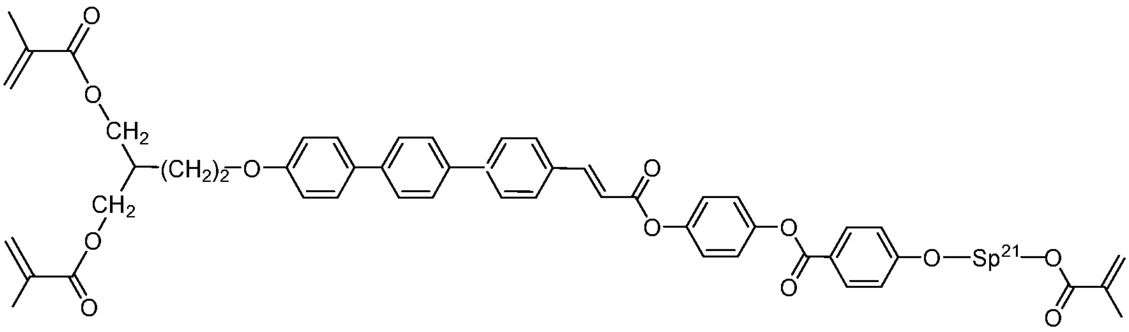

I-5-1a-1

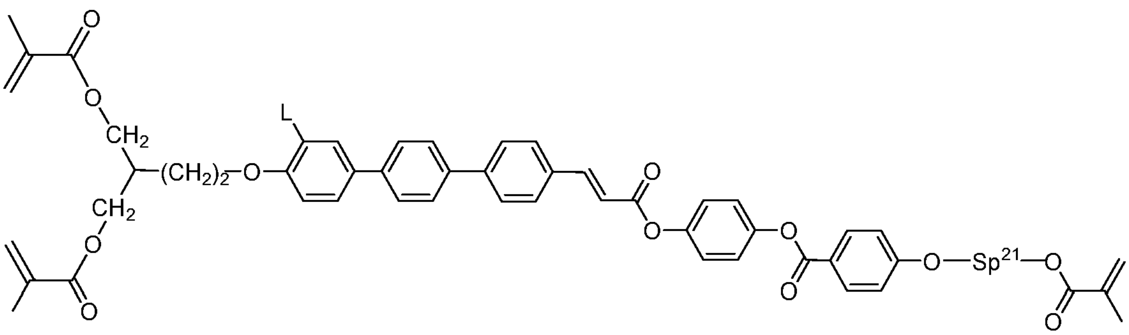

I-5-1a-2

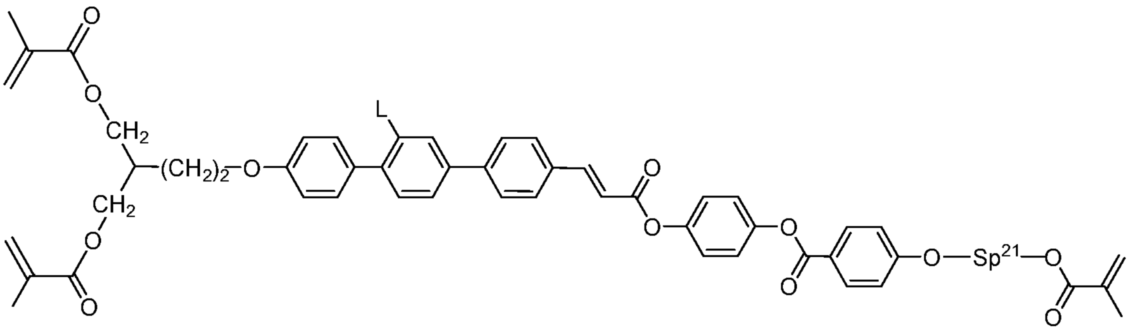

I-5-1a-3

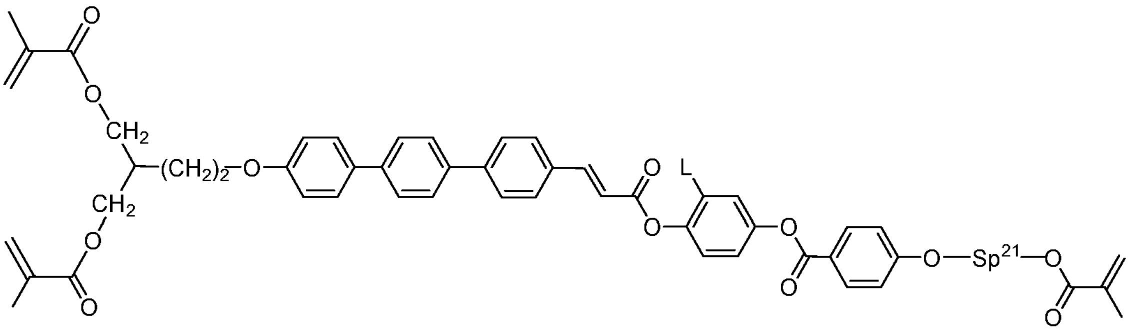

I-5-1a-4

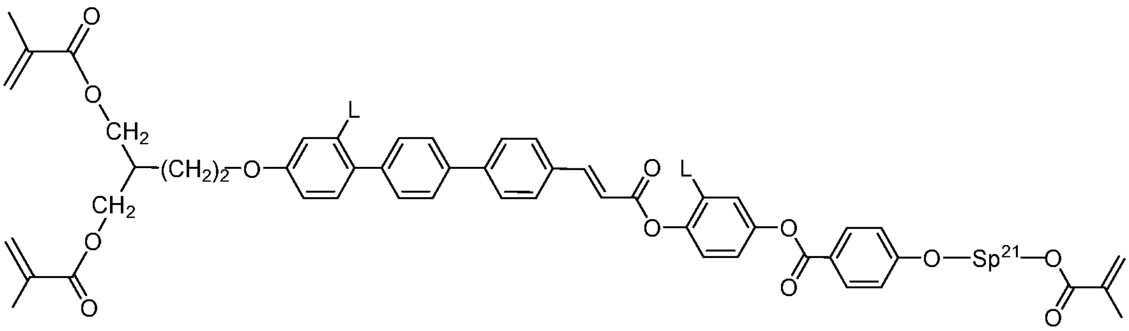

I-5-1a-5

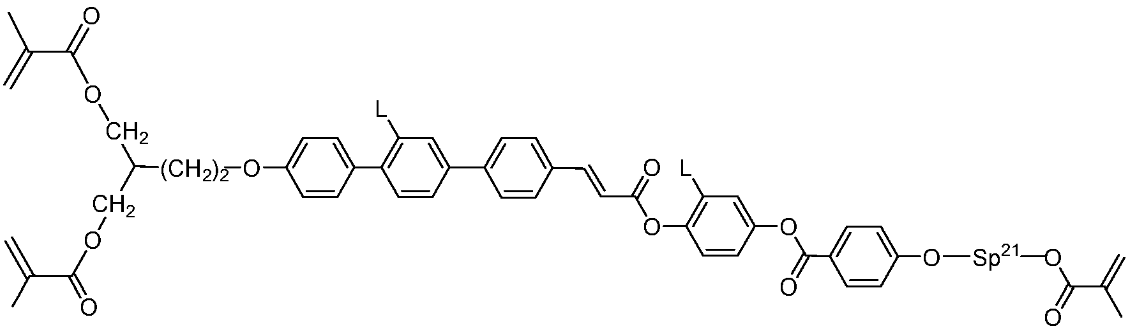

I-5-1a-6

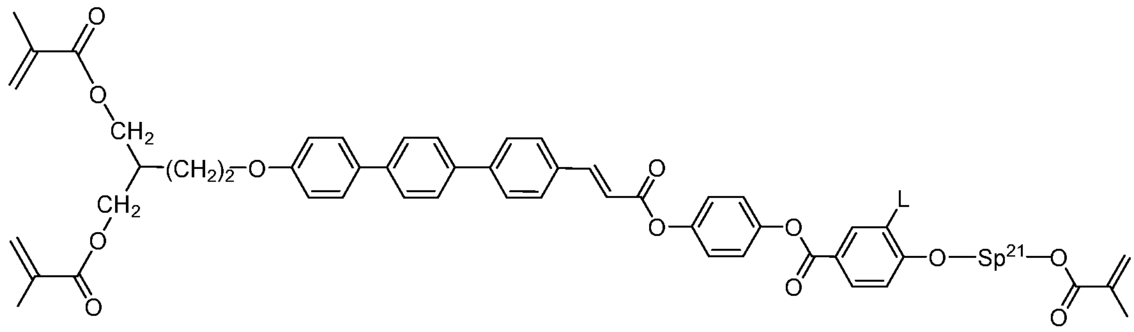

I-5-1a-7

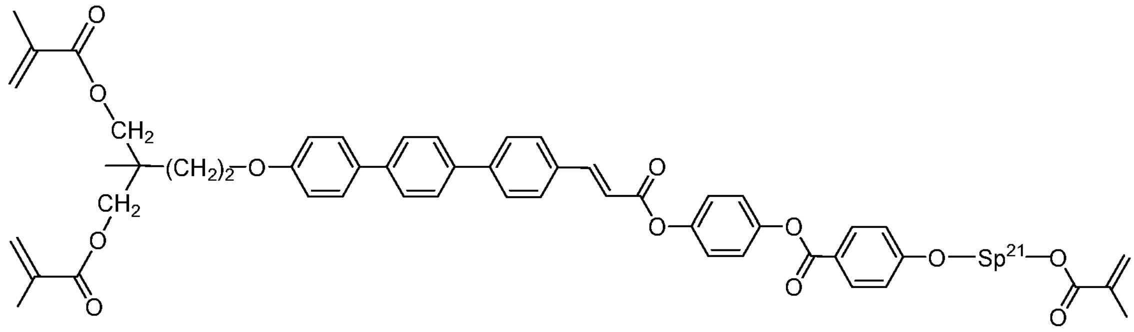

I-5-1a-8

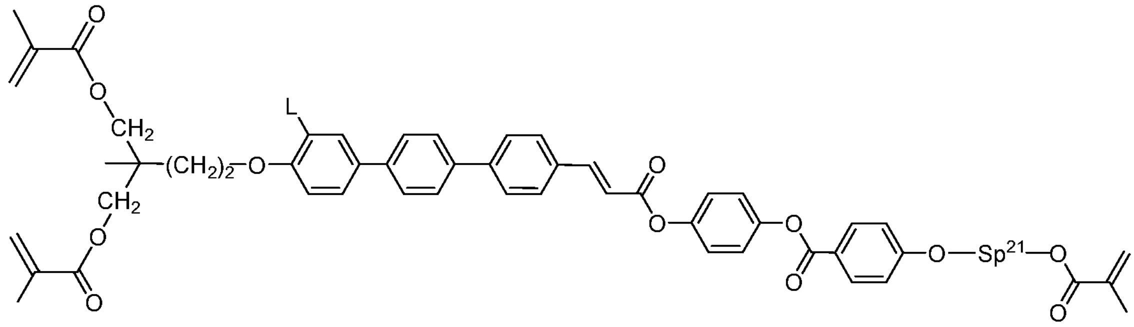

I-5-1a-9

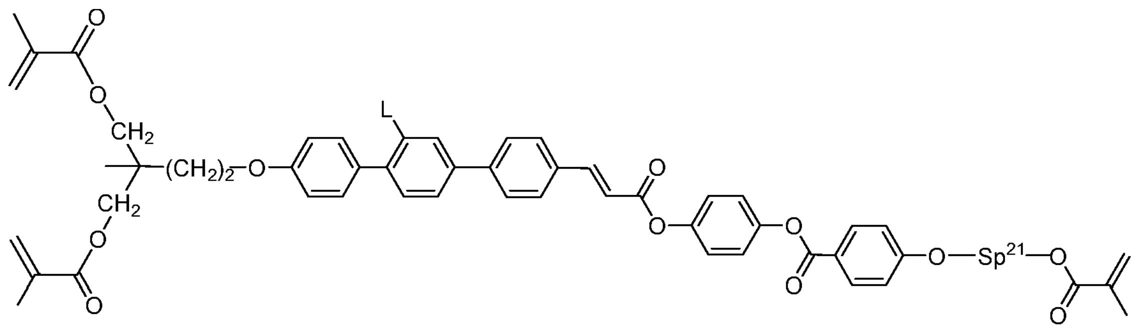

I-5-1a-10

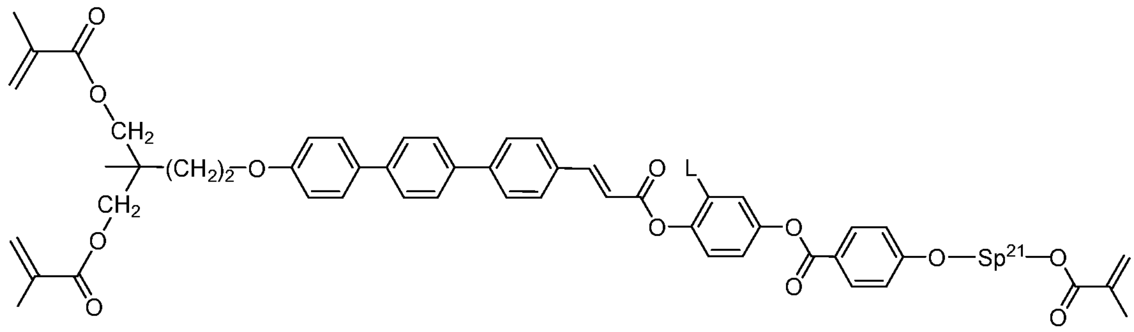

I-5-1a-11

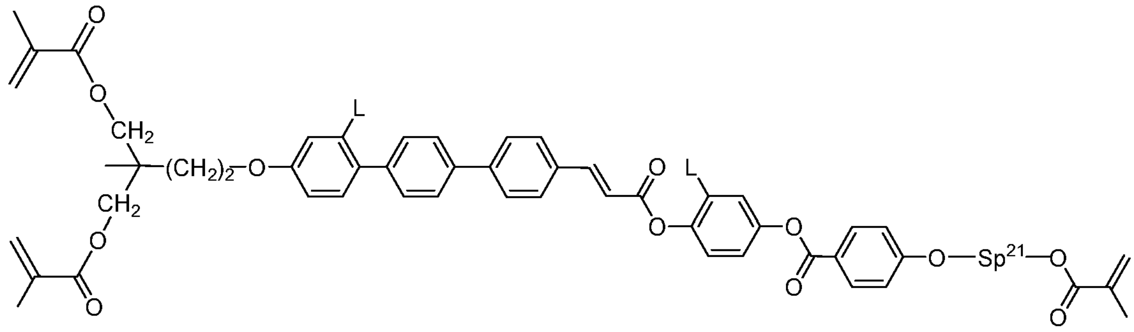

I-5-1a-12

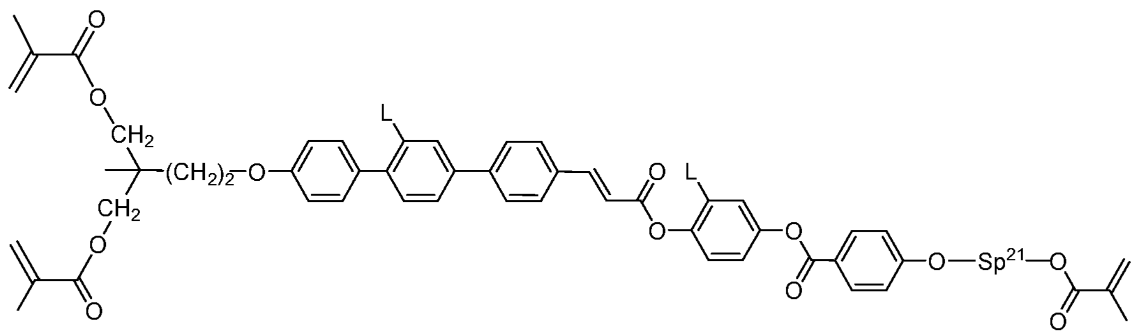

I-5-1a-13

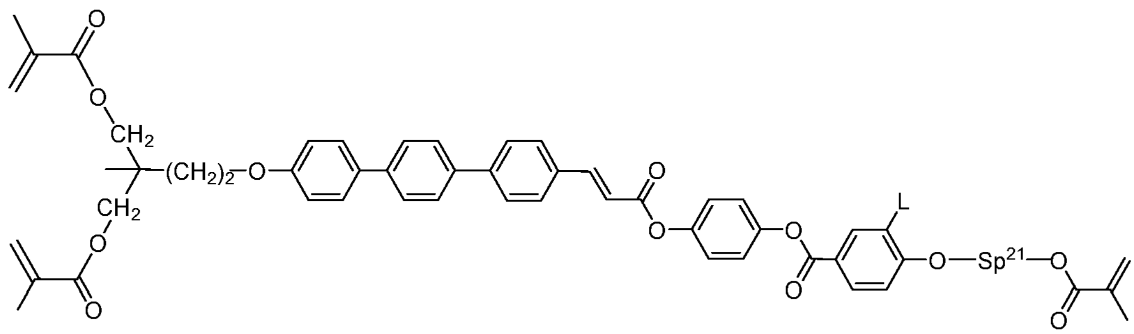

I-5-1a-14

wherein $Sp^{21}$ has one of the meanings as given above in formula I and L each and independently denotes F, Cl, alkoxy or alkyl both having 1 to 6 C Atoms, preferably, methyl, ethyl, propyl, butyl, pentyl, hexyl, cyclopropyl, cylobutyl, cyclopentyl, or cyclohexyl or $X^{21}$-$Sp^{21}$-$R^{21}$ and preferably $Sp^{21}$ denotes -$S^1$-O-$A^{Sp}$, or -$S^1$-O-$A^{Sp}$-O-$S^2$- wherein $S^1$ is propylene, butylene, pentylene, hexylene, heptylene, octylene, nonylene, decylene, undecylene, dodecylene, $S^2$ is propylene, butylene, pentylene, hexylene, heptylene, octylene, nonylene, decylene, undecylene, dodecylene,

$A^{Sp}$ denotes 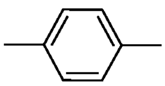, 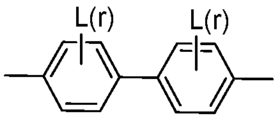, 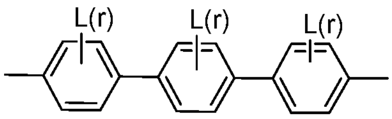

r denotes 0 or 1.

Further preferred compounds of formula I are selected from compounds of formulae I-4-1a-1 to I-4-1 a-11 wherein $Sp^{21}$ denotes $-S^1$-O-$A^{Sp}$ wherein $S^1$ denotes hexylene, and $A^{Sp}$ denotes a group

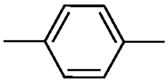.

Further preferred compounds of formula I are selected from compounds of formulae I-4-1a-1 to I-4-1 a-11 wherein $Sp^{21}$ denotes $S^1$-O-$A^{Sp}$-O-$S^2$-wherein $S^1$ and $S^2$ denotes hexylene, and $A^{Sp}$ denotes a group

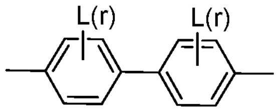

wherein r denotes 0 or 1 and L denotes methyl, ethyl, propyl, butyl, pentyl, hexyl, cyclopropyl, cylobutyl, cyclopentyl, or cyclohexyl.

The compounds of formula I and subformulae thereof are preferably synthesised according to or in analogy to the procedures described in WO 2017/102068 and JP 2006-6232809.

The compounds of formula I and subformulae thereof can be preferably utilized in a mixture comprising one or more mesogenic or liquid-crystalline compounds.

Therefore, the present invention relates to the use compounds of formula I and subformulae thereof in a liquid crystal mixture.

Further the present invention relates to liquid crystal mixtures comprising a photoalignment component A) comprising one or more photoreactive mesogens of formula I, and a liquid-crystalline component B), hereinafter also referred to as "LC host mixture", comprising one or more mesogenic or liquid-crystalline compounds.

The media according to the invention preferably comprise from 0.01 to 10%, particularly preferably from 0.05 to 5% and most preferably from 0.1 to 3% of component A) comprising compounds of formula I according to the invention.

The media preferably comprise one, two or three, more preferably one or two and most preferably one compound of the formula I according to the invention.

In a preferred embodiment component A) consists of compounds of formula I.

In a preferred embodiment, the LC-host mixture (component B) according to the present invention comprises one or more, preferably two or more, low-molecular-weight (i.e. monomeric or unpolymerized) compounds. The latter are stable or unreactive with respect to a polymerisation reaction or photoalignment under the conditions used for the polymerisation of the polymerizable compounds or photoalignment of the photoreactive mesogen of formula I.

In principle, a suitable host mixture is any dielectrically negative or positive LC mixture which is suitable for use in conventional VA, IPS or FFS displays.

Suitable LC mixtures are known to the person skilled in the art and are described in the literature. LC media for VA displays having negative dielectric anisotropy are described in for example EP 1 378 557 A1.

Suitable LC mixtures having positive dielectric anisotropy which are suitable for LCDs and especially for IPS displays are known, for example, from JP 07-181 439 (A), EP 0 667 555, EP 0 673 986, DE 195 09 410, DE 195 28 106, DE 195 28 107, WO 96/23 851, WO 96/28 521 and WO2012/079676.

Preferred embodiments of the liquid-crystalline medium having negative or positive dielectric anisotropy according to the invention are indicated below and explained in more detail by means of the working examples.

The LC host mixture is preferably a nematic LC mixture, and preferably does not have a chiral LC phase.

In a preferred embodiment of the present invention the LC medium contains an LC host mixture with negative dielectric anisotropy. Preferred embodiments of such an LC medium are those of sections a)-z) below:

a) LC medium which comprises one or more compounds of the formulae CY and/or PY:

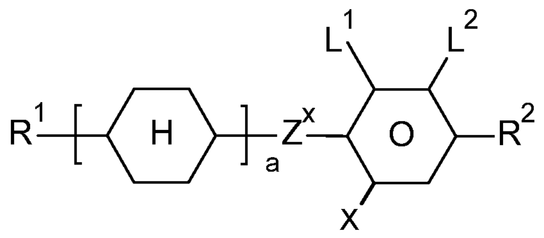

CY

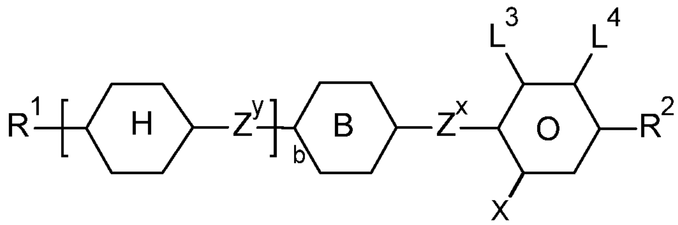

PY

wherein

a denotes 1 or 2,

b denotes 0 or 1,

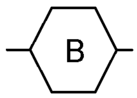 denotes 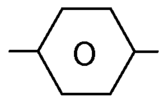 or 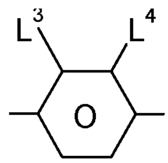

$R^1$ and $R^2$ each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another, one or more $CH_2$-groups may be replaced by and one or

, 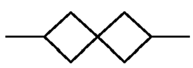, 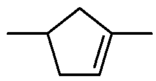 or 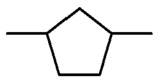,

more H atoms may be replaced by F or Cl, preferably alkyl or alkoxy having 1 to 6 C atoms,

$Z^x$ and $Z^y$ each, independently of one another, denote $-CH_2CH_2-$, -CH=CH-, $-CF_2O-$, $-OCF_2-$, $-CH_2O-$, -O $CH_2$-, -CO-O-, -O-CO-, $-C_2F_4-$, -CF=CF-, $-CH=CH-CH_2O-$ or a single bond, preferably a single bond,

X denotes H or $CH_3$,

$L^{1-4}$ each, independently of one another, denote F, Cl, $OCF_3$, $CF_3$, $CH_3$, $CH_2F$, $CHF_2$.

Preferably, both $L^1$ and $L^2$ denote F or one of $L^1$ and $L^2$ denotes F and the other denotes Cl, or both $L^3$ and $L^4$ denote F or one of $L^3$ and $L^4$ denotes F and the other denotes Cl.

The compounds of the formula CY are preferably selected from the group consisting of the following sub-formulae:

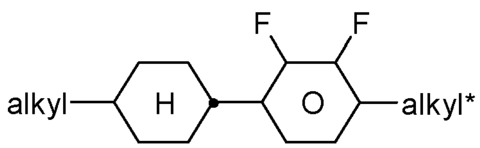

CY1

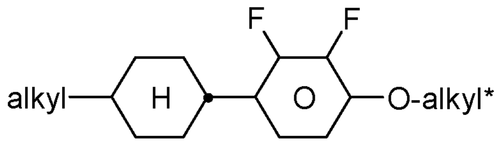

CY2

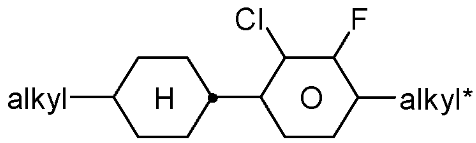

CY3

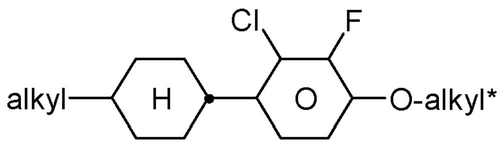

CY4

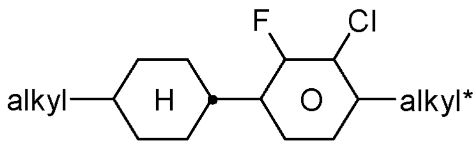

CY5

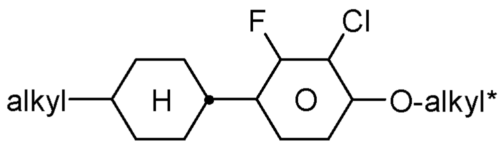

CY6

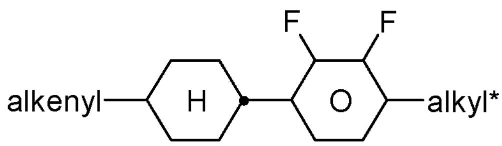

CY7

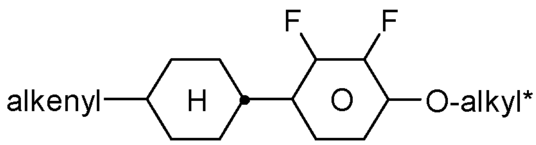

CY8

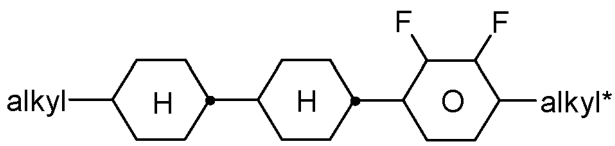

CY9

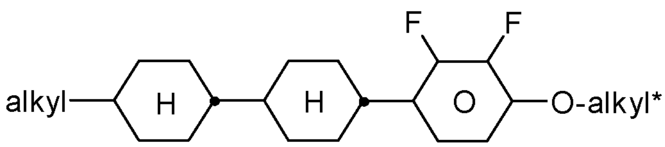

CY10

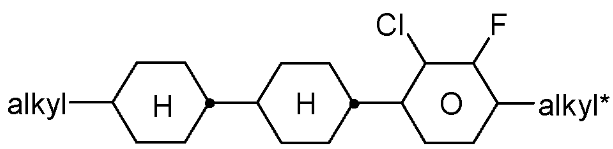

CY11

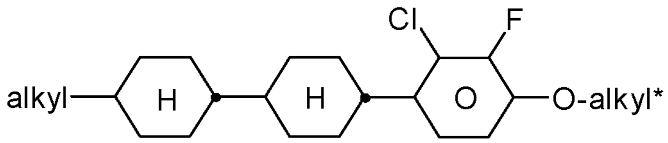

CY12

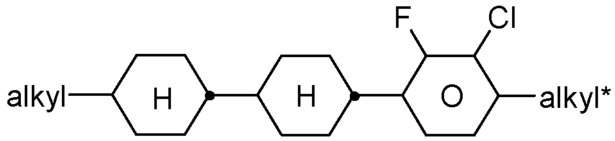

CY13

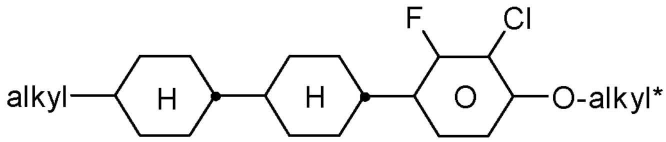

CY14

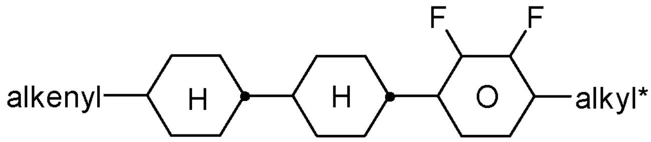

CY15

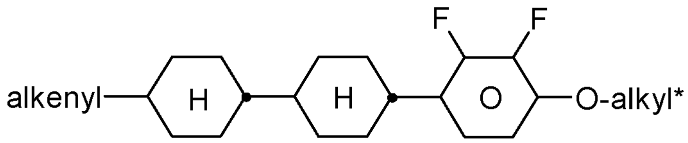

CY16

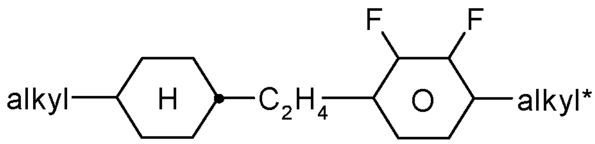

CY17

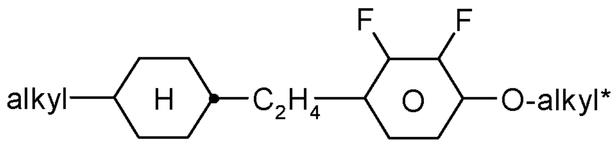

CY18

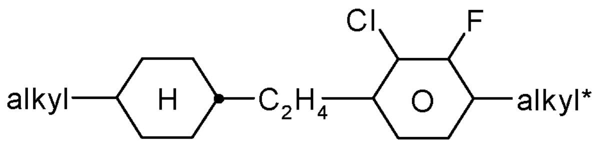

CY19

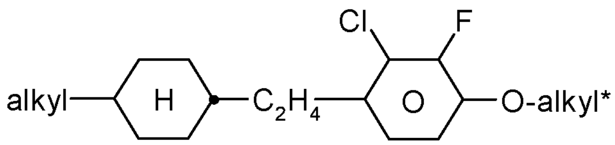

CY20

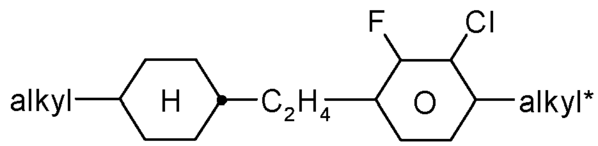

CY21

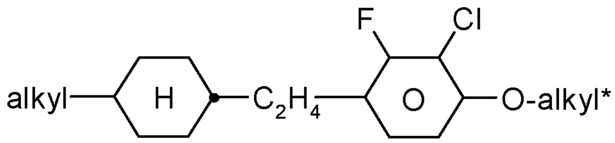

CY22

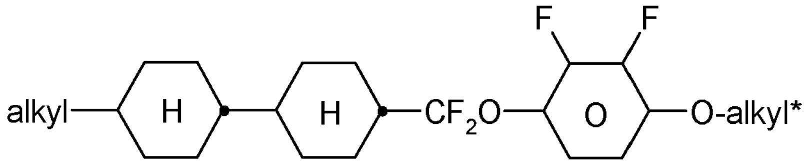

CY23

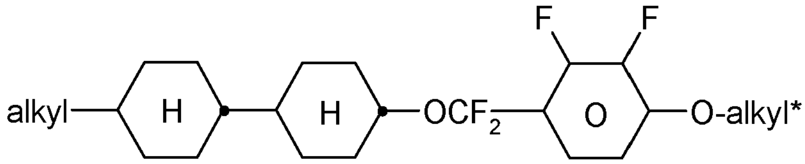

CY24

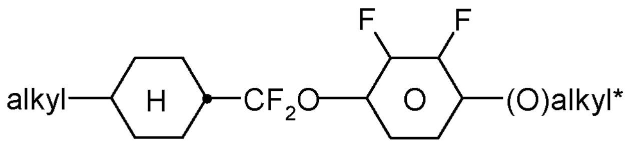

CY25

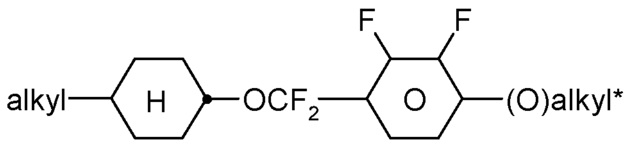

CY26

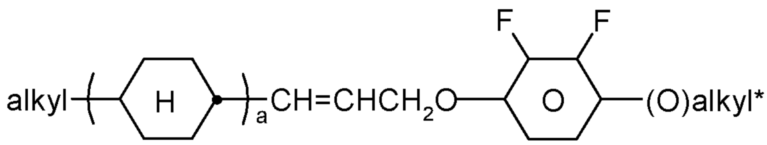

CY27

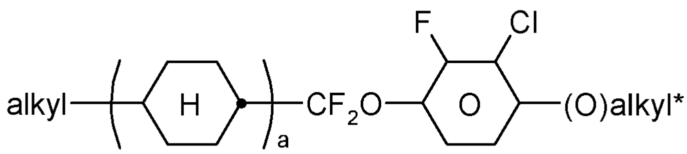

CY28

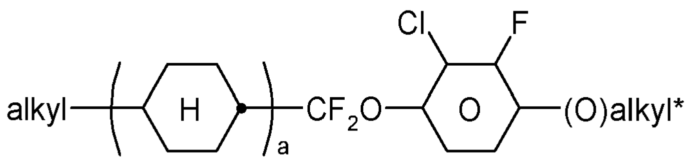

CY29

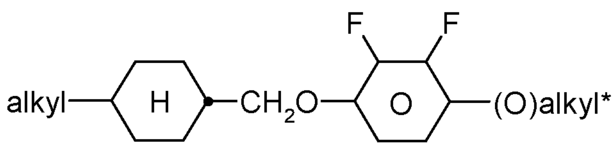

CY30

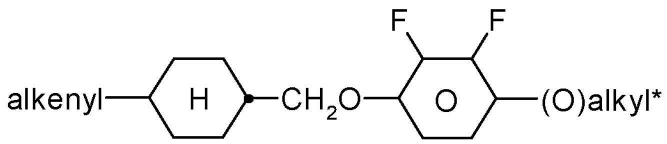

CY31

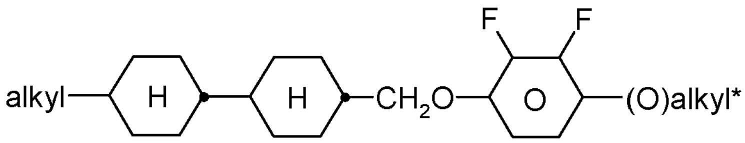

CY32

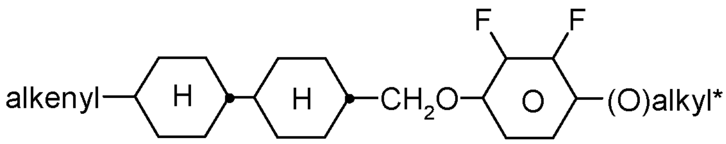

CY33

wherein a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

The compounds of the formula PY are preferably selected from the group consisting of the following sub-formulae:

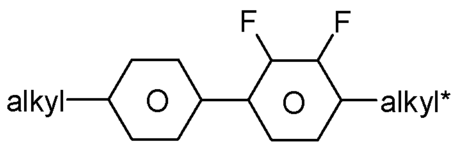

PY1

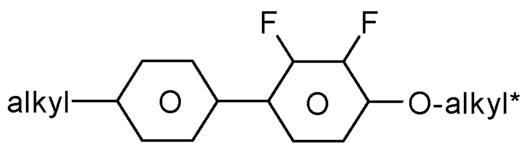

PY2

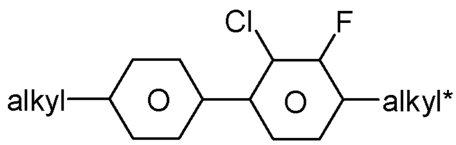

PY3

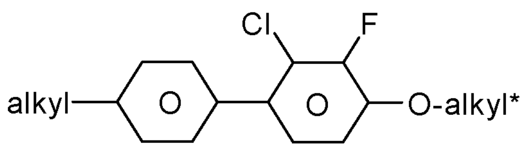

PY4

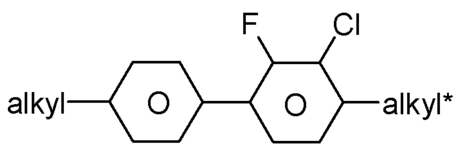

PY5

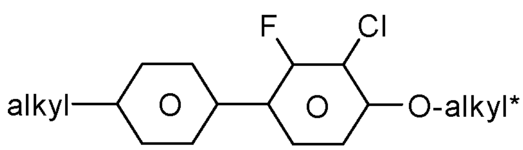

PY6

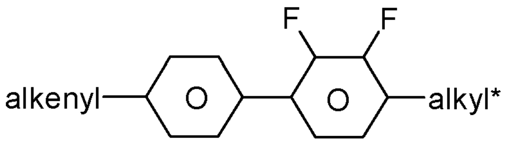

PY7

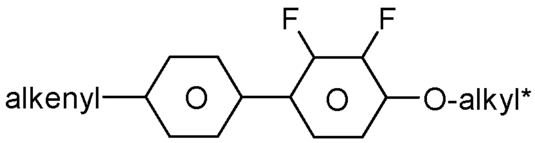

PY8

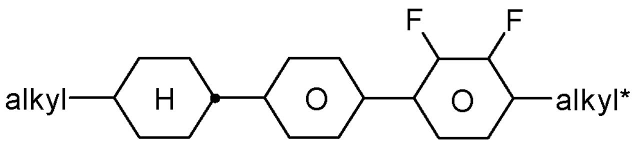

PY9

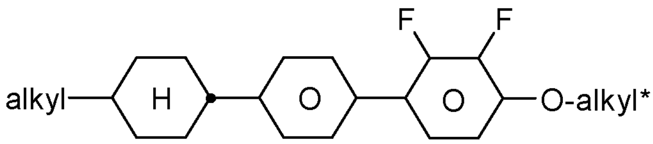

PY10

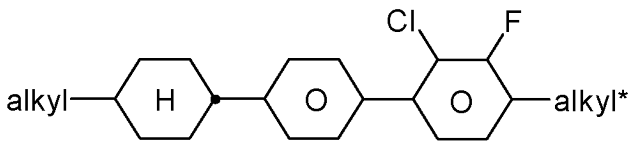

PY11

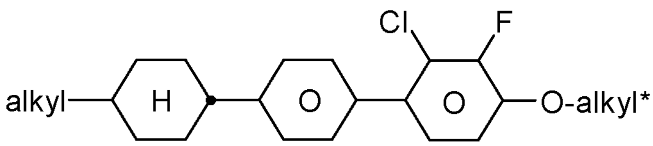

PY12

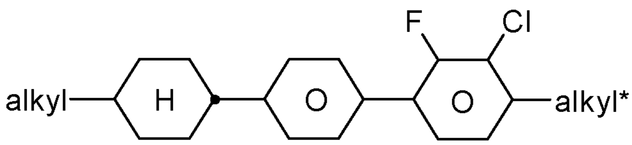

PY13

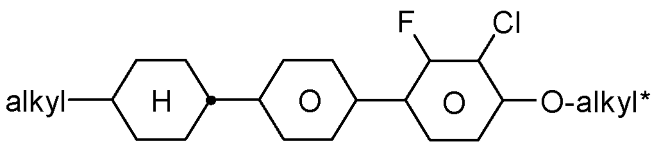

PY14

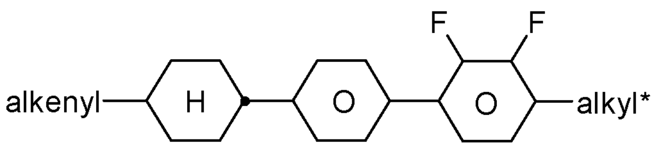

PY15

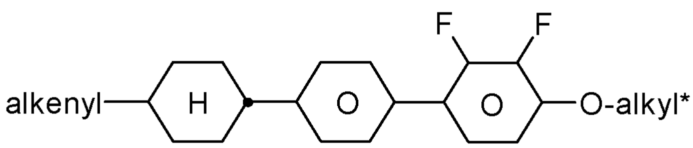

PY16

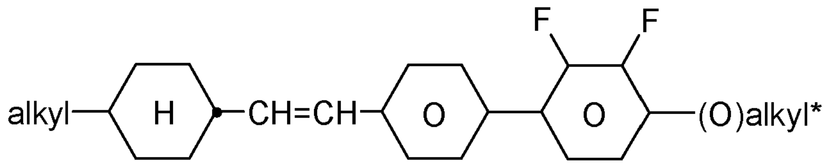

PY17

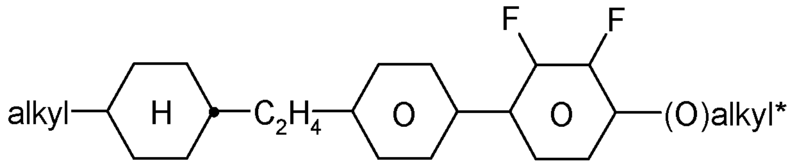

PY18

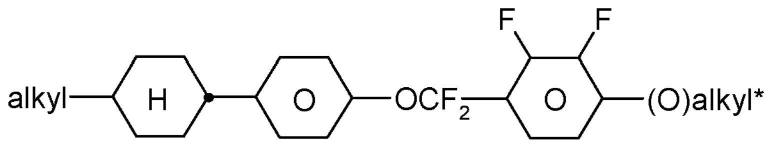

PY19

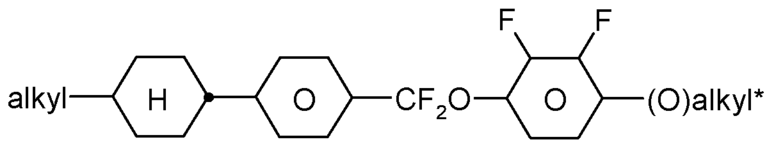

PY20

wherein alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

b) LC medium which additionally comprises one or more compounds of the following formula:

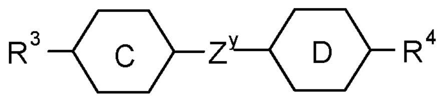

ZK

in which the individual radicals have the following meanings:

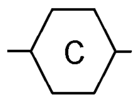

denotes

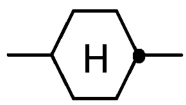 , 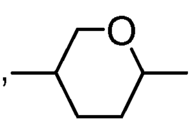 , 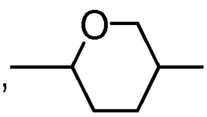 ,

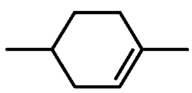 or 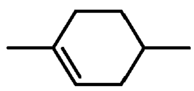 ,

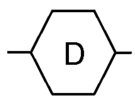

denotes

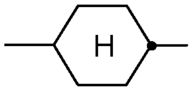 or 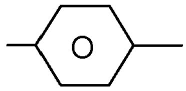 ,

$R^3$ and $R^4$ each, independently of one another, denote alkyl having 1 to 12 C atoms, in which, in addition, one or two non-adjacent $CH_2$ groups may be replaced by -O-, -CH=CH-, -CO-, -O-CO- or -CO-O- in such a way that O atoms are not linked directly to one another, and one or more $CH_2$-groups may be replaced by

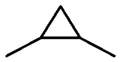 ,

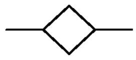 , 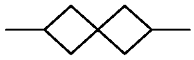 , 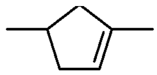 or 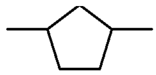 ,

$Z^y$ denotes $-CH_2CH_2-$, -CH=CH-, $-CF_2O-$, $-OCF_2-$, $-CH_2O-$, $-OCH_2-$, -CO-O-, -O-CO-, $-C_2F_4-$, -CF=CF-, $-CH=CH-CH_2O-$ or a single bond, preferably a single bond.

The compounds of the formula ZK are preferably selected from the group consisting of the following sub-formulae:

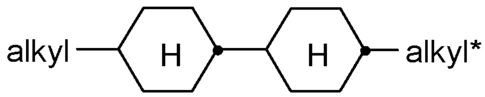 ZK1

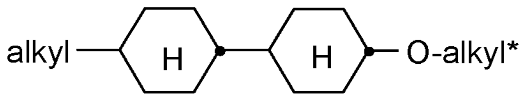 ZK2

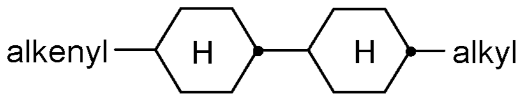 ZK3

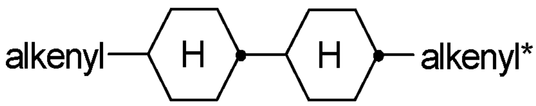 ZK4

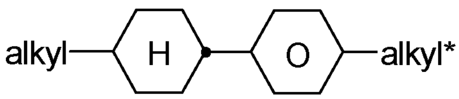 ZK5

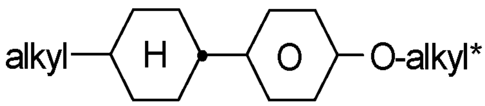 ZK6

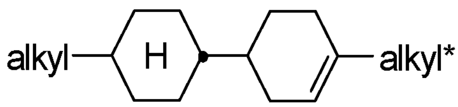 ZK7

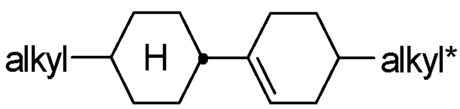 ZK8

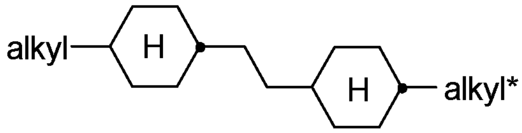

ZK9

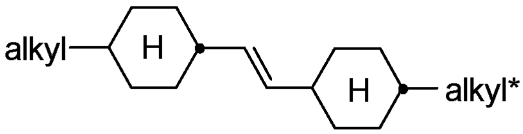

ZK10

in which alkyl and alkyl* each, independently of one another, denote a straight-chain alkyl radical having 1-6 C atoms, and alkenyl denotes a straight-chain alkenyl radical having 2-6 C atoms. Alkenyl preferably denotes CH2=CH-, CH2=CHCH2CH2-, CH3-CH=CH-, CH3-CH2-CH=CH-, CH3-(CH2)2-CH=CH-, CH3-(CH2)3-CH=CH- or CH3-CH=CH-(CH2)2-.

Especially preferred are compounds of formula ZK1 and ZK3.
Particularly preferred compounds of formula ZK are selected from the following sub-formulae:

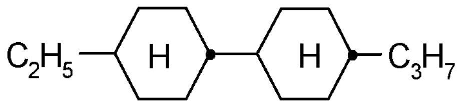

ZK1a

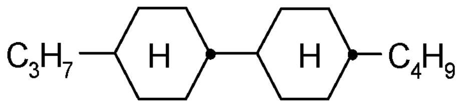

ZK1b

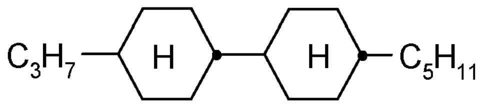

ZK1c

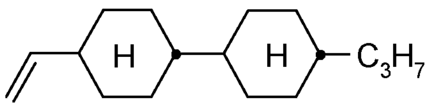

ZK3a

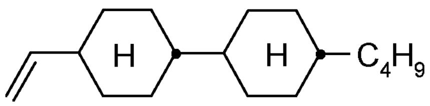

ZK3b

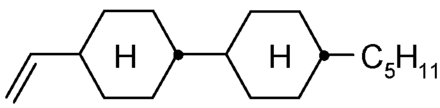

ZK3c

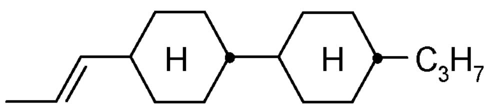

ZK3d

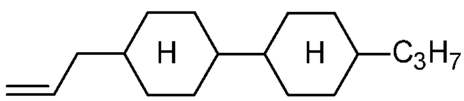

ZK3e

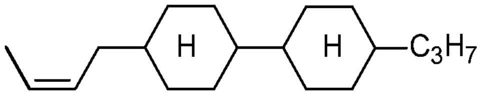

ZK3f

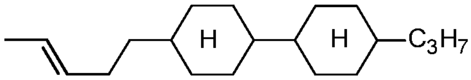

ZK3g

wherein the propyl, butyl and pentyl groups are straight-chain groups.

Most preferred are compounds of formula ZK1a and ZK3a.

c) LC medium which additionally comprises one or more compounds of the following formula:

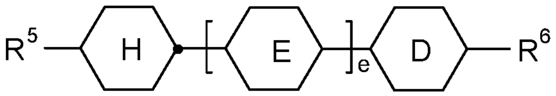

DK

in which the individual radicals on each occurrence, identically or differently, have the following meanings:

$R^5$ and $R^6$ each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another, and one or more $CH_2$-groups may be replaced by preferably alkyl or alkoxy having 1 to 6 C atoms,

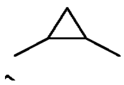,

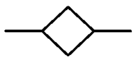, 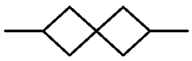, 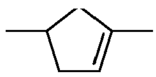 or 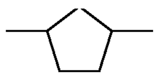,

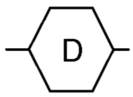

denotes

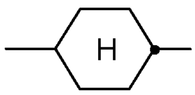 or 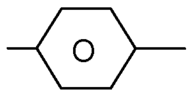,

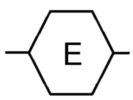

denotes

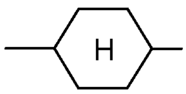, 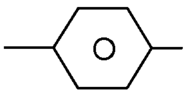 or 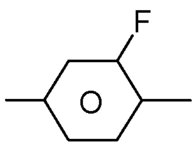,

and

e denotes 1 or 2.

The compounds of the formula DK are preferably selected from the group consisting of the following sub-formulae:

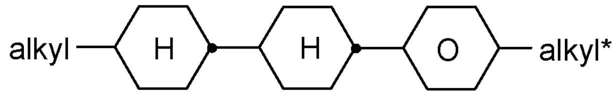
DK1

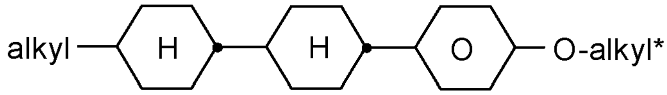
DK2

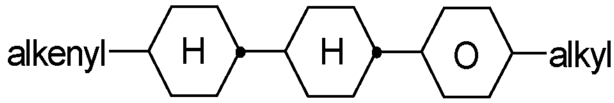
DK3

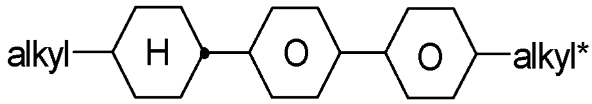
DK4

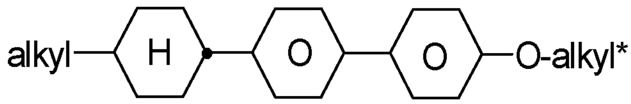
DK5

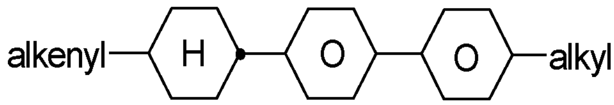
DK6

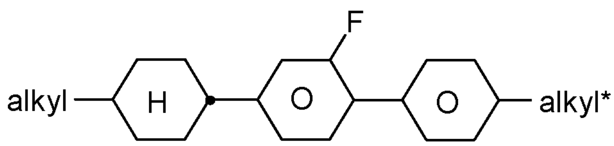
DK7

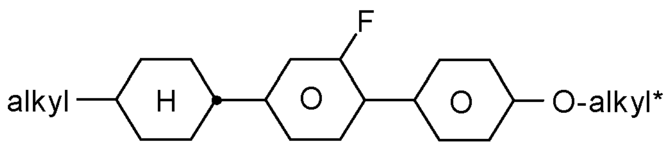
DK8

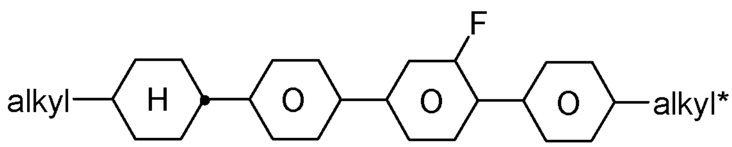
DK9

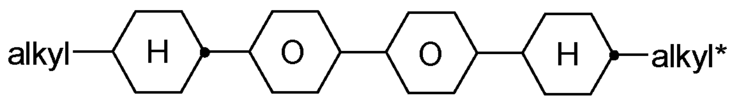
DK10

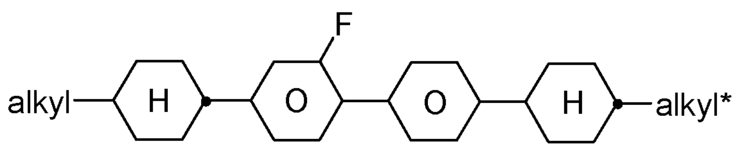
DK11

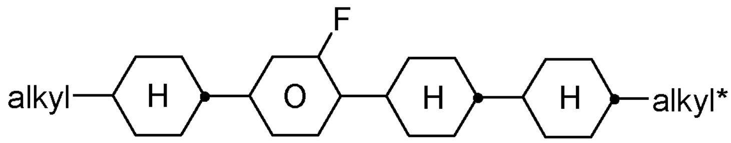

DK12

in which alkyl and alkyl* each, independently of one another, denote a straight-chain alkyl radical having 1-6 C atoms, and alkenyl denotes a straight-chain alkenyl radical having 2-6 C atoms. Alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

d) LC medium which additionally comprises one or more compounds of the following formula:

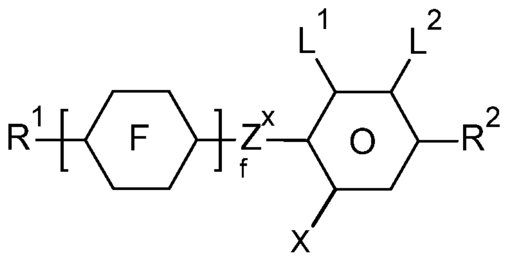

LY

in which the individual radicals have the following meanings:

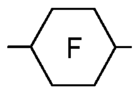

denotes

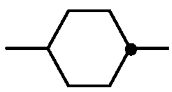 , 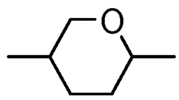 , 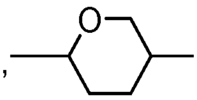 ,

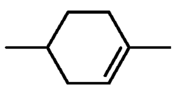 or 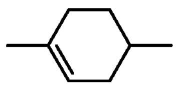

with at least one ring F being different from cyclohexylene,

f denotes 1 or 2,

$R^1$ and $R^2$ each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another, and one or more $CH_2$-groups may be replaced by

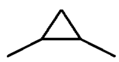 ,

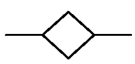 , 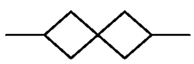 , 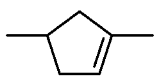 or 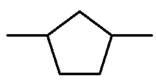 ,

$Z^x$ denotes -$CH_2CH_2$-, -CH=CH-, -$CF_2O$-, -$OCF_2$-, -$CH_2O$-, -O $CH_2$-, -CO-O-, -O-CO-, -$C_2F_4$-, -CF=CF-, -CH=CH-$CH_2O$- or a single bond, preferably a single bond,

X denotes H or $CH_3$,

$L^1$ and $L^2$ each, independently of one another, denote F, Cl, $OCF_3$, $CF_3$, $CH_3$, $CH_2F$, $CHF_2$.

Preferably, both radicals $L^1$ and $L^2$ denote F or one of the radicals $L^1$ and $L^2$ denotes F and the other denotes Cl. The compounds of the formula LY are preferably selected from the group consisting of the following sub-formulae:

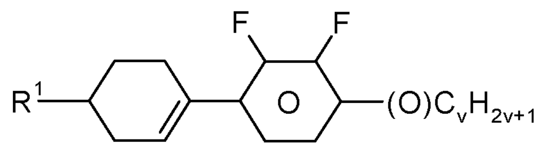

LY1

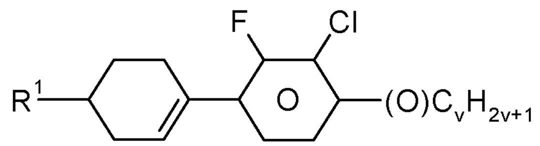

LY2

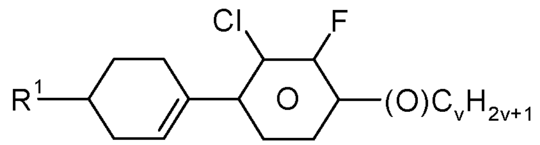

LY3

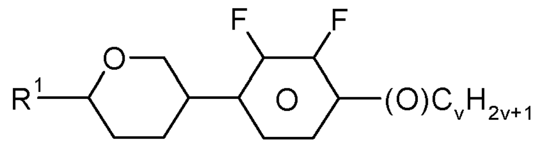

LY4

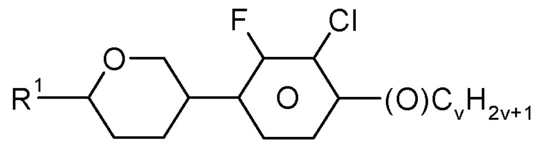

LY5

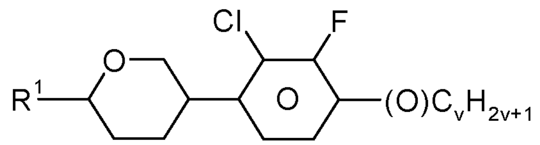

LY6

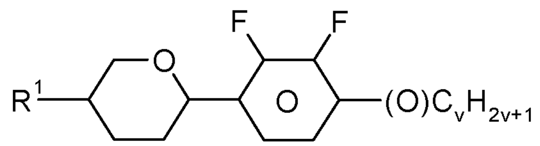

LY7

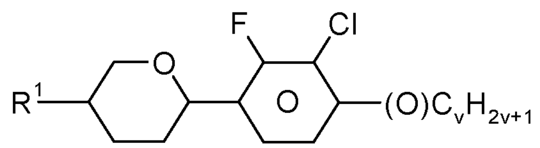

LY8

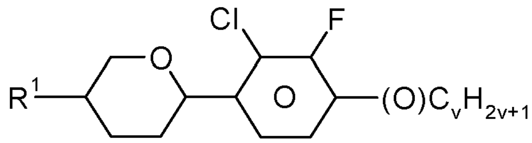

LY9

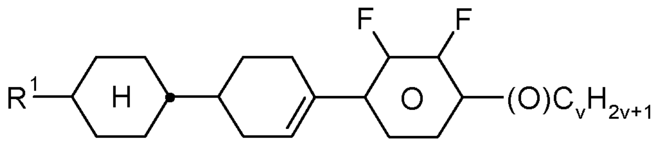

LY10

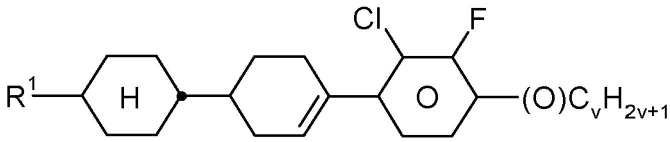

LY11

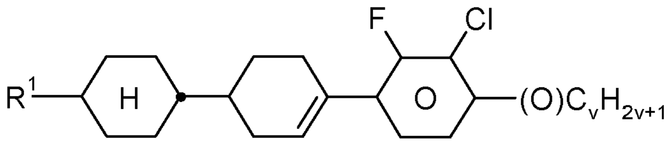

LY12

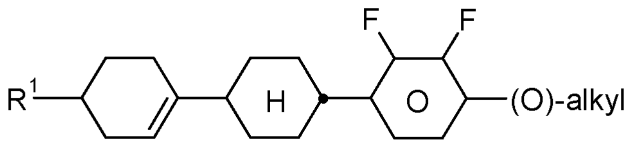

LY13

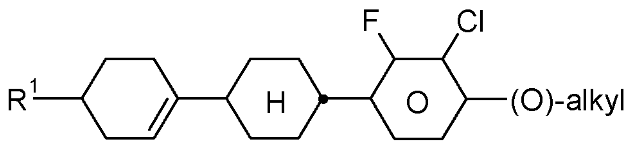

LY14

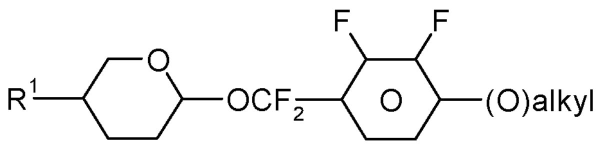

LY15

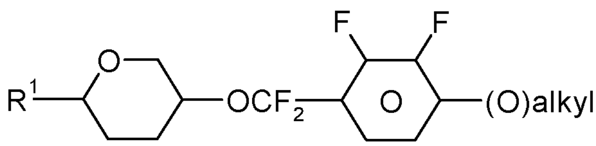

LY16

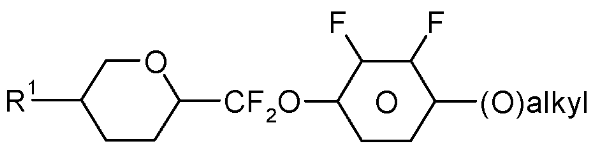

LY17

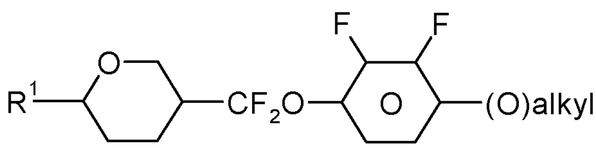

LY18

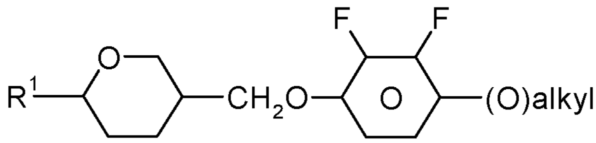

LY19

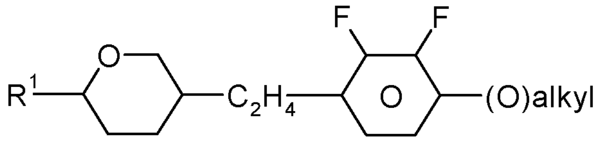

LY20

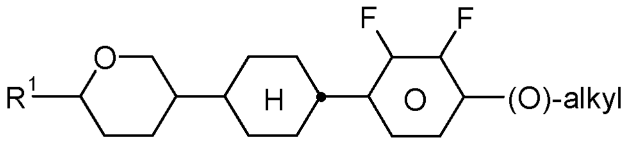

LY21

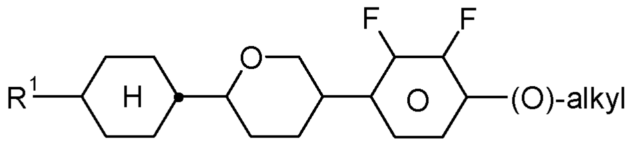

LY22

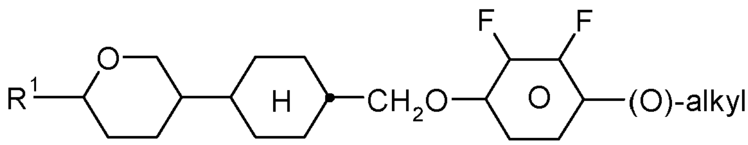

LY23

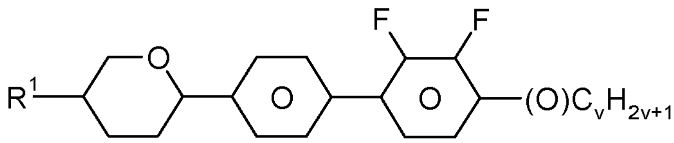

LY24

in which $R^1$ has the meaning indicated above, alkyl denotes a straight-chain alkyl radical having 1-6 C atoms, (O) denotes an oxygen atom or a single bond, and v denotes an integer from 1 to 6. $R^1$ preferably denotes straight-chain alkyl having 1 to 6 C atoms or straight-chain alkenyl having 2 to 6 C atoms, in particular $CH_3$, $C_2H_5$, n-$C_3H_7$, n-$C_4H_9$, n-$C_5H_{11}$, $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

e) LC medium which additionally comprises one or more compounds selected from the group consisting of the following formulae:

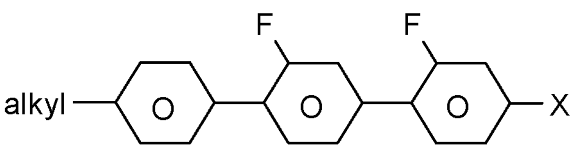

G1

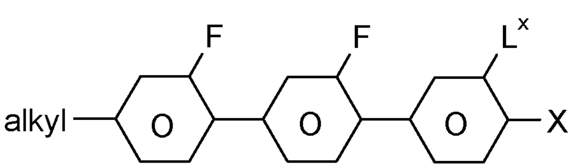

G2

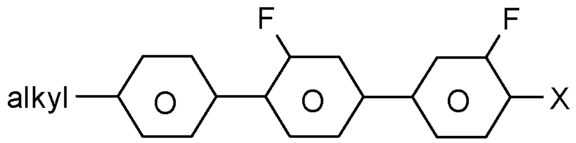

G3

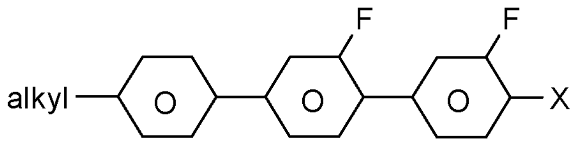

G4

in which alkyl denotes $C_{1-6}$-alkyl, $L^x$ denotes H or F, and X denotes F, Cl, $OCF_3$, $OCHF_2$ or $OCH=CF_2$. Particular preference is given to compounds of the formula G1 in which X denotes F.

f) LC medium which additionally comprises one or more compounds selected from the group consisting of the following formulae:

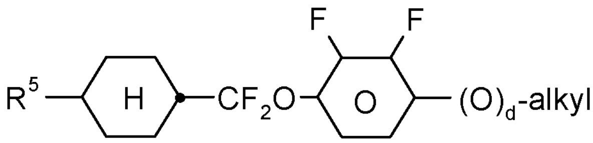

Y1

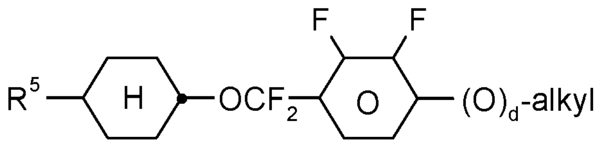

Y2

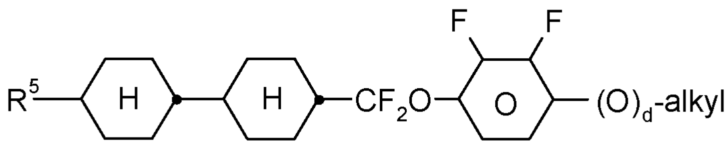

Y3

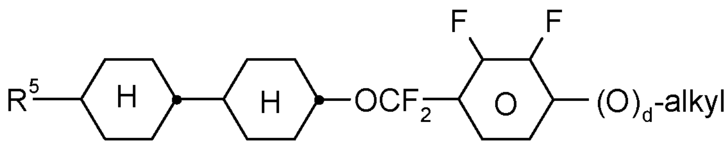

Y4

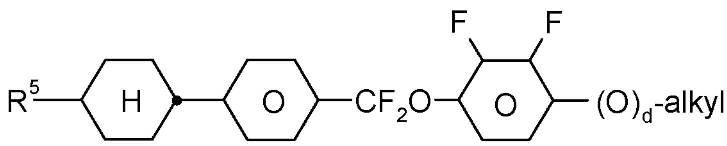

Y5

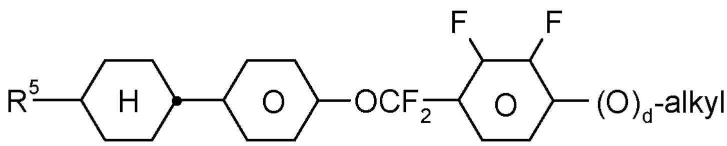

Y6

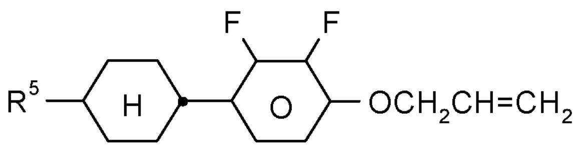

Y7

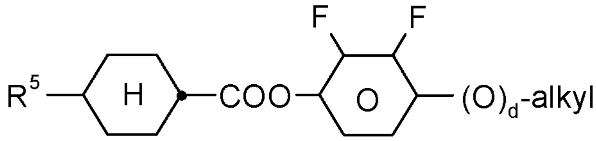

Y8

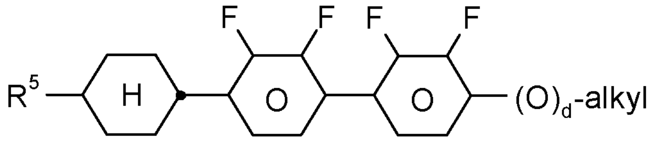

Y9

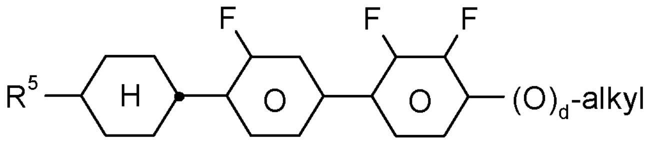

Y10

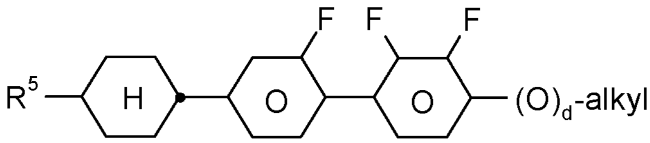

Y11

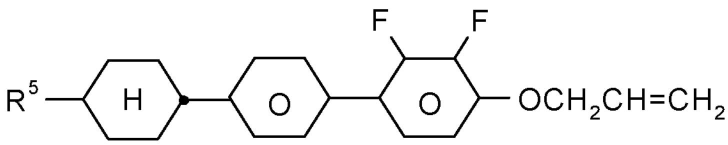

Y12

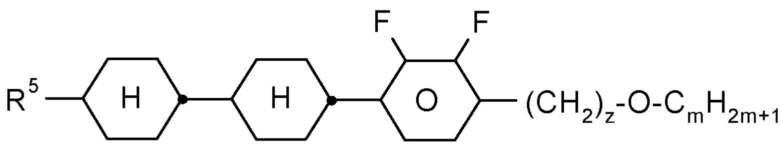

Y13

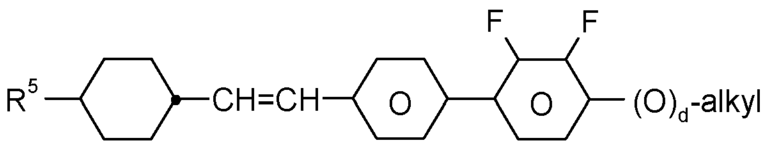

Y14

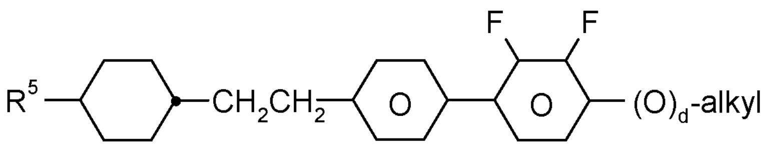

Y15

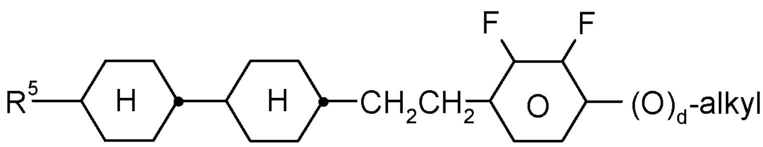

Y16

in which $R^5$ has one of the meanings indicated above for $R^1$, alkyl denotes $C_{1-6}$-alkyl, d denotes 0 or 1, and z and m each, independently of one another, denote an integer from 1 to 6. $R^5$ in these compounds is particularly preferably $C_{1-6}$-alkyl or -alkoxy or $C_{2-6}$-alkenyl, d is preferably 1. The LC medium according to the invention preferably comprises one or more compounds of the above-mentioned formulae in amounts of ≥ 5% by weight.

g) LC medium which additionally comprises one or more biphenyl compounds selected from the group consisting of

the following formulae:

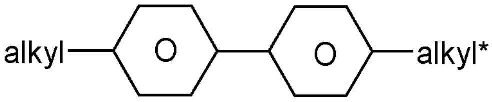
B1

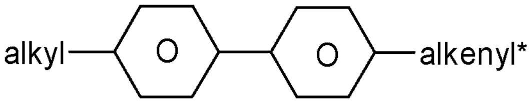
B2

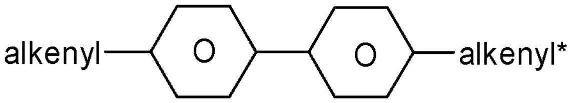
B3

in which alkyl and alkyl* each, independently of one another, denote a straight-chain alkyl radical having 1-6 C atoms, and alkenyl and alkenyl* each, independently of one another, denote a straight-chain alkenyl radical having 2-6 C atoms. Alkenyl and alkenyl* preferably denote $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.
The proportion of the biphenyls of the formulae B1 to B3 in the LC mixture is preferably at least 3% by weight, in particular ≥ 5% by weight.
The compounds of the formula B2 are particularly preferred.
The compounds of the formulae B1 to B3 are preferably selected from the group consisting of the following sub-formulae:

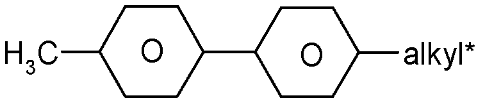
B1a

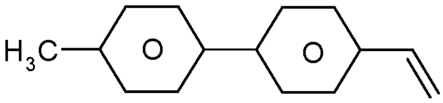
B2a

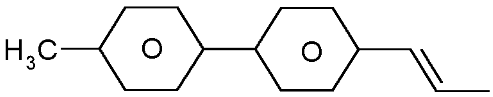
B2b

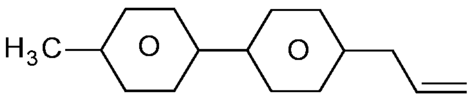
B2c

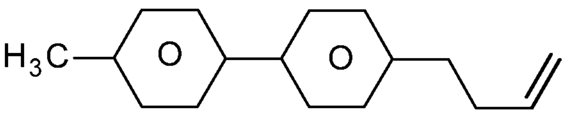
B2d

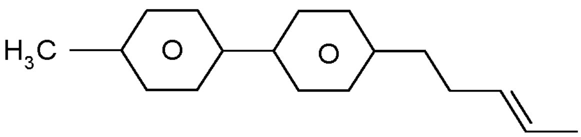
B2e

in which alkyl* denotes an alkyl radical having 1-6 C atoms. The medium according to the invention particularly preferably comprises one or more compounds of the formulae B1a and/or B2e.

h) LC medium which additionally comprises one or more terphenyl compounds of the following formula:

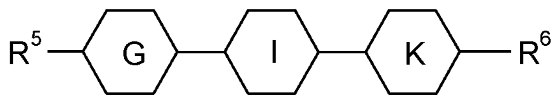

T

in which $R^5$ and $R^6$ each, independently of one another, have one of the meanings indicated above, and

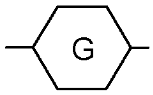 , 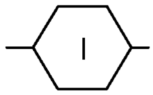 and 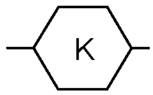

each, independently of one another, denote

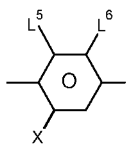 , 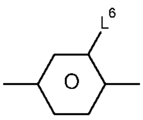 , 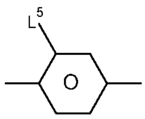 or 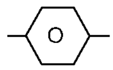

in which X denotes H or $CH_3$, $L^5$ denotes F or Cl, preferably F, and $L^6$ denotes F, Cl, $OCF_3$, $CF_3$, $CH_3$, $CH_2F$ or $CHF_2$, preferably F.

The compounds of the formula T are preferably selected from the group consisting of the following sub-formulae:

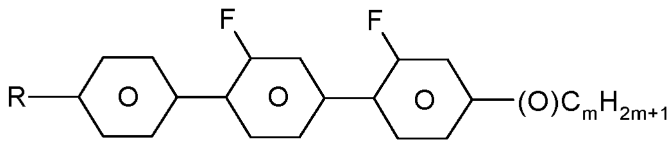

T1

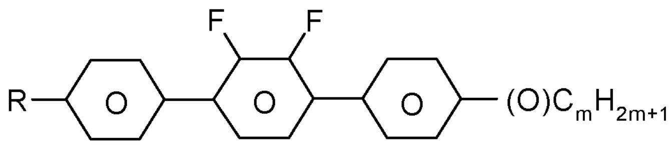

T2

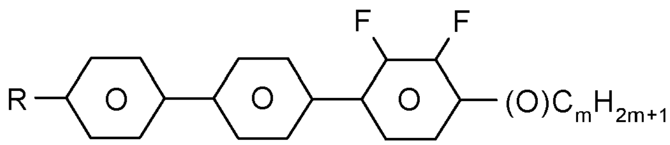

T3

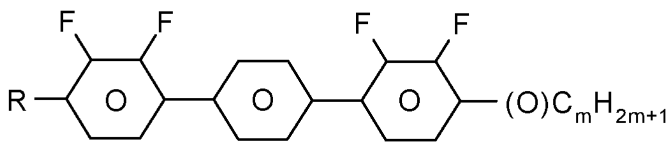

T4

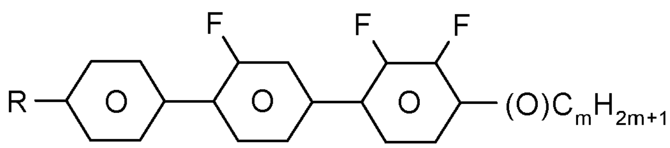

T5

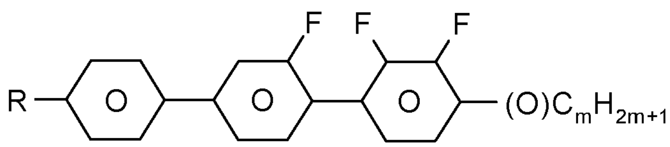

T6

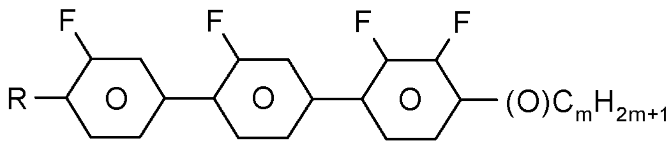

T7

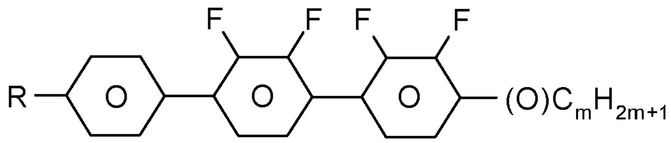

T8

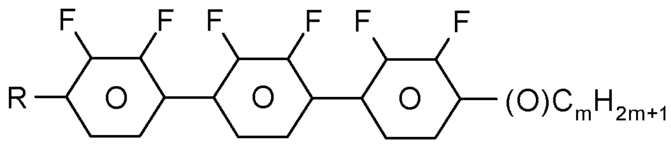

T9

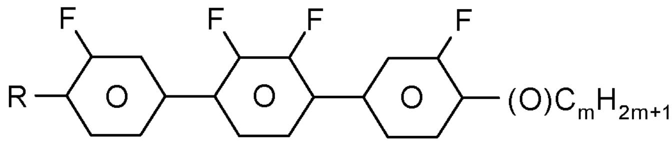

T10

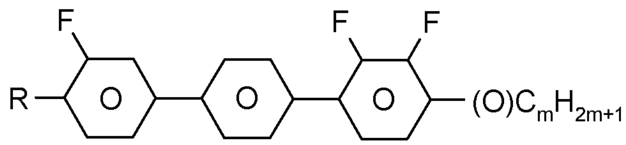

T11

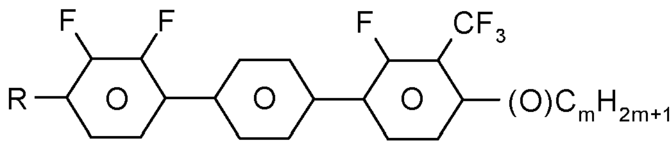

T12

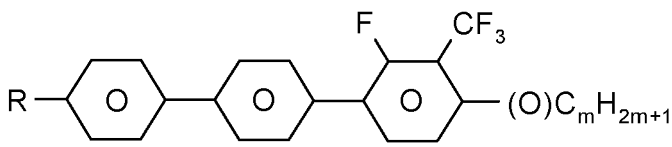

T13

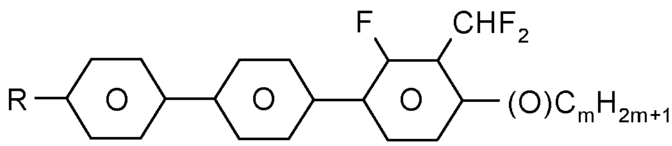

T14

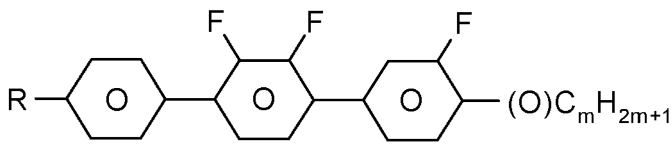

T15

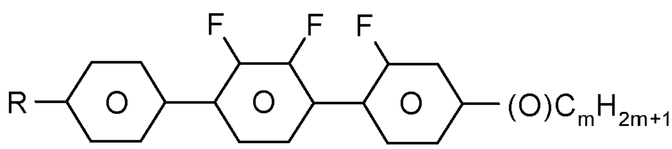

T16

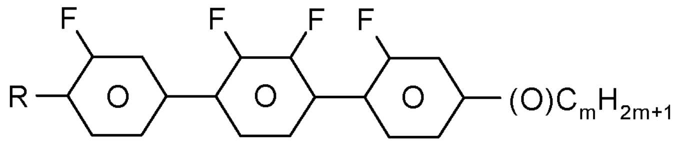
T17

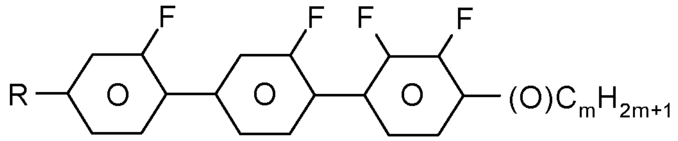
T18

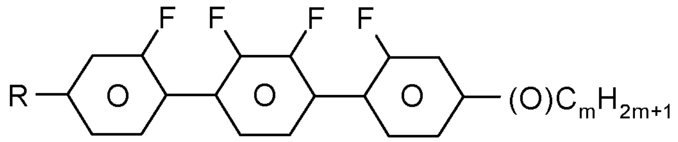
T19

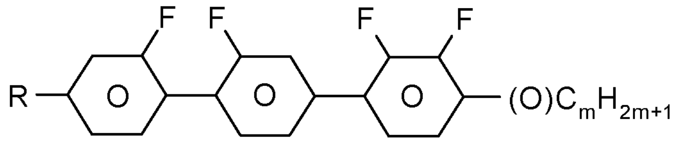
T20

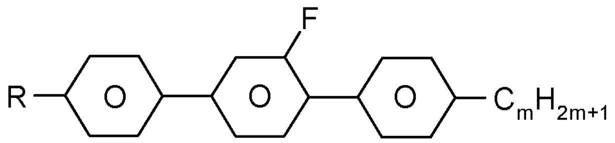
T21

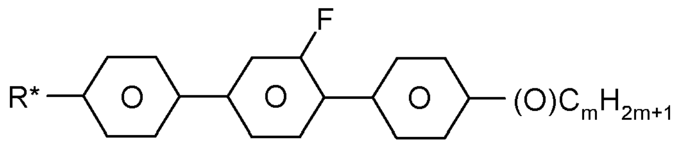
T22

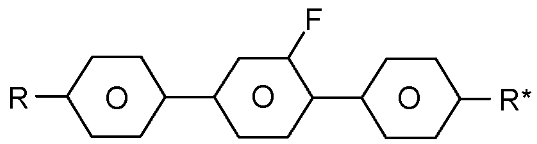
T23

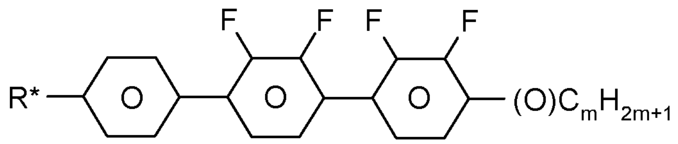
T24

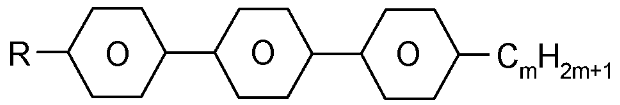
T25

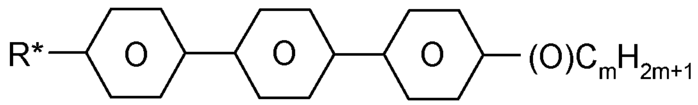
T26

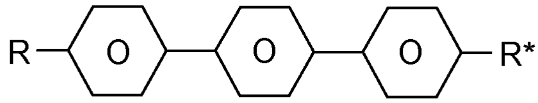

T27

in which R denotes a straight-chain alkyl or alkoxy radical having 1-7 C atoms, R* denotes a straight-chain alkenyl radical having 2-7 C atoms, (O) denotes an oxygen atom or a single bond, and m denotes an integer from 1 to 6. R* preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.
R preferably denotes methyl, ethyl, propyl, butyl, pentyl, hexyl, methoxy, ethoxy, propoxy, butoxy or pentoxy.
The LC medium according to the invention preferably comprises the terphenyls of the formula T and the preferred sub-formulae thereof in an amount of 0.5-30% by weight, in particular 1-20% by weight.
Particular preference is given to compounds of the formulae T1, T2, T3 and T21. In these compounds, R preferably denotes alkyl, furthermore alkoxy, each having 1-5 C atoms.
The terphenyls are preferably employed in mixtures according to the invention if the Δn value of the mixture is to be ≥ 0.1. Preferred mixtures comprise 2-20% by weight of one or more terphenyl compounds of the formula T, preferably selected from the group of compounds T1 to T22.

i) LC medium which additionally comprises one or more compounds selected from the group consisting of the following formulae:

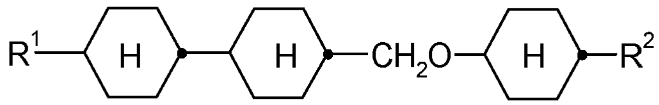

O1

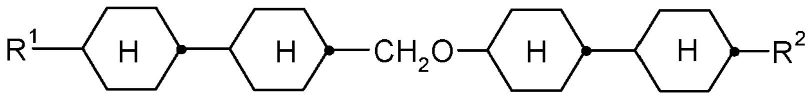

O2

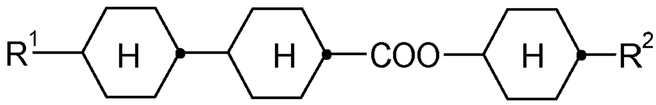

O3

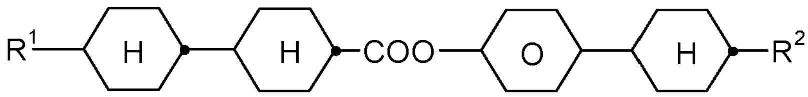

O4

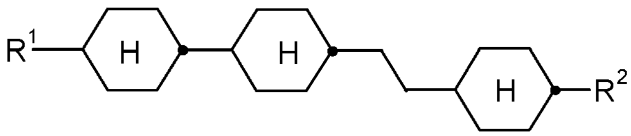

O5

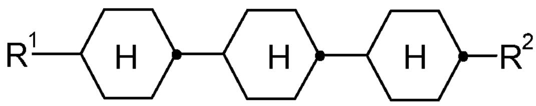

O6

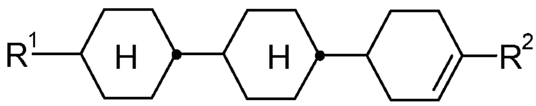

O7

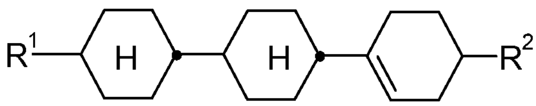

O8

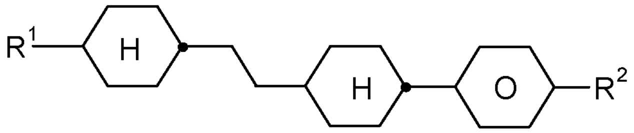

O9

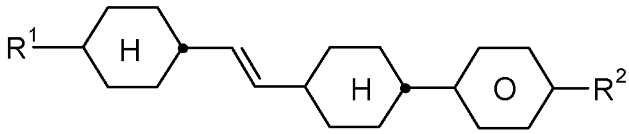

O10

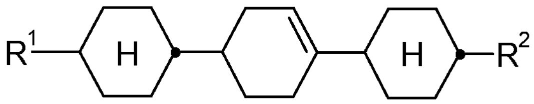

O11

in which $R^1$ and $R^2$ have the meanings indicated above and preferably each, independently of one another, denote straight-chain alkyl having 1 to 6 C atoms or straight-chain alkenyl having 2 to 6 C atoms.

Preferred media comprise one or more compounds selected from the formulae O1, O3 and O4.

k) LC medium which additionally comprises one or more compounds of the following formula:

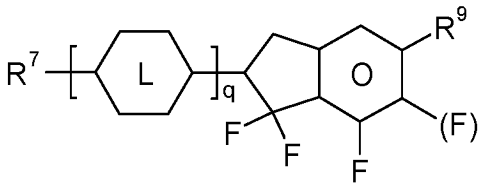

FI

in which

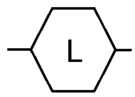

denotes

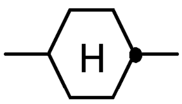 , 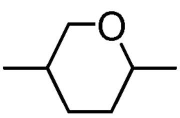 , 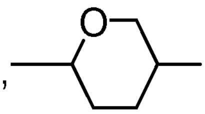 , 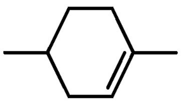

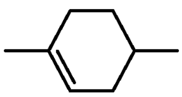 , 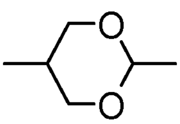 , 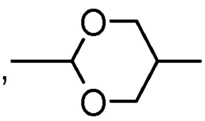 , 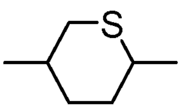

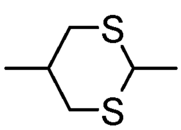 , 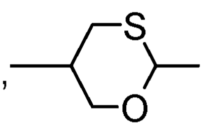 ,

$R^9$ denotes H, $CH_3$, $C_2H_5$ or n-$C_3H_7$, (F) denotes an optional fluorine substituent, and q denotes 1, 2 or 3, and $R^7$ has one of the meanings indicated for $R^1$, preferably in amounts of > 3% by weight, in particular ≥ 5% by weight and very particularly preferably 5-30% by weight.

Particularly preferred compounds of the formula FI are selected from the group consisting of the following sub-formulae:

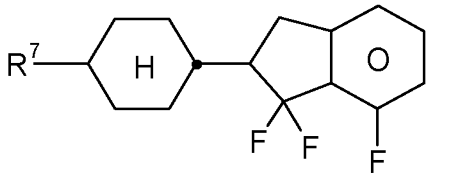
FI1

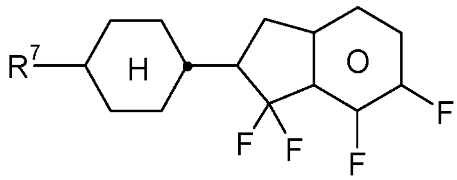
FI2

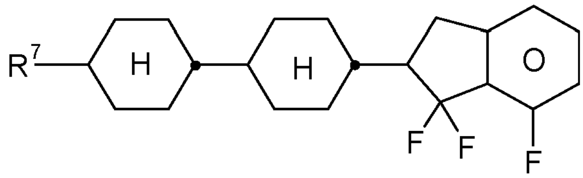
FI3

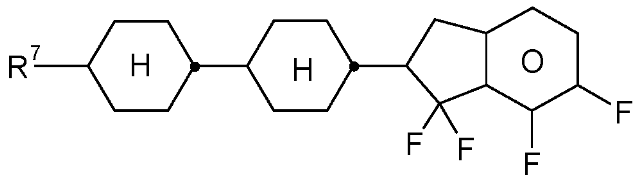
FI4

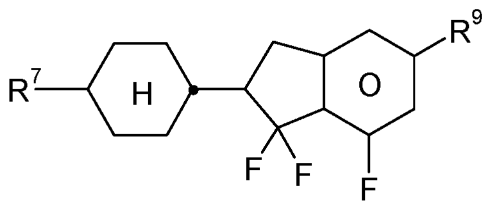
FI5

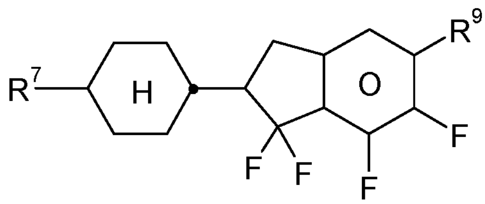
FI6

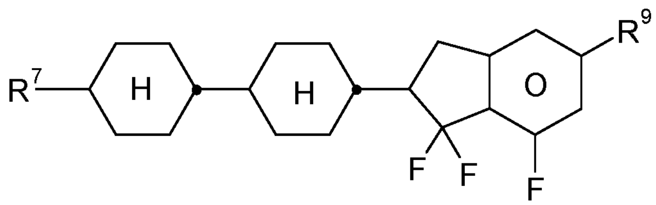
FI7

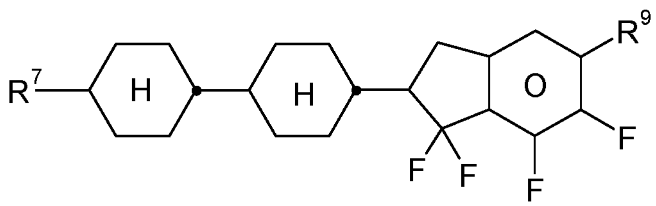
FI8

in which $R^7$ preferably denotes straight-chain alkyl, and $R^9$ denotes $CH_3$, $C_2H_5$ or n-$C_3H_7$. Particular preference is given to the compounds of the formulae FI1, FI2 and FI3.

l) LC medium which additionally comprises one or more compounds selected from the group consisting of the following formulae:

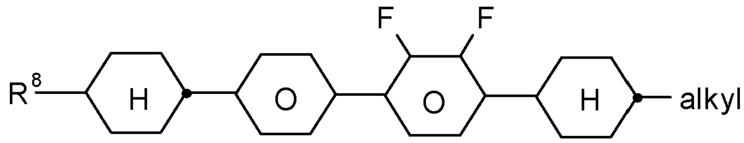

VK1

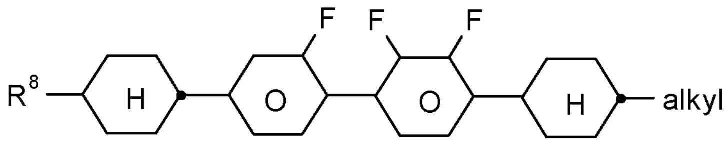

VK2

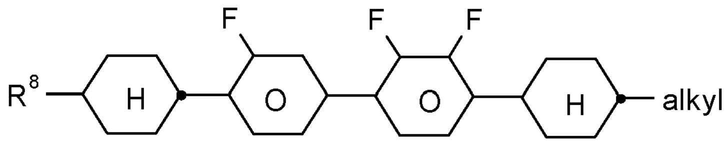

VK3

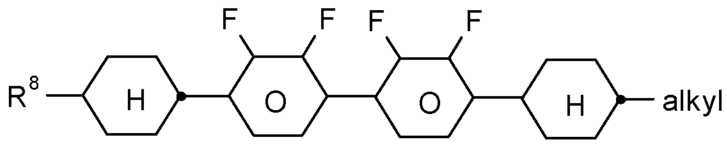

VK4

in which $R^8$ has the meaning indicated for $R^1$, and alkyl denotes a straight-chain alkyl radical having 1-6 C atoms.

m) LC medium which additionally comprises one or more compounds which contain a tetrahydronaphthyl or naphthyl unit, such as, for example, the compounds selected from the group consisting of the following formulae:

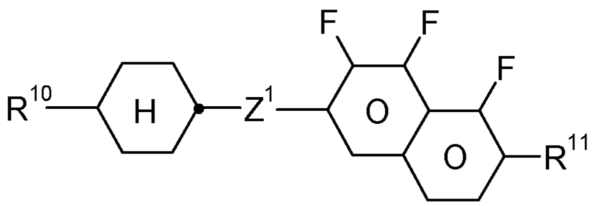

N1

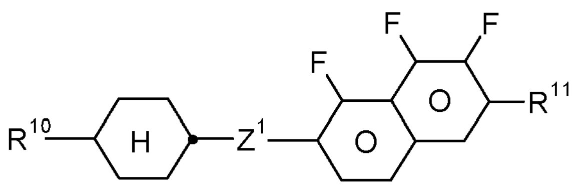

N2

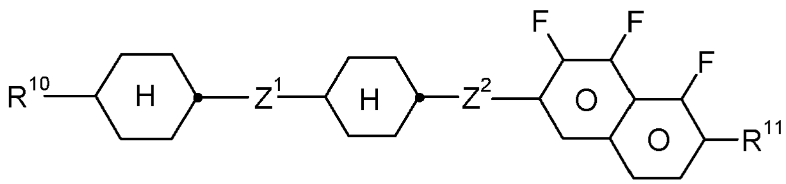

N3

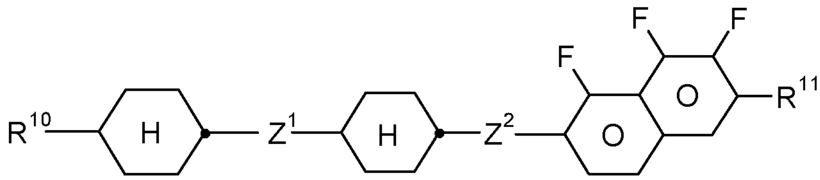

N4

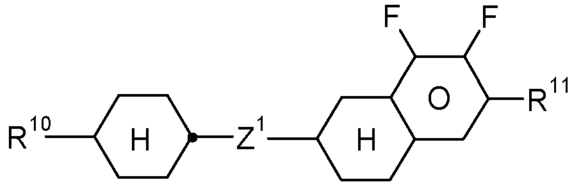

N5

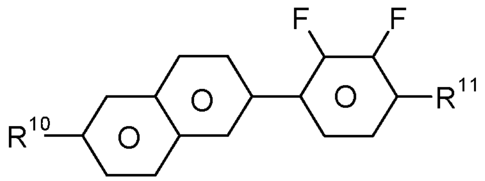

N6

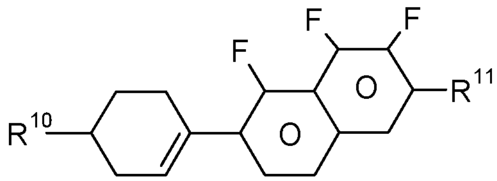

N7

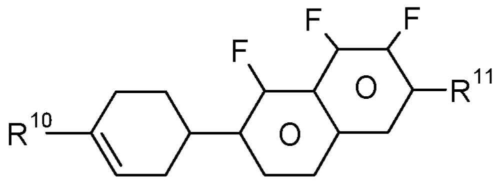

N8

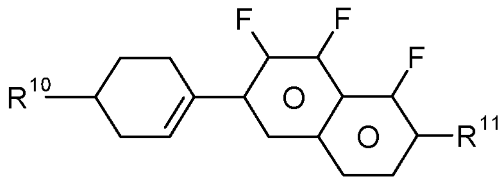

N9

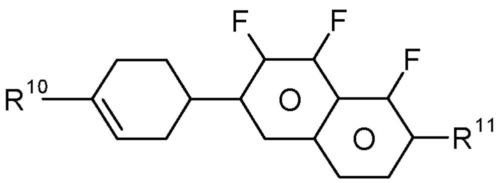

N10

in which

$R^{10}$ and $R^{11}$ each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another, preferably alkyl or alkoxy having 1 to 6 C atoms,

and $R^{10}$ and $R^{11}$ preferably denote straight-chain alkyl or alkoxy having 1 to 6 C atoms or straight-chain alkenyl having 2 to 6 C atoms, and

| | |
|---|---|
| $Z^1$ and $Z^2$ | each, independently of one another, denote $-C_2H_4-$, -CH=CH-, $-(CH_2)_4-$, $-(CH_2)_3O-$, $-O(CH_2)_3-$, $-CH=CH-CH_2CH_2-$, $-CH_2CH_2CH=CH-$, $-CH_2O-$, $-OCH_2-$, -COO-, -O-CO-, $-C_2F_4-$, -CF=CF-, -CF=CH-, -CH=CF-, $-CH_2-$ or a single bond. |

n) LC medium which additionally comprises one or more difluoro-dibenzochromans and/or chromans of the following formulae:

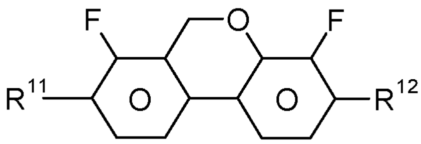

BC

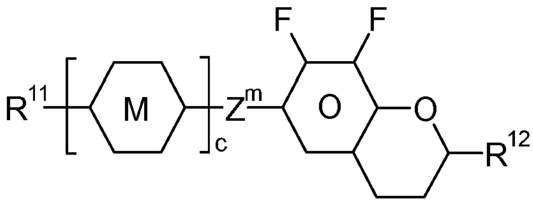

CR

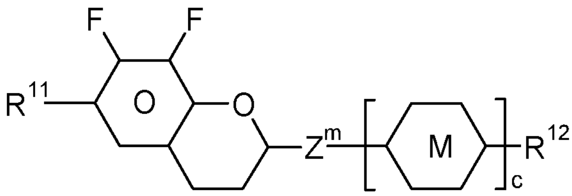

RC

in which

| | |
|---|---|
| $R^{11}$ and $R^{12}$ | each, independently of one another, have one of the meanings indicated above for $R^{11}$ under formula N1 |
| ring M | is trans-1,4-cyclohexylene or 1,4-phenylene, |
| $z^m$ | $-C_2H_4-$, $-CH_2O-$, $-OCH_2-$, -CO-O- or -O-CO-, |
| c | is 0, 1 or 2, |

preferably in amounts of 3 to 20% by weight, in particular in amounts of 3 to 15% by weight.
Particularly preferred compounds of the formulae BC, CR and RC are selected from the group consisting of the following sub-formulae:

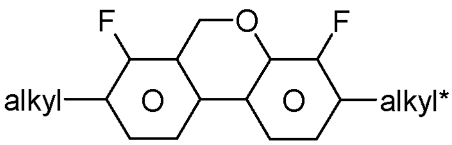

BC1

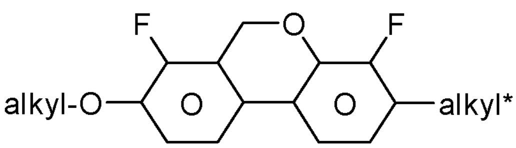

BC2

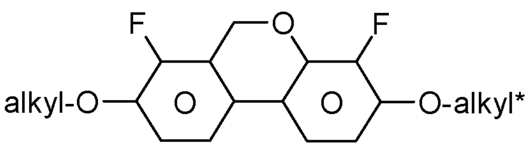

BC3

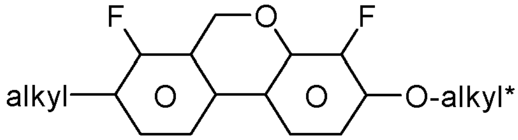

BC4

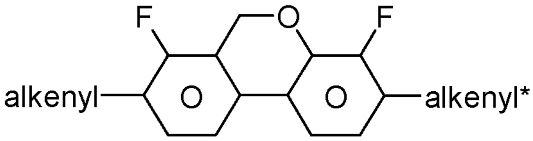

BC5

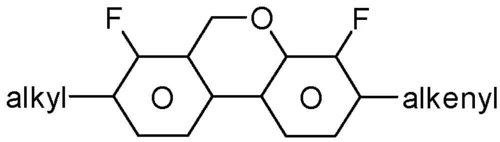

BC6

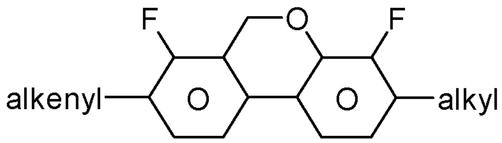

BC7

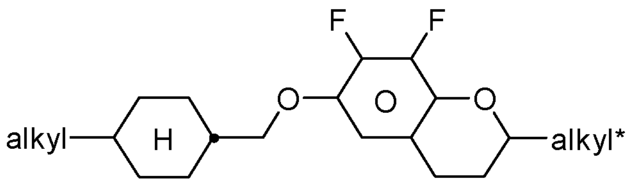

CR1

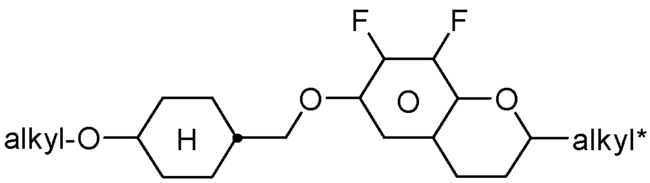

CR2

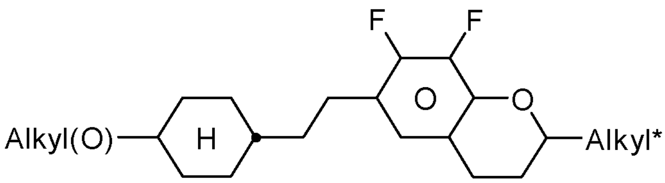

CR3

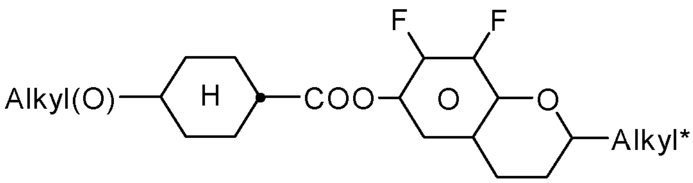

CR4

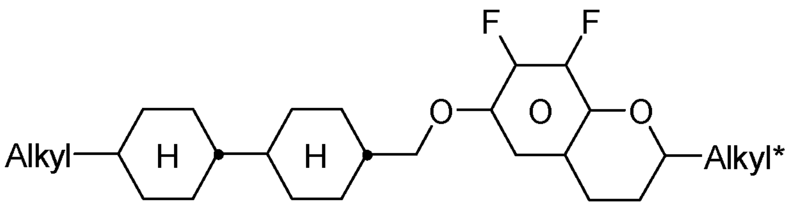

CR5

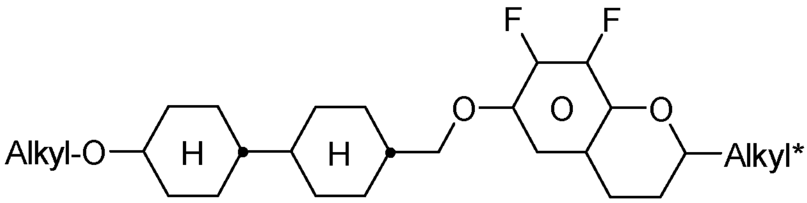

CR6

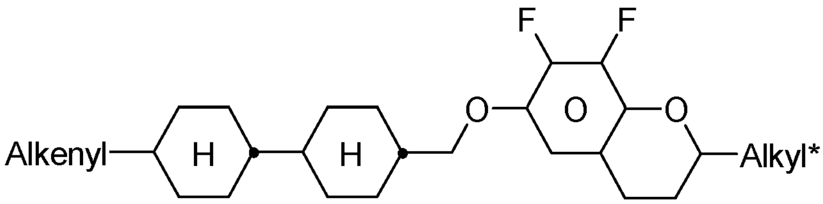

CR7

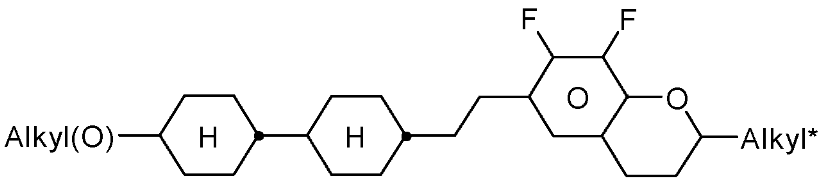

CR8

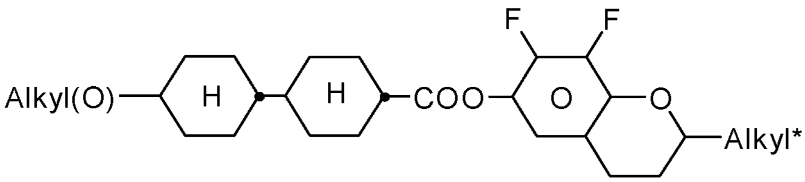

CR9

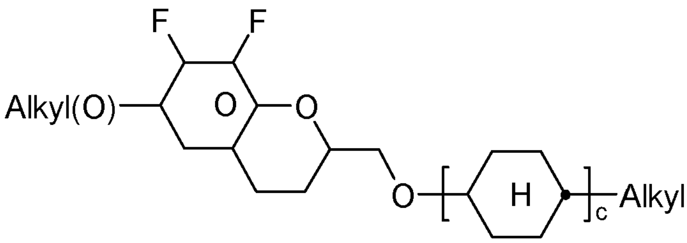

RC1

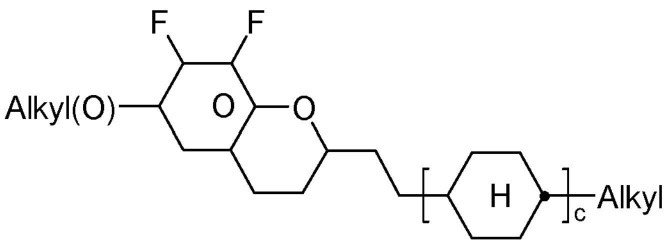

RC2

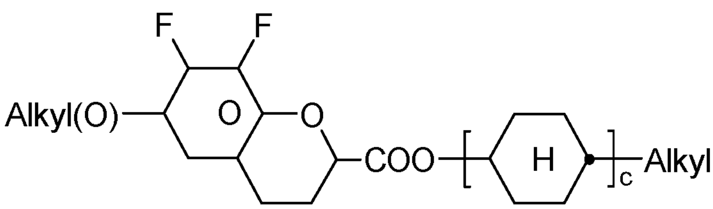

RC3

in which alkyl and alkyl* each, independently of one another, denote a straight-chain alkyl radical having 1-6 C atoms, (O) denotes an oxygen atom or a single bond, c is 1 or 2, and alkenyl and alkenyl* each, independently of one another, denote a straight-chain alkenyl radical having 2-6 C atoms. Alkenyl and alkenyl* preferably denote $CH_2$=CH-,

$CH_2=CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.
Very particular preference is given to mixtures comprising one, two or three compounds of the formula BC-2.

o) LC medium which additionally comprises one or more fluorinated phenanthrenes and/or dibenzofurans of the following formulae:

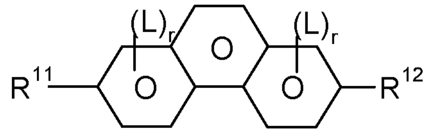

PH

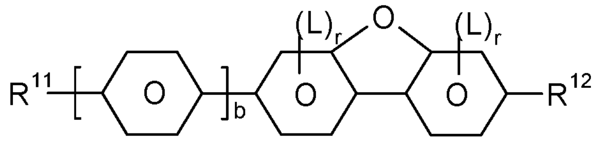

BF

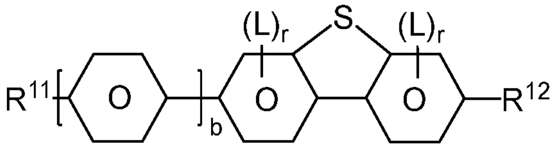

BS

in which $R^{11}$ and $R^{12}$ each, independently of one another, have one of the meanings indicated above for $R^{11}$ under formula N1, b denotes 0 or 1, L denotes F, and r denotes 1, 2 or 3.
Particularly preferred compounds of the formulae PH and BF are selected from the group consisting of the following sub-formulae:

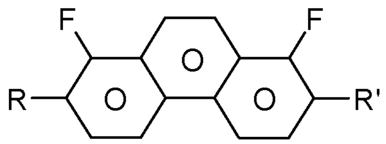

PH1

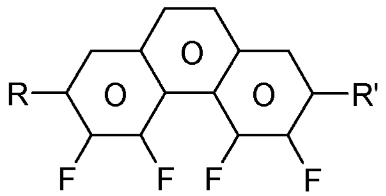

PH2

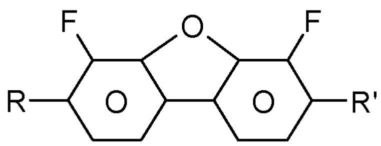

BF1

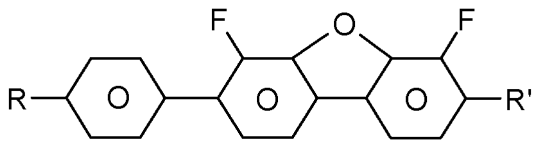

BF2

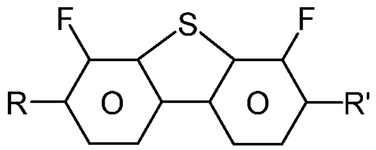

BS1

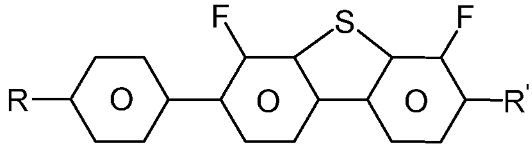

BS2

in which R and R' each, independently of one another, denote a straight-chain alkyl or alkoxy radical having 1-7 C atoms.

p) LC medium which additionally comprises one or more monocyclic compounds of the following formula

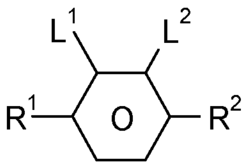

Y

wherein

$R^1$ and $R^2$ each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another, and one or more $CH_2$-groups may be replaced by

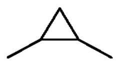,

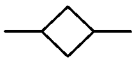, 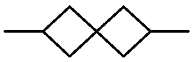, 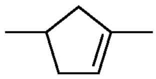 or 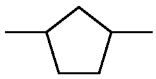

preferably alkyl or alkoxy having 1 to 6 C atoms,

$L^1$ and $L^2$ each, independently of one another, denote F, Cl, $OCF_3$, $CF_3$, $CH_3$, $CH_2F$, $CHF_2$.

Preferably, both $L^1$ and $L^2$ denote F or one of $L^1$ and $L^2$ denotes F and the other denotes Cl,
The compounds of the formula Y are preferably selected from the group consisting of the following sub-formulae:

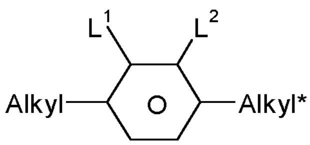

Y1

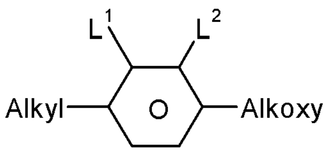

Y2

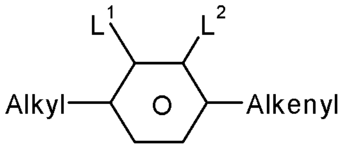

Y3

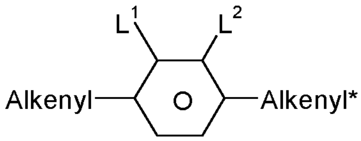

Y4

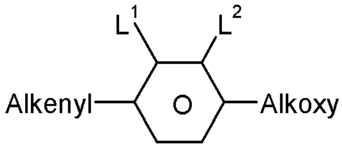

Y5

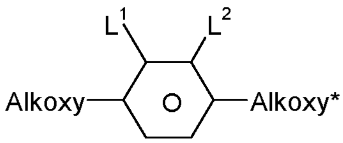

Y6

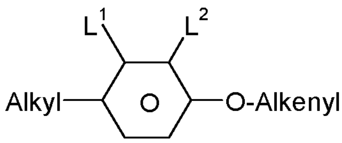

Y7

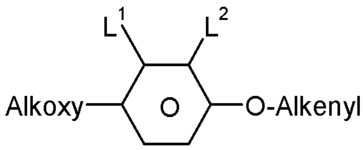

Y8

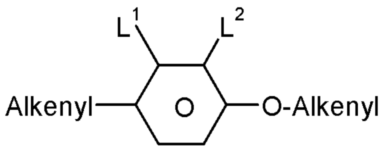

Y9

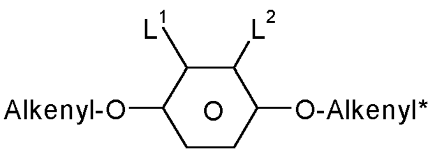

Y10,

in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms, and O denotes an oxygen atom or a single bond. Alkenyl and Alkenyl* preferably denote $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred compounds of the formula Y are selected from the group consisting of the following sub-formulae:

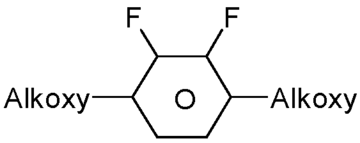

Y6A

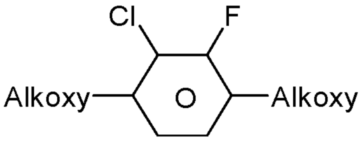

Y6B

wherein Alkoxy preferably denotes straight-chain alkoxy with 3, 4, or 5 C atoms.

q) LC medium which, apart from the stabilisers according to the invention, in particular of the formula I or sub-formulae thereof and the comonomers, comprises no compounds which contain a terminal vinyloxy group ($-O-CH=CH_2$).

r) LC medium which comprises 1 to 5, preferably 1, 2 or 3, stabilisers, preferably selected from stabilisers according to the invention, in particular of the formula I or sub-formulae thereof.

s) LC medium in which the proportion of stabilisers, in particular of the formula I or sub-formulae thereof, in the mixture as a whole is 1 to 1500ppm, preferably 100 to 1000ppm.

t) LC medium which comprises 1 to 8, preferably 1 to 5, compounds of the formulae CY1, CY2, PY1 and/or PY2. The proportion of these compounds in the mixture as a whole is preferably 5 to 60%, particularly preferably 10 to 35%. The content of these individual compounds is preferably in each case 2 to 20%.

u) LC medium which comprises 1 to 8, preferably 1 to 5, compounds of the formulae CY9, CY10, PY9 and/or PY10. The proportion of these compounds in the mixture as a whole is preferably 5 to 60%, particularly preferably 10 to 35%. The content of these individual compounds is preferably in each case 2 to 20%.

v) LC medium which comprises 1 to 10, preferably 1 to 8, compounds of the formula ZK, in particular compounds of the formulae ZK1, ZK2 and/or ZK6. The proportion of these compounds in the mixture as a whole is preferably 3 to 25%, particularly preferably 5 to 45%. The content of these individual compounds is preferably in each case 2 to 20%.

w) LC medium in which the proportion of compounds of the formulae CY, PY and ZK in the mixture as a whole is greater than 70%, preferably greater than 80%.

x) LC medium in which the LC host mixture contains one or more compounds containing an alkenyl group, preferably selected from the group consisting of formula CY, PY and LY, wherein one or both of $R^1$ and $R^2$ denote straight-chain alkenyl having 2-6 C atoms, formula ZK and DK, wherein one or both of $R^3$ and $R^4$ or one or both of $R^5$ and $R^6$ denote straight-chain alkenyl having 2-6 C atoms, and formula B2 and B3, very preferably selected from formulae CY15, CY16, CY24, CY32, PY15, PY16, ZK3, ZK4, DK3, DK6, B2 and B3, most preferably selected from formulae ZK3, ZK4, B2 and B3. The concentration of these compounds in the LC host mixture is preferably from 2 to 70%, very preferably from 3 to 55%.

y) LC medium which contains one or more, preferably 1 to 5, compounds selected of formula PY1-PY8, very preferably of formula PY2. The proportion of these compounds in the mixture as a whole is preferably 1 to 30%, particularly preferably 2 to 20%. The content of these individual compounds is preferably in each case 1 to 20%.

z) LC medium which contains one or more, preferably 1, 2 or 3, compounds of formula T2. The content of these compounds in the mixture as a whole is preferably 1 to 20%.

In another preferred embodiment of the present invention the LC medium contains one or more nematogenic compounds with positive dielectric anisotropy. Preferred embodiments of such an LC medium are those of sections aa) - mmm) below:

aa) LC-medium, characterised in that it comprises one or more compounds selected from the group of compounds of

the formulae II and III

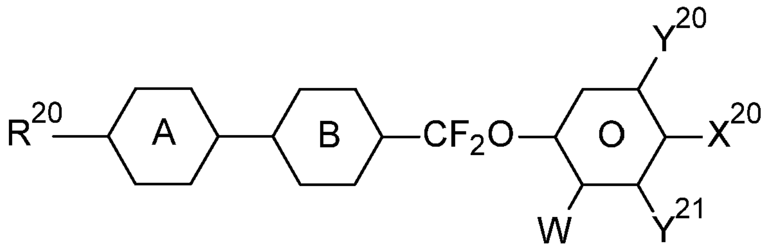

II

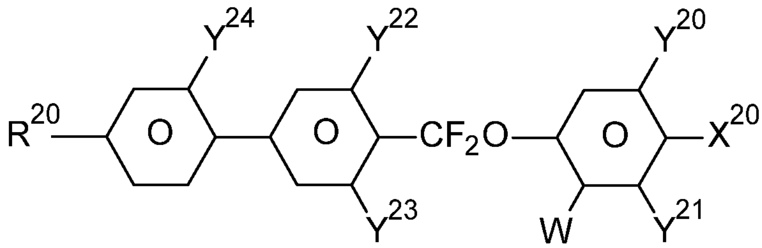

III

wherein

$R^{20}$ each, identically or differently, denote a halogenated or unsubstituted alkyl or alkoxy radical having 1 to 15 C atoms, where, in addition, one or more $CH_2$ groups in these radicals may each be replaced, independently of one another, by -C≡C-, $-CF_2O-$, -CH=CH-, -O-, -CO-O- or -O-CO- in such a way that O atoms are not linked directly to one another, and one or more $CH_2$-groups may be replaced by

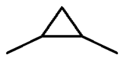,

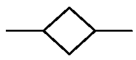, 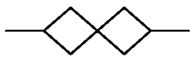, 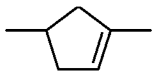 or 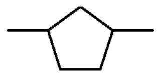,

$X^{20}$ each, identically or differently, denote F, Cl, CN, $SF_5$, SCN, NCS, a halogenated alkyl radical, a halogenated alkenyl radical, a halogenated alkoxy radical or a halogenated alkenyloxy radical, each having up to 6 C atoms, and

$Y^{20-24}$ each, identically or differently, denote H or F;

W denotes H or methyl, each, independently of one another, denote

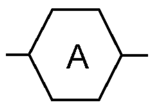 and 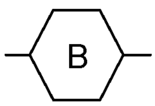

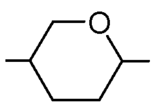 or 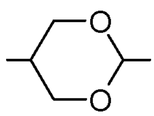.

The compounds of the formula II are preferably selected from the following formulae:

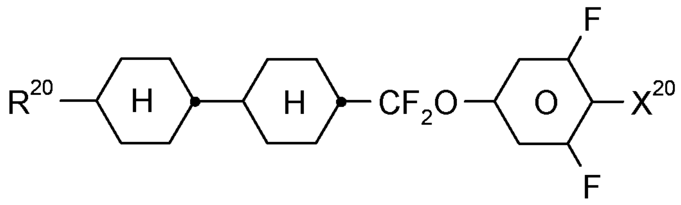

IIa

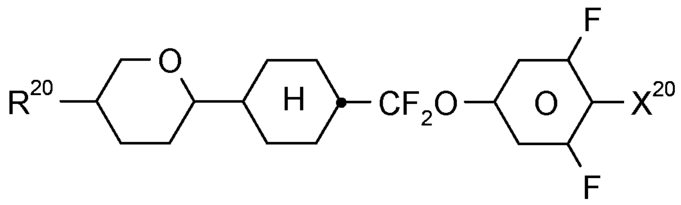

IIb

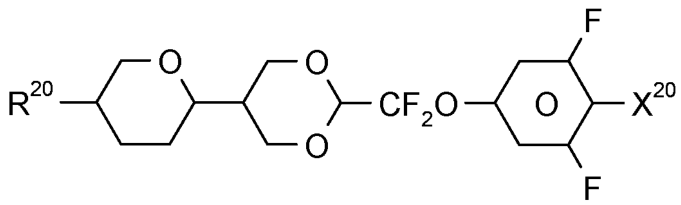

IIc

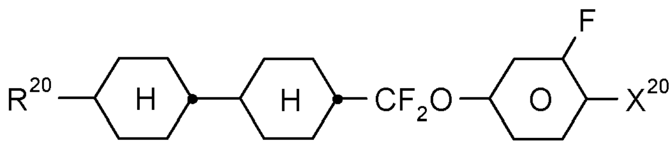

IId

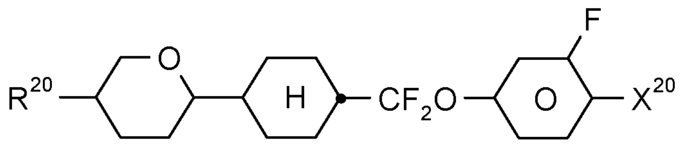

IIe

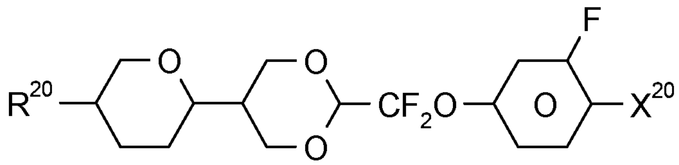

IIf

wherein $R^{20}$ and $X^{20}$ have the meanings indicated above.

$R^{20}$ preferably denotes alkyl having 1 to 6 C atoms. $X^{20}$ preferably denotes F. Particular preference is given to compounds of the formulae IIa and IIb, in particular compounds of the formulae IIa and IIb wherein X denotes F.

The compounds of the formula III are preferably selected from the following formulae:

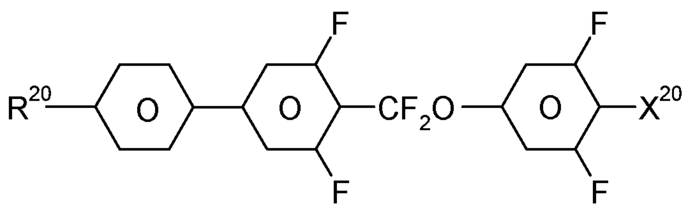

IIIa

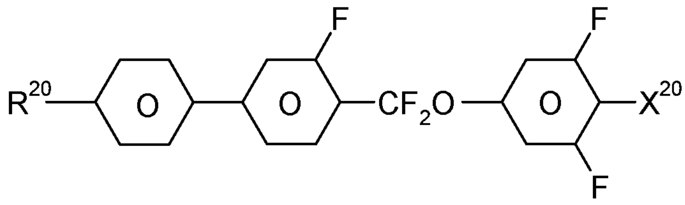
IIIb

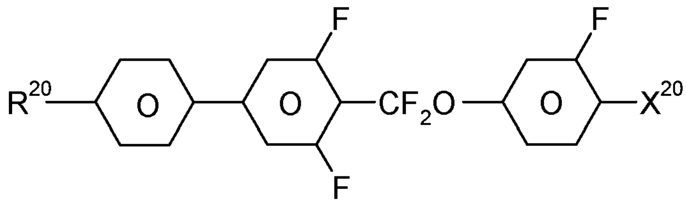
IIIc

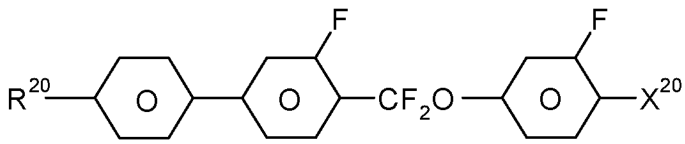
IIId

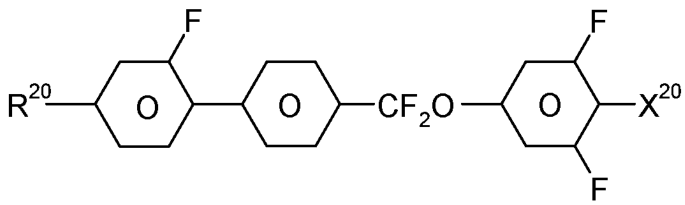
IIIe

wherein $R^{20}$ and $X^{20}$ have the meanings indicated above.
$R^{20}$ preferably denotes alkyl having 1 to 6 C atoms. $X^{20}$ preferably denotes F. Particular preference is given to compounds of the formulae IIIa and IIIe, in particular compounds of the formula IIIa;

bb) LC-medium additionally comprising one or more compounds selected from the following formulae:

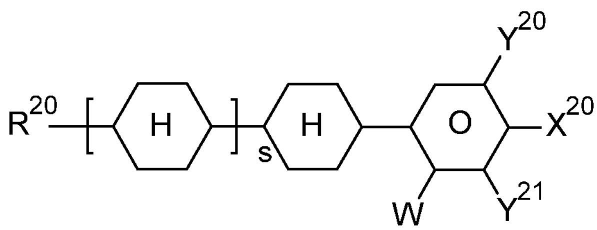
IV

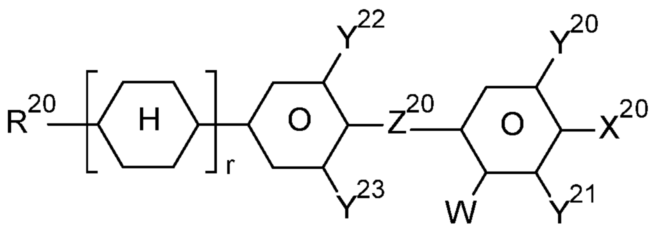
V

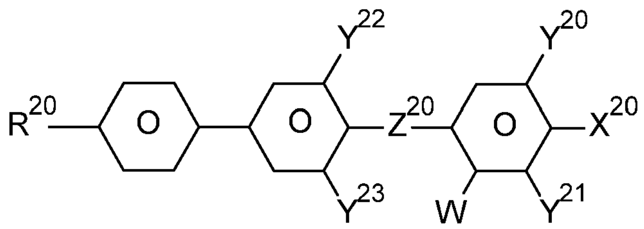

VI

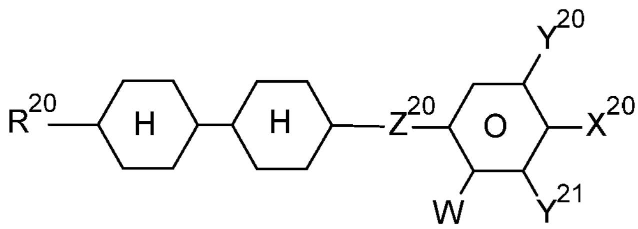

VII

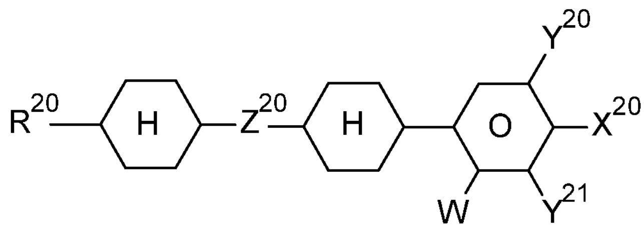

VIII

wherein

$R^{20}$, $X^{20}$, W and $Y^{20-23}$ have the meanings indicated above under formula II, and

$Z^{20}$ denotes $-C_2H_4-$, $-(CH_2)_4-$, -CH=CH-, -CF=CF, $-C_2F_4-$, $-CH_2CF_2-$, $-CF_2CH_2-$, $-CH_2O-$, $-OCH_2-$, -COO- or $-OCF_2-$, in formulae V and VI also a single bond, in formulae V and VIII also $-CF_2O-$,

r denotes 0 or 1, and

s denotes 0 or 1;

- The compounds of the formula IV are preferably selected from the following formulae:

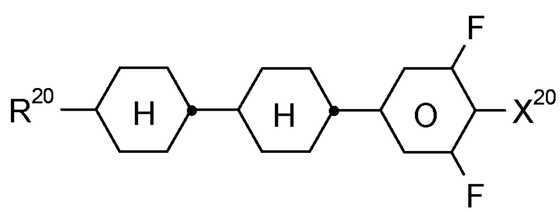

IVa

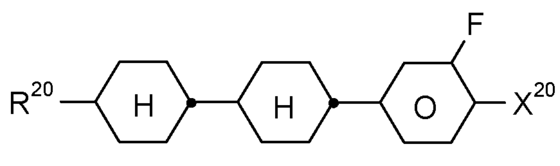

IVb

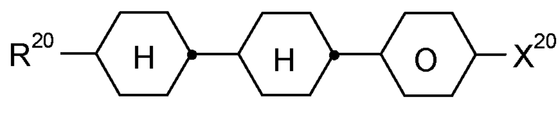

IVc

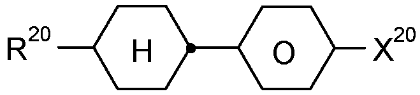

IVd

wherein $R^{20}$ and $X^{20}$ have the meanings indicated above. $R^{20}$ preferably denotes alkyl having 1 to 6 C atoms. $X^{20}$ preferably denotes F or $OCF_3$, furthermore $OCF=CF_2$ or Cl;

- The compounds of the formula V are preferably selected from the following formulae:

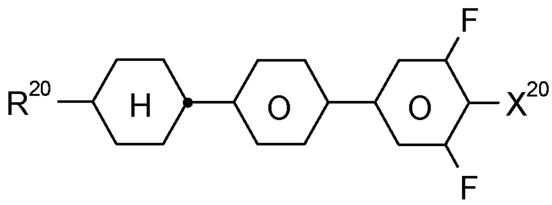

Va

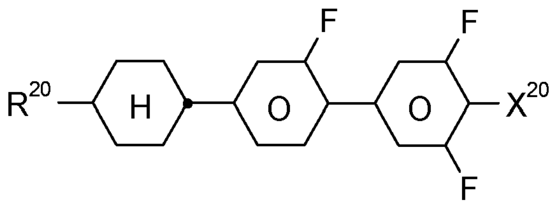

Vb

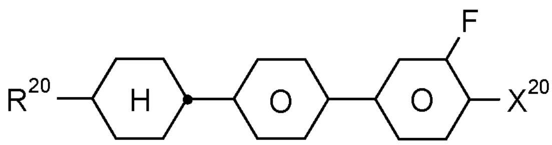

Vc

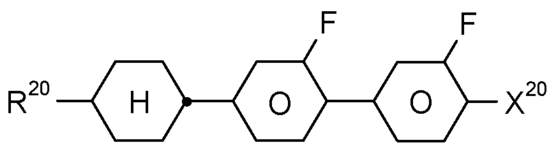

Vd

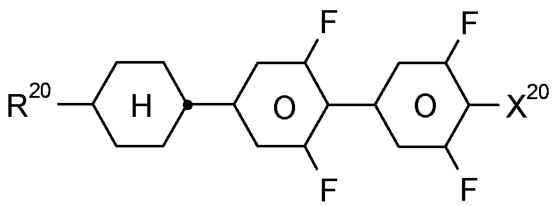

Ve

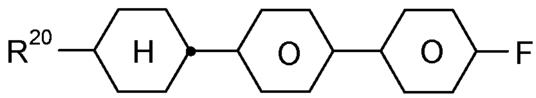

Vf

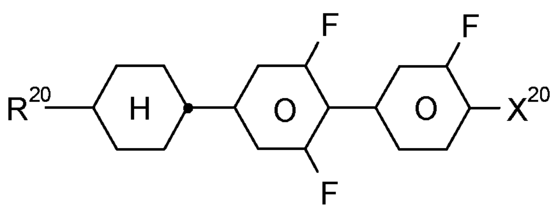

Vg

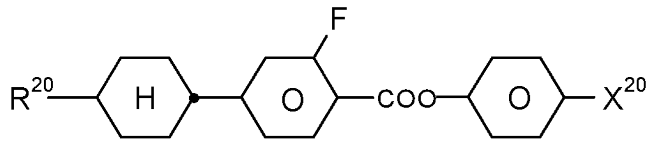

Vh

wherein $R^{20}$ and $X^{20}$ have the meanings indicated above. $R^{20}$ preferably denotes alkyl having 1 to 6 C atoms. $X^{20}$ preferably denotes F and $OCF_3$, furthermore $OCHF_2$, $CF_3$, $OCF=CF_2$ and $OCH=CF_2$;

- The compounds of the formula VI are preferably selected from the following formulae:

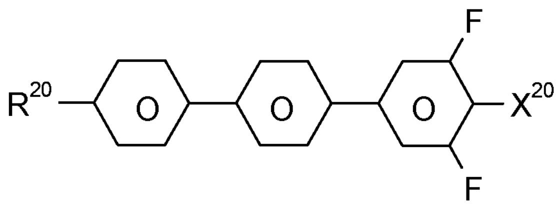

VIa

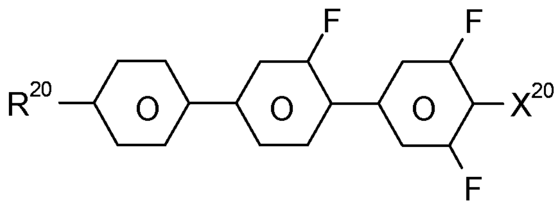

VIb

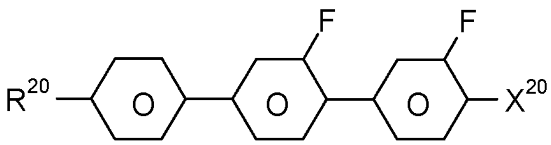

VIc

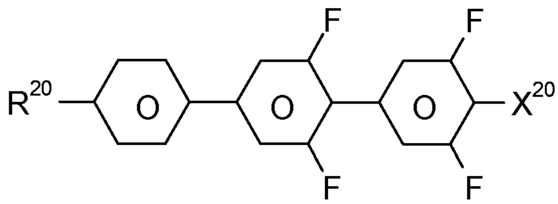

VId

wherein $R^{20}$ and $X^{20}$ have the meanings indicated above.

$R^{20}$ preferably denotes alkyl having 1 to 6 C atoms. $X^{20}$ preferably denotes F, furthermore $OCF_3$, $CF_3$, $CF=CF_2$, $OCHF_2$ and $OCH=CF_2$;

- The compounds of the formula VII are preferably selected from the following formulae:

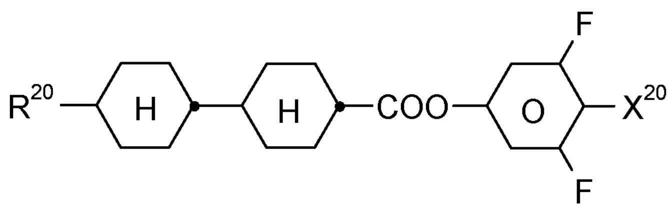

VIIa

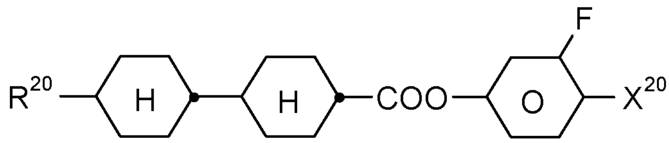

VIIb

wherein $R^{20}$ and $X^{20}$ have the meanings indicated above.

$R^{20}$ preferably denotes alkyl having 1 to 6 C atoms. $X^{20}$ preferably denotes F, furthermore $OCF_3$, $OCHF_2$ and $OCH=CF_2$.

cc) The medium additionally comprises one or more compounds selected from the formulae ZK1 to ZK10 given above. Especially preferred are compounds of formula ZK1 and ZK3. Particularly preferred compounds of formula ZK are selected from the sub-formulae ZK1a, ZK1b, ZK1c, ZK3a, ZK3b, ZK3c and ZK3d.

dd) The medium additionally comprises one or more compounds selected from the formulae DK1 to DK12 given above. Especially preferred compounds are DK3.

ee) The medium additionally comprises one or more compounds selected from the following formulae:

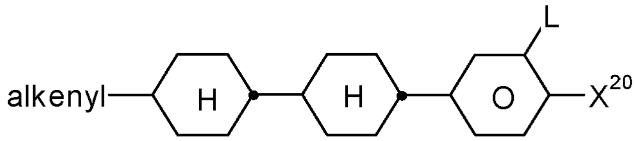

IX

wherein $X^{20}$ has the meanings indicated above, and

L denotes H or F,

"alkenyl" denotes $C_{2-6}$-alkenyl.

ff) The compounds of the formulae DK-3a and IX are preferably selected from the following formulae:

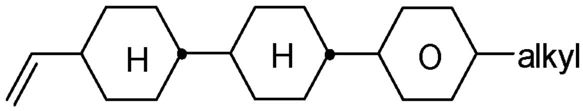

DK3a

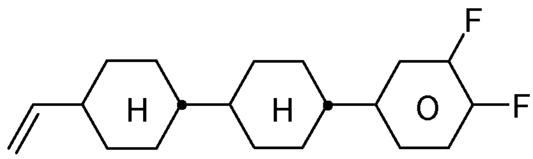

IXa

wherein "alkyl" denotes $C_{1-6}$-alkyl, preferably n-$C_3H_7$, n-$C_4H_9$ or n-$C_5H_{11}$, in particular n-$C_3H_7$.

gg) The medium additionally comprises one or more compounds selected from the formulae B1, B2 and B3 given above, preferably from the formula B2. The compounds of the formulae B1 to B3 are particularly preferably selected from the formulae B1a, B2a, B2b and B2c.

hh) The medium additionally comprises one or more compounds selected from the following formula:

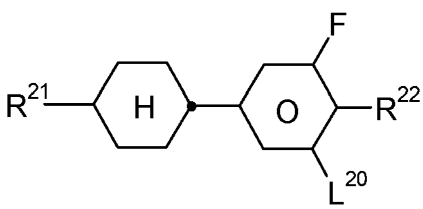

X

wherein $L^{20}$ denotes H or F, and $R^{21}$ and $R^{22}$ each, identically or differently, denote n-alkyl, alkoxy, oxaalkyl, fluoroalkyl or alkenyl, each having up to 6 C atoms, and preferably each, identically or differently, denote alkyl having 1 to 6 C atoms.

ii) The medium comprises one or more compounds of the following formulae:

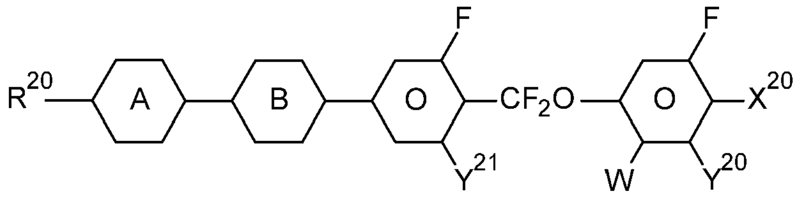 XI

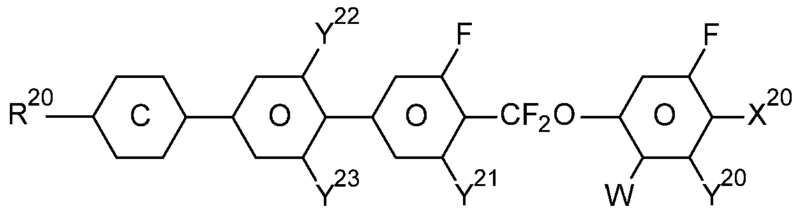 XII

Wherein W, $R^{20}$, $X^{20}$ and $Y^{20-23}$ have the meanings indicated in formula III, and

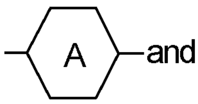 and 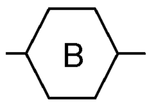

each, independently of one another, denote

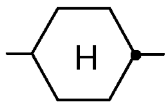 , 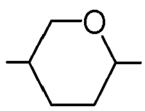 or 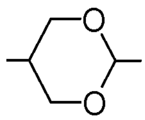

and

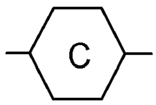

denotes

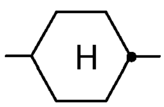 , 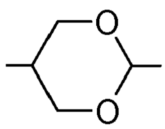 , 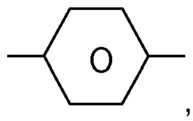 ,

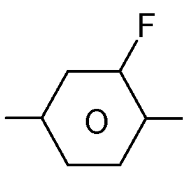 or 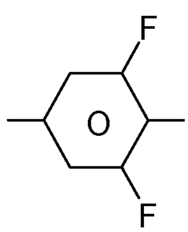

The compounds of the formulae XI and XII are preferably selected from the following formulae:

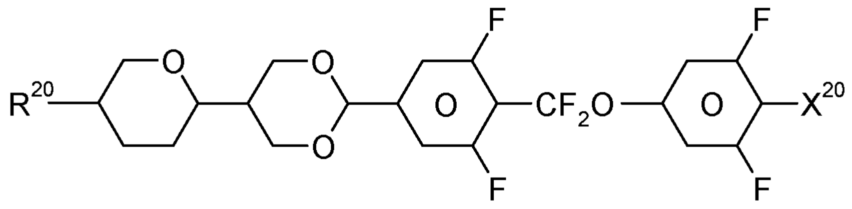

XIa

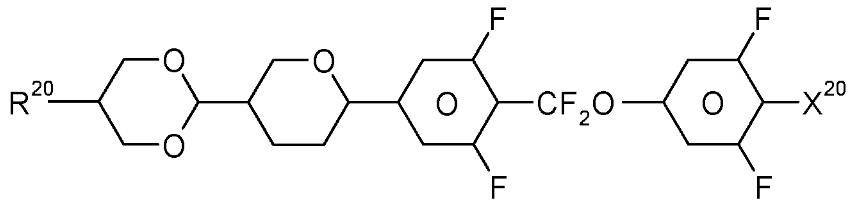

XIb

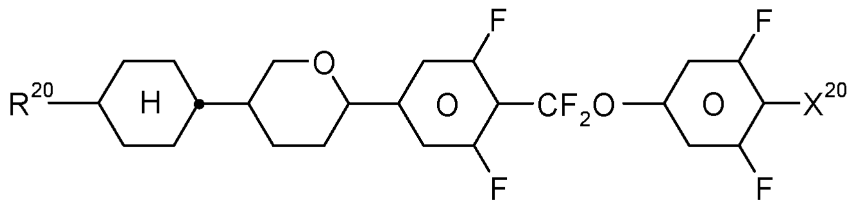

XIc

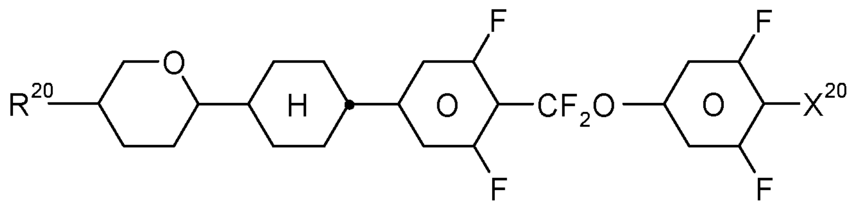

XId

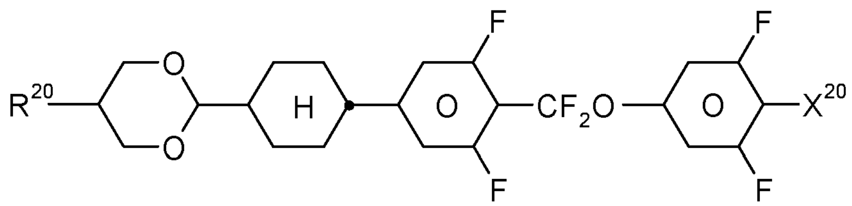

XIe

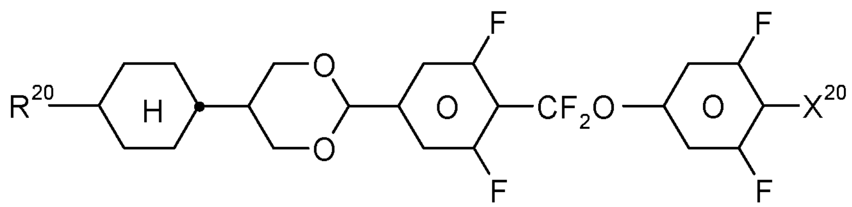

XIf

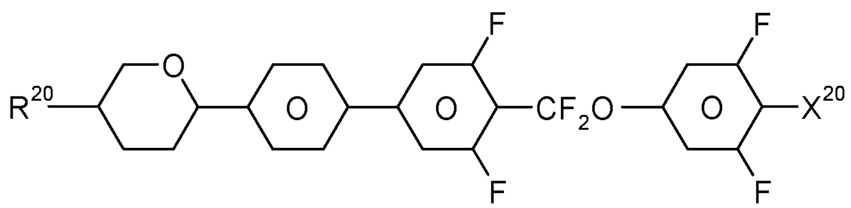

XIIa

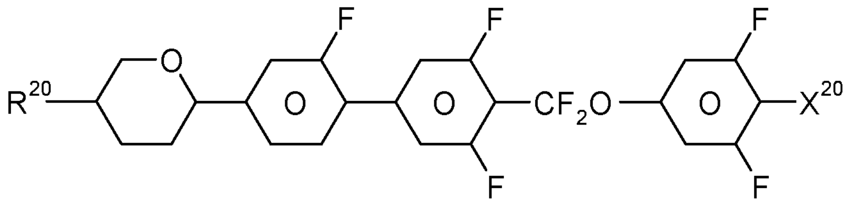

XIIb

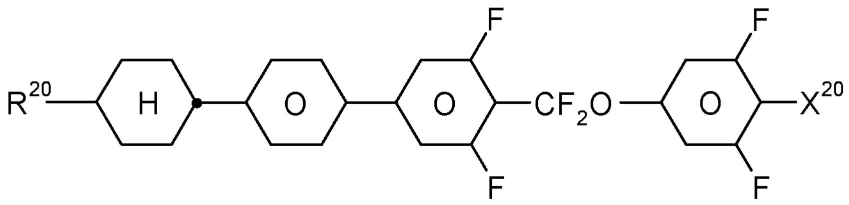

XIIc

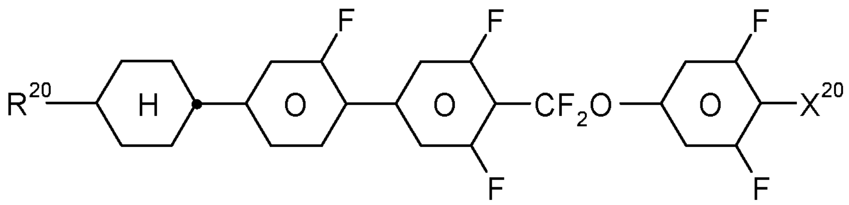

XIId

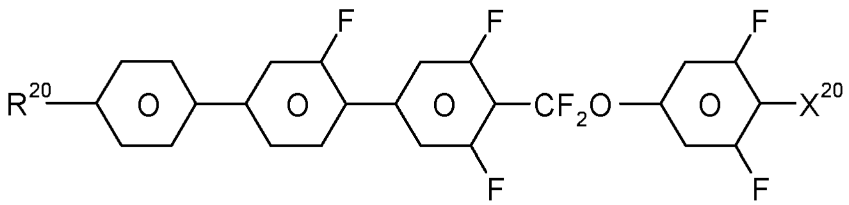

XIIe

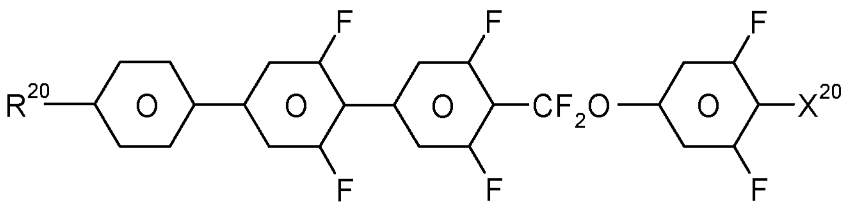

XIIf

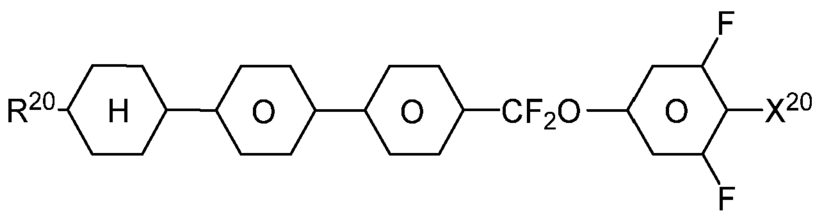

XIIg

wherein $R^{20}$ and $X^{20}$ have the meaning indicated above and preferably $R^{20}$ denotes alkyl having 1 to 6 C atoms and $X^{20}$ denotes F.

The mixture according to the invention particularly preferably comprises at least one compound of the formula XIIa and/or XIIe.

jj) The medium comprises one or more compounds of formula T given above, preferably selected from the group of compounds of the formulae T21 toT23 and T25 to T27.

Particular preference is given to the compounds of the formulae T21 to T23. Very particular preference is given to the compounds of the formulae

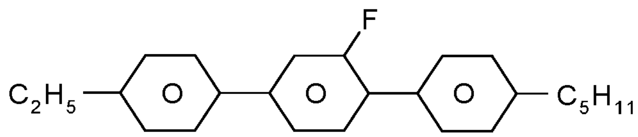

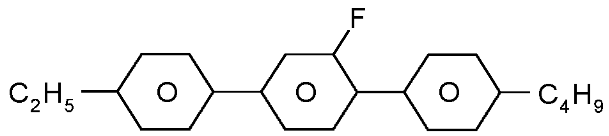

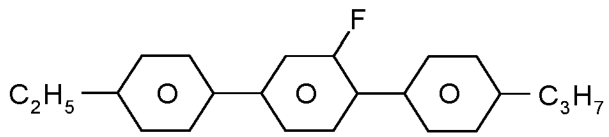

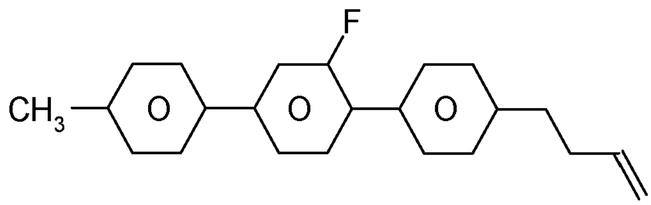

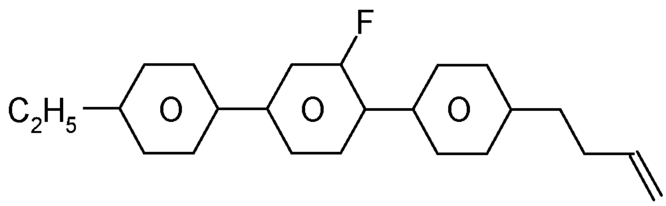

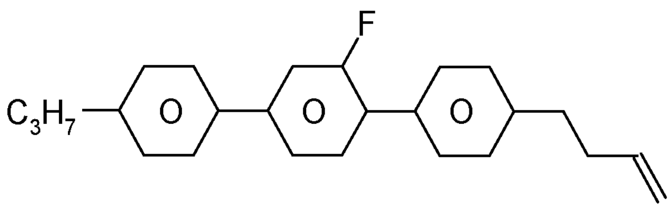

kk) The medium comprises one or more compounds selected from the group of formulae DK9, DK10 and DK11 given above.

ll) The medium additionally comprises one or more compounds selected from the following formulae:

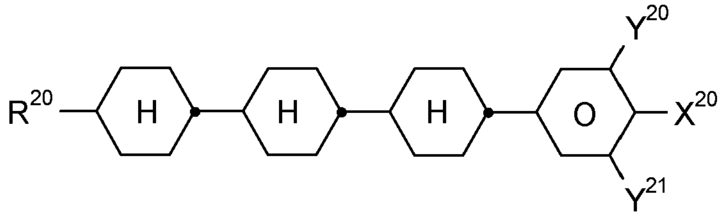

XIII

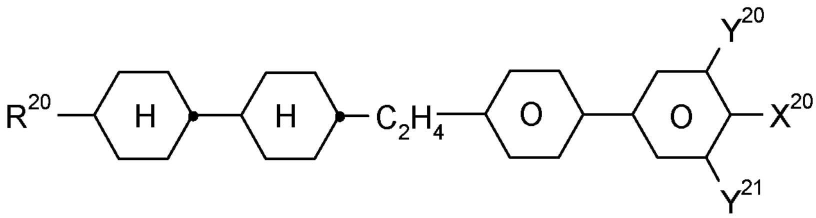

XIV

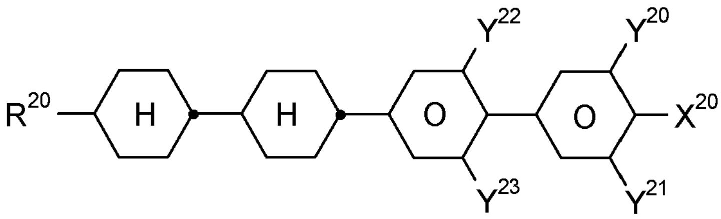

XV

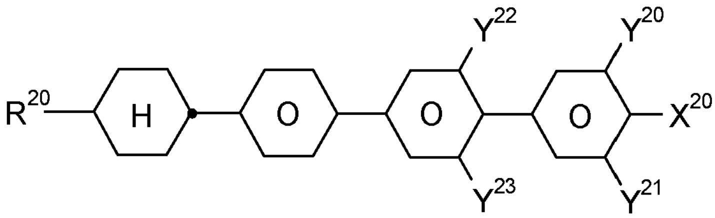

XVI

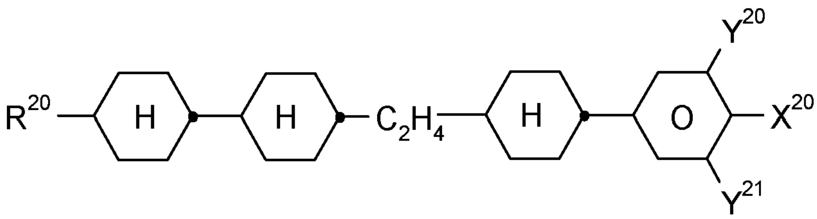

XVII

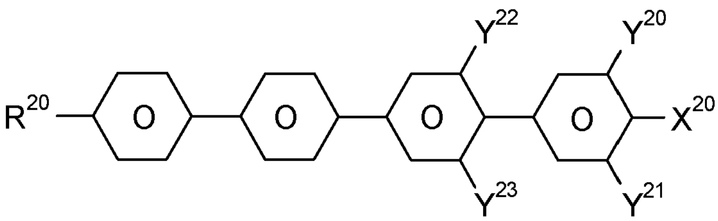

XVIII

wherein $R^{20}$ and $X^{20}$ each, independently of one another, have one of the meanings indicated above, and $Y^{20-22}$ each, independently of one another, denote H or F. $X^{20}$ is preferably F, Cl, $CF_3$, $OCF_3$ or $OCHF_2$. $R^{20}$ preferably denotes alkyl, alkoxy, oxaalkyl, fluoroalkyl or alkenyl, each having up to 6 C atoms.

The mixture according to the invention particularly preferably comprises one or more compounds of the formula XVIII-a,

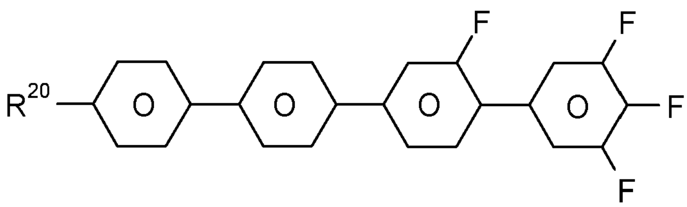

XVIII-a

wherein $R^{20}$ has the meanings indicated above. $R^{20}$ preferably denotes straight-chain alkyl, in particular ethyl, n-propyl, n-butyl and n-pentyl and very particularly preferably n-propyl. The compound(s) of the formula XVIII, in particular of the formula XVIII-a, is (are) preferably employed in the mixtures according to the invention in amounts of

0.5-20% by weight, particularly preferably 1-15% by weight.

mm) The medium additionally comprises one or more compounds of the formula XIX,

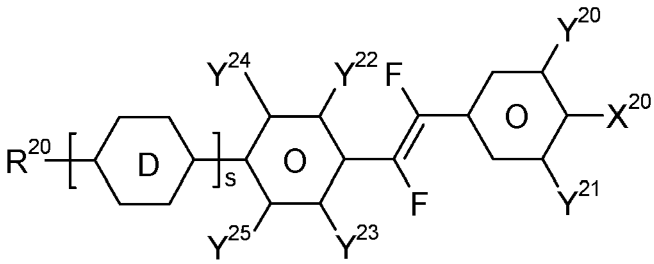

XIX

wherein $R^{20}$, $X^{20}$ and $Y^{20-25}$ have the meanings indicated in formula I, s denotes 0 or 1, and

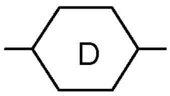

denotes

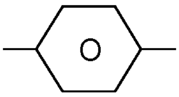 , 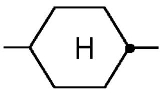 or 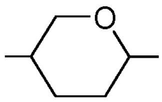 .

In the formula XIX, $X^{20}$ may also denote an alkyl radical having 1-6 C atoms or an alkoxy radical having 1-6 C atoms. The alkyl or alkoxy radical is preferably straight-chain.

$R^{20}$ preferably denotes alkyl having 1 to 6 C atoms. $X^{20}$ preferably denotes F;

- The compounds of the formula XIX are preferably selected from the following formulae:

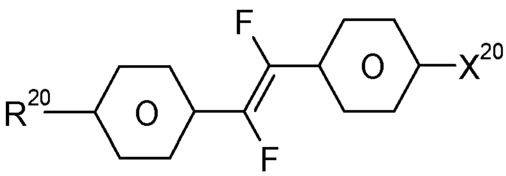

XIXa

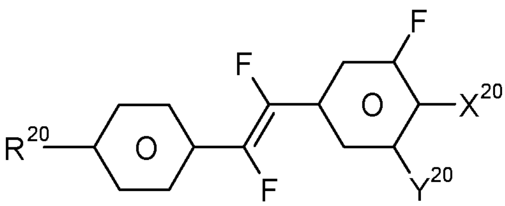

XIXb

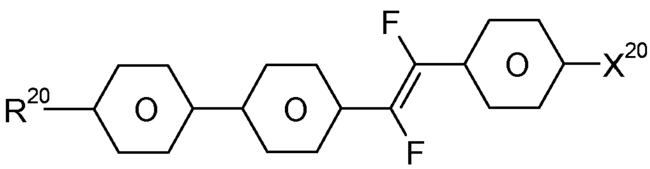

XIXc

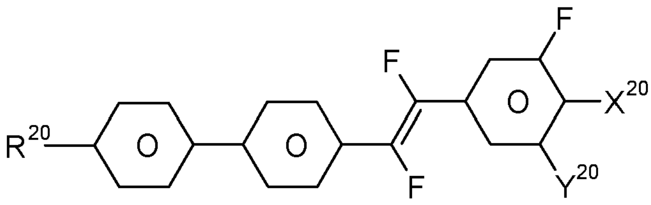

XIXd

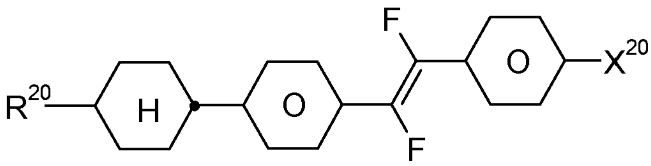

XIXe

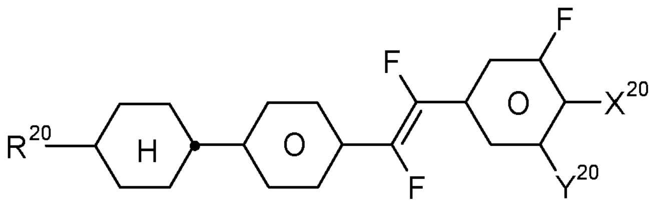

XIXf

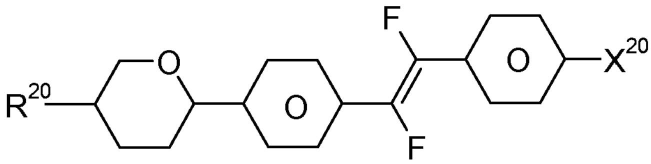

XIXg

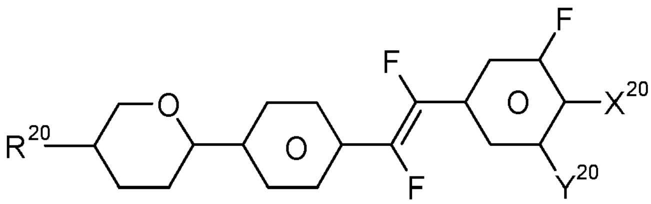

XIXh

wherein $R^{20}$, $X^{20}$ and $Y^{20}$ have the meanings indicated above. $R^{20}$ preferably denotes alkyl having 1 to 6 C atoms. $X^{20}$ preferably denotes F, and $Y^{20}$ is preferably F;

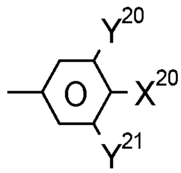

is preferably

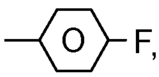,
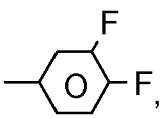,
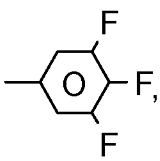,

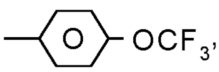, 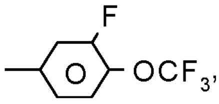, 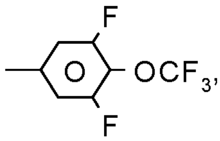, 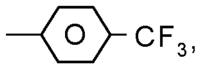,

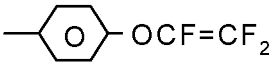, 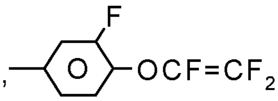, 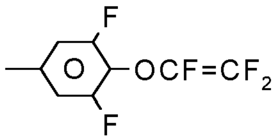,

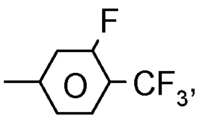, 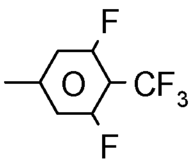, 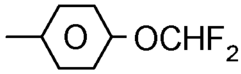, 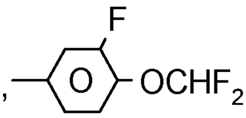,

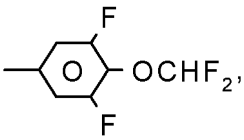, 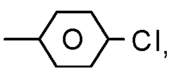, 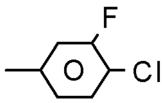 or 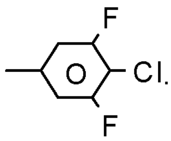.

- $R^{20}$ is straight-chain alkyl or alkenyl having 2 to 6 C atoms;

nn) The medium comprises one or more compounds of the formulae G1 to G4 given above, preferably selected from G1 and G2 wherein alkyl denotes $C_{1-6}$-alkyl, $L^x$ denotes H and X denotes F or Cl. In G2, X particularly preferably denotes Cl.

oo) The medium comprises one or more compounds of the following formulae:

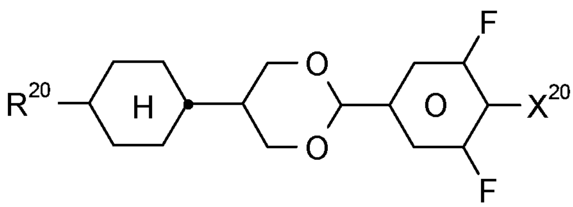 XX

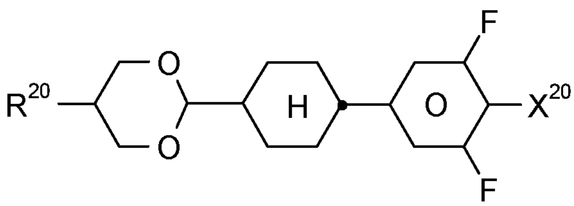 XXI

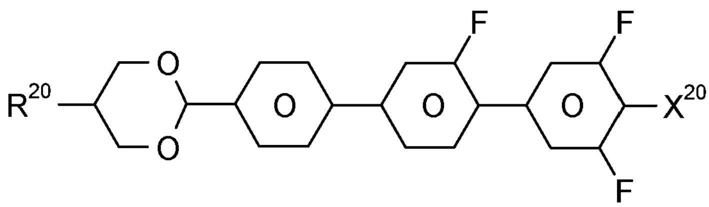 XXII

wherein $R^{20}$ and $X^{20}$ have the meanings indicated above. $R^{20}$ preferably denotes alkyl having 1 to 6 C atoms. $X^{20}$ preferably denotes F. The medium according to the invention particularly preferably comprises one or more compounds of the formula XXII wherein $X^{20}$ preferably denotes F. The compound(s) of the formulae XX - XXII is

(are) preferably employed in the mixtures according to the invention in amounts of 1-20% by weight, particularly preferably 1-15% by weight. Particularly preferred mixtures comprise at least one compound of the formula XXII.

pp) The medium comprises one or more compounds of the following pyrimidine or pyridine compounds of the formulae

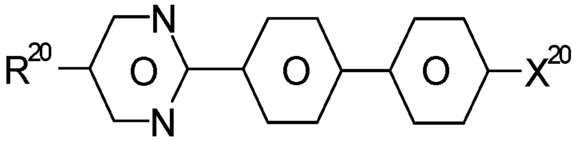

M-1

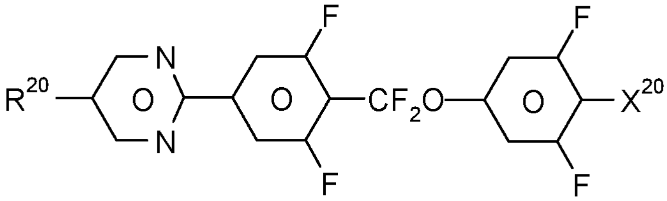

M-2

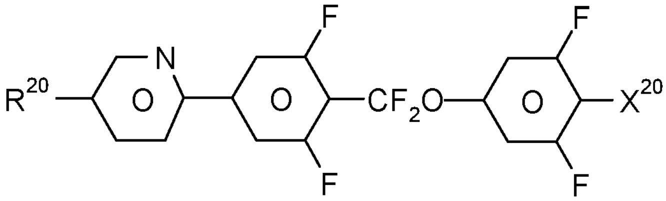

M-3

wherein $R^{20}$ and $X^{20}$ have the meanings indicated above. $R^{20}$ preferably denotes alkyl having 1 to 6 C atoms. $X^{20}$ preferably denotes F. The medium according to the invention particularly preferably comprises one or more compounds of the formula M-1, wherein $X^{20}$ preferably denotes F. The compound(s) of the formulae M-1 - M-3 is (are) preferably employed in the mixtures according to the invention in amounts of 1-20% by weight, particularly preferably 1-15% by weight.

qq) The medium comprises one or more compounds of the following tolane compounds of the formulae

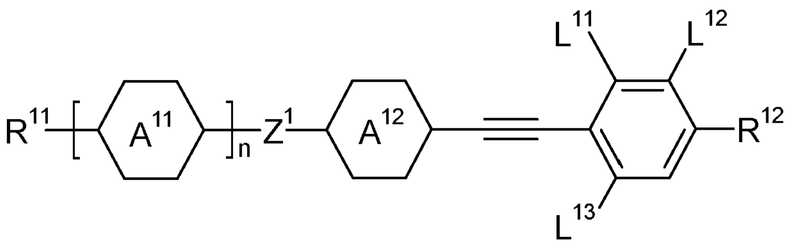

TO

in which

$R^{11}$ and $R^{12}$ identically or differently, denote H, alkyl or alkoxy having 1 to 12 C atoms, or alkenyl, alkenyloxy or alkoxyalkyl having 2 to 12 C atoms, in which one or more $CH_2$-groups may be replaced by

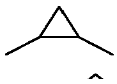, 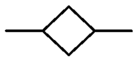,

and in which

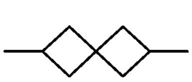, 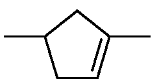 or 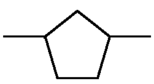,

one or more H atoms may be replaced by fluorine,

$L^{11}$, $L^{12}$, $L^{13}$ independently of one another, denote H, methyl, Cl or F,

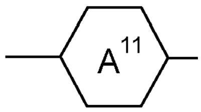

denotes

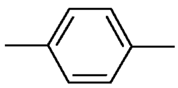 , 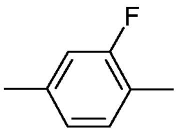 , 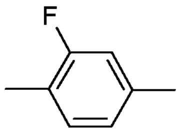 ,

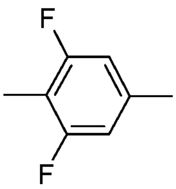 , 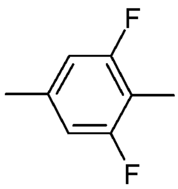 ,

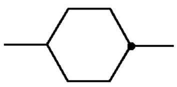 , 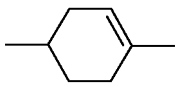 , 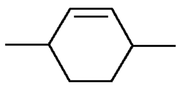 ,

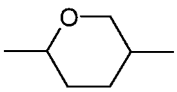 , 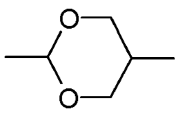

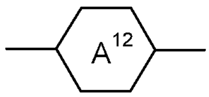

denotes

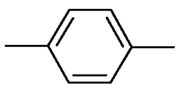 , 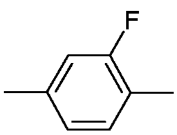 , 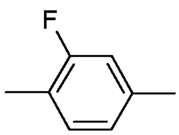 ,

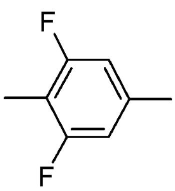 or 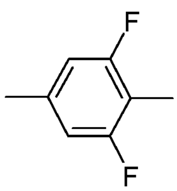 ,

$Z^1$ denotes denote a single bond, $-CH_2CH_2-$, -CH=CH-, $-CF_2O-$, $-OCF_2-$, $-CH_2O-$, $-OCH_2-$, -COO-, -OCO-, $-C_2F_4-$, -CF=CF-, $-CH=CHCH_2O-$,

n is 0 or 1.

The compounds of formula TO are preferably selected from the group of compounds of formulae TO-1 to TO-3, particularly preferably from formula TO-3

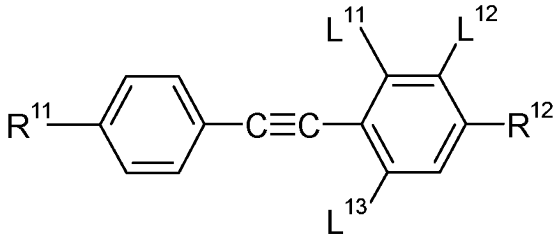

TO-1

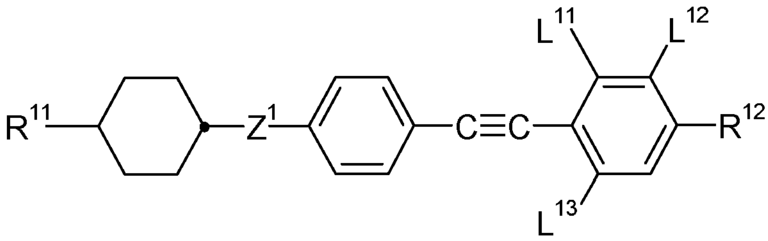

TO-2

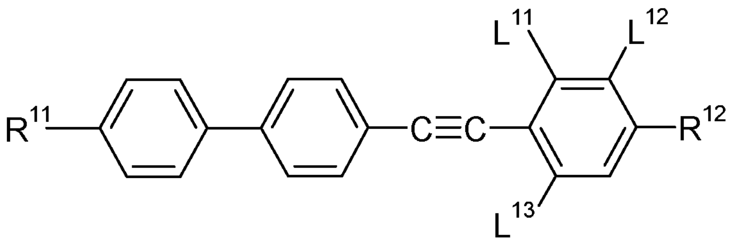

TO-3

in which the occurring groups have the respective meanings given above under formula TO, and in formulae TO-1 and TO-2 preferably

$R^{11}$ is *n*-alkyl or alkenyl having up to 7 C atoms, most preferably *n*-alkyl having 1 to 5 C atoms, and
$R^{12}$ is *n*-alkoxy or alkenyloxy having 1 to 6 C atoms, most preferably *n*-alkoxy having 1 to 4 C atoms,

and in formula TO-3 preferably

$R^{11}$ is *n*-alkyl or alkenyl having up to 7 C atoms, most preferably *n*-alkyl having 1 to 5 C atoms, and
$R^{12}$ is *n*-alkyl or alkenyl having up to 7 C atoms, most preferably *n*-alkyl having up to 5 C atoms.

The liquid-crystal media according to the present invention preferably comprise one or more compounds of formula TO-1, preferably selected from the group of compounds of formulae TO-1a to TO-1d, preferably of formulae TO-1a and/or TO-1d, most preferably of formula TO-1a,

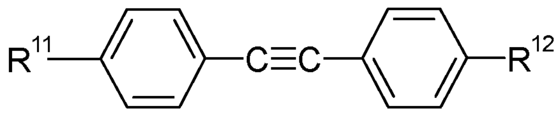

TO-1a

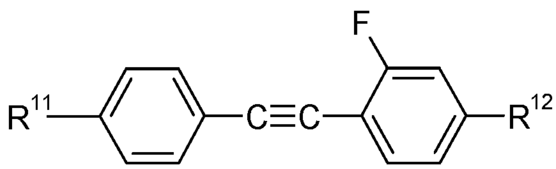

TO-1b

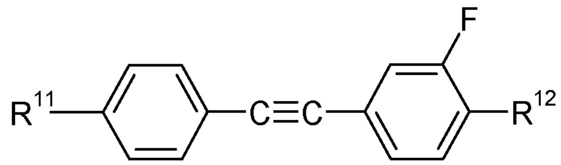

TO-1c

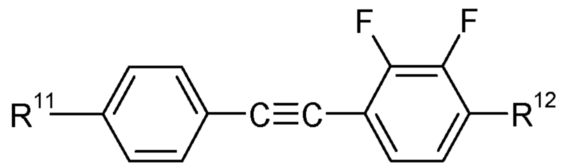

TO-1d

wherein the occurring groups have the meanings given above for TO.

The liquid-crystal media according to the present invention preferably comprise one or more compounds of formula TO-2, preferably selected from the group of compounds of formulae TO-2a to TO-2f, preferably of formulae TO-2a and/or TO-2d, most preferably of formula TO-2d,

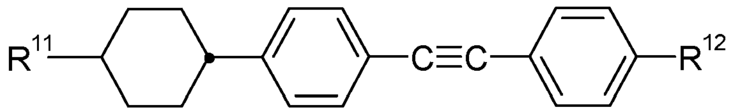

TO-2a

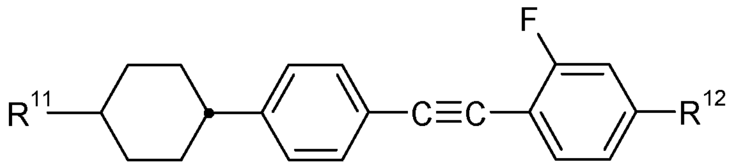

TO-2b

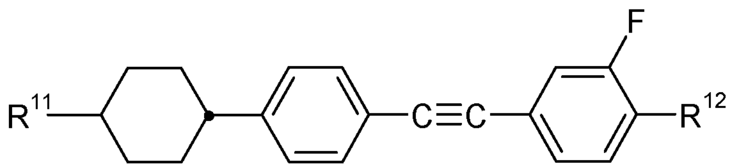

TO-2c

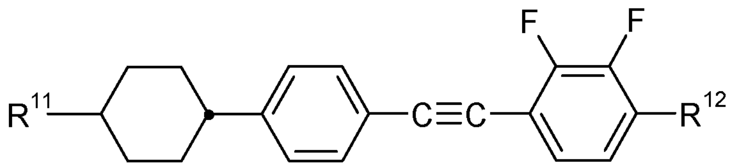

TO-2d

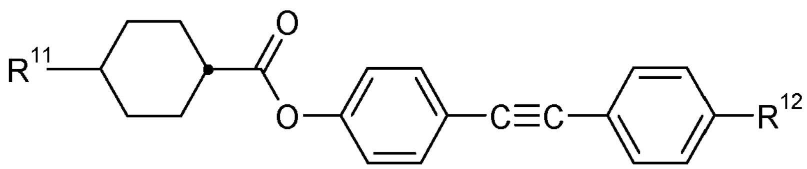

TO-2e

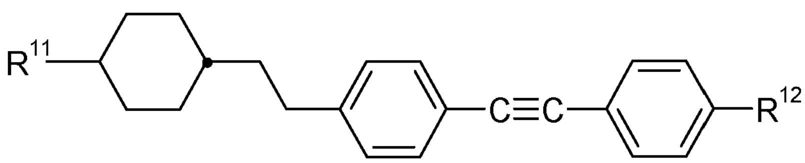

TO-2f

wherein the occurring groups have the respective meanings given above for TO.

The liquid-crystal media according to the present invention preferably comprise one or more compounds of formula TO-3, preferably selected from the group of compounds of formulae TO-3a to TO-3d, preferably of formulae TO-3c

and/or TO-3c and/or TO-3d, most preferably of formula TO-3d,

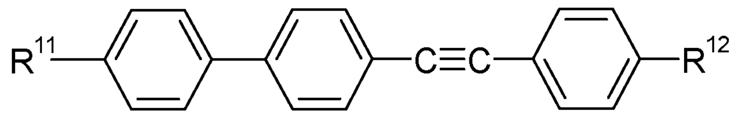

TO-3a

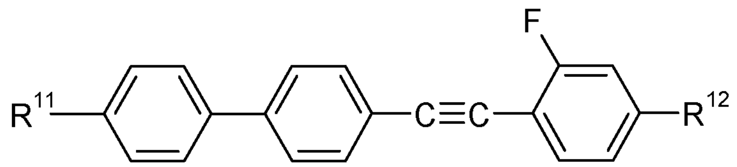

TO-3b

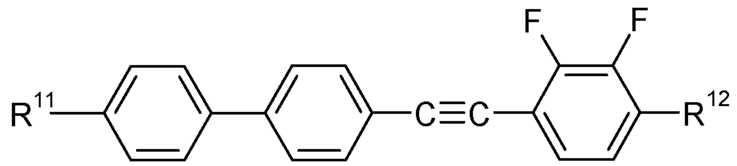

TO-3c

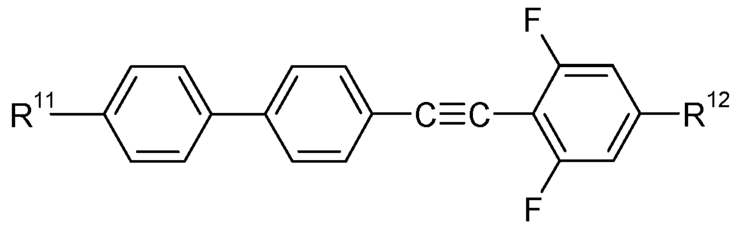

TO-3d

wherein the occurring groups have the respective meanings given above for TO.

Very preferably, the medium comprises one or more compounds of formula TO-3d.

Further preferred embodiments are indicated below:

rr) The medium comprises two or more compounds of the formula XII, in particular of the formula XIIe;

ss) The medium comprises 2-30% by weight, preferably 3-20% by weight, particularly preferably 3-15% by weight, of compounds of the formula XII;

tt) Besides the compounds of the formulae XII, the medium comprises further compounds selected from the group of the compounds of the formulae II, III, IX-XIII, XVII and XVIII;

uu) The proportion of compounds of the formulae II, III, IX-XI, XIII, XVII and XVIII in the mixture as a whole is 40 to 95% by weight;

vv) The medium comprises 10-50% by weight, particularly preferably 12-40% by weight, of compounds of the formulae II and/or III;

ww) The medium comprises 20-70% by weight, particularly preferably 25-65% by weight, of compounds of the formulae IX-XIII;

xx) The medium comprises 4-30% by weight, particularly preferably 5-20% by weight, of compounds of the formula XVII;

yy) The medium comprises 1-20% by weight, particularly preferably 2-15% by weight, of compounds of the formula XVIII;

zz) The medium comprises at least two compounds of the formulae

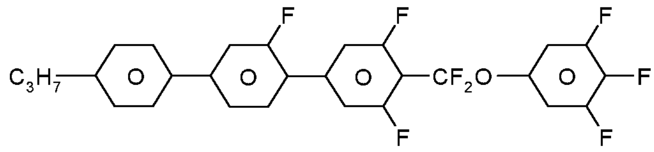

XIIe-1

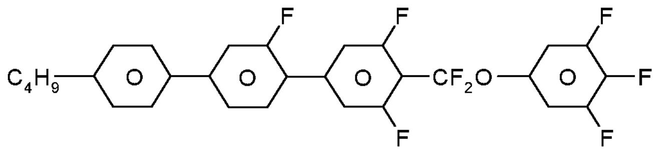

XIIe-2

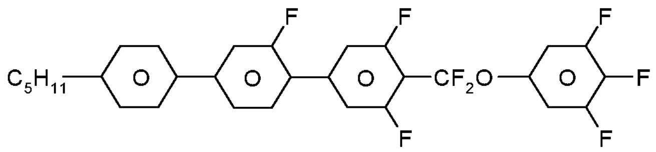

XIIe-3.

Aaa) The medium comprises at least two compounds of the formulae

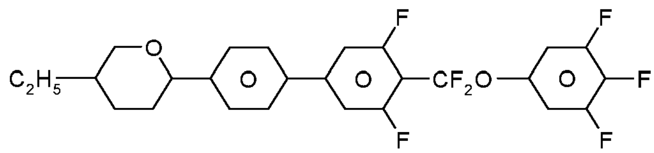

XIIa-1

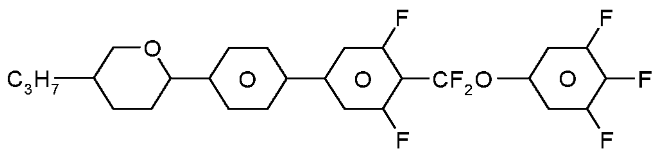

XIIa-2

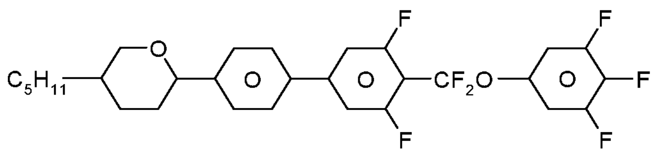

XIIa-3.

Bbb) The medium comprises at least two compounds of the formula XIIa and at least two compounds of the formula XIIe.

ccc) The medium comprises at least one compound of the formula XIIa and at least one compound of the formula XIIe and at least one compound of the formula IIIa.

Ddd) The medium comprises at least two compounds of the formula XIIa and at least two compounds of the formula XIIe and at least one compound of the formula IIIa.

Eee) The medium comprises in total ≥ 25% by weight, preferably ≥ 30% by weight, of one or more compounds of the formula XII.

Fff) The medium comprises ≥ 20% by weight, preferably ≥ 24% by weight, preferably 25-60% by weight, of compounds of the formula ZK3, in particular the compound of the formula ZK3a,

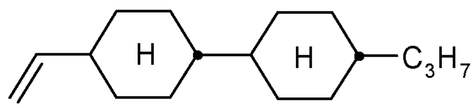

ZK3a

ggg) The medium comprises at least one compound selected from the group of compounds ZK3a, ZK3b and ZK3c, preferably ZK3a, in combination with compound ZK3d

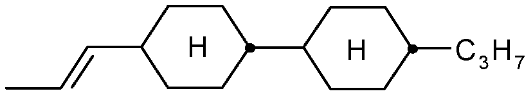

ZK3d

hhh) The medium comprises at least one compound of the formula DPGU-n-F.

iii) The medium comprises at least one compound of the formula CDUQU-n-F.

jjj) The medium comprises at least one compound of the formula CPU-n-OXF.

Kkk) The medium comprises at least one compound of the formula CPGU-3-OT.

LII) The medium comprises at least one compound of the formula PPGU-n-F.

mmm) The medium comprises at least one compound of the formula PGP-n-m, preferably two or three compounds.

Nnn) The medium comprises at least one compound of the formula PGP-2-2V having the structure

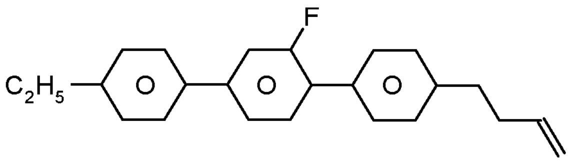

.

LC medium as a whole may also comprise one or more stabilisers in order to prevent undesired spontaneous polymerisation of the polymerizable compounds, for example during storage or transport. Suitable types and amounts of stabilisers are known to the person skilled in the art and are described in the literature. Particularly suitable are, for example, the commercially available stabilisers from the Irganox® series (BASF SE), such as, for example, Irganox® 1076. If stabilisers are employed, their proportion, based on the total amount of the polymerizable compounds as a whole, is preferably 10 - 10,000 ppm, particularly preferably 50 - 1000 ppm.

In another preferred embodiment of the present invention the LC medium contains one or more stabilisers selected from the the group consisting of the following formulae

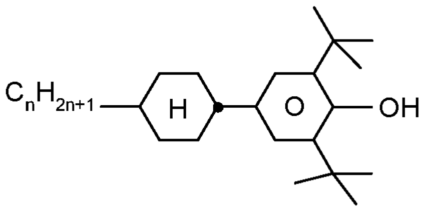

S1

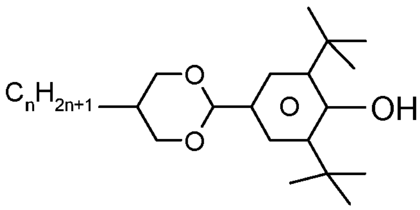

S2

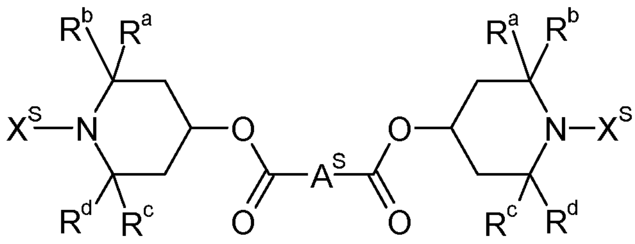

S3

wherein the individual radicals, independently of each other and on each occurrence identically or differently, have the following meanings

$R^{a-d}$ straight-chain or branched alkyl with 1 to 10, preferably 1 to 6, very preferably 1 to 4 C atoms, most preferably methyl,

$X^S$ H, $CH_3$, OH or O•,

$A^S$ straight-chain, branched or cyclic alkylene with 1 to 20 C atoms which is optionally substituted,

n an integer from 1 to 6, preferably 3.

Preferred stabilizers of formula S3 are selected from formulaS3A

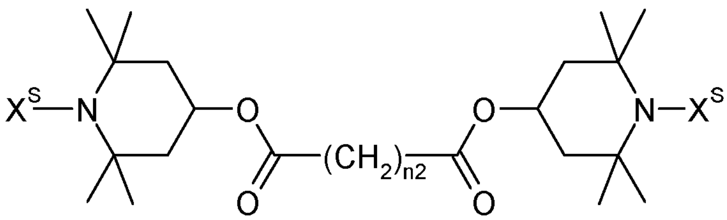

S3A

wherein n2 is an integer from 1 to 12, and wherein one or more H atoms in the group $(CH_2)_{n2}$ are optionally replaced by methyl, ethyl, propyl, butyl, pentyl or hexyl.

Very preferred stabilizers are selected from the group consisting of the following formulae

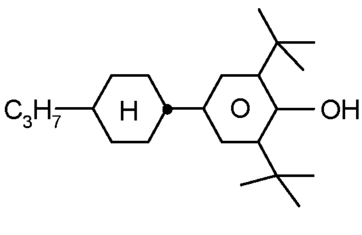

S1-1

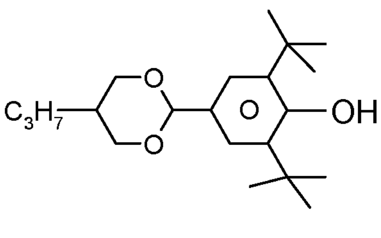

S2-1

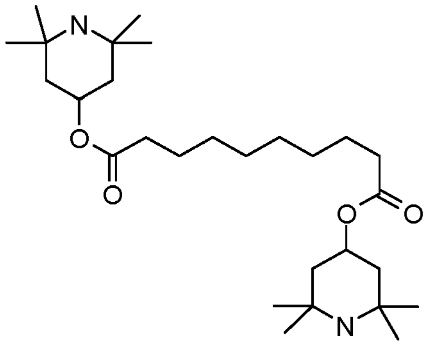

S3-1

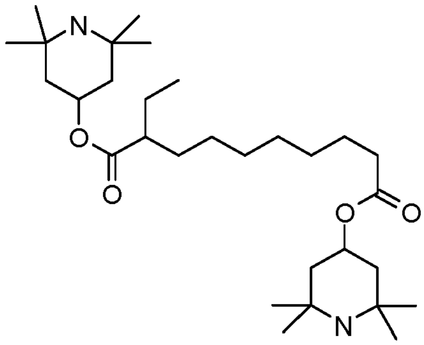

S3-2

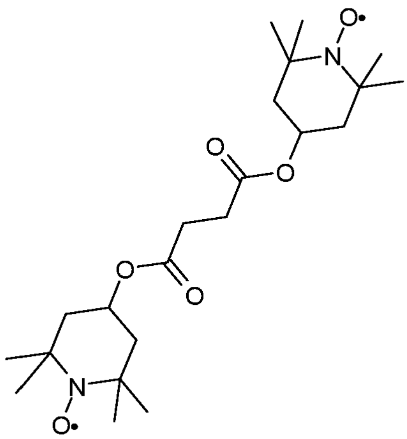

S3-3

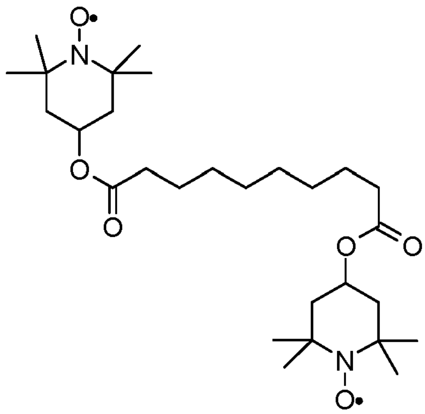

S3-4

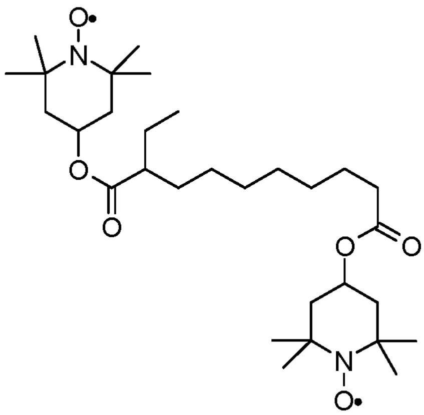

S3-5

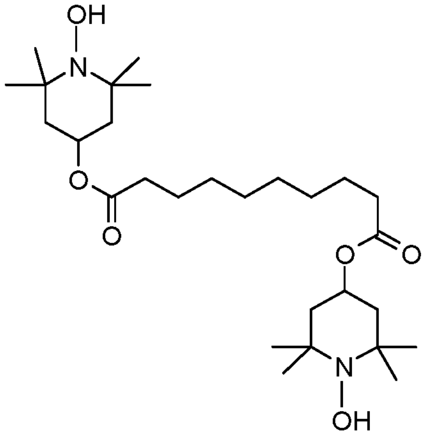

S3-6

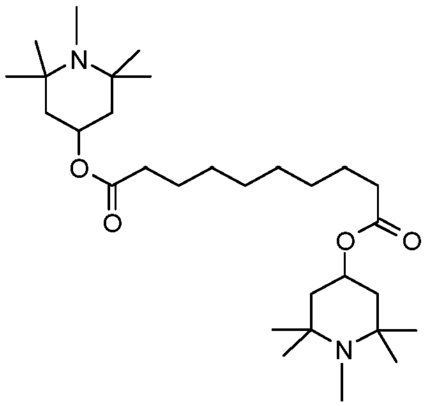

S3-7

In a preferred embodiment the liquid-crystalline medium comprises one or more stabilisers selected from the group consisting of formulae S1-1, S2-1, S3-1, S3-1 and S3-3.

The media are prepared in a manner conventional per se. In general, the components are dissolved in one another, preferably at elevated temperature.

In a preferred embodiment, the liquid crystal mixture according to the present invention further comprises a polymerizable component C) comprising one or more polymerizable compounds.

The polymerizable compounds can be selected from isotropic or mesogenic polymerizable compounds known to the skilled person in the art.

Preferably, the polymerizable component C) comprises one or more polymerizable compounds of formula P,

$$P^a\text{-}(Sp^a)_{s1}\text{-}A^2\text{-}(Z^a\text{-}A^1)_{n2}\text{-}(Sp^b)_{s2}\text{-}P^b \qquad \text{P}$$

wherein the individual radicals have the following meanings:

$P^a$, $P^b$ each, independently of one another, denote a polymerizable group,

$Sp^a$, $Sp^b$ on each occurrence, identically or differently, denote a spacer group,

s1, s2 each, independently of one another, denote 0 or 1,

$A^1$, $A^2$ each, independently of one another, denote a radical selected from the following groups:

a) the group consisting of trans-1,4-cyclohexylene, 1,4-cyclohexenylene and 4,4'-bicyclohexylene, wherein, in addition, one or more non-adjacent $CH_2$ groups may be replaced by -O- and/or -S- and wherein, in addition, one or more H atoms may be replaced by F,

b) the group consisting of 1,4-phenylene and 1,3-phenylene, wherein, in addition, one or two CH groups may be replaced by N and wherein, in addition, one or more H atoms may be replaced by L,

c) the group consisting of tetrahydropyran-2,5-diyl, 1,3-dioxane-2,5-diyl, tetrahydrofuran-2,5-diyl, cyclobutane-1,3-diyl, piperidine-1,4-diyl, thiophene-2,5-diyl and selenophene-2,5-diyl, each of which may also be mono- or polysubstituted by L,

d) the group consisting of saturated, partially unsaturated or fully unsaturated, and optionally substituted, polycyclic radicals having 5 to 20 cyclic C atoms, one or more of which may, in addition, be replaced by heteroatoms, preferably selected from the group consisting of

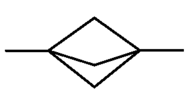 , 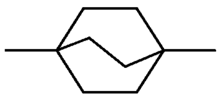 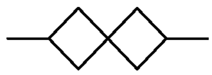 ,

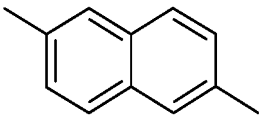 , 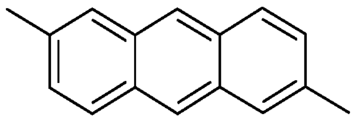 ,

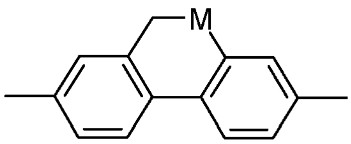 , 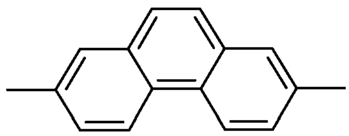 ,

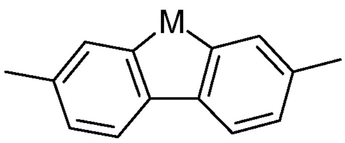 , 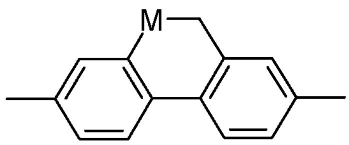 ,

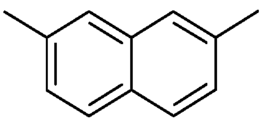 , 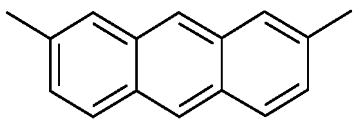 ,

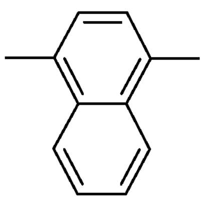 , 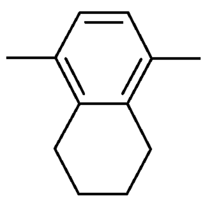 ,

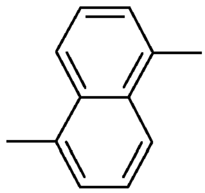 , 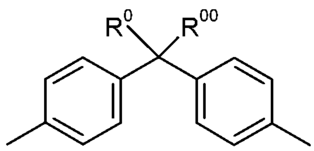

where, in addition, one or more H atoms in these radicals may be replaced by L, and/or one or more double bonds may be replaced by single bonds, and/or one or more CH groups may be replaced by N,

n2 denotes 0, 1, 2 or 3,

$Z^a$ in each case, independently of one another, denotes -CO-O-, -O-CO-, $-CH_2O-$, $-OCH_2-$, $-CF_2O-$, $-OCF_2-$, or $-(CH_2)_n-$, where n is 2, 3 or 4, -O-, -CO-, $-C(R^yR^z)-$, $-CH_2CF_2-$, $-CF_2CF_2-$ or a single bond,

L on each occurrence, identically or differently, denotes F, Cl, CN, SCN, $SF_5$ or straight-chain or branched, in each case optionally fluorinated, alkyl, alkoxy, alkylcarbonyl, alkoxycarbonyl, alkylcarbonyloxy or alkoxycarbonyloxy having 1 to 12 C atoms,

$R^y$, $R^z$ each, independently of one another, denote H, F or straight-chain or branched alkyl having 1 to 12 C atoms, wherein, in addition, one or more H atoms may be replaced by F,

M denotes -O-, -S-, $-CH_2-$, $-CHY^1-$ or $-CY^1Y^2-$, and

$Y^1$ and $Y^2$ each, independently of one another, have one of the meanings indicated above for $R^y$ or denote Cl or CN.

Preferred spacer groups $Sp^{a,b}$ are selected from the formula Sp"-X", so that the radicals P-Sp- and $P^{a/b}$-$Sp^{a/b}$- conforms to the formulae P-Sp"-X"- and $P^{a/b}$-Sp"-X"-, respectively, wherein

Sp" denotes alkylene having 1 to 20, preferably 1 to 12, C atoms, which is optionally mono- or polysubstituted by F, Cl, Br, I or CN and wherein, in addition, one or more non-adjacent $CH_2$ groups may each be replaced, independently of one another, by -O-, -S-, -NH-, $-N(R^0)-$, $-Si(R^{00}R^{000})-$, -CO-, -CO-O-, -O-CO-, -O-CO-O-, -S-CO-, -CO-S-, $-N(R^{00})-CO-O-$, $-O-CO-N(R^{00})-$, $-N(R^{00})-CO-N(R^{00})-$, -CH=CH- or -C≡C- in such a way that O and/or S atoms are not linked directly to one another,

X" denotes -O-, -S-, -CO-, -CO-O-, -O-CO-, -O-CO-O-, $-CO-N(R^{00})-$, $-N(R^{00})-CO-$, $-N(R^{00})-CO-N(R^{00})-$, $-OCH_2-$, $-CH_2O-$, $-SCH_2-$, $-CH_2S-$, $-CF_2O-$, $-OCF_2-$, $-CF_2S-$, $-SCF_2-$, $-CF_2CH_2-$, $-CH_2CF_2-$, $-CF_2CF_2-$, -CH=N-, -N=CH-, -N=N-, $-CH=CR^0-$, $-CY^3=CY^4-$, -C≡C-, -CH=CH-CO-O-, -O-CO-CH=CH- or a single bond,

$R^0$, $R^{00}$ and $R^{000}$ each, independently of one another, denote H or alkyl having 1 to 12 C atoms, and

$Y^3$ and $Y^4$ each, identically or differently, denote H, F, Cl or CN.

X" is preferably -O-, -S-, -CO-, -C(O)O-, -OC(O)-, -O-C(O)O-, $-CO-NR^0-$, $-NR^0-CO-$, $-NR^0-CO-NR^0-$ or a single bond.

Typical spacer groups Sp" are, for example, $-(CH_2)_{p1}-$, $-(CH_2CH_2O)_{q1}-CH_2CH_2-$, $-CH_2CH_2-S-CH_2CH_2-$, $-CH_2CH_2-NH-CH_2CH_2-$ or $-(SiR^{00}R^{000}-O)_{p1}-$, wherein p1 is an integer from 1 to 12, q1 is an integer from 1 to 3, and $R^{00}$ and $R^{000}$ have the meanings indicated above.

Particularly preferred groups -Sp"-X"- are $-(CH_2)_{p1}-$, $-(CH_2)_{p1}-O-$, $-(CH_2)_{p1}-O-CO-$, $-(CH_2)_{p1}-O-CO-O-$, wherein p1 and q1 have the meanings indicated above.

Particularly preferred groups Sp" are, for example, in each case straight-chain ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

Particularly preferred monomers of formula P are the following:

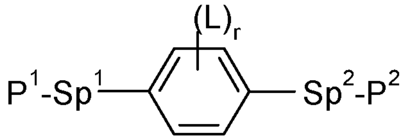

P1

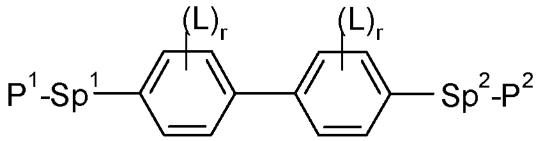

P2

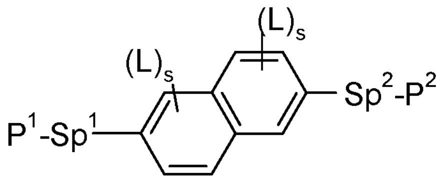

P3

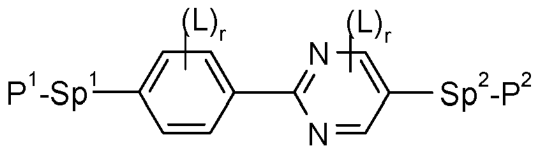

P4

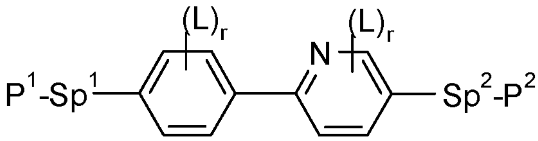

P5

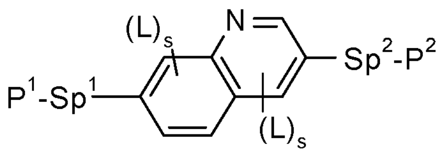

P6

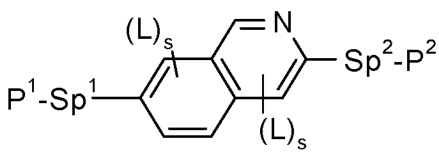

P7

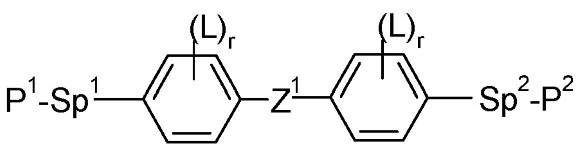

P8

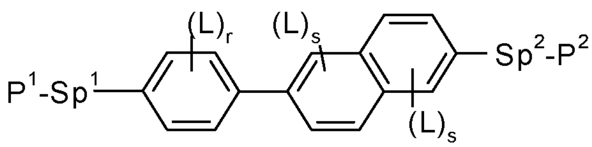

P9

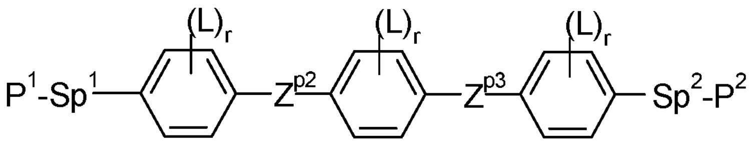

P10

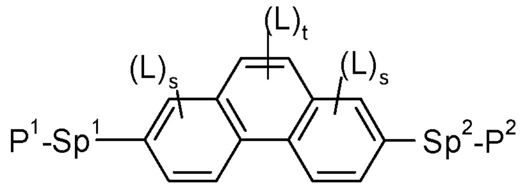

P11

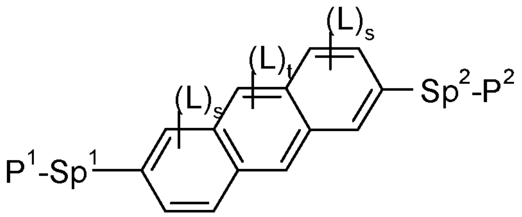

P12

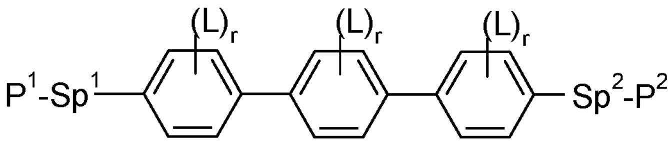

P13

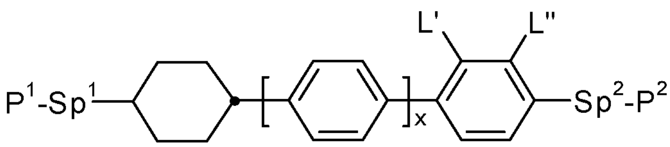

P14

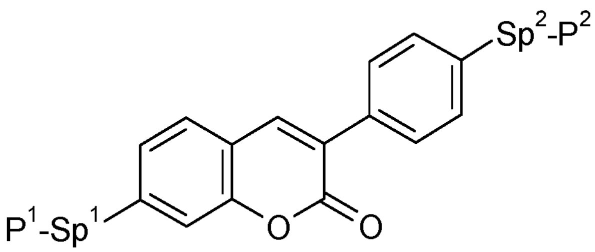

P15

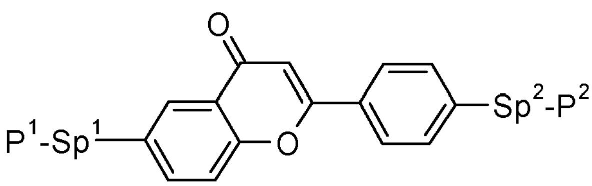

P16

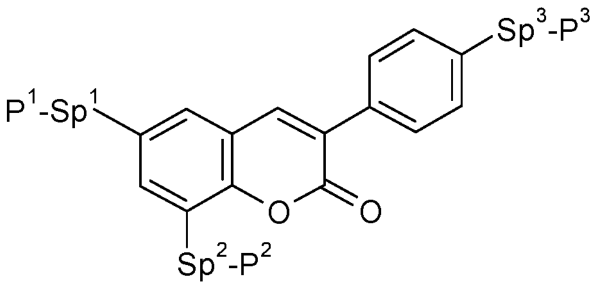

P17

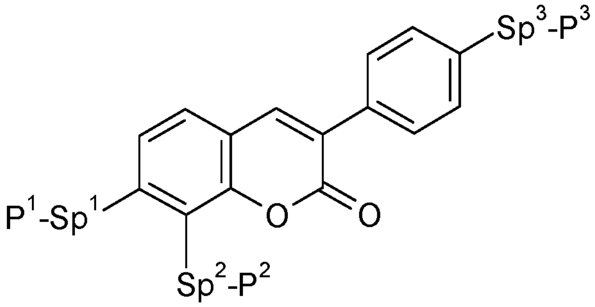

P18

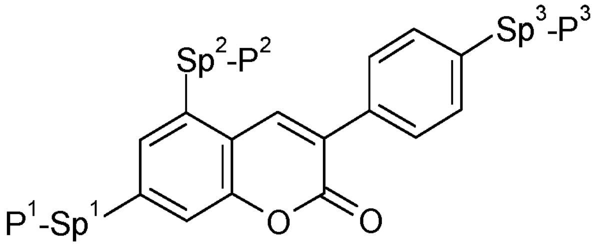

P19

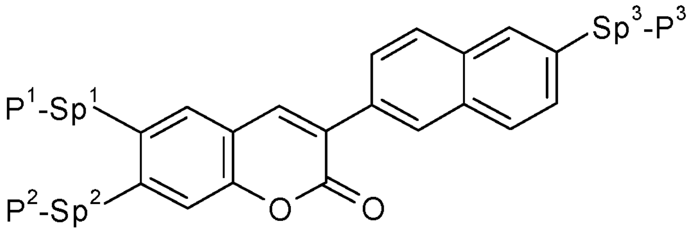

P20

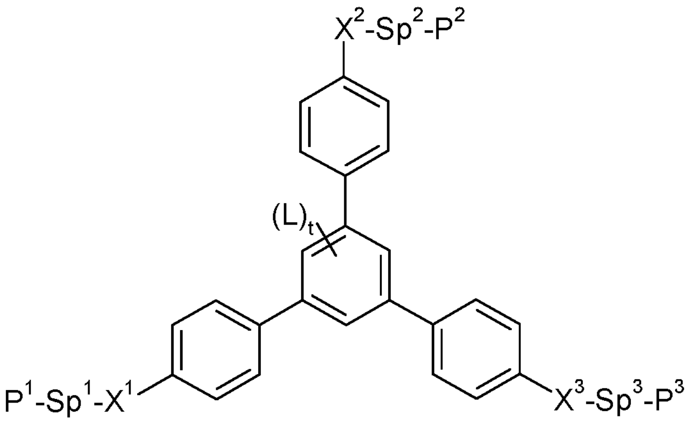

P21

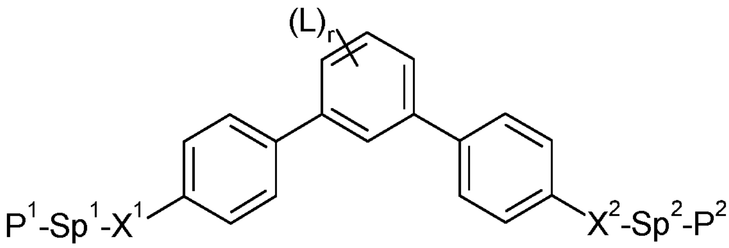

P22

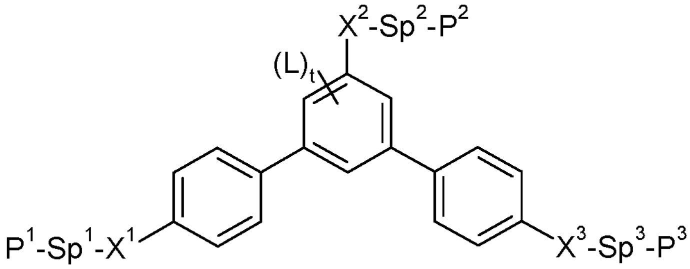

P23

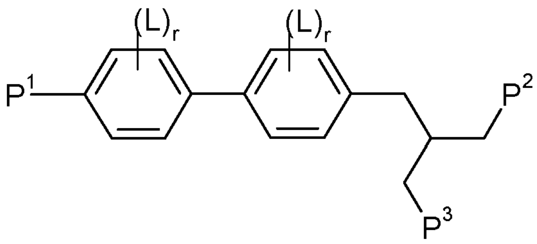

P24

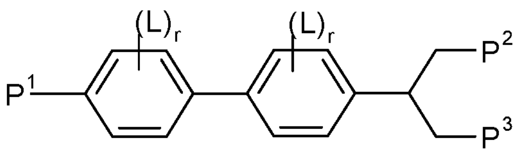

P25

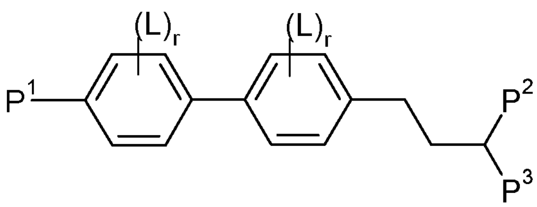

P26

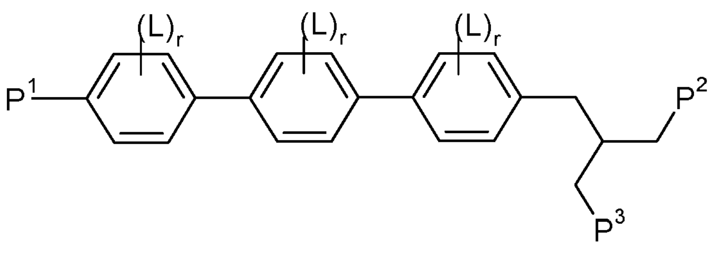

P27

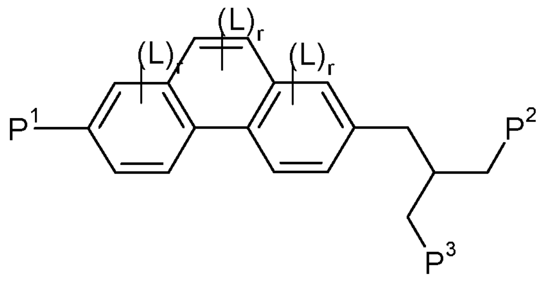

P28

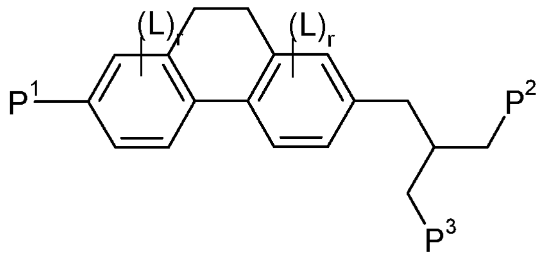

P29

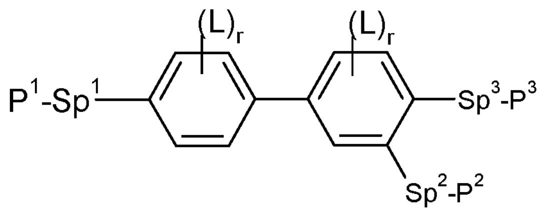

P30

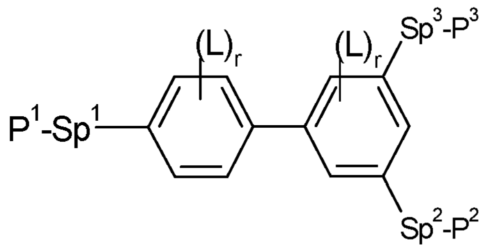

P31

wherein the individual radicals have the following meanings:

$P^1$ to $P^3$ each, independently of one another, denote a polymerizable group as defined for formula P, preferably an acrylate, methacrylate, fluoroacrylate, oxetane, vinyloxy or epoxide group,

$Sp^1$ to $Sp^3$ each, independently of one another, denote a single bond or a spacer group, preferably having one of the meanings indicated above and below for $Sp^a$, and particularly preferably $-(CH_2)_{p1}-$, $-(CH_2)_{p1}-O-$, $-(CH_2)_{p1}-CO-O-$ or $-(CH_2)_{p1}-O-CO-O-$, wherein p1 is an integer from 1 to 12, and where the linking to the adjacent ring in the last-mentioned groups takes place via the O atom, where, in addition, one or more of the radicals $P^1$-$Sp^1$- , $P^2$-$Sp^2$- and $P^3$-$Sp^3$- may denote a radical $R^{aa}$, with the proviso that at least one of the radicals $P^1$-$Sp^1$- , $P^2$-$Sp^2$- and $P^3$-$Sp^3$- present does not denote $R^{aa}$,

$R^{aa}$ denotes H, F, Cl, CN or straight-chain or branched alkyl having 1 to 25 C atoms, wherein, in addition, one or more non-adjacent $CH_2$ groups may each be replaced, independently of one another, by $C(R^0)=C(R^{00})-$, -C≡C-, $-N(R^0)-$, -O-, -S-, -CO-, -CO-O-, -O-CO-, -O-CO-O- in such a way that O and/or S atoms are not linked directly to one another, and wherein, in addition, one or more H atoms may be replaced by F, Cl, CN or $P^1$-$Sp^1$-, particularly preferably straight-chain or branched, optionally mono- or polyfluorinated alkyl, alkoxy, alkenyl, alkynyl, alkylcarbonyl, alkoxycarbonyl or alkylcarbonyloxy having 1 to 12 C atoms (where the alkenyl and alkynyl radicals have at least two C atoms and the branched radicals have at least three C atoms),

$R^0$, $R^{00}$ each, independently of one another, denote H or alkyl having 1 to 12 C atoms,

$R^y$ and $R^z$ each, independently of one another, denote H, F, $CH_3$ or $CF_3$,

$Z^{p1}$ denotes -O-, -CO-, -C($R^yR^z$)- or $-CF_2CF_2-$,

$Z^{p2}$ and $Z^{p3}$ each, independently of one another, denote -COO-, -O-CO-, $-CH_2O-$, $-OCH_2-$, $-CF_2O-$, $-OCF_2-$ or $-(CH_2)_{n3}-$, where n3 is 2, 3 or 4,

L on each occurrence, identically or differently, denotes F, Cl, CN, SCN, $SF_5$ or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms, preferably F,

L' and L" each, independently of one another, denote H, F or Cl,

r denotes 0, 1, 2, 3 or 4,

s denotes 0, 1, 2 or 3,

t denotes 0, 1 or 2, and

x denotes 0 or 1.

In a particularly preferred embodiment of the present invention the LC mixture, or component C), comprises one or more compounds of formula P10-1.

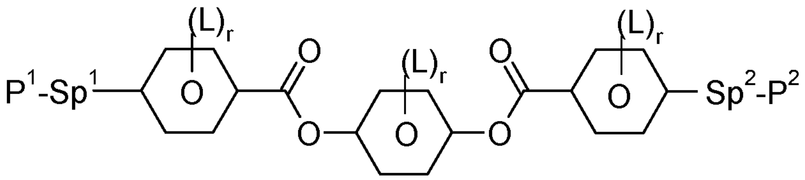

P10-1

wherein the parameters are defined as described above and $P^1$ and $P^2$ preferably denote acrylate or methacrylate.

Particularly preferred compounds of formula P10-1 are selected from the group of the following subformulae

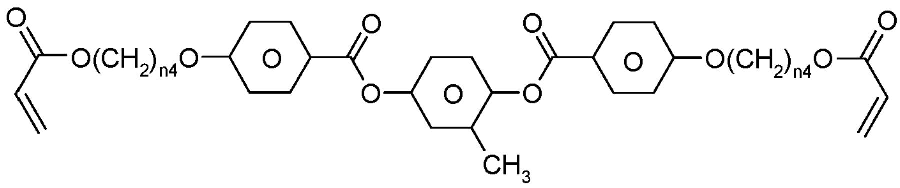

P10-1-1

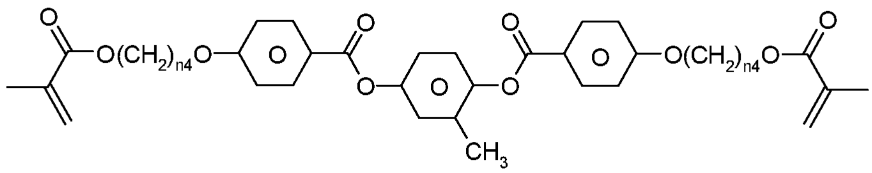

P10-1-2

wherein each n4 denote independently of each other an integer between 2 and 10, preferably 3,4,5 or 6.

In another preferred embodiment, the polymerizable component C) comprises one or more polymerizable compounds of formula CC,

$$P^a\text{-}Sp^a\text{-}(A^P)_{n2}\text{-}Sp^b\text{-}P^b \quad CC$$

wherein the individual radicals have the following meanings:

$P^a$, $P^b$ each, independently of one another, denote a polymerizable group, preferably each and independently selected from the group consisting of acrylate, methacrylate, ethacrylate, fluoroacrylate, vinyl¬oxy, chloro¬acry-late, oxetane, or epoxide groups

$Sp^a$, $Sp^b$ on each occurrence, identically or differently, denote a spacer group or a single bond,

$A^p$ each and independently from another, in each occurrence, a group selected from 5, 6 or 7-membered alicyclic groups wherein, in addition, one or more non-adjacent $CH_2$ groups may be replaced by -NH-, -O- and/or -S-, wherein one or more non-adjacent $-CH_2-CH_2-$ groups may be replaced by -CH=CH-, and wherein one or more H atoms may be replaced by F, preferably 5-membered groups such as cyclopentane, cyclopentane, tetrahydrofuran, tetrahydrothiofuran, pyrrolidine, or 6-membered groups, such as cyclohexane, silinane, cyclohexene, tetrahydropyran, tetrahydrothiopyran, 1,3-dioxane, 1,3-dithiane, piperidine, or 7-membered groups, such as cycloheptane, trans-1,4-cyclohexylene, more preferably 1,4-cyclohexylene or 1,4-cyclo-hexenylene,

n2 denotes 0, 1, 2 or 3, preferably 1 or 2.

Preferred spacer groups $Sp^{a,b}$ are selected from the formula Sp"-X", so that the radicals P-Sp- and $P^{a/b}$-$Sp^{a/b}$- conforms to the formulae P-Sp"-X"- and $P^{a/b}$-Sp"-X"-, respectively, wherein

Sp" denotes alkylene having 1 to 20, preferably 1 to 12, C atoms, which is optionally mono- or polysubstituted by F, Cl, Br, I or CN and wherein, in addition, one or more non-adjacent $CH_2$ groups may each be replaced, independently of one another, by -O-, -S-, -NH-, $-N(R^0)-$, $-Si(R^{00}R^{000})-$, -CO-, -CO-O-, -O-CO-, -O-CO-O-, -S-CO-, -CO-S-, $-N(R^{00})-CO-O-$, $-O-CO-N(R^{00})-$, $-N(R^{00})-CO-N(R^{00})-$, -CH=CH- or -C≡C- in such a way that O and/or S atoms are not linked directly to one another, or a single bond,

X" denotes -O-, -S-, -CO-, -CO-O-, -O-CO-, -O-CO-O-, $-CO-N(R^{00})-$, $-N(R^{00})-CO-$, $-N(R^{00})-CO-N(R^{00})-$, $-OCH_2-$, $-CH_2O-$, $-SCH_2-$, $-CH_2S-$, $-CF_2O-$, $-OCF_2-$, $-CF_2S-$, $-SCF_2-$, $-CF_2CH_2-$, $-CH_2CF_2-$, $-CF_2CF_2-$, -CH=N-, -N=CH-, -N=N-, $-CH=CR^0-$, $-CY^3=CY^4-$, -C≡C-, -CH=CH-CO-O-, -O-CO-CH=CH- or a single bond, preferably a single bond

$R^0$, $R^{00}$ and $R^{000}$ each, independently of one another, denote H or alkyl having 1 to 12 C atoms, and

$Y^3$ and $Y^4$ each, identically or differently, denote H, F, Cl or CN.

X" is preferably -O-, -S-, -CO-, -C(O)O-, -OC(O)-, -O-C(O)O-, $-CO-NR^0-$, $-NR^0-CO-$, $-NR^0-CO-NR^0-$ or a single bond.

Typical spacer groups Sp" are, for example, a single bon, $-(CH_2)_{p1}-$, $-(CH_2CH_2O)_{q1}-CH_2CH_2-$, $-CH_2CH_2-S-CH_2CH_2-$, $-CH_2CH_2-NH-CH_2CH_2-$ or $-(SiR^{00}R^{000}-O)_{p1}-$, wherein p1 is an integer from 1 to 12, q1 is an integer from 1 to 3, and $R^{00}$ and $R^{000}$ have the meanings indicated above.

Particularly preferred groups -Sp"-X"- are a single bond, $-(CH_2)_{p1}-$, $-(CH_2)_{p1}-O-$, $-(CH_2)_{p1}-O-CO-$, $-(CH_2)_{p1}-O-CO-O-$, wherein p1 and q1 have the meanings indicated above.

Particularly preferred groups Sp" are, for example, in each case straight-chain methylene, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

Particularly preferred monomers of formula CC are the following:

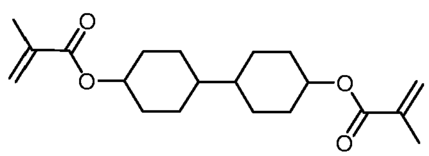

CC-1

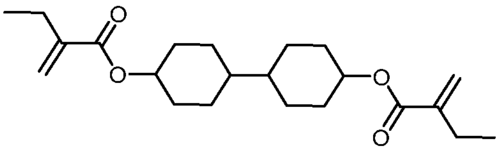

CC-2

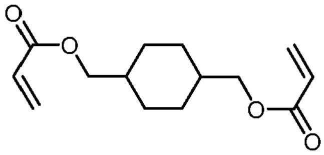

CC-3

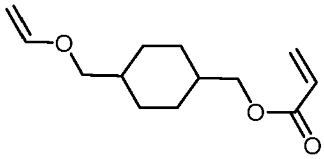

CC-4

In another preferred embodiment, the polymerizable component C) in accordance with the present invention may comprise, preferably consists of, one or more compounds of formula Palk,

P"-Sp'-P" Palk

wherein the individual radicals have the meanings :

P", P" each, independently of one another, denote a polymerizable group as given in formula CC,
Sp' denotes a spacer group,

Preferred spacer groups Sp' are selected from the formula -X"-Sp"-X"-

Sp" denotes alkylene having 1 to 25, preferably 1 to 20, C atoms, which is optionally mono- or polysubstituted by F, Cl, Br, I, or CN and wherein, in addition, one or more non-adjacent $CH_2$ groups may each be replaced, independently of one another, by -O-, -S-, -NH-, -N($R^0$)-, -Si($R^{00}R^{000}$)-, -CO-, -CO-O-, -O-CO-, -O-CO-O-, -S-CO-, -CO-S-, -N($R^{00}$)-CO-O-, -O-CO-N($R^{00}$)-, -N($R^{00}$)-CO-N($R^{00}$)-, -CH=CH- or -C≡C- in such a way that O and/or S atoms are not linked directly to one another,

X" denotes each and independently -O-, -S-, -CO-, -CO-O-, -O-CO-, -O-CO-O-, -CO-N($R^{00}$)-, -N($R^{00}$)-CO-, -N($R^{00}$)-CO-N($R^{00}$)-, $-OCH_2-$, $-CH_2O-$, $-SCH_2-$, $-CH_2S-$, $-CF_2O-$, $-OCF_2-$, $-CF_2S-$, $-SCF_2-$, $-CF_2CH_2-$, $-CH_2CF_2-$, $-CF_2CF_2-$, -CH=N-, -N=CH-, -N=N-, -CH=C$R^0$-, -C$Y^3$=C$Y^4$-, -C≡C-, -CH=CH-CO-O-, -O-CO-CH=CH- or a single bond,

$R^0$, $R^{00}$ and $R^{000}$ each, independently of one another, denote H or alkyl having 1 to 12 C atoms, and

$Y^3$ and $Y^4$ each, identically or differently, denote H, F, Cl or CN.

X" is preferably -O-, -S-, -CO-, -C(O)O-, -OC(O)-, -O-C(O)O-, -CO-N$R^0$-, -N$R^0$-CO-, -N$R^0$-CO-N$R^0$- or a single bond.

Typical spacer groups Sp" are, for example, $-(CH_2)_{p1}-$, $-(CH_2CH_2O)_{q1}-CH_2CH_2-$, $-CH_2CH_2-S-CH_2CH_2-$, $-CH_2CH_2-NH-CH_2CH_2-$ or -(Si$R^{00}R^{000}$-O)$_{p1}$-, wherein p1 and q1 are integers from 1 to 20, and $R^{00}$ and $R^{000}$ have the meanings indicated above.

Particularly preferred groups X"-Sp"-X"- are $-(CH_2)_{p1}-$, $-(CH_2CH_2O)_{q1}-CH_2CH_2-$ $-(CH_2)_{p1}-O-$, $-(CH_2)_{p1}-O-CO-$, $-(CH_2)_{p1}-O-CO-O-$, $-O-(CH_2)_{p1}-O-$, $-O-CO-(CH_2)_{p1}-O-CO-$, $-O-CO-O-(CH_2)_{p1}-O-CO-O-$, $-O-(CH_2)_{p1}-$, $-O-CO-(CH_2)_{p1}-$, $-O-CO-O-(CH_2)_{p1}-$, wherein p1 and q1 have the meanings indicated above.

Particularly preferred groups Sp" are, for example, in each case straight-chain ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene, furthermore $-(CH_2CH_2O)_{q1}-(CH_2CH_2)_{p1}-$, $-(CH_2CH_2)_{p1}-(OCH_2CH_2)_{q1}-$, or

$-(CH_2CH_2)_{p1}-(CH_2CH_2O)_{q1}-(CH_2CH_2)r_1$ wherein p1, q1 and r1 each and independently denotes 1, 2, 3, 4, 5, 6, 7, 8, 9, 10, 11 or 12.

Particularly preferred monomers of formula P are the following:

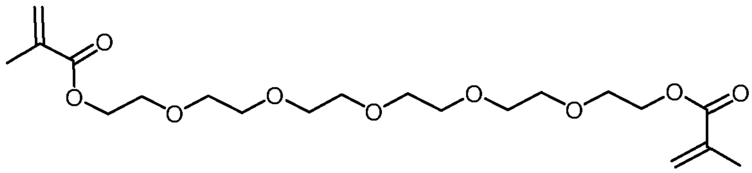

P-1

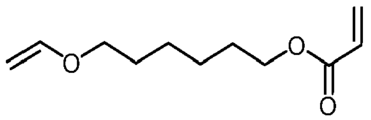

P-2

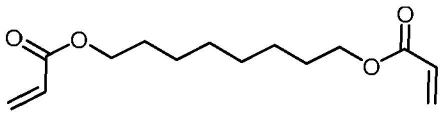

P-3

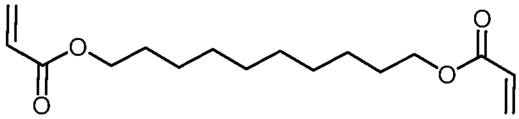

P-4

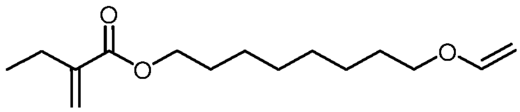

P-5

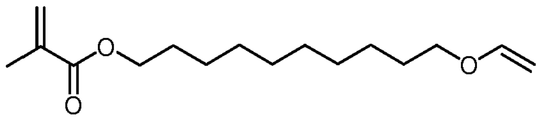

P-6

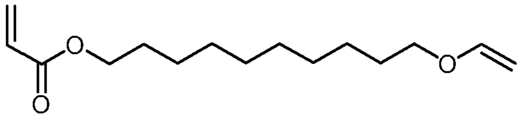

P-7

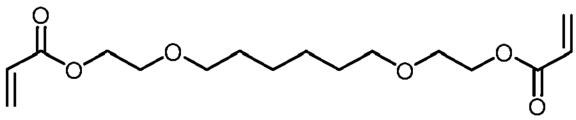

P-8

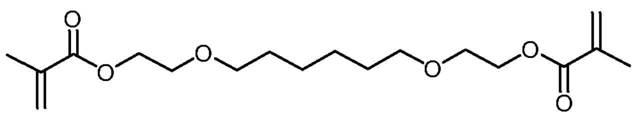

P-9

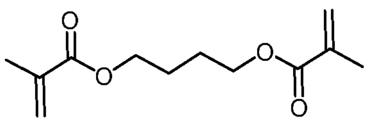

P-10

The polymerizable compounds of formulae I, P, CC and Palk are also suitable for polymerisation without an

initiator, which is associated with considerable advantages, such as, for example, lower material costs and, in particular, reduced contamination of the LC medium by possible residual amounts of the initiator or degradation products thereof. The polymerisation can thus also be carried out without addition of an initiator. The LC medium thus, in a preferred embodiment, comprises no polymerisation initiator.

The media according to the invention preferably comprise from 0.01 to 10%, particularly preferably from 0.05 to 7.5% and most preferably from 0.1 to 5% of the compounds of component C) comprising compounds of formula P according to the invention. The media preferably comprise one, two or three, more preferably one or two and most preferably one compound of the formula P according to the invention.

The LC media may also comprise further additives known to the person skilled in the art and described in the literature, such as, for example, polymerisation initiators, inhibitors, surface-active substances, light stabilisers, antioxidants, e.g. BHT, TEMPOL, microparticles, free-radical scavengers, nanoparticles, etc. For example, 0-15% of pleochroic dyes or chiral dopants or initiators like Irgacure651® or Irgacure907® can be added. Suitable stabilisers and dopants are mentioned below in Tables C and D. Preferred stabilisers that can be utilized in the LC media in accordance with the present invention are selected e.g. 2,6-ditert-butyl-4-(4-propylcyclohexyl)phenol, 2,6-ditert-butyl-4-(5-propyl-1,3-dioxan-2-yl)phenol, bis(2,2,6,6-tetramethyl-4-piperidyl) decanedioate, and/or 4-[3-[3-[7-[3,5-bis [3-[(2,2,6,6-tetramethyl-4-piperidyl)oxy]propoxy]phenyl]heptyl]-5-[3-[(2,2,6,6-tetramethyl-4-piperidyl)oxy]propoxy]phenoxy]propoxy]-2,2,6,6-tetramethyl-piperidine

By means of suitable additives, the liquid-crystalline phases of the present invention can be modified in such a way that they can be used in all types of liquid-crystal display element that have been disclosed hitherto. Additives of this type are known to the person skilled in the art and are described in detail in the literature (H. Kelker/ R. Hatz, Handbook of Liquid Crystals, Verlag Chemie, Weinheim, 1980). For example, pleochroic dyes can be added for the production of coloured guest-host systems or substances can be added in order to modify the dielectric anisotropy, the viscosity and/or the alignment of the nematic phases.

The media according to the invention are prepared in a manner conventional per se. In general, the components are dissolved in one another, preferably at elevated temperature.

Accordingly the present invention relates further to method for the production of an LC medium according to the present invention, comprising the step of mixing one or more compounds of formula I with a liquid-crystalline component B) comprising one or more mesogenic or liquid-crystalline compounds as described above.

The present invention further relates to a process for the fabrication of liquid crystal displays comprising at least the steps of:

- providing a first substrate which includes a pixel electrode and a common electrode for generating an electric field substantially parallel to a surface of the first substrate in the pixel region;
- providing a second substrate, the second substrate being disposed opposite to the first substrate;
- interposing a liquid crystal mixture between the first substrate and the second substrate, the liquid crystal mixture comprising one or more compounds of formula I, component B) and optionally component C);
- irradiating the liquid crystal mixture with linearly polarised light causing photoalignment of the liquid crystal;
- curing the polymerizable compounds of the liquid crystal mixture by irradiation with ultraviolet light or visible light having a wavelength of 450nm or below.

The present invention further relates to the use of the liquid crystal mixtures according to the invention for the fabrication of a liquid crystal display.

The present invention further relates to liquid crystal displays fabricated by the process described above.

In the following, the production process according to the present invention is described in greater detail.

The first substrate includes a pixel electrode and a common electrode for generating an electric field substantially parallel to a surface of the first substrate in the pixel region. Various kinds of displays having at least two electrodes on one substrate are known to the skilled person wherein the most significant difference is that either both the pixel electrode and the common electrode are structured, as it is typical for IPS displays, or only the pixel electrode is structured and the common electrode is unstructured, which is the case for FFS displays.

It has to be understood that the present invention refers to any kind of electrode configurations suitable for generating an electric field substantially parallel to a surface of the first substrate in the pixel region; mentioned above, i.e. IPS as well as FFS displays.

The process according to the present invention is independent of the kind of substrate or material of the surface which is in contact with the liquid crystal mixture according to the invention, during and after this process. Examples of materials used for the substrates or surfaces are organic polymers including polyimide, indium tin oxide (ITO), indium zinc oxide (IZO), silicon nitride ($SiN_x$) and silicon dioxide($SiO_2$). The process is especially suitable for the use in displays containing substrates that do not have a polyimide layer on one or more of the surfaces that are in contact with the liquid crystal.

In case one or more substrates contain a polyimide layer, the polyimide can be rubbed or not rubbed, preferably not rubbed.

Hence, the invention relates to a display produced by the process according to the invention in which the substrates contain a rubbed or unrubbed polyimide layer, preferably an unrubbed polyimide layer.

The invention further relates to a display produced by the process according to the invention in which none or only one of the top and bottom substrates contains a polyimide layer.

In one embodiment of the present invention the liquid crystal composition is injected between the first and second substrates or is filled into the cell by capillary force after combining the first and second substrates. In an alternative embodiment, the liquid crystal composition may be interposed between the first and second substrates by combining the second substrate to the first substrate after loading the liquid crystal composition on the first substrate. Preferably, the liquid crystal is dispensed dropwise onto a first substrate in a process known as "one drop filling" (ODF) process, as disclosed in for example JPS63-179323 and JPH10-239694, or using the Ink Jet Printing (IJP) method.

In a preferred embodiment, the process according to the invention contains a process step where the liquid crystal inside the display panel is allowed to rest for a period of time in order to evenly redistribute the liquid crystal medium inside the panel (herein referred to as "annealing").

However it is likewise preferred that the annealing step is combined with a previous step, such as edge sealant pre-curing. In which case a 'separate' annealing step may not be necessary at all.

For the production of the displays according to the present invention, the photoreactive mesogen of formula I is preferably allowed to redistribute in the panel. After filling and assembly, the display panel is annealed for a time between 1 min and 3h, preferably between 2 min and 1h and most preferably between 5 min and 30 min. The annealing is preferably performed at room temperature.

In an alternative embodiment, the annealing is performed at elevated temperature, preferably at above 20°C and below 140°C, more preferably above 40°C and below 100°C and most preferably above 50°C and below 80°C.

Preferably the annealing is performed at elevated temperature, preferably 30°C above the clearing point of the utilized host mixture, more preferably 20°C above the clearing point of the utilized host mixture, and most preferably 5 to 15°C above the clearing point of the utilized host mixture.

In a preferred embodiment, one or more of the process steps of filling the display, annealing, photoalignment and curing of the polymerizable compound is performed at a temperature above the clearing point of the liquid crystal host mixture.

During the photoalignment of the liquid crystal inside the liquid crystal panel, anisotropy is induced by exposing the display or the liquid crystal layer to linearly polarised light.

In a preferred embodiment of the present invention the photoreactive component A) comprising one or more compounds of formula **I, is** photoaligned in a first step using linearly polarised light and in a second step further cured using linearly polarized or unpolarised UV light. In the second step the optional component C) is also further cured.

In another preferred embodiment, the linearly polarised light applied according to the inventive process is ultraviolet light which enables simultaneous photoalignment and photocuring of the photoreactive component A) comprising one or more compounds of formula **I,** and, if present, photocuring of the polymerizable component C).

Photoalignment of the photoreactive compounds of formula I and curing of the polymerizable groups of compounds of formula I and the curing of the optional polymerizable compounds of formula P can be performed simultaneously or stepwise. In case the process is split into different steps, the individual steps can be performed at the same temperature or at different temperatures.

After the photoalignment and curing step(s) a so-called "post-curing" step can optionally be performed by irradiation with UV-light and/or visible light (both either linearly or unpolarised) at reduced temperature in order to remove unreacted polymerizable compounds. The post-curing is preferably performed at above 0°C and below the clearing point of the utilized LC mixture, preferably 20°C and below 60°C°C, and most preferably above 20°C and below 40°C.

The polymerizable compounds are optionally polymerised or crosslinked (if a polymerizable compound contains two or more polymerizable groups) with the application of an electrical field. The polymerisation can be carried out in one or more steps.

Suitable and preferred polymerisation methods for component C) are, for example, thermal or photopolymerization, preferably photopolymerization, in particular UV photopolymerization. One or more initiators can optionally also be added here. Suitable conditions for the polymerisation and suitable types and amounts of initiators are known to the person skilled in the art and are described in the literature. Suitable for free-radical polymerisation are, for example, the commercially available photoinitiators Irgacure651®, Irgacure184®, Irgacure907®, Irgacure369® or Darocure1173® (BASF SE). If an initiator is employed, its proportion is preferably 0.001 to 5% by weight, particularly preferably 0.001 to 1% by weight.

The present invention also relates to electro-optical liquid-crystal display elements containing a liquid-crystalline medium according to the invention, which is preferably homogeneously aligned. In a preferred embodiment the liquid crystal display is of the IPS or FFS mode.

Further combinations of the embodiments and variants of the invention in accordance with the description arise from the claims.

The invention is explained in greater detail below with reference to working examples, but without intending to be restricted thereby. The person skilled in the art will be able to glean from the examples working details that are not given in detail in the general description, generalise them in accordance with general expert knowledge and apply them to a specific problem.

Besides the usual and well-known abbreviations, the following abbreviations are used:

C: crystalline phase; N: nematic phase; Sm: smectic phase; I: isotropic phase. The numbers between these symbols show the transition temperatures of the substance concerned.

Temperature data are in °C, unless indicated otherwise.

Physical, physicochemical or electro-optical parameters are determined by generally known methods, as described, inter alia, in the brochure "Merck Liquid Crystals - Licristal® - Physical Properties of Liquid Crystals - Description of the Measurement Methods", 1998, Merck KGaA, Darmstadt.

Above and below, $\Delta n$ denotes the optical anisotropy (589 nm, 20°C) and $\Delta\varepsilon$ denotes the dielectric anisotropy (1 kHz, 20°C). The dielectric anisotropy $\Delta\varepsilon$ is determined at 20°C and 1 kHz. The optical anisotropy $\Delta n$ is determined at 20°C and a wavelength of 589.3 nm.

The $\Delta\varepsilon$ and $\Delta n$ values and the rotational viscosity ($\gamma_1$) of the compounds according to the invention are obtained by linear extrapolation from liquid-crystalline mixtures consisting of 5 to 10% of the respective compound according to the invention and 90-95% of the commercially available liquid-crystal mixture ZLI-2857 (for $\Delta\varepsilon$) or ZLI-4792 (for $\Delta n$, $\gamma_1$) (mixtures, Merck KGaA, Darmstadt).

The compounds used in the present invention are prepared by methods known per se, as described in the literature (for example in the standard works, such as Houben-Weyl, Methoden der organischen Chemie [Methods of Organic Chemistry], Georg-Thieme-Verlag, Stuttgart), to be precise under reaction conditions which are known and suitable for the said reactions. Use can also be made here of variants known per se, which are not mentioned here in greater detail.

In the present invention and especially in the following examples, the structures of the mesogenic compounds are indicated by means of abbreviations, also called acronyms. In these acronyms, the chemical formulae are abbreviated as follows using Tables A to C below. All groups $C_nH_{2n+1}$, $C_mH_{2m+1}$ and $C_lH_{2l+1}$ or $C_nH_{2n-1}$, $C_mH_{2m-1}$ and $C_lH_{2l-1}$ denote straight-chain alkyl or alkenyl, preferably 1E-alkenyl, each having n, m and l C atoms respectively. Table A lists the codes used for the ring elements of the core structures of the compounds, while Table B shows the linking groups. Table C gives the meanings of the codes for the left-hand or right-hand end groups. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| C | 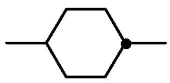 | | |
| P | 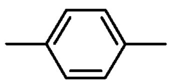 | | |
| D | 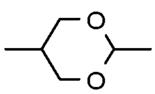 | DI | 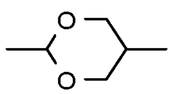 |
| A | 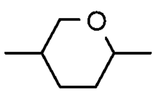 | AI | 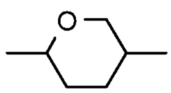 |
| G | 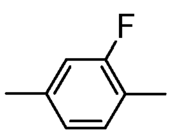 | GI | 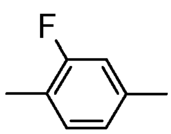 |

(continued)

| | | | |
|---|---|---|---|
| **U** | 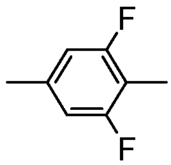 | **UI** | 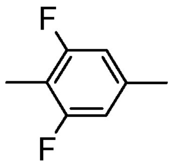 |
| **Y** | 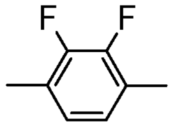 | | |
| **M** | 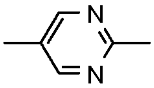 | **MI** | 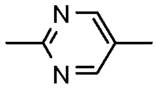 |
| **N** | 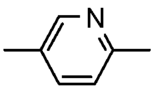 | **NI** | 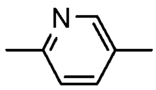 |
| **Np** | 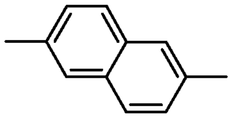 | **dH** | 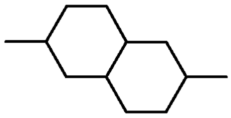 |
| **N3f** | 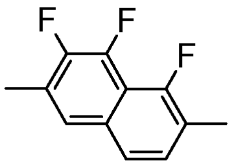 | **N3fI** | 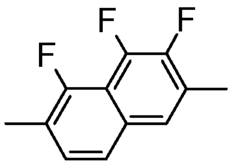 |
| **tH** | 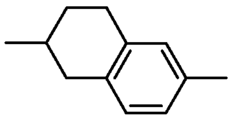 | **tHI** | 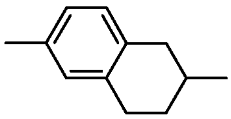 |
| **tH2f** | 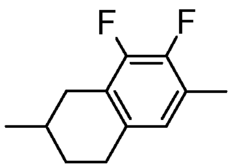 | **tH2fI** | 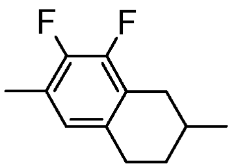 |
| **K** | 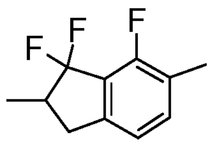 | **KI** | 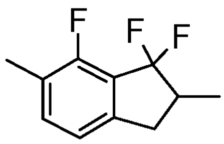 |
| **L** | 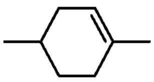 | **LI** | 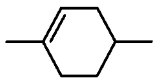 |
| **F** | 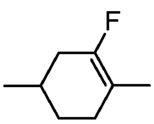 | **FI** | 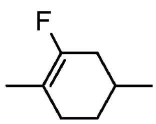 |
| **Nf** | 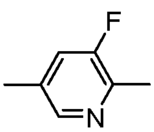 | **NfI** | 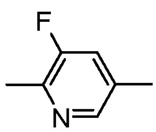 |

**Table B: Linking groups**

| | | | |
|---|---|---|---|
| **E** | $-CH_2CH_2-$ | **Z** | -CO-O- |

(continued)

| | | | |
|---|---|---|---|
| **V** | -CH=CH- | **ZI** | -O-CO- |
| **X** | -CF=CH- | **O** | $-CH_2-O-$ |
| **XI** | -CH=CF- | **OI** | $-O-CH_2-$ |
| **B** | -CF=CF- | **Q** | $-CF_2-O-$ |
| **T** | -C≡C- | **QI** | $-O-CF_2-$ |
| **W** | $-CF_2CF_2-$ | **T** | -C≡C- |

**Table C: End groups**

| **Left-hand side** | | **Right-hand side** | |
|---|---|---|---|
| | | **Use alone** | |
| **-n-** | $C_nH_{2n+1}-$ | **-n** | $--C_nH_{2n+1}$ |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH2_n-CH=CH_2$ |
| **-Vn-** | $CH_2=CH-$ $CnH_{2n+1}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O$ - | **-OM** | $-OCFH_2$ |
| **-DO-** | $CF_2HO$ - | **-OD** | $-OCF_2H$ |
| **-TO-** | $CF_3O$ - | **-OT** | $-OCF_3$ |
| **-FXO-** | $CF_2=CH-O-$ | **-OXF** | $-O-CH=CF_2$ |
| **-A-** | H-C≡C- | **-A** | -C≡C-H |
| **-nA-** | $C_nH_{2n+1}-C≡C-$ | **-An** | $-C≡C-C_nH_{2n+1}$ |
| **-NA-** | N≡C-C≡C- | **-AN** | -C≡C-C≡N |
| | **Use together with one another and with others** | | |
| **-...A...-** | -C≡- | **-...A...** | -C≡- |
| **-...V...-** | CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **...K...** | -CO- | **-...K...** | -CO- |
| **-...W...-** | -CF=CF- | **-...W...** | -CF=CF- |

wherein n and m each denote integers, and the three dots "..." are place-holders for other abbreviations from this table.

The following table shows illustrative structures together with their respective abbreviations. These are shown in order to illustrate the meaning of the rules for the abbreviations. They furthermore represent compounds which are preferably used.

**Table D: Illustrative structures**

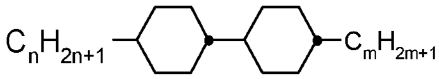

**CC-n-m**

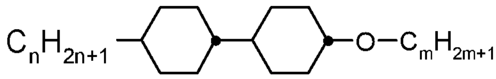

**CC-n-Om**

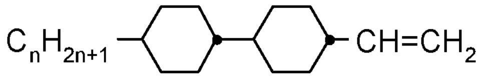

**CC-n-V**

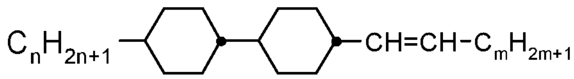

**CC-n-Vm**

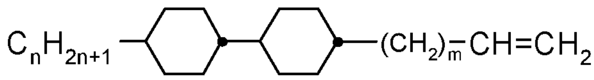

**CC-n-mV**

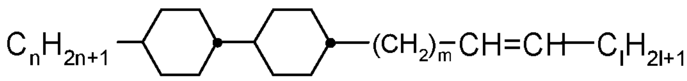

**CC-n-mVl**

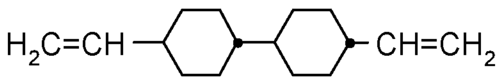

**CC-V-V**

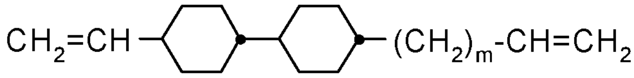

**CC-V-mV**

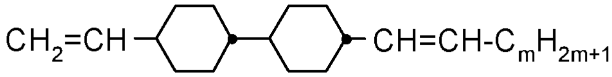

**CC-V-Vm**

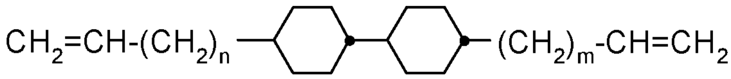

**CC-Vn-mV**

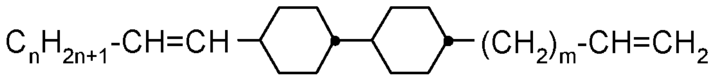

**CC-nV-mV**

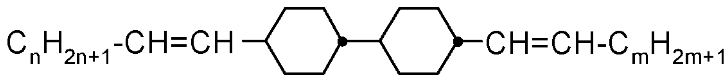

**CC-nV-Vm**

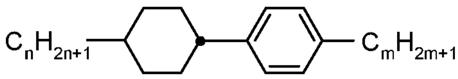

**CP-n-m**

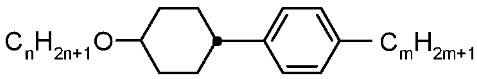

**CP-nO-m**

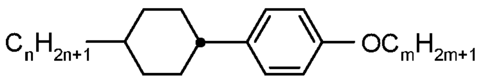

**CP-n-Om**

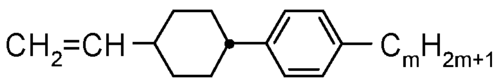

**CP-V-m**

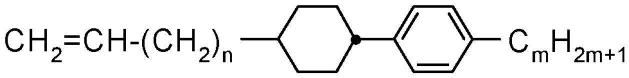

**CP-Vn-m**

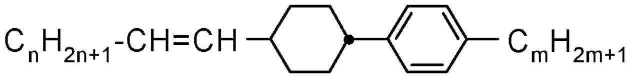

**CP-nV-m**

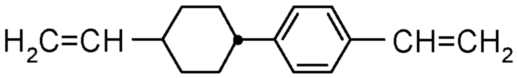

**CP-V-V**

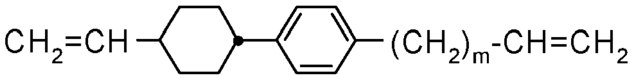

**CP-V-mV**

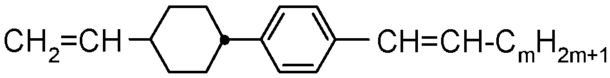

**CP-V-Vm**

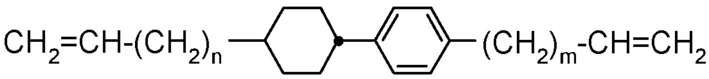

**CP-Vn-mV**

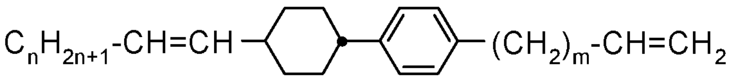

**CP-nV-mV**

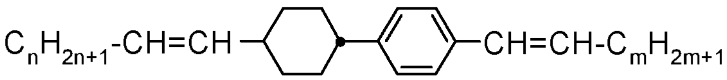

**CP-nV-Vm**

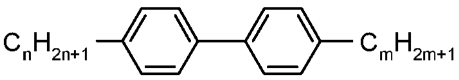

**PP-n-m**

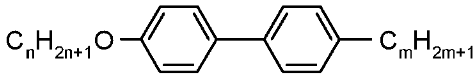

**PP-nO-m**

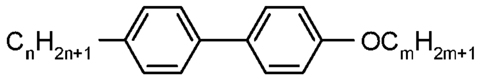

**PP-n-Om**

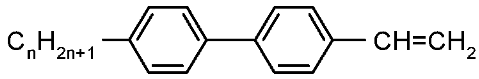

**PP-n-V**

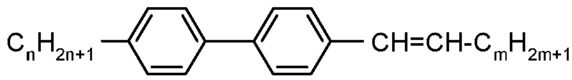

**PP-n-Vm**

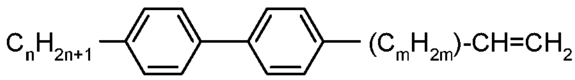

**PP-n-mV**

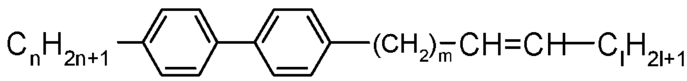

**PP-n-mVl**

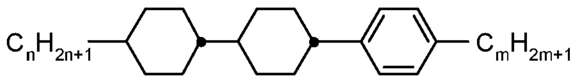

**CCP-n-m**

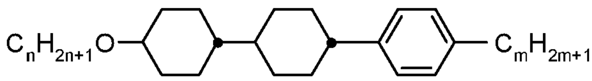

**CCP-nO-m**

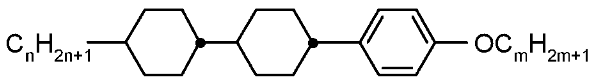

**CCP-n-Om**

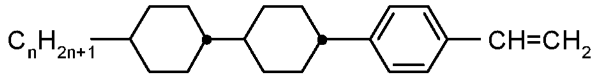

**CCP-n-V**

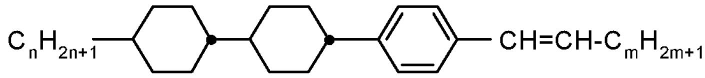

**CCP-n-Vm**

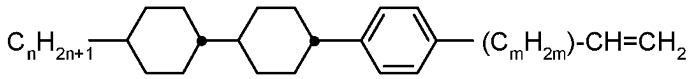

**CCP-n-mV**

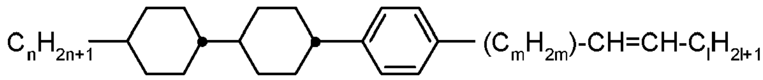

**CCP-n-mVl**

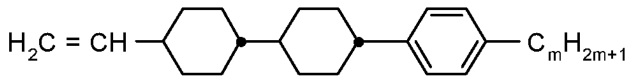

**CCP-V-m**

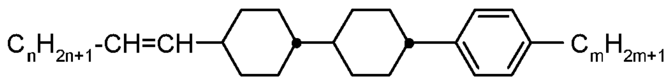

**CCP-nV-m**

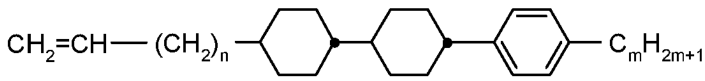

**CCP-Vn-m**

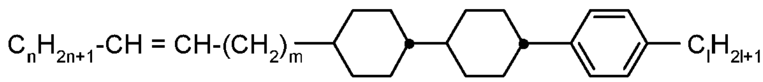

**CCP-nVm-l**

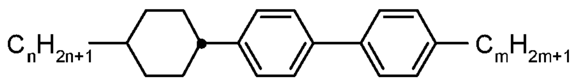

**CPP-n-m**

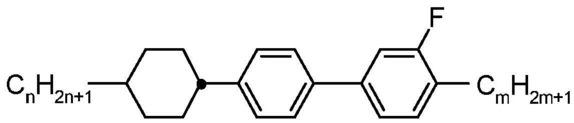

**CPG-n-m**

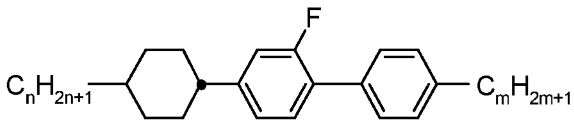

**CGP-n-m**

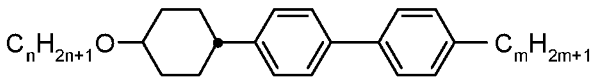

**CPP-nO-m**

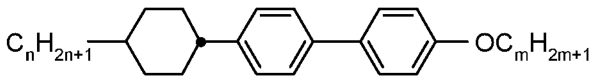

**CPP-n-Om**

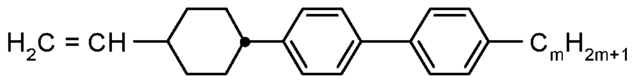

**CPP-V-m**

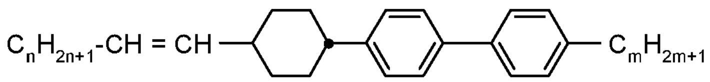

**CPP-nV-m**

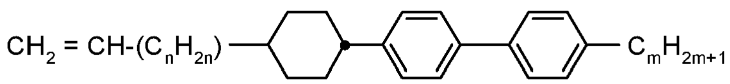

**CPP-Vn-m**

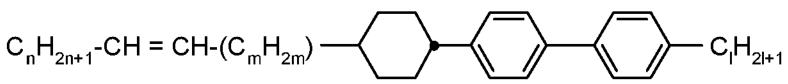

**CPP-nVm-l**

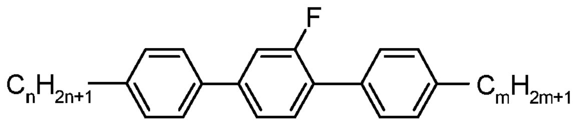

**PGP-n-m**

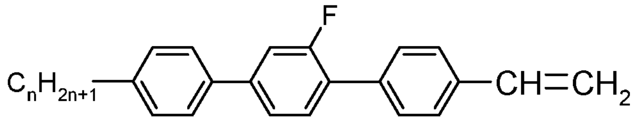

**PGP-n-V**

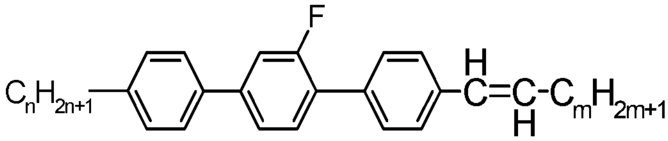

**PGP-n-Vm**

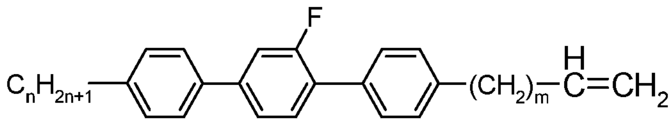

**PGP-n-mV**

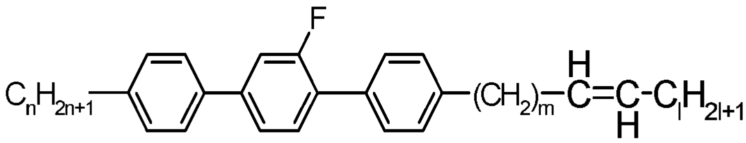

**PGP-n-mVl**

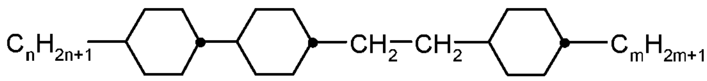

**CCEC-n-m**

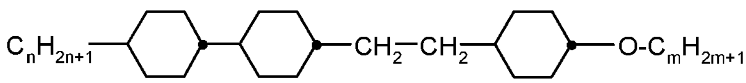

**CCEC-n-Om**

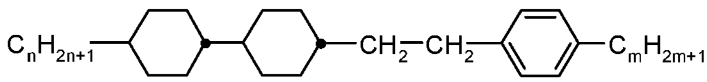

**CCEP-n-m**

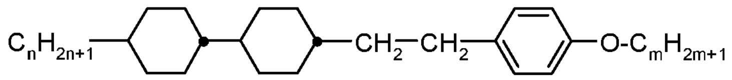

**CCEP-n-Om**

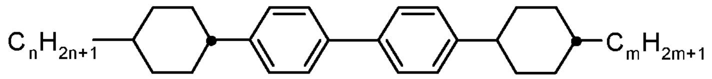

**CPPC-n-m**

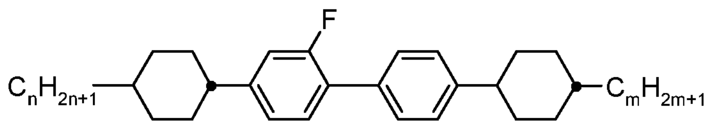

**CGPC-n-m**

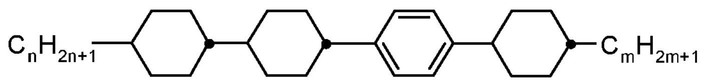

**CCPC-n-m**

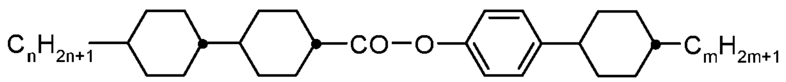

**CCZPC-n-m**

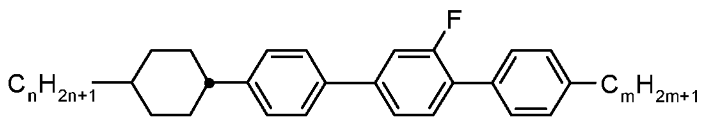

**CPGP-n-m**

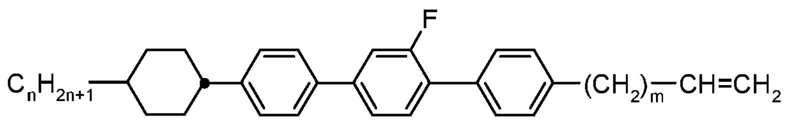

**CPGP-n-mV**

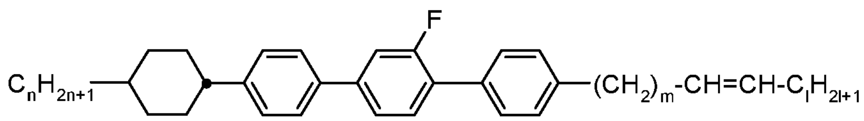

**CPGP-n-mVI**

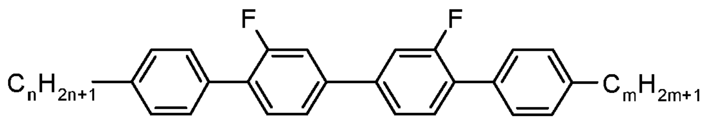

**PGIGP-n-m**

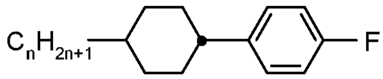

**CP-n-F**

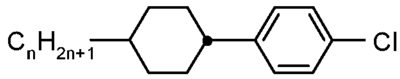

**CP-n-CL**

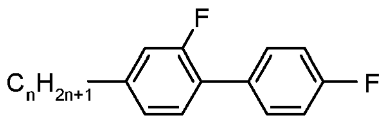

**GP-n-F**

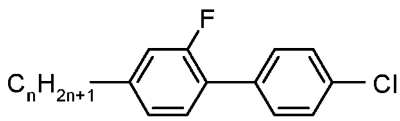

**GP-n-CL**

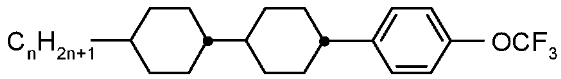

**CCP-n-OT**

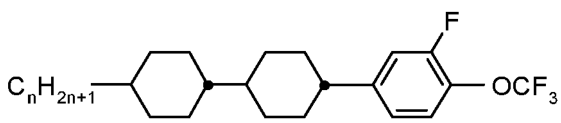

**CCG-n-OT**

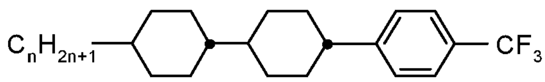

**CCP-n-T**

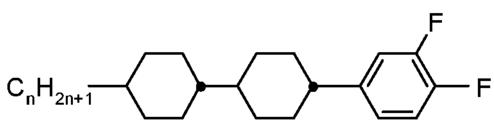

**CCG-n-F**

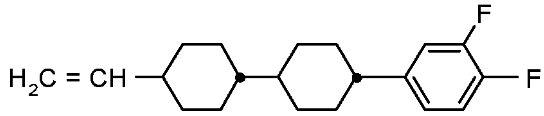

**CCG-V-F**

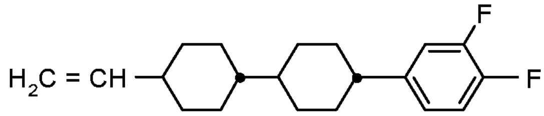

**CCG-V-F**

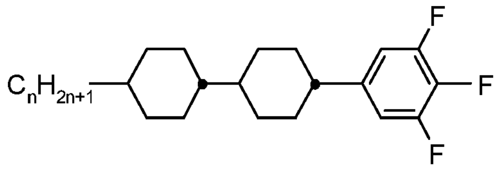

**CCU-n-F**

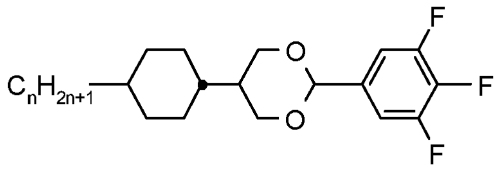

**CDU-n-F**

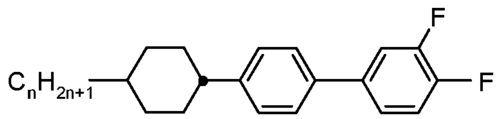

**CPG-n-F**

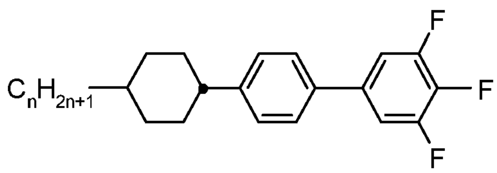

**CPU-n-F**

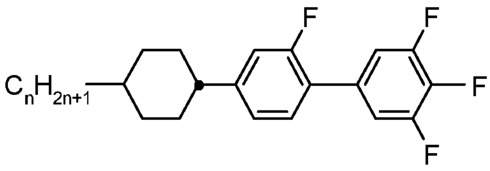

**CGU-n-F**

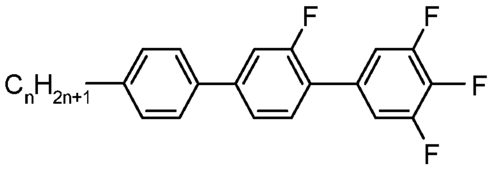

**PGU-n-F**

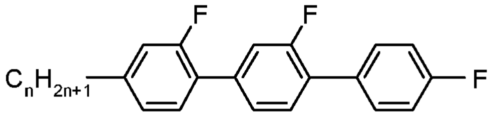

**GGP-n-F**

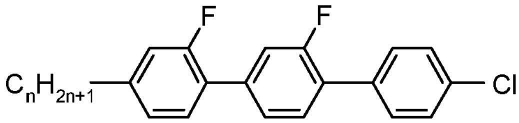

**GGP-n-CL**

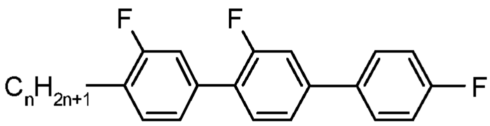

**PGIGI-n-F**

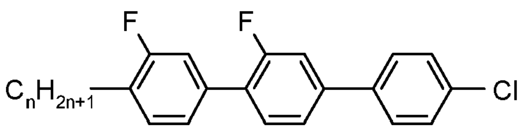

**PGIGI-n-CL**

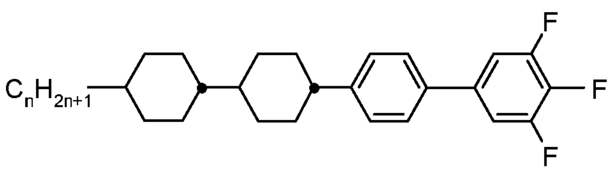

**CCPU-n-F**

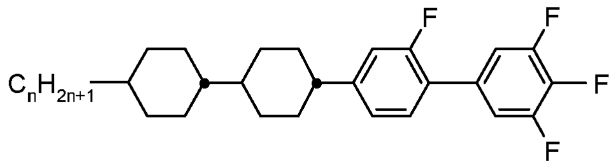

CCGU-n-F

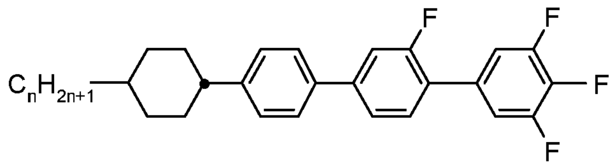

CPGU-n-F

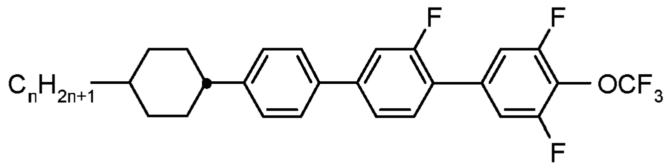

CPGU-n-OT

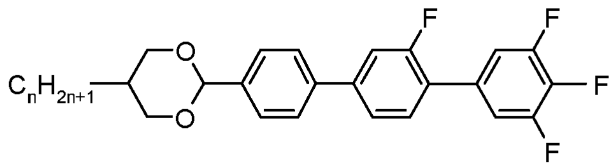

DPGU-n-F

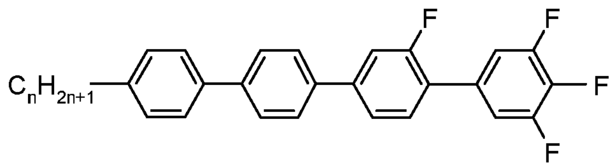

PPGU-n-F

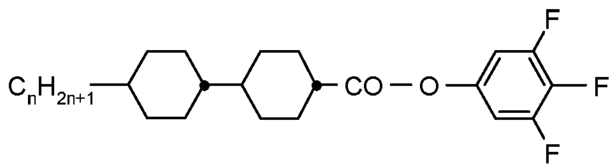

CCZU-n-F

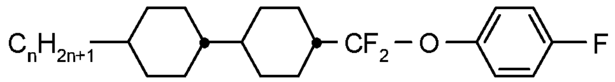

**CCQP-n-F**

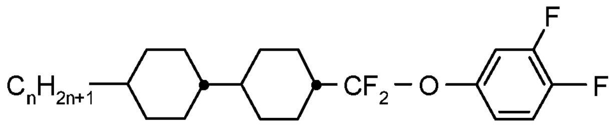

**CCQG-n-F**

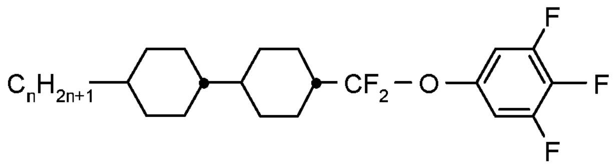

**CCQU-n-F**

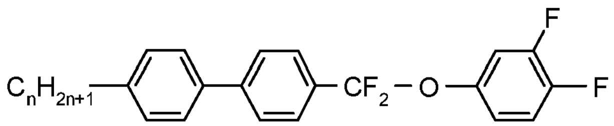

**PPQG-n-F**

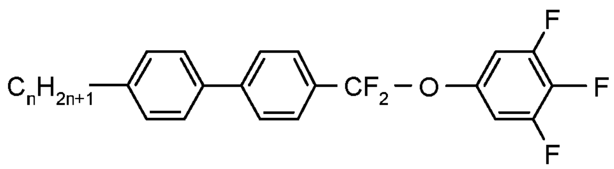

**PPQU-n-F**

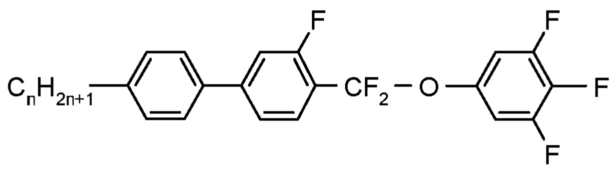

**PGQU-n-F**

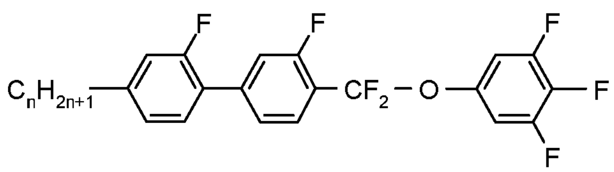

**GGQU-n-F**

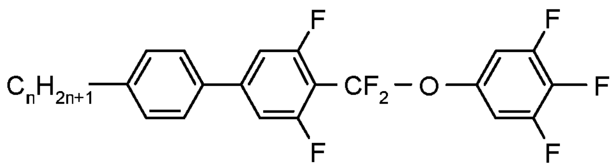

**PUQU-n-F**

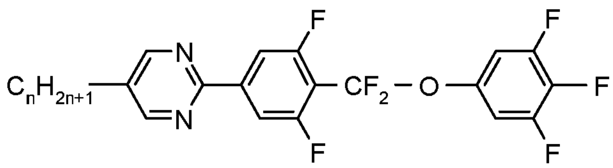

**MUQU-n-F**

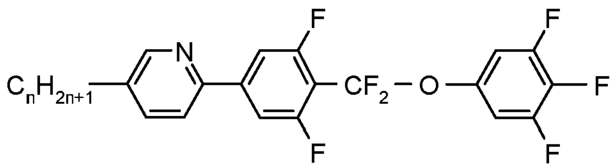

**NUQU-n-F**

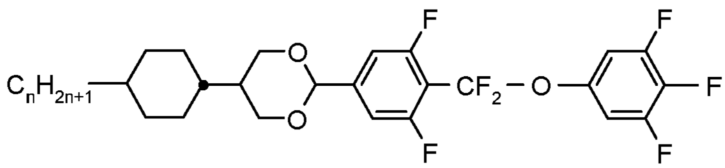

**CDUQU-n-F**

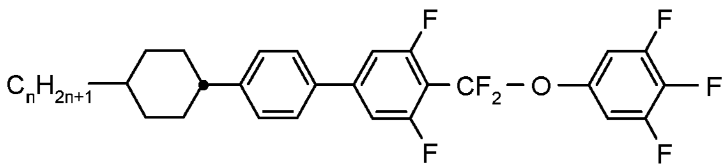

**CPUQU-n-F**

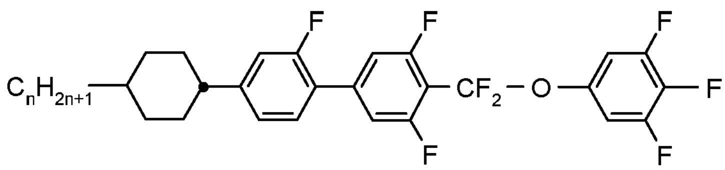

**CGUQU-n-F**

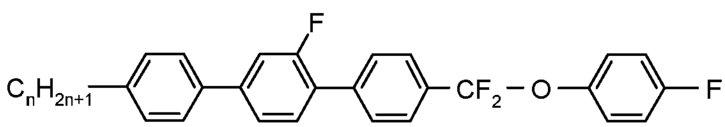

**PGPQP-n-F**

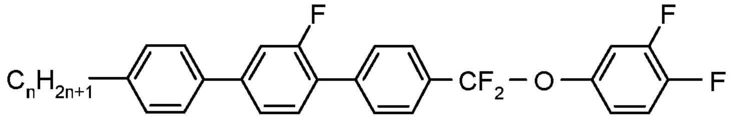

**PGPQG-n-F**

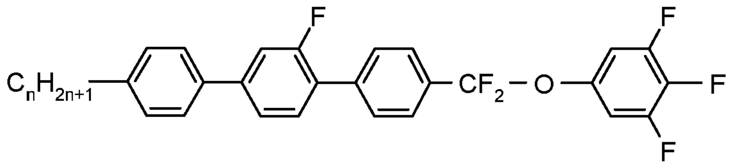

**PGPQU-n-F**

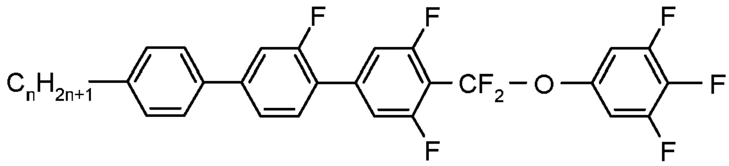

**PGUQU-n-F**

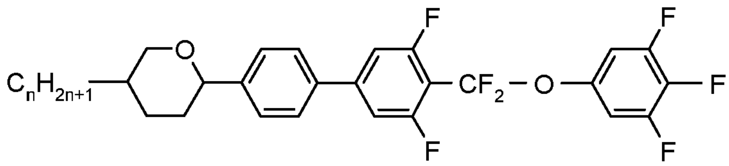

**APUQU-n-F**

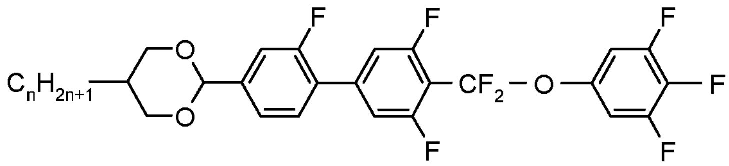

**DGUQU-n-F**

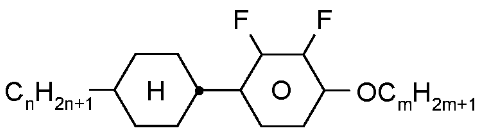

**CY-n-Om**

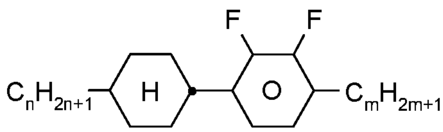

**CY-n-m**

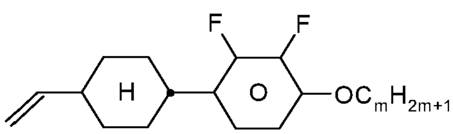

**CY-V-Om**

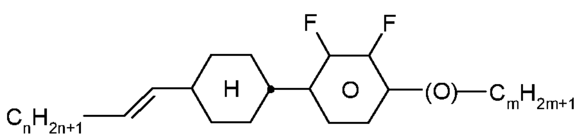

**CY-nV-(O)m**

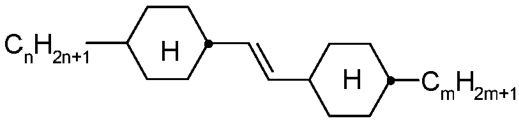

**CVC-n-m**

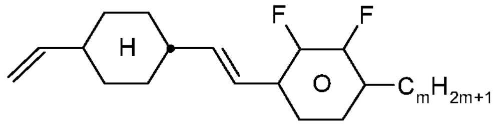

**CVY-V-m**

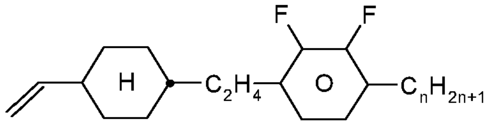

**CEY-V-m**

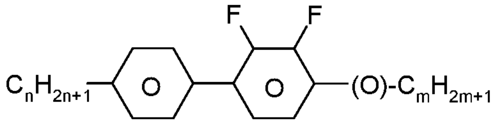

**PY-n-(O)m**

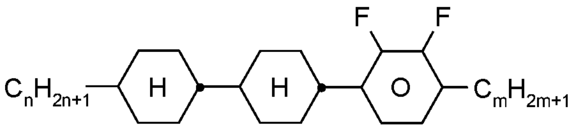

**CCY-n-m**

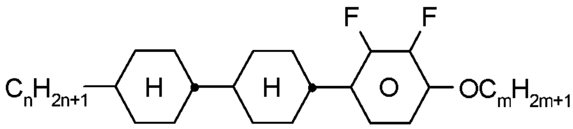

**CCY-n-Om**

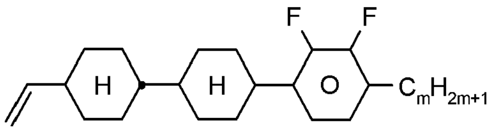

**CCY-V-m**

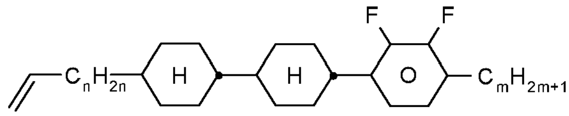

**CCY-Vn-m**

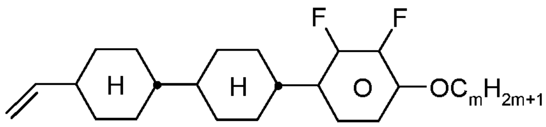

**CCY-V-Om**

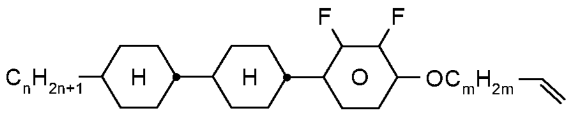

**CCY-n-OmV**

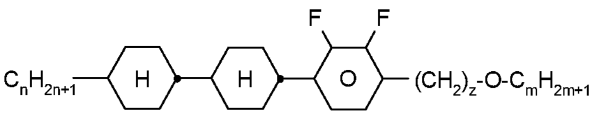

**CCY-n-zOm**

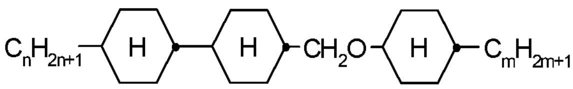

**CCOC-n-m**

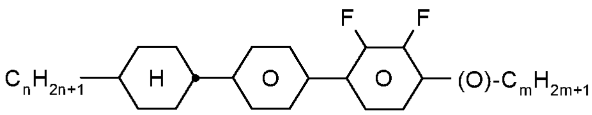

**CPY-n-(O)m**

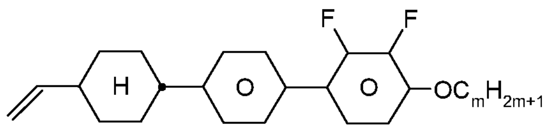

**CPY-V-Om**

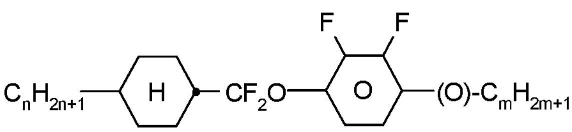

**CQY-n-(O)m**

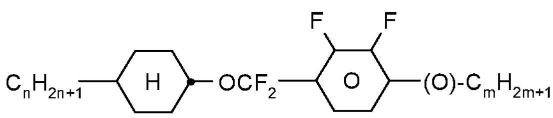

**CQIY-n-(O)m**

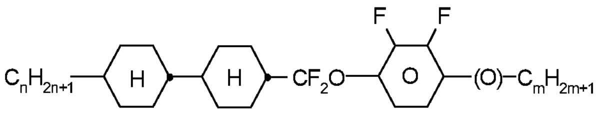

**CCQY-n-(O)m**

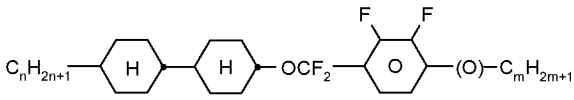

**CCQIY-n-(O)m**

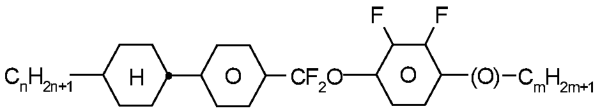

**CPQY-n-(O)m**

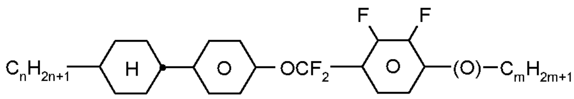

**CPQIY-n-Om**

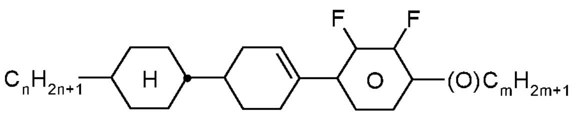

**CLY-n-(O)m**

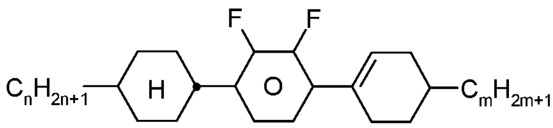

**CYLI-n-m**

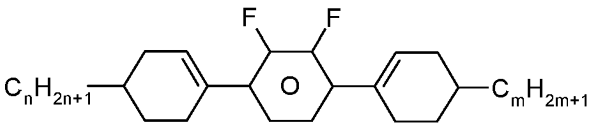

**LYLI-n-m**

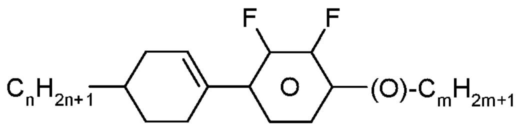

**LY-n-(O)m**

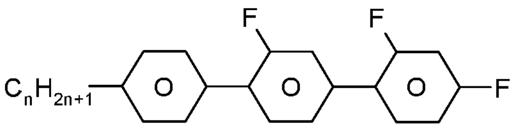

**PGIGI-n-F**

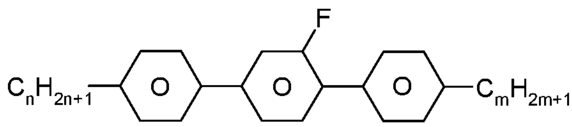

**PGP-n-m**

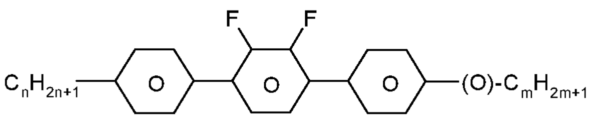

**PYP-n-(O)m**

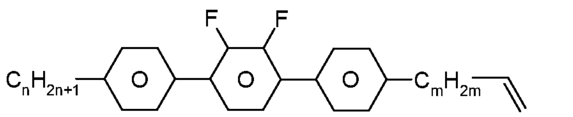

**PYP-n-mV**

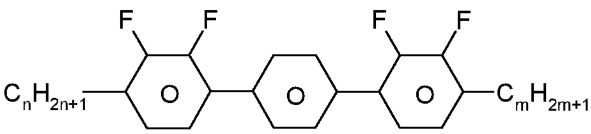

**YPY-n-m**

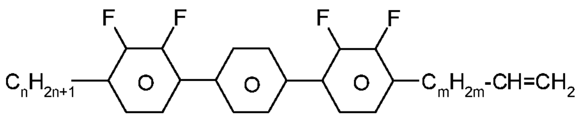

**YPY-n-mV**

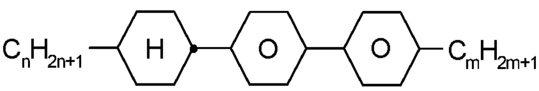

**BCH-nm**

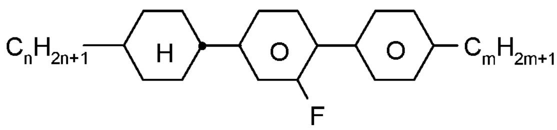

**BCH-nmF**

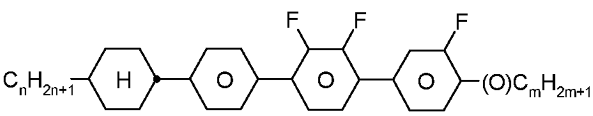

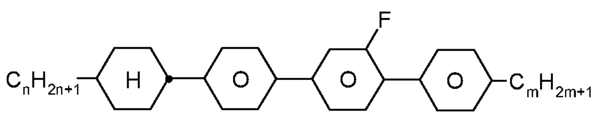

CPYP-n-(O)m

CPGP-n-m

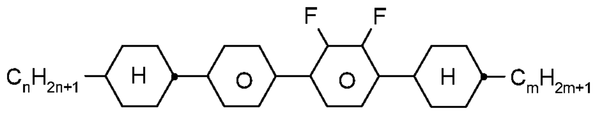

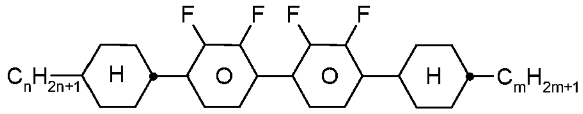

CPYC-n-m

CYYC-n-m

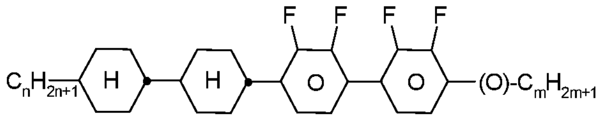

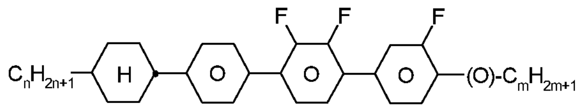

CCYY-n-m

CPYG-n-(O)m

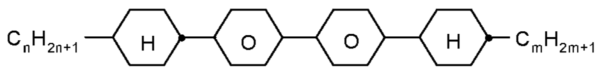

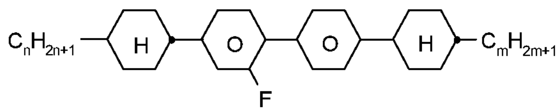

CBC-nm

CBC-nmF

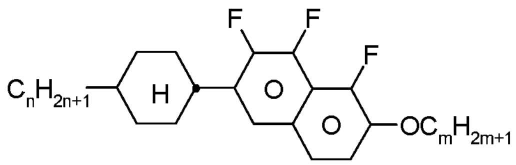

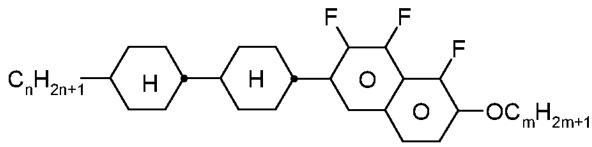

CNap-n-Om

CCNap-n-Om

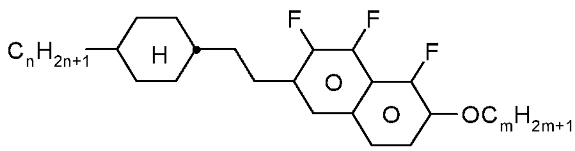

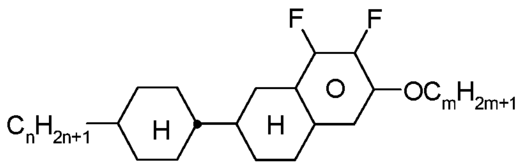

CENap-n-Om

CTNap-n-Om

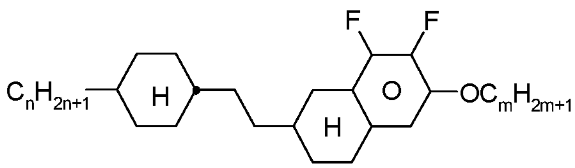

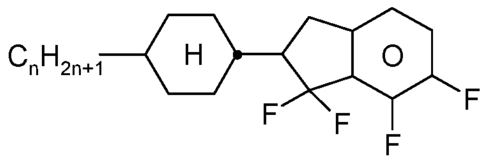

CETNap-n-Om

CK-n-F

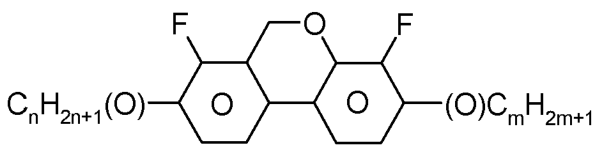

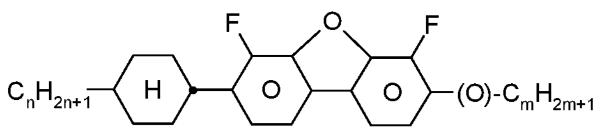

DFDBC-n(O)-(O)m

C-DFDBF-n-(O)m

wherein n, m and l preferably, independently of one another, denote 1 to 7.

The following table, Table E, shows illustrative compounds which can be used as additional stabilisers in the mesogenic media according to the present invention.

__Table E__

Table E shows possible stabilisers which can be added to the LC media according to the invention.

(continued)

(n here denotes an integer from 1 to 12, preferably 1, 2, 3, 4, 5, 6, 7 or 8, terminal methyl groups are not shown).

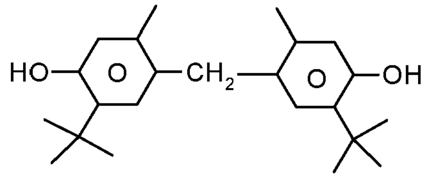

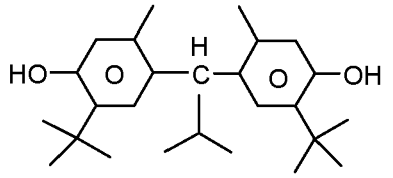

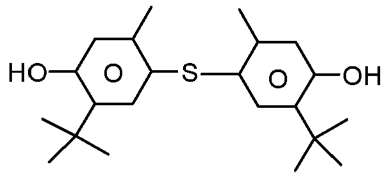

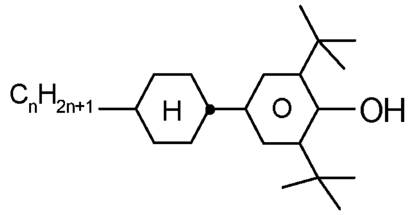

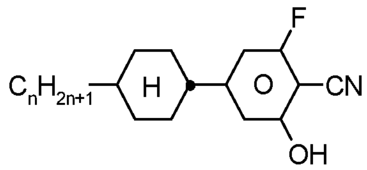

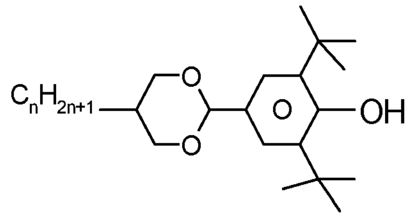

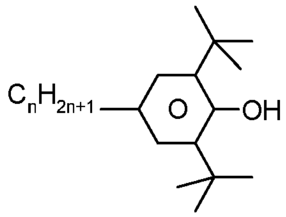

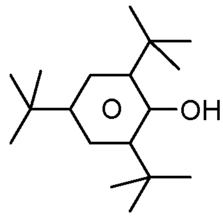

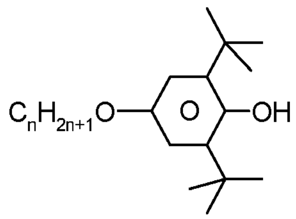

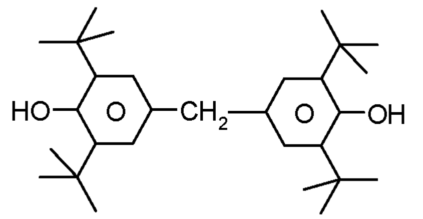

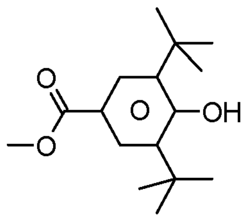

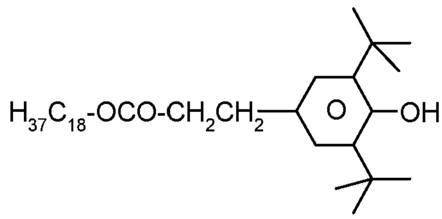

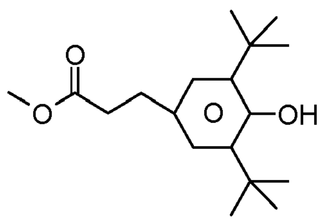

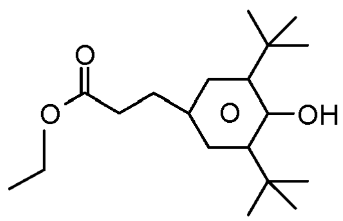

(continued)

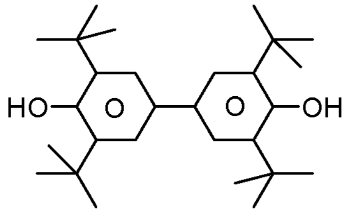

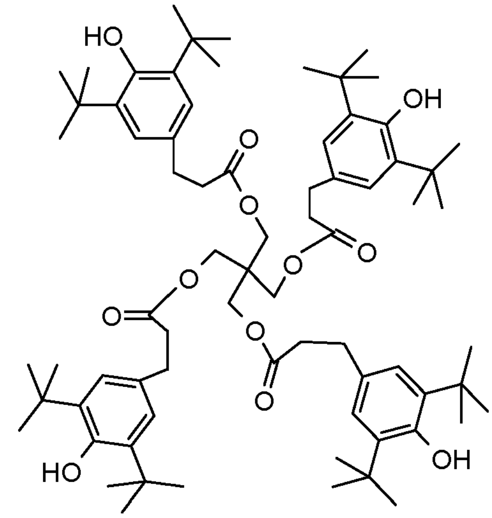

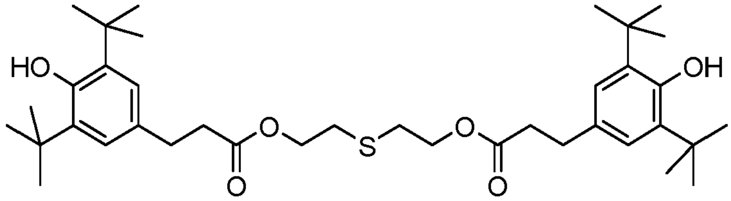

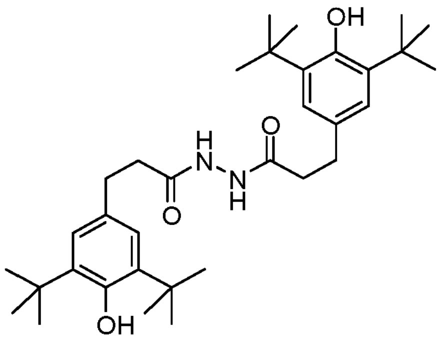

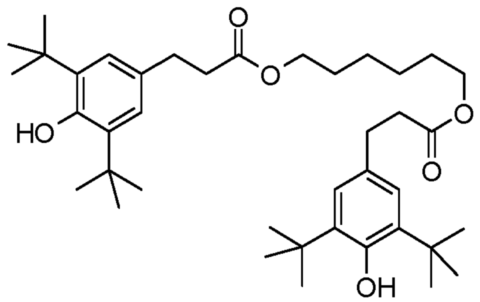

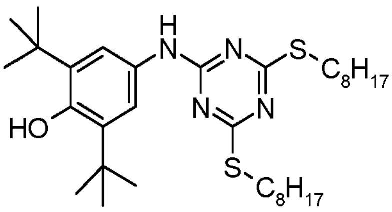

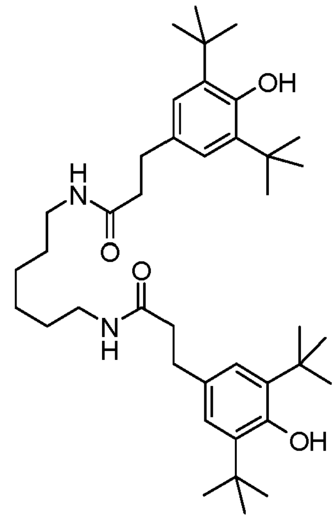

(continued)

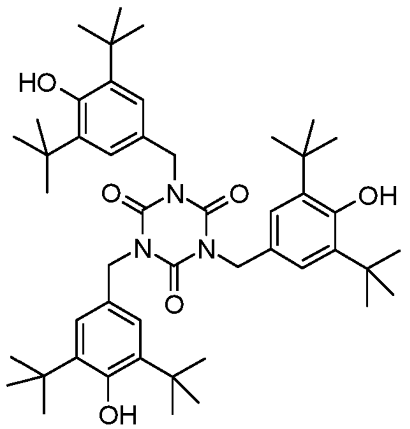

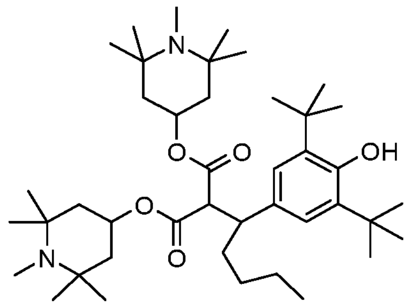

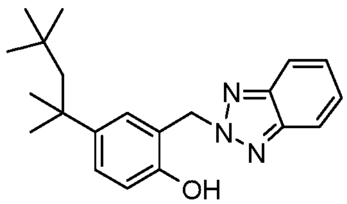

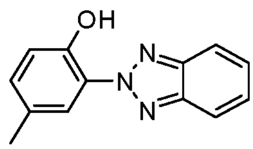

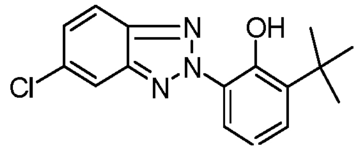

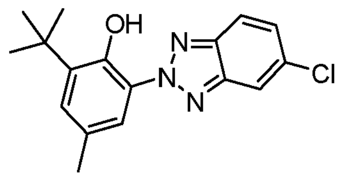

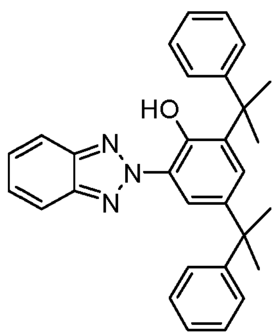

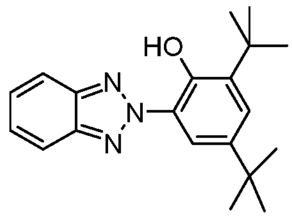

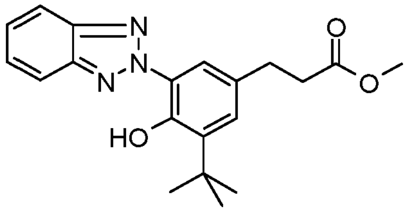

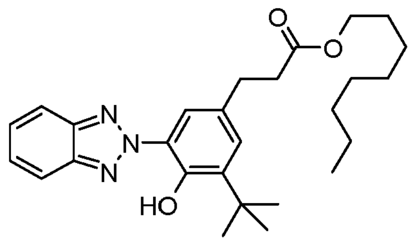

(continued)

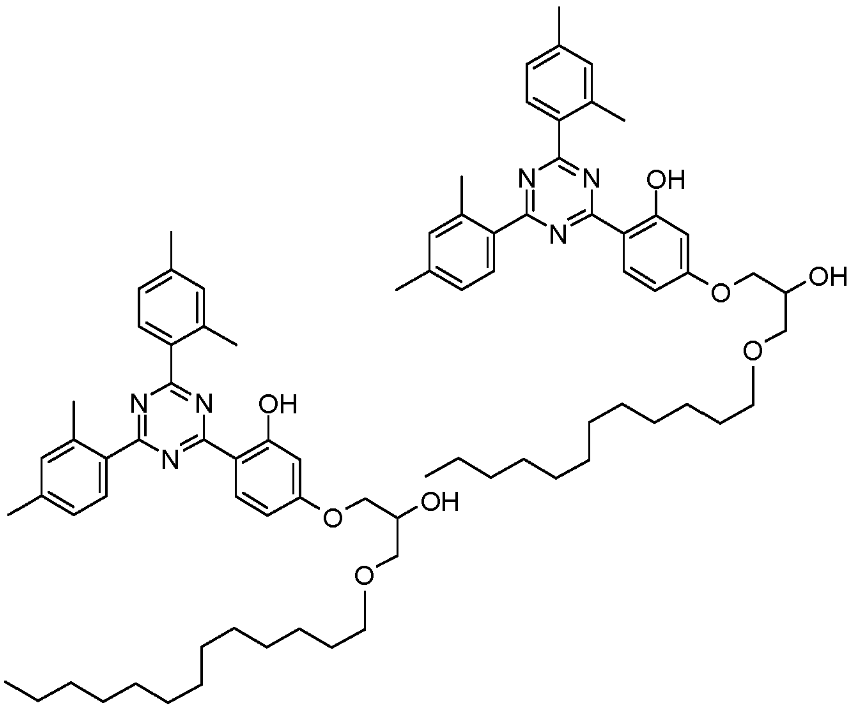

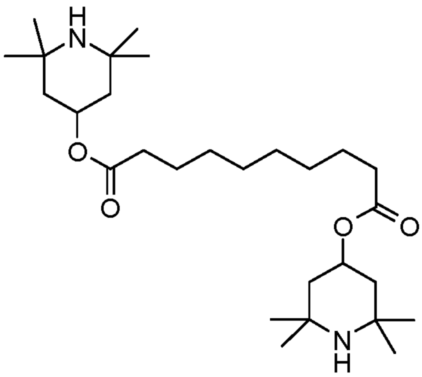

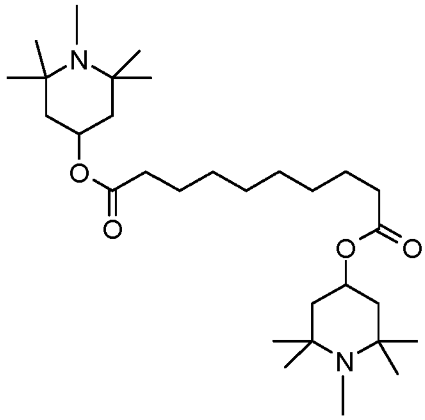

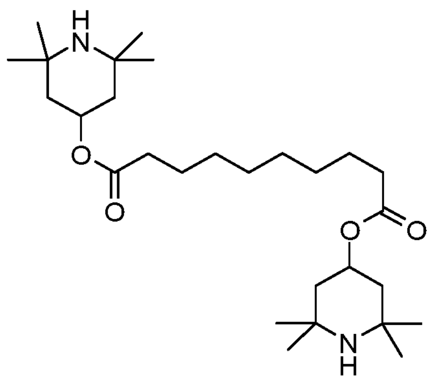

(continued)

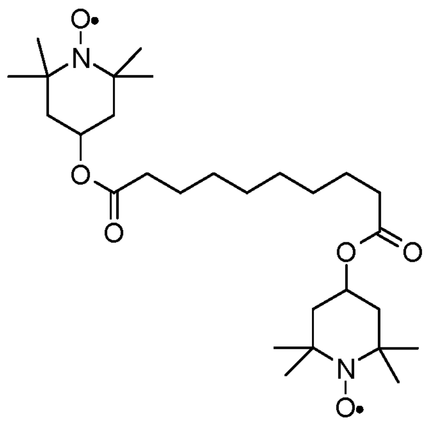

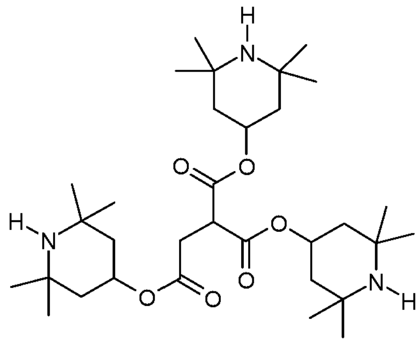

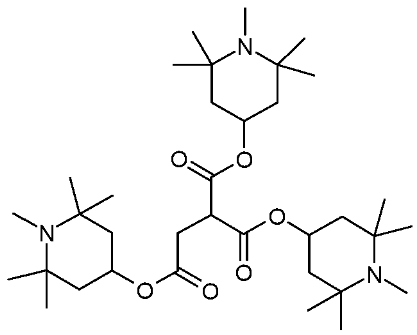

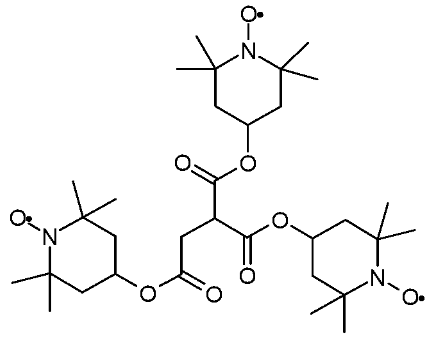

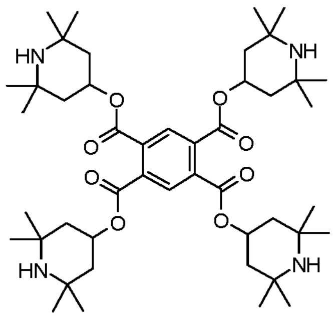

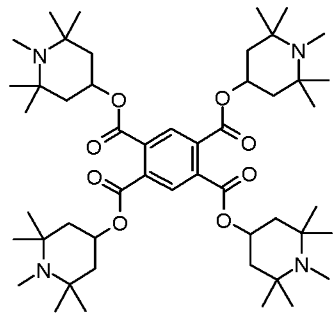

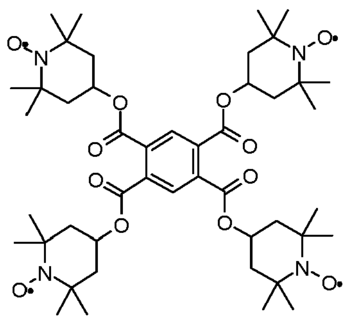

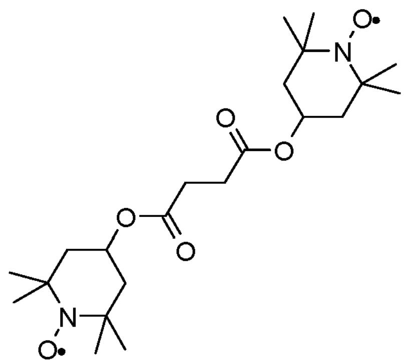

(continued)

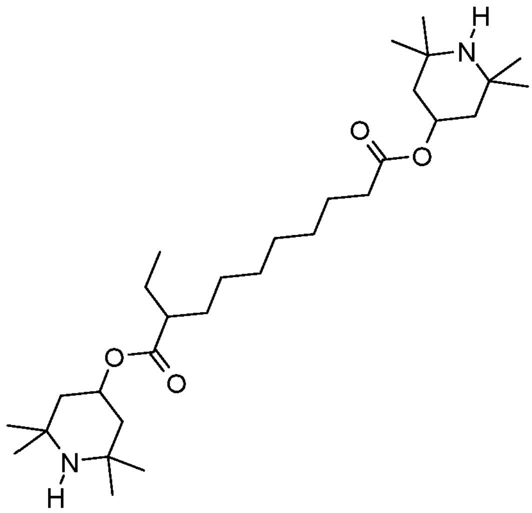 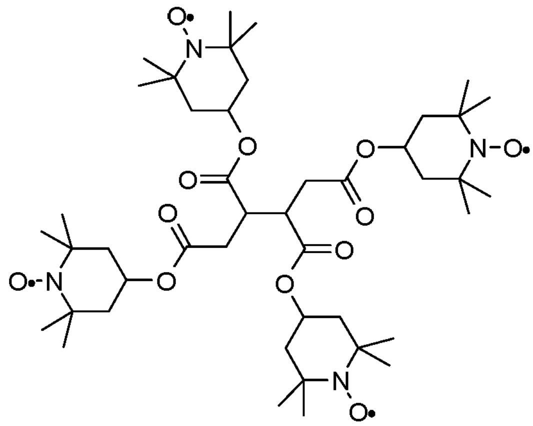

The LC media preferably comprise 0 to 10% by weight, in particular 1 ppm to 5% by weight, particularly preferably 1 ppm to 1% by weight, of stabilisers.

Table F below shows illustrative compounds which can preferably be used as chiral dopants in the mesogenic media according to the present invention.

**Table F**

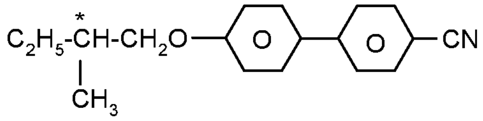

**C 15**

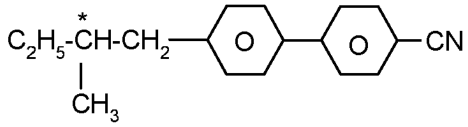

**CB 15**

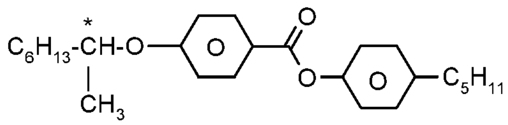

**CM 21**

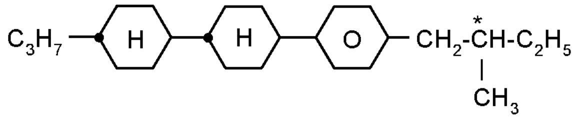

**CM 44**

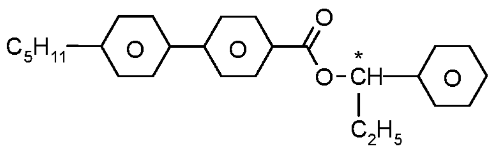

**CM 45**

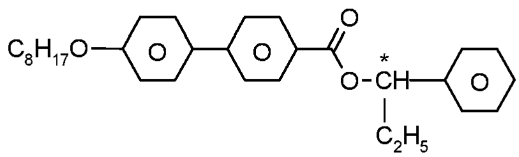

**CM 47**

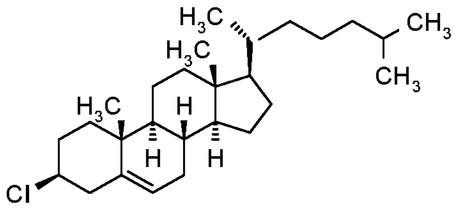

**CC**

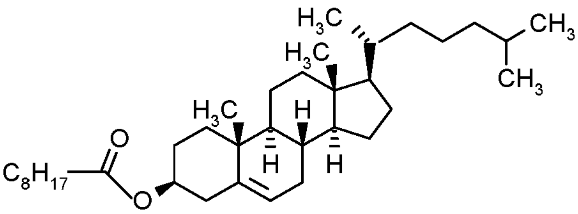

**CN**

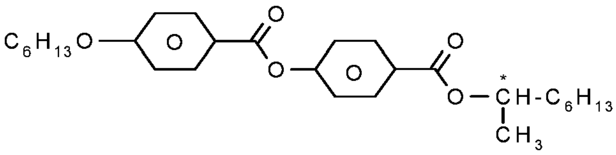

**R/S-811**

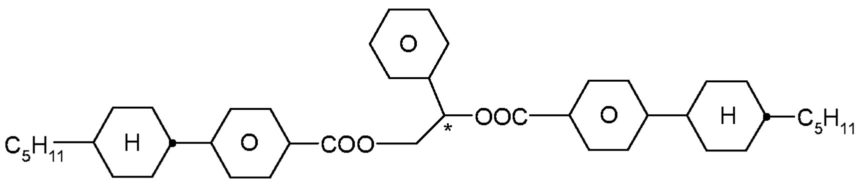

**R/S-1011**

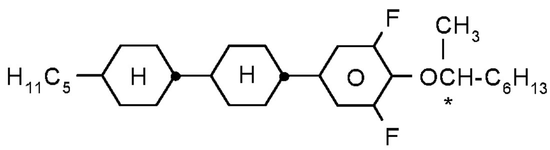

**R/S-2011**

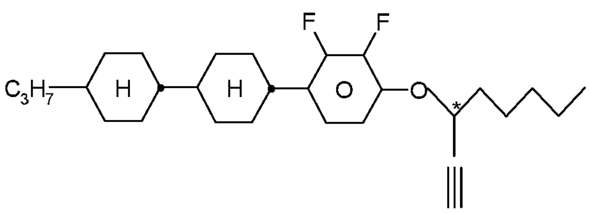

**R/S-3011**

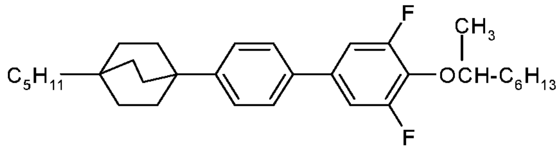

**R/S-4011**

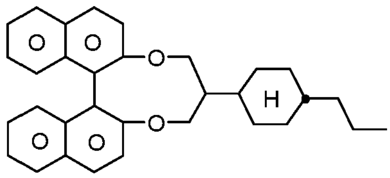

**R/S-5011**

In a preferred embodiment of the present invention, the mesogenic media comprise one or more compounds selected from the group of the compounds from Table F.

The mesogenic media according to the present application preferably comprise two or more, preferably four or more, compounds selected from the group consisting of the compounds from the above tables.

The liquid-crystal media according to the present invention preferably comprise

- seven or more, preferably eight or more, individual compounds, preferably of three or more, particularly preferably of four or more, different formulae, selected from the group of the compounds from Table D.

Hereinafter, the present invention is described in more detail and specifically with reference to the Examples, which however are not intended to limit the present invention.

## Examples

### Synthesis Example

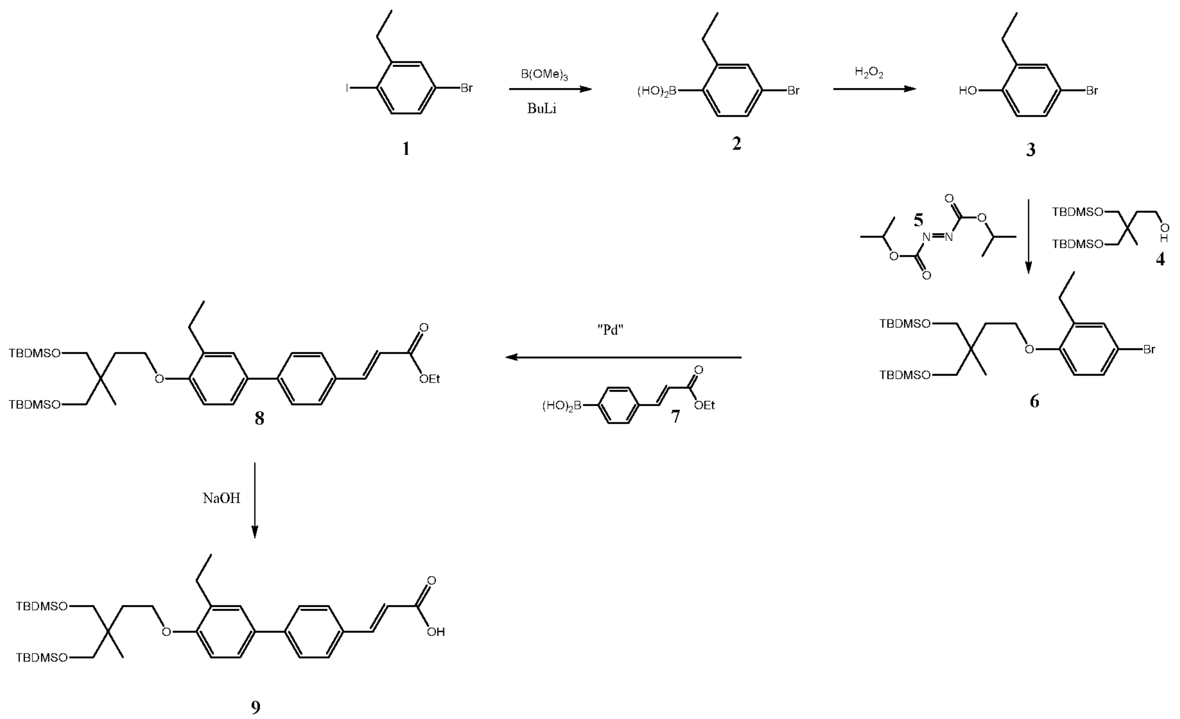

A solution of 94 g (300 mmol) 1 in 500 THF is treated with 200 ml of a 15% solution of Butyllithium in n-hexane at -70°C. After 1h stirring a solution of 40 ml (350mmol) trimethyl borate in 180 ml THF is added to the reaction mixture. After additional 2h the temperature is allowed to rise to 0°C. The mixture is diluted with water and 25% hydrochloric acid is added to reach pH 1. After phase separation the mixture is extracted with MTB ether. The organic layers are dried with sodium sulfate and filtered. The solvent is evaporated. The residue is crystallized from hot n-heptane. Yield: 31g **2.**

A mixture of 15.8 ml acetic acid and 31 ml water is added to a solution of 31.3 g (96%; 131 mmol) **2** in 150 ml THF. At a temperature between 30°C and 40 °C this mixture is treated with 27 ml (30%; 264 mmol) hydrogen peroxide and stirred over night at room temperature. The solution is diluted with water and MTB ether. The organic layer is washed with 10% ammonia ferrum(II) sulfate solution, dried with sodium sulfate and filtered.

The solvent is evaporated. The residue is purified via silica chromatography. Yield: 30g (92%) **3**

A solution of 22.4 g (92%; 100 mmol) **3,** 37.5 g (103 mmol) **4** and 36 g (137 mmol) triphenyl phosphine in 190 ml THF is treated with 28 ml (142 mmol) **5** and stirred over night at room temperature. The solvent is evaporated. The residue is purified by silica chromatography (n-heptane/butyl chloride 1:1) and kugelrohr distillation. Yield: 12.8 g (98%) **6**

A mixture of 11.8 g (20 mol) **6,** 5g (20 mmol) **7,** 12.4 g sodium carbonate decahydrate and 475 mg Pd-dppf is heated to reflux overnight. The cooled reaction mixture is filtered through celite. The filtrate is poured into ice water and diluted with MTB ether. The organic layer is washed with water, dried with sodium sulfate and filtered. The solvent is evaporated. The residue is purified via silica chromatography (butyl chloride; n-heptane/butyl chloride 1:4). Yield: 3.4 g **8**

A solution of 3.4 g (10 mmol) **8** in 17 ml THF is treated with 2.5 ml methanol and 5 ml 2N caustic soda and stirred overnight at room temperature. The mixture is diluted with 250 ml water and 2N hydrochloric acid is added to reach pH 4. The precipitate is isolated, washed with water and dried under reduced pressure. Yield: 2.9 g **9**

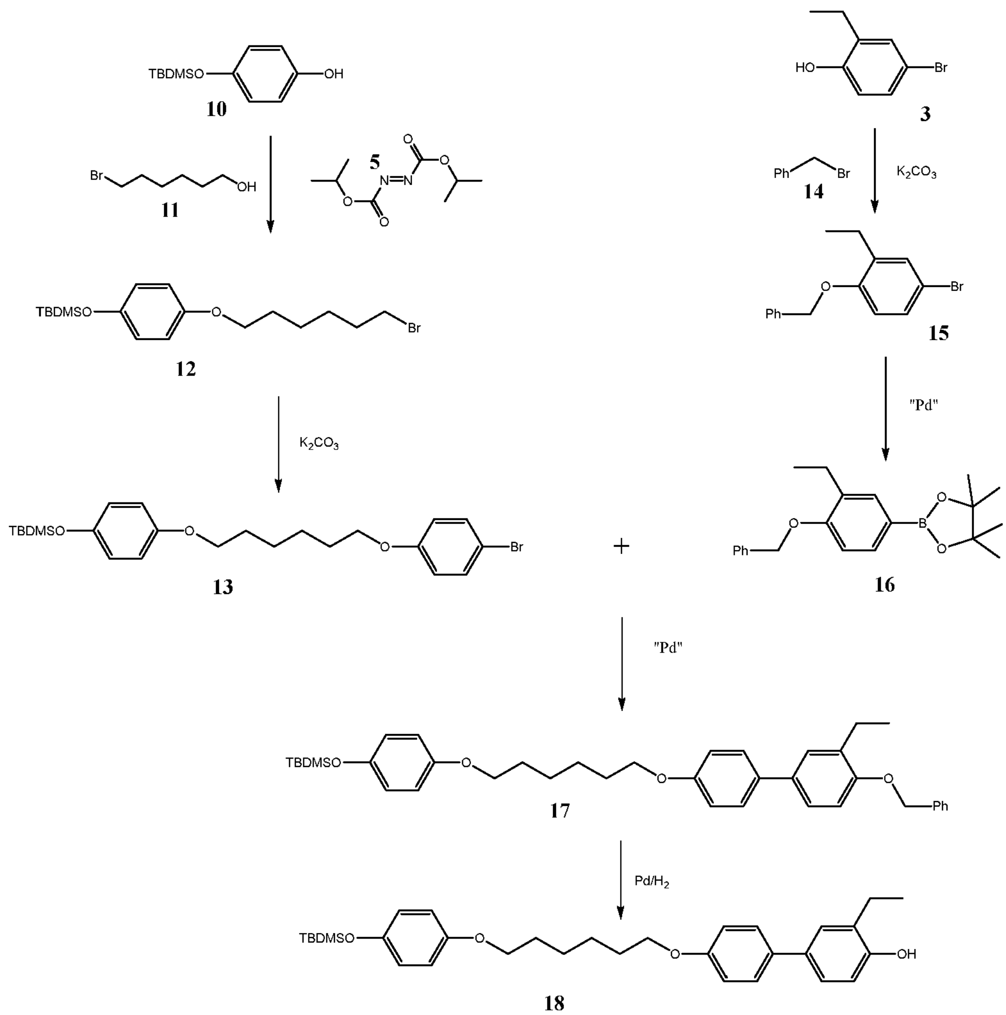


A solution of 13.5 g (97%; 60 mmol) **10,** 12.1 g (96%; 60 mmol) 11and 17.6 g (67 mmol) triphenyl phosphine in 280 ml THF is treated with 13.7 ml (67 mmol) **5** at a temperature below 35°C and stirred over night at room temperature. The solvent is evaporated. The residue is purified by silica chromatography (n-heptane/butyl chloride 1:1). Yield: 20.9 g (93%) **12**

A mixture of 8.9 g (50 mmol) 4-bromo-phenol, 20.7 g (50 mmol) **12** and 9.1 g potassium carbonate in 80 ml DMF is stirred overnight at 80°C. The cooled mixture is filtered. The filtrate is poured into ice water and extracted with MTB ether. The organic layer is washed with water, dried with sodium sulfate and filtered. The solvent is evaporated. The residue is purified via silica chromatography (butyl chloride/ethyl acetate 9:1). Yield: 15 g (90%) **13**

A mixture of 31.9 g (142 mmol) **3,** 25.4 ml (210 mmol) benzyl bromide **(14)** and 27.6 g potassium carbonate in 200 ml methyl ethyl ketone is heated to reflux for 2h. The cooled mixture is filtered. The solvent is evaporated. The residue is purified via silica chromatography (butyl chloride/n-heptane 3:7). The obtained product is distilled (kugel rohr) Yield: 40 g **15**

A mixture of 40.9 g (140 mmol) **15,** 38.8 g (150 mmol) bis(pinacolato)dibor, 30g (310 mmol) potassium acetate and 330 ml dioxane is treated with 3 g Bis (tricyclohexylphosphine)-palladium (II)chloride and 4.8 ml triethylamine and heated to reflux for the night. The cooled mixture is filtered through celite. The filtrate is diluted with MTB ether. The organic layer is washed with water, dried with sodium sulfate and filtered. The solvent is evaporated. The residue is purified via silica chromatography (butyl chloride; butyl chloride/ethyl acetate 85:15). Yield: 45 g **16**

Under nitrogen a mixture of 12.5 g (93%; 20 mmol) **13,** 5.2 g potassium carbonate and 35 ml THF is heated to reflux and treated with 131 mg CataCXium A and 112 mg Tris(dibezylideneacetone)dipalladium(0). A solution of 8.3g (20 mmol) **15** in 55 ml THF is added afterwards. Reflux is continued till all starting material is consumed. The cooled mixture is diluted with water and MTB ether and acidified with 2N hydrochloric acid. The organic layer is washed with water. The organic layer is washed with water, dried with sodium sulfate and filtered. The solvent is evaporated. The residue is purified via silica chromatography (butyl chloride) and crystalized from acetonitrile. Yield: 10.8 g (93%) **17**

A solution of 2.4 g (93%, 3.8 mmol) 17 in THF is treated with 1g Pd-C (5% basic) and hydrogen at room temperature for 18h. The solvent is evaporated. The residue is purified via silica chromatography (DCM). Yield: 2 g 18

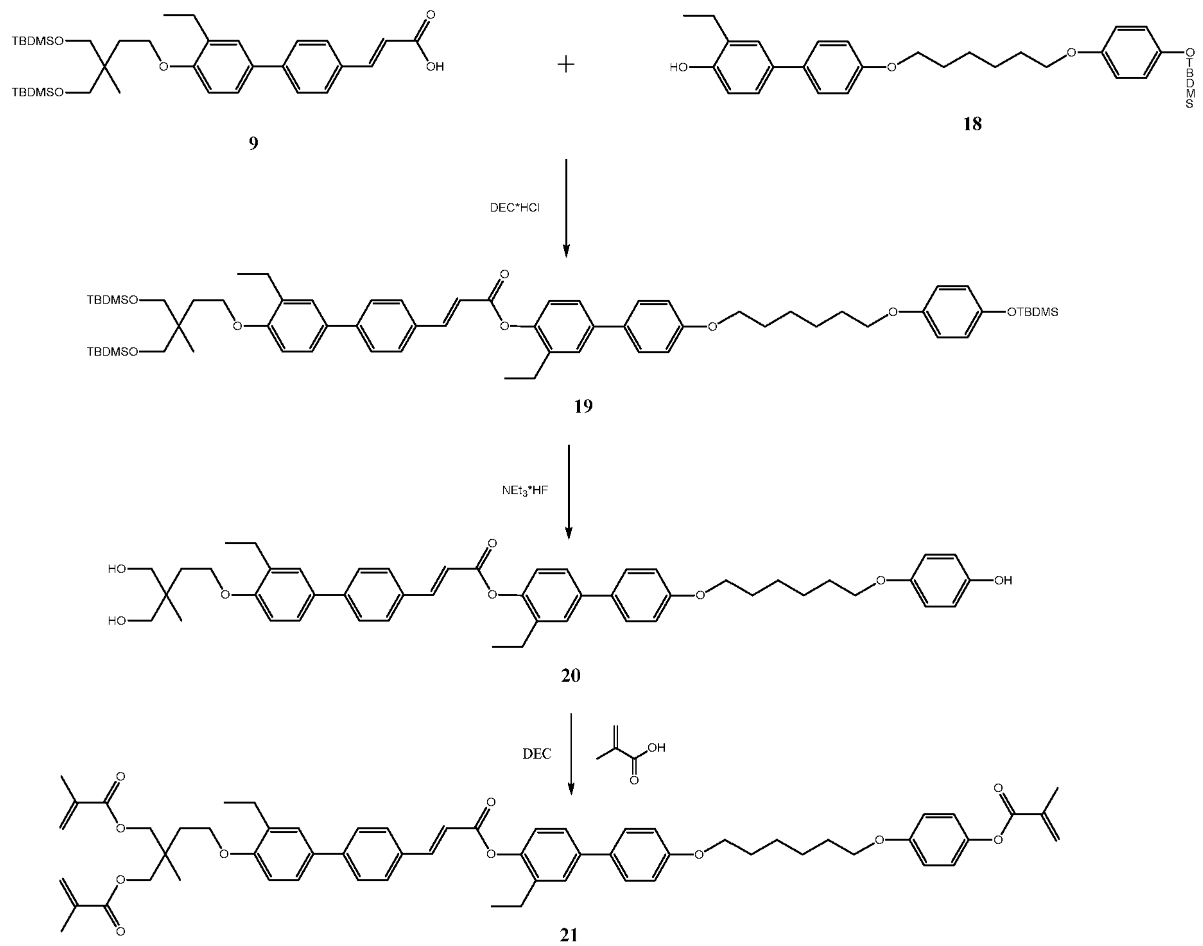


9 18 19 20 21

A solution of 1.4 g (2.2 mmol) **9** and 1.3 g (2.5 mmol) **18** in 8 ml DCM is treated with 57 mg 4-(dimethylamino)-pyridine. Afterwards 535 mg N-(3-dimethylaminopropyle)-N-ethyl carbodiimide hydro chloride are added portion by portion. The mixture is stirred at room temperature overnight. The mixture is filtered through silica gel (DCM). Yield: 2.4 g **19**

A solution of 2.4 g (98%, 2.1 mmol) **19** in 15 ml DCM is treated with 2.5 ml triethylamine trishydro fluoride at a temperature of 5°C. The mixture is stirred till completion. The solvent was evaporated. The residue is purified via silica

chromatography (DCM+THF(20-30%)). Yield: 1.5 g (84%) **20**

A mixture of 1.5 g (84%; 1.6 mmol) **20, 0.7** ml (8.1 mmol) methacrylic acid and 24 mg 4-(dimethylamino)-pyridine in 5 ml DCM is treated with a solution of 1.4 ml (8.1 mmol) N-(3-dimethylaminopropyle)-N-ethyl carbodiimide. The mixture is stirred at low temperature for 1h and at room temperature overnight. Afterwards the mixture is filtered through silica gel (DCM). The obtained product is purified via reverse phase chromatography (acetonitrile) and washing with hot acetonitrile. Yield: 950 mg **21 (RM-1)**

In the same manner or analogous manner the following compounds are obtained:

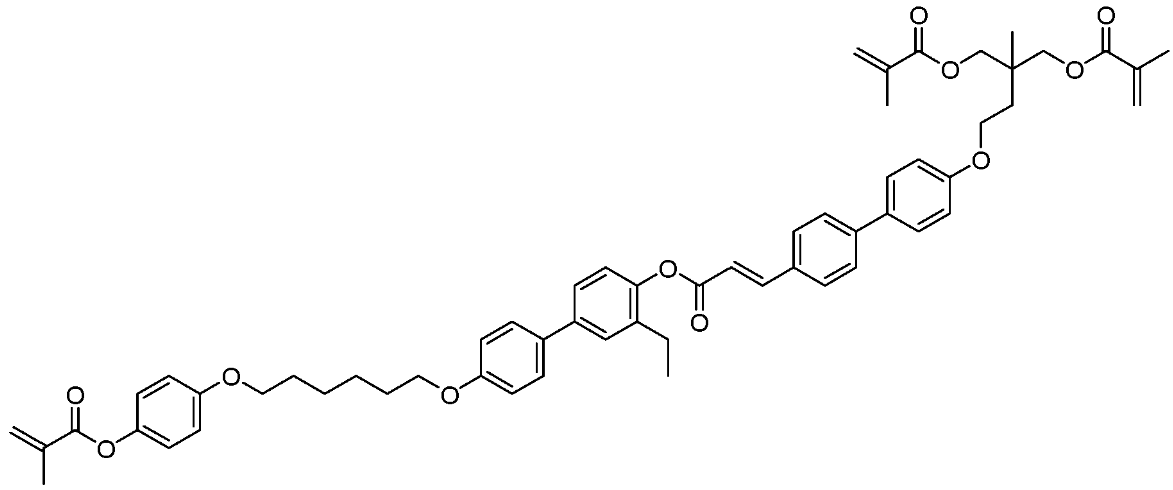

**RM-2**

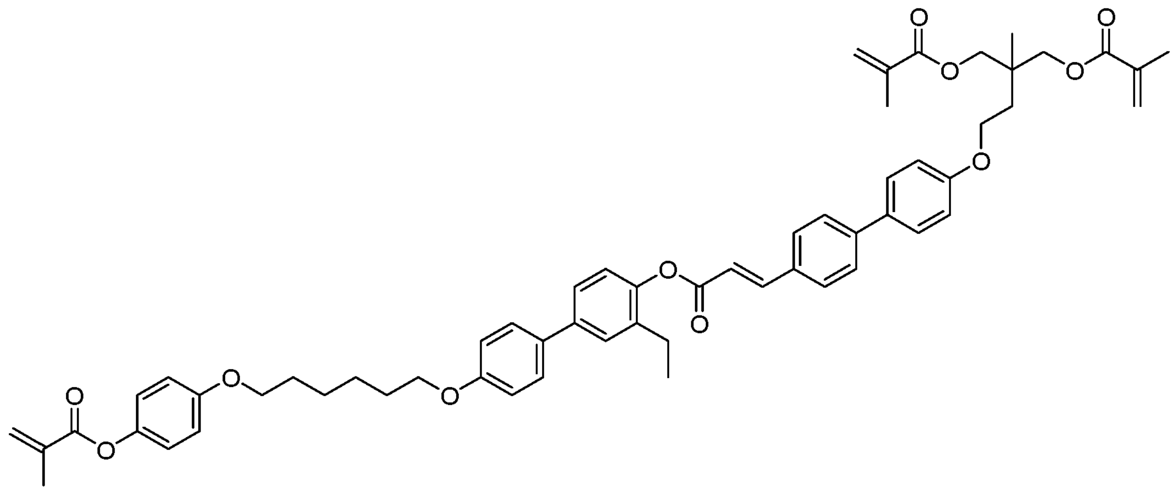

**RM-3**

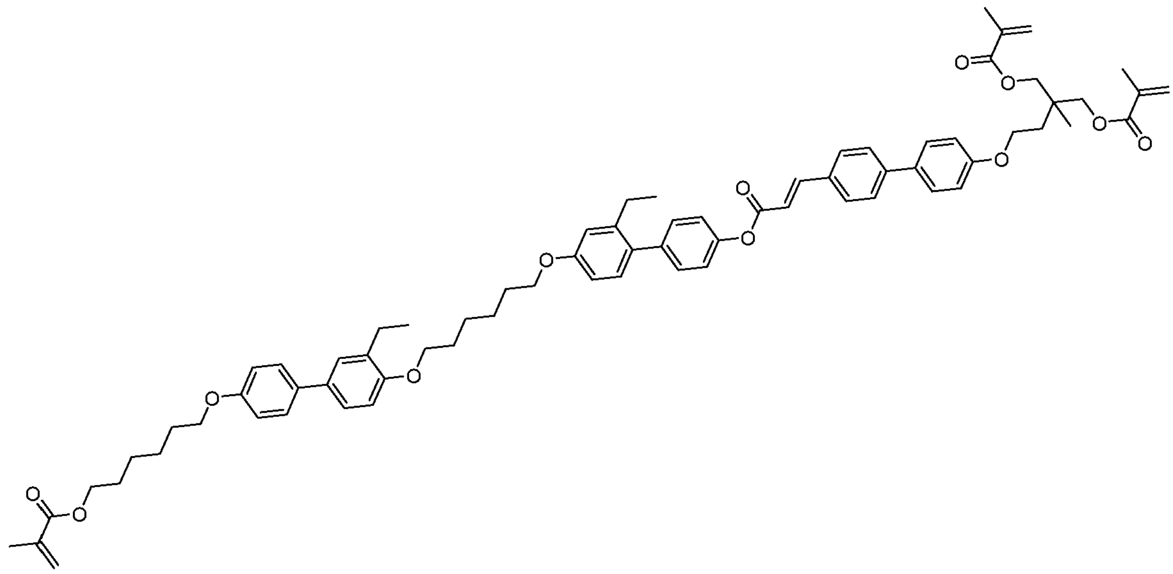

**RM-4**

Utilized Nematic host mixtures

The nematic LC host mixture N-1 is prepared as indicated in the following table:

| | | | |
|---|---|---|---|
| CC-3-V | 36.00 | cl.p. [°C]: | 78 |
| CC-3-V1 | 5.00 | $n_e$ [589 nm, 20°C]: | 1.5907 |
| CCP-V-1 | 8.00 | $\Delta n$ [589 nm, 20°C]: | 0.1095 |
| PGP-2-2V | 3.00 | $\varepsilon_{\parallel}$ [1 kHz, 20°C]: | 16.6 |
| CCQU-3-F | 9.5 | $\varepsilon_{\perp}$ [1 kHz, 20°C]: | 3.7 |
| PUQU-3-F | 8.5 | $\Delta\varepsilon$ [1 kHz, 20°C]: | 12.9 |
| APUQU-2-F | 5.00 | $K_1$ [pN, 20°C]: | 12.1 |
| APUQU-3-F | 8.00 | $K_3$ [pN, 20°C]: | 13.4 |
| PGUQU-3-F | 4.00 | $K_3/K_1$ [pN, 20°C]: | 1.11 |
| PGUQU-4-F | 8.00 | $V_0$ [V, 20°C]: | 1.01 |
| PGUQU-5-F | 5.00 | LTS bulk [h, -20°C]: | 1000 |
| $\Sigma$ | 100.0 | | |

Fabrication of display cells

Unless explicitly stated otherwise, the display cells are made with Corning AF glass of 0.7mm thickness using 6.4 µm spacer beads and XN-1500T sealant.

For measurement of electro-optics 3 µm thick PI-free IPS cells are made of substrates commercially available from SD-tech and constructed into cells using ITO electrodes having 5µm electrode spacing and a 3µm electrode width.

The cells are assembled by hand and then cured using a Omnicure 2000 Mercury lamp with 35 mW/cm$^2$the irradiation power is thereby measured by an Opsytec UV pad-e spectroradiometer.

Mixture examples

The following nematic LC mixtures according to the invention are prepared from the nematic host mixtures listed above and photoalignment additives of formula **I,** according to the compositions given in the following table.

| Mixture example | Host Mixture | c [%] of Host Mixture | Photoalignment additive | |
|---|---|---|---|---|
| | | | Compound | c [%] |
| M-1 | N-1 | 99.7 | RM-1 | 0.3 |
| M-2 | N-1 | 99.5 | RM-1 | 0.5 |
| M-3 | N-1 | 99.0 | RM-1 | 1.0 |
| M-4 | N-1 | 99.7 | RM-2 | 0.3 |
| M-5 | N-1 | 99.5 | RM-2 | 0.5 |
| M-6 | N-1 | 99.7 | RM-3 | 0.3 |
| M-7 | N-1 | 99.5 | RM-3 | 0.5 |
| M-8 | N-1 | 99.0 | RM-3 | 1.0 |
| M-9 | N-1 | 99.7 | RM-4 | 0.3 |
| M-10 | N-1 | 99.5 | RM-4 | 0.5 |
| M-11 | N-1 | 99.0 | RM-4 | 1.0 |

Cell filling and curing

Unless explicitly stated otherwise, the selected LC mixtures are capillary filled using capillary action at room temp., annealed for 1 h at 100°C and then irradiated at the same temperature with linearly polarised UV light (35 mW/cm$^2$, Omnicure S2000 Mercury lamp, 360 nm cut-off filter) for the given time and subsequently cured with UV light (35 mW/cm$^2$, Omnicure S2000 Mercury Lamp, 360 nm cut-off filter) at room temperature. Next, the alignment quality is studied between crossed polarisers on a light box. The results are summarized in the following table.

| Example | Curing time [s] | Alignment Quality |
|---|---|---|
| M-1 | 30 | + |
| M-1 | 60 | + |
| M-1 | 120 | + |
| M-1 | 180 | ++ |
| M-2 | 30 | + |
| M-2 | 60 | + |
| M-2 | 120 | ++ |
| M-2 | 180 | ++ |
| M-3 | 30 | + |
| M-3 | 60 | + |
| M-4 | 60 | + |
| M-4 | 120 | ++ |
| M-4 | 180 | ++ |
| M-5 | 30 | + |
| M-5 | 60 | ++ |
| M-5 | 120 | ++ |
| M-5 | 180 | ++ |
| M-6 | 30 | + |
| M-6 | 60 | + |
| M-6 | 120 | + |

(continued)

| Example | Curing time [s] | Alignment Quality |
|---|---|---|
| M-6 | 180 | ++ |
| M-7 | 30 | + |
| M-7 | 60 | + |
| M-7 | 120 | ++ |
| M-7 | 180 | ++ |
| M-8 | 30 | + |
| M-8 | 60 | ++ |
| M-9 | 60 | + |
| M-9 | 120 | + |
| M-9 | 180 | + |
| M-10 | 30 | + |
| M-10 | 60 | + |
| M-10 | 120 | + |
| M-10 | 180 | + |
| M-11 | 30 | + |
| M-11 | 60 | ++ |
| M-11 | 120 | ++ |
| M-11 | 180 | + |
| Alignment quality: (++) excellent, (+) good, (o) acceptable, (-) poor | | |

At least acceptable uniform planar alignment is achieved with all mixtures according to the present invention and under all polarizer configurations an homogeneous transmissive state is observed.

## Claims

**1.** Compound of formula I,

$$R^{11}\text{-}Sp^{11}\text{-}X^{11}[\text{-}A\text{-}Z]_o\text{-}A^{11}\text{-}CY^{11}\text{=}CY^{12}[\text{-}C\text{=}O]_x[\text{-}O]_y\text{-}A[\text{-}Z\text{-}A]_p\text{-}X^{21}\text{-}Sp^{21}\text{-}R^{21} \qquad \textbf{I}$$

wherein

$A^{11}$ denotes a radical selected from the following groups:

a) a group consisting of 1,4-phenylene and 1,3-phenylene, wherein, in addition, one or two CH groups are optionally replaced by N and wherein, in addition, one or more H atoms are optionally replaced by L,
b) a group selected from the group consisting of

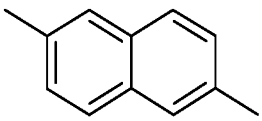 , 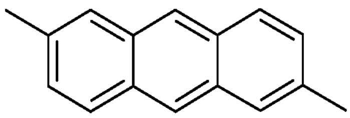 ,

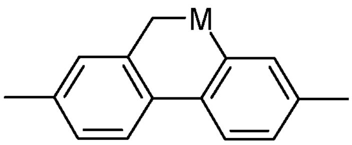 , 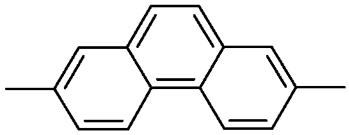 ,

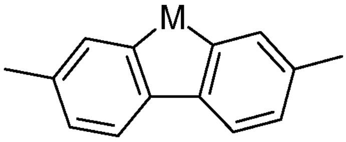 , 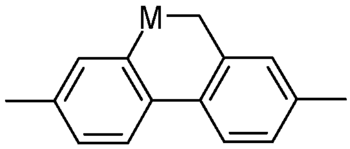 ,

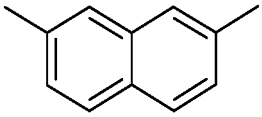 , 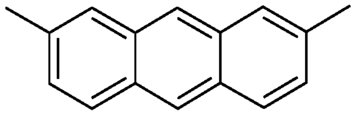 ,

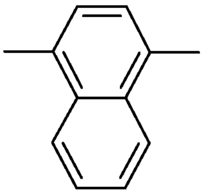 , 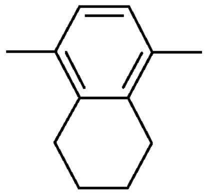 ,

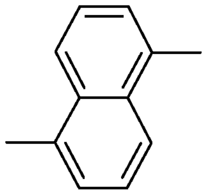 ,

where, in addition, one or more H atoms in these radicals are optionally replaced by L, and/or one or more double bonds are optionally replaced by single bonds, and/or one or more CH groups are optionally replaced by N,

A have each, independently of one another, in each occurrence one of the meanings for $A^{11}$ or

a) group consisting of trans-1,4-cyclohexylene, 1,4-cyclohexenylene, wherein, in addition, one or more non-adjacent $CH_2$ groups are optionally replaced by -O- and/or -S- and wherein, in addition, one or more H atoms are optionally replaced by F, or
b) a group consisting of tetrahydropyran-2,5-diyl, 1,3-dioxane-2,5-diyl, tetrahydrofuran-2,5-diyl, cyclobutane-1,3-diyl, piperidine-1,4-diyl, thiophene-2,5-diyl and selenophene-2,5-diyl, each of which may also be mono- or polysubstituted by L,

L on each occurrence, identically or differently, denotes -OH, -F, -Cl, -Br, -I, -CN, $-NO_2$, $SF_5$, -NCO, -NCS, -OCN, -SCN, $-C(=O)N(R^z)_2$, $-C(=O)R^z$, $-N(R^z)_2$, optionally substituted silyl, optionally substituted aryl having 6 to 20 C atoms, or straight-chain or branched or cyclic alkyl, alkoxy, alkylcarbonyl, alkoxycarbonyl, alkylcarbonyloxy or alkoxycarbonyloxy having 1 to 25 C atoms, or $X^{21}$-$Sp^{21}$-$R^{21}$,
M denotes -O-, -S-, $-CH_2-$, $-CHR^z-$ or $-CR^yR^z-$,
$R^y$ and $R^z$ each, independently of one another, denote H, CN, F or alkyl having 1-12 C atoms, wherein one or more H atoms are optionally replaced by F,
$Y^{11}$ and $Y^{12}$ each, independently of one another, denote H, F, phenyl or optionally fluorinated alkyl having 1-12 C atoms,
Z denotes, independently of each other, in each occurrence, a single bond, -COO-, -OCO-, -O-CO-O-, $-OCH_2-$, $-CH_2O-$, $-OCF_2-$, $-CF_2O-$, $-(CH_2)_n-$, $-CF_2CF_2-$, -CH=CH-, -CF=CF-, -CH=CH-COO-, -OCO-CH=CH-, -CO-S-, -S-CO-, -CS-S-, -S-CS-, -S-CSS- or -C≡C-,
n denotes an integer between 2 and 8,

O denotes 0, 1 or 2,

P denotes 1 or 2,

x and y denote each and independently 0 or 1, however under the condition that if x denotes 0, y cannot denote 1.

$Sp^{11}$ denotes a spacer group comprising 2 to 20 C atoms, wherein one or more $CH_2$ groups are optionally replaced by -O-, -S-, -NH-, $-N(CH_3)-$, -CO-, -O-CO-, -S-CO-, -O-COO-, -CO-S-, -CO-O-, $-CF_2-$, $-CF_2O-$, $-OCF_2-$ -CH(OH)-, -CH(alkyl)-, -CH(alkenyl)-, -CH(alkoxyl)-, -CH(oxaalkyl)-, -CH=CH- or -C≡C-, however in such a way that no two O-atoms are adjacent to one another and no two groups selected from -O-CO-, -S-CO-, -O-COO-, -CO-S-, -CO-O- and -CH=CH- are adjacent to each other, and

$Sp^{21}$ denotes $-S^1-A^{Sp}-S^2-$, $-S^1-X^{Sp}-A^{Sp}-X^{Sp}-S^2-$, $-S^1-A^{Sp}-X^{Sp}-S^2$ or $-S^1-X^{Sp}-A^{Sp}-S^2$ wherein $S^1$ is $C_{3-12}$-alkylene and $S^2$ is a single bond or $C_{3-12}$-alkylene, wherein in $S^1$ or $S^2$ one or more $CH_2$ groups are optionally replaced by -O-, -S-, -NH-, $-N(CH_3)-$, -CO-, -O-CO-, -S-CO-, -O-COO-, -CO-S-, -CO-O-, $-CF_2-$, $-CF_2O-$, $-OCF_2-$, -CH(OH)-, -CH(alkyl)-, -CH(alkenyl)-, -CH(alkoxyl)-, -CH(oxaalkyl)-, -CH=CH- or -C≡C-, however in such a way that no two O-atoms are adjacent to one another and no two groups selected from -O-CO-, -S-CO-, -O-COO-, -CO-S-, -CO-O- and -CH=CH- are adjacent to each other, and

$A^{Sp}$ denotes

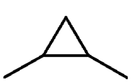 , 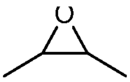 , 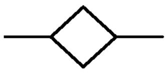 , 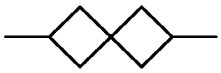 , 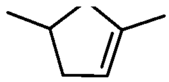 ,

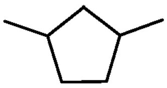 , 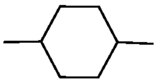 , 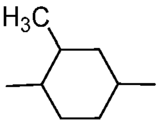 , 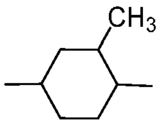 ,

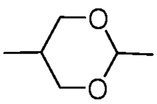 , 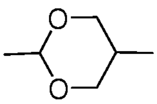 , 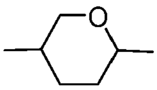 , 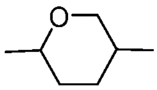 ,

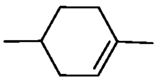 , 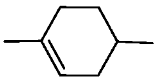 , 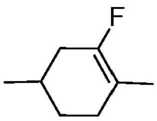 , 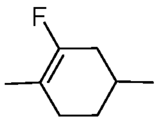 ,

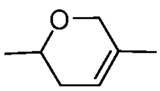 , 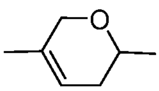 , 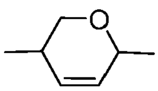 , 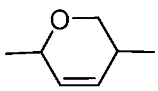 ,

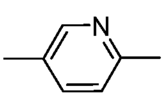 , 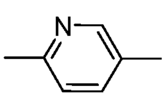 , 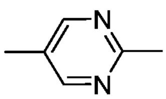 , 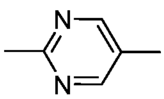 , 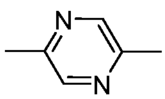 ,

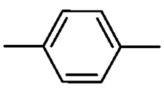 , 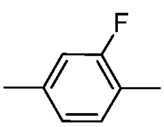 , 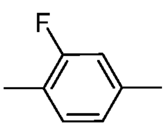 , 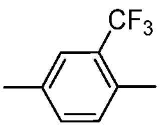 , 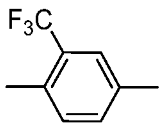 ,

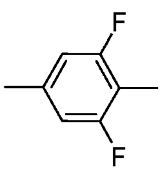 , 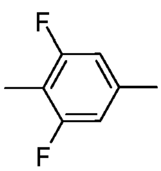 , 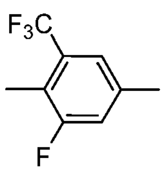 , 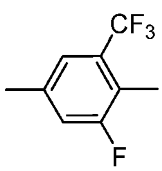 , 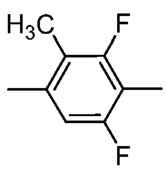 ,

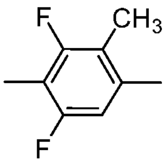 ,

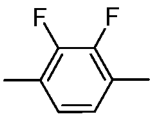 , 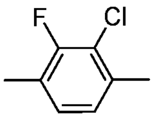 , 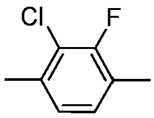 , 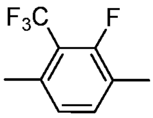 , 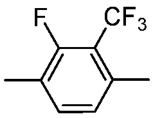 ,

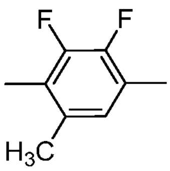 , 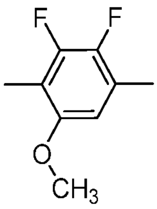 , 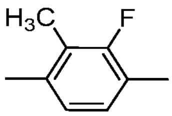 , 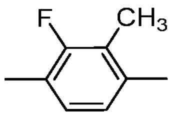 ,

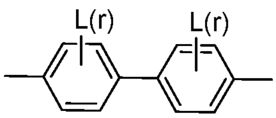 , 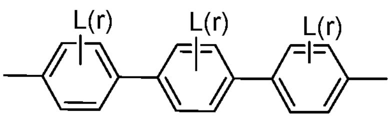

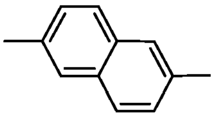 , 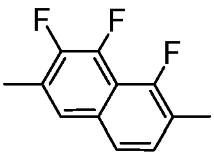 , 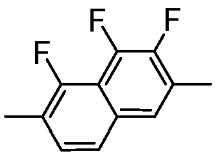 , 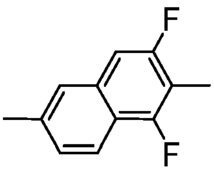 ,

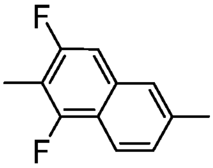 , 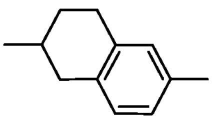 , 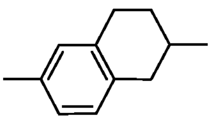 , 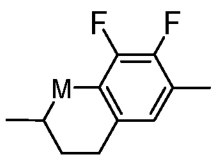 ,

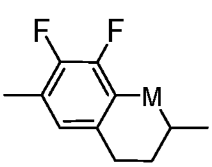 , 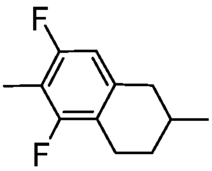 , 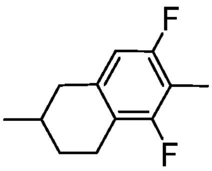 , 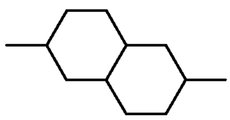 ,

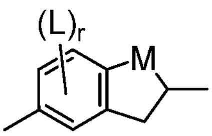 , 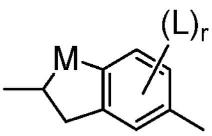 , 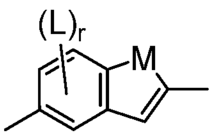 , 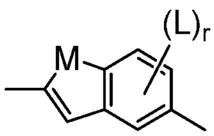 ,

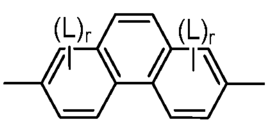 , 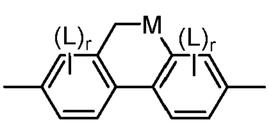 ,

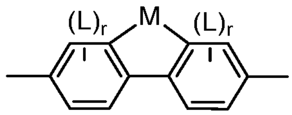,
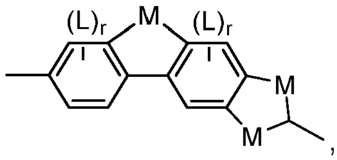,
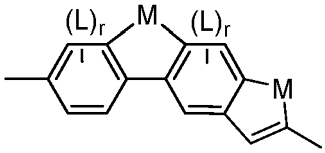

L each, independently of one another, denotes alkyl, alkoxy, halogen, $OCF_3$, $CF_3$, $CH_2F$, $CHF_2$,
r denotes 0,1, 2, or 3,
M denotes $CH_2$, CHF, $CF_2$, S or O,
$X^{Sp}$, $X^{11}$ and $X^{21}$ -CO-O-, -O-CO-, -O-COO-, -O-, -CH=CH-, -C≡C-, $-CF_2-O-$, $-O-CF_2-$, $-CF_2-CF_2-$, $-CH_2-O-$, $-O-CH_2-$, -CO-S-, -S-CO-, -CS-S-, -S-CS-, -S-CSS- or -S-,
$R^{11}$ and $R^{21}$ denotes P, halogen, CN, or optionally fluorinated alkyl or alkenyl with up to 15 C atoms in which one or more non- adjacent $CH_2$-groups may be replaced by -O-, -S-, -CO-, -C(O)O-, -O-C(O)-, O-C(O)-O-, under the condition that at least one of $R^{11}$ or $R^{21}$ denotes P
P denotes a polymerisable group.

2. Compound according to claim 1, **characterized in that** the compound is selected selected from compounds of the following sub-formulae

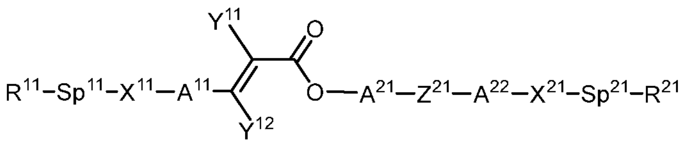

I-3

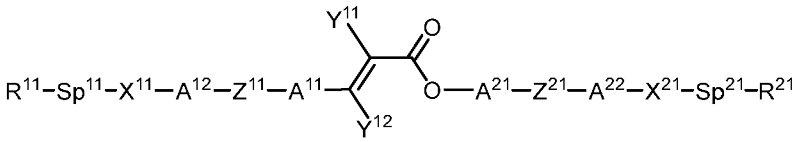

I-4

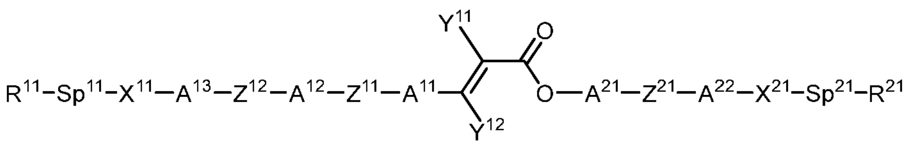

I-5

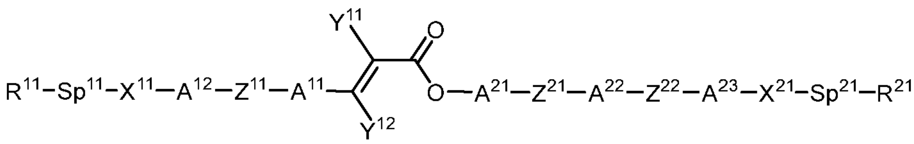

I-6

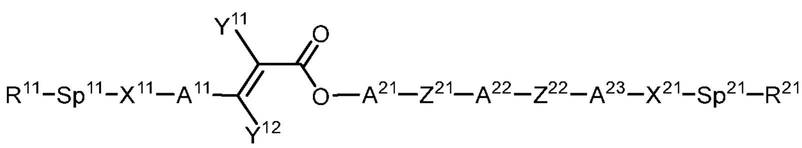

I-8

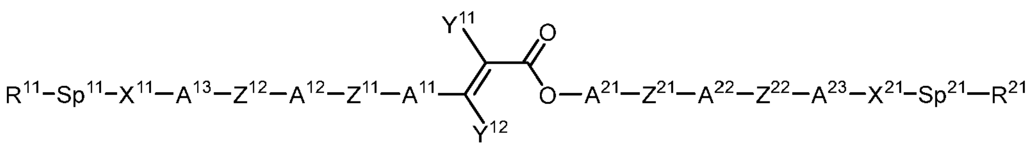

I-9

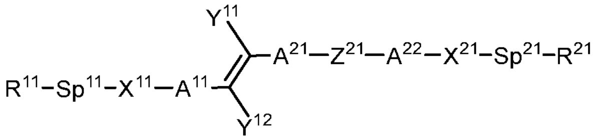

I-12

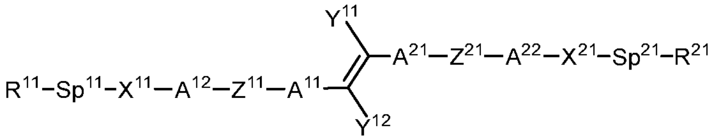

I-13

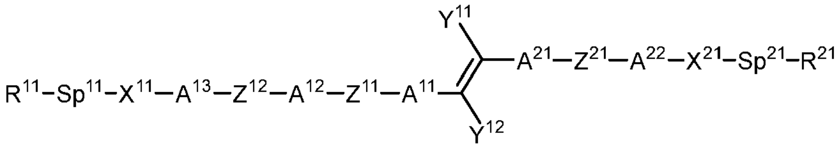

I-14

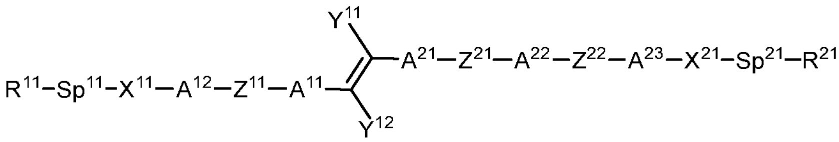

I-15

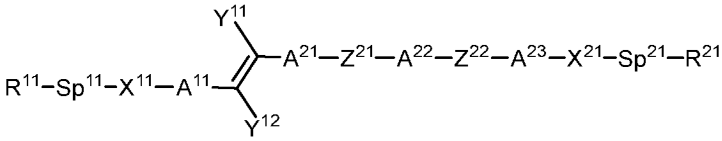

I-17

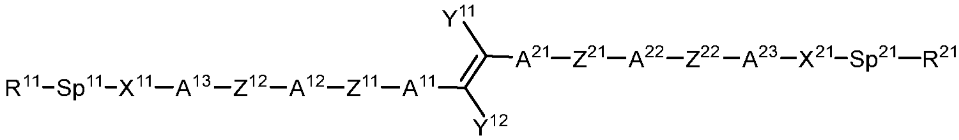

I-18

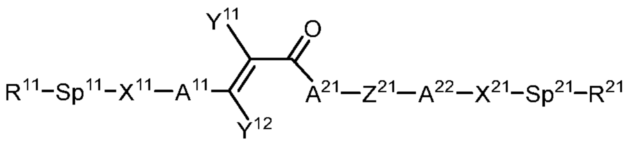

I-21

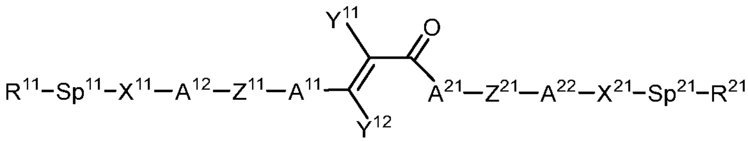

I-22

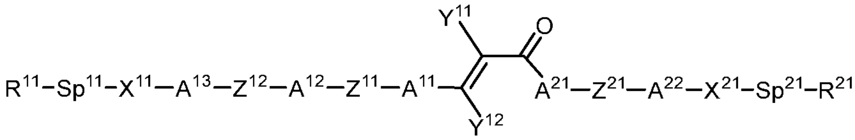

I-23

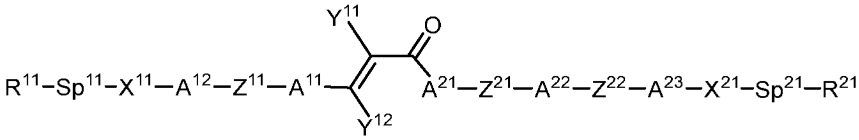

I-24

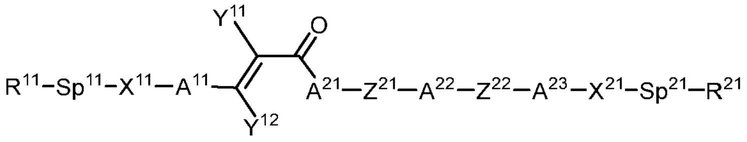

I-26

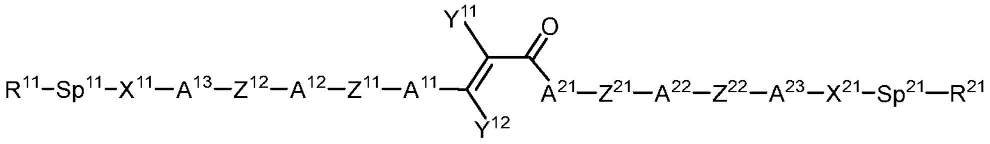

I-27

wherein $R^{11}$, $R^{21}$, $A^{11}$, $X^{11}$, $X^{21}$, $Y^{11}$, $Y^{12}$, $Sp^{11}$ and $Sp^{21}$ have in each occurrence and each and independently from another one of the meanings as given in claim 1,

$A^{12}$ to $A^{23}$ have each and independently from another one of the meanings for A as given in claim 1, and $Z^{11}$ to $Z^{22}$ have each and independently from another one of the meanings for Z as given in claim 1.

**3.** Compound according to claim 1 or 2, **characterized in that** the compound is selected from the following compounds

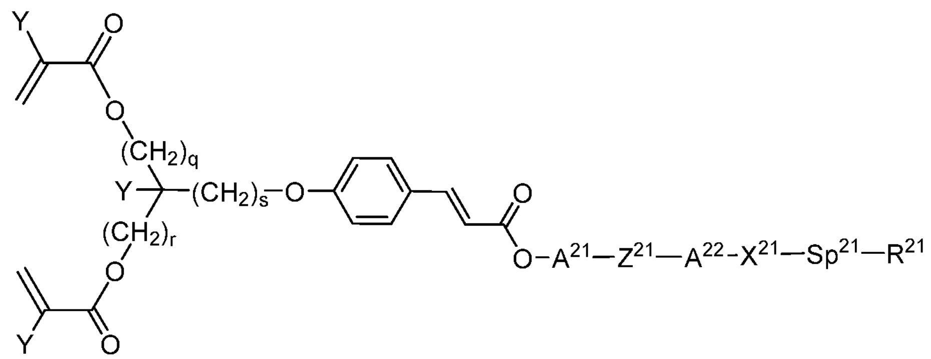

I-3-1

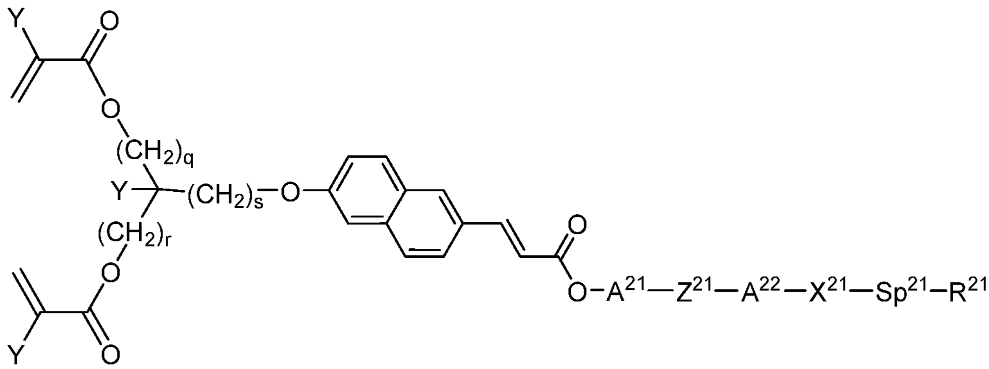

I-3-2

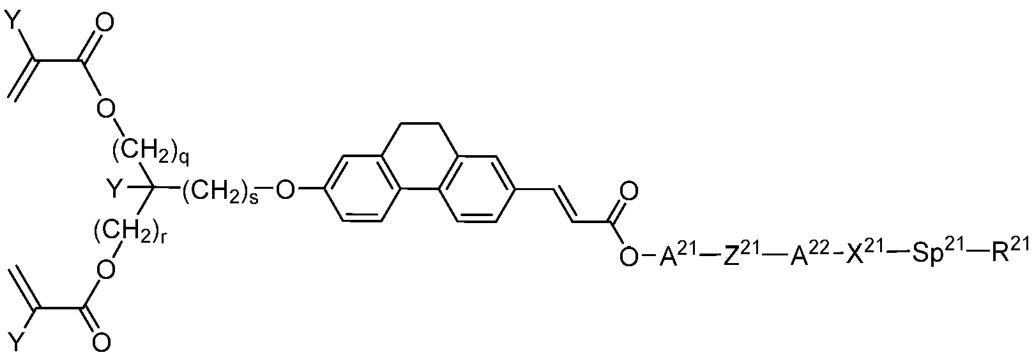

I-3-3

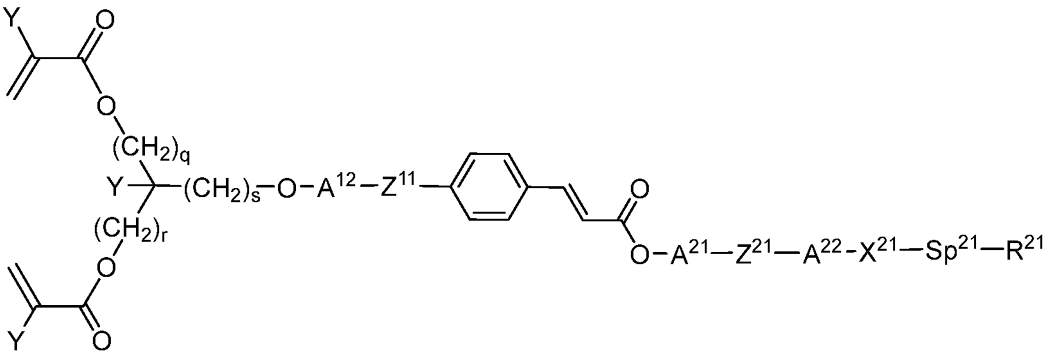

I-4-1

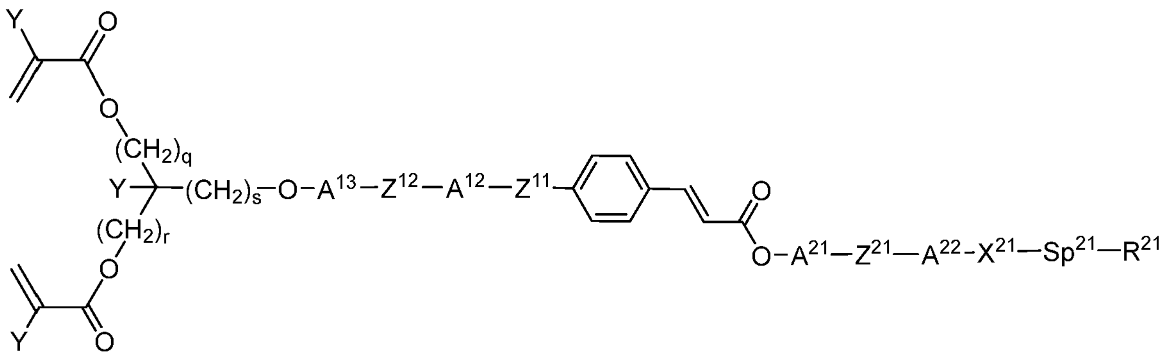

I-5-1

wherein, $R^{21}$, $X^{21}$, and $Sp^{21}$ have one of the meanings as given in claim 1 , $Z^{11}$, $Z^{12}$ and $Z^{21}$ have one of the meanings for Z as given in claim 1 under formula I, r and q denote 1, 2 or 3, s denotes an integer from 1 to 6, and $A^{12}$, $A^{13}$, $A^{21}$ and $A^{22}$ have one of the meanings for A as given in claim 1 under formula I, and Y denotes H, methyl or ethyl.

4. Compound according to one or more of claims 1 to 3, **characterized in that** it is selected from compounds of the following sub-formulae,

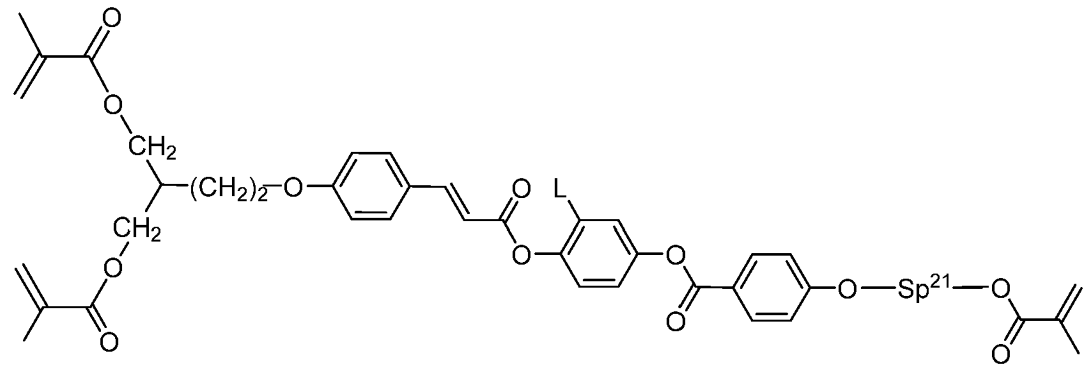

I-3-1a-1

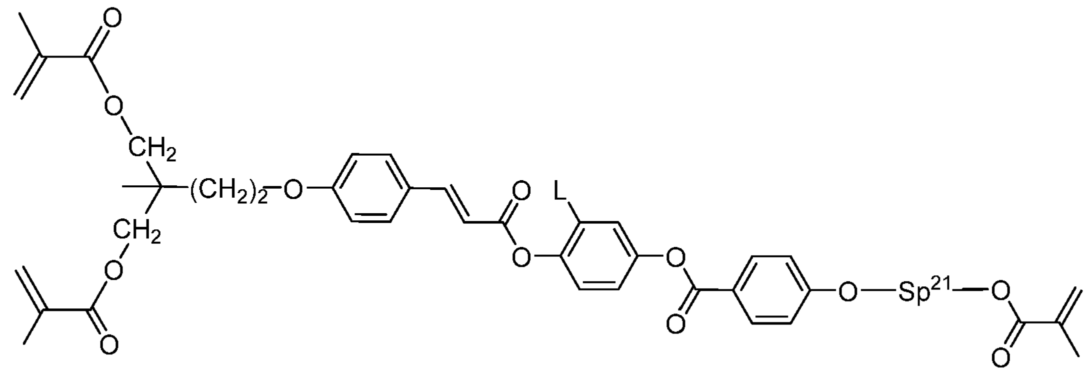

I-3-1a-2

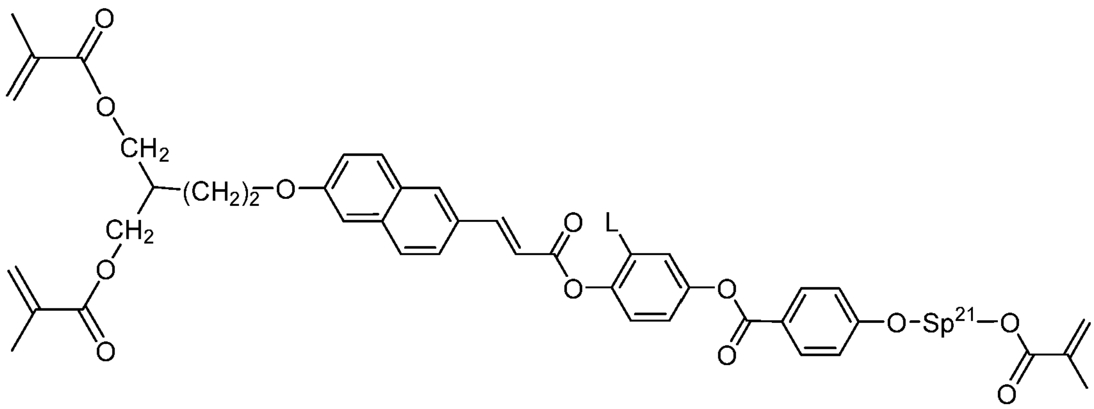

I-3-2a-3

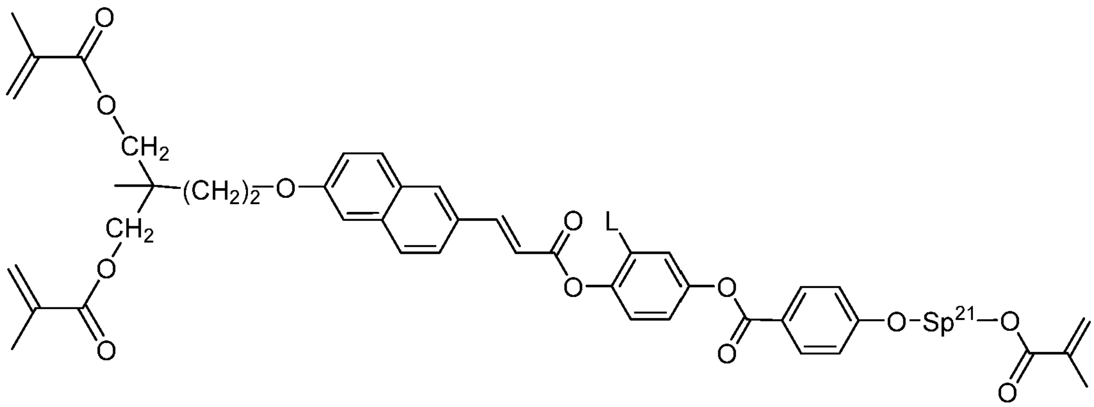

I-3-2a-4

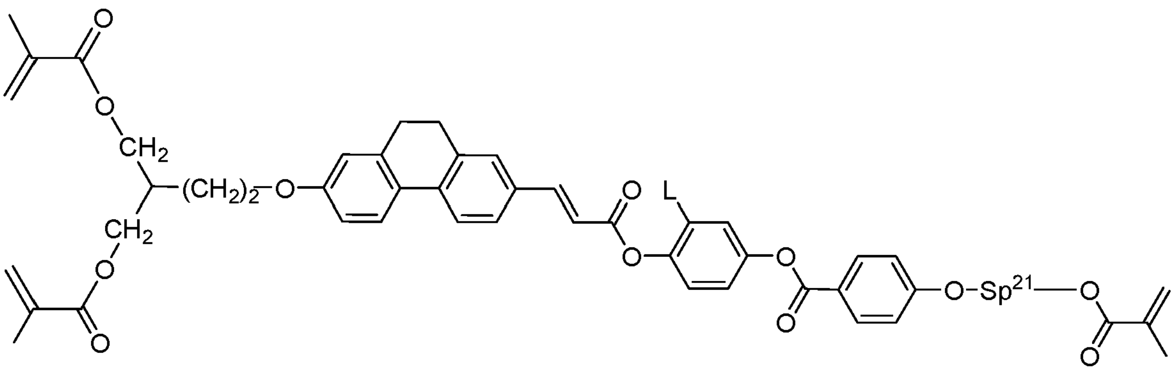

I-3-3a-5

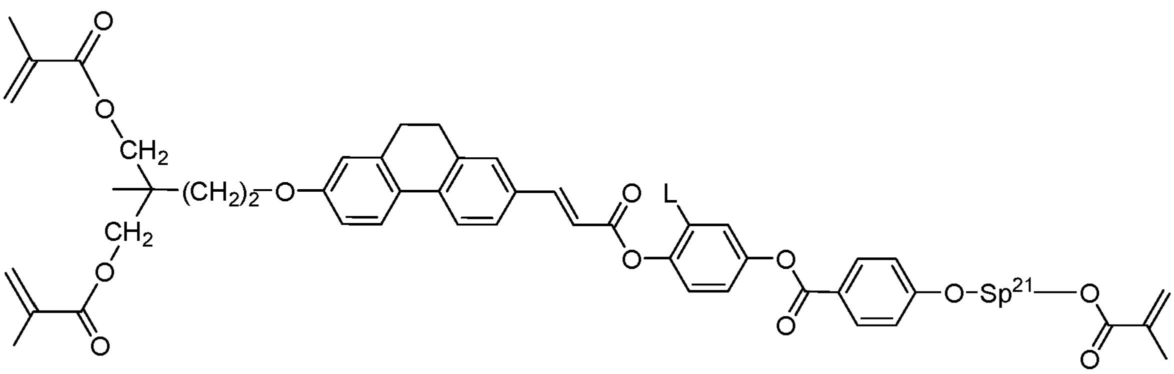

I-3-3a-6

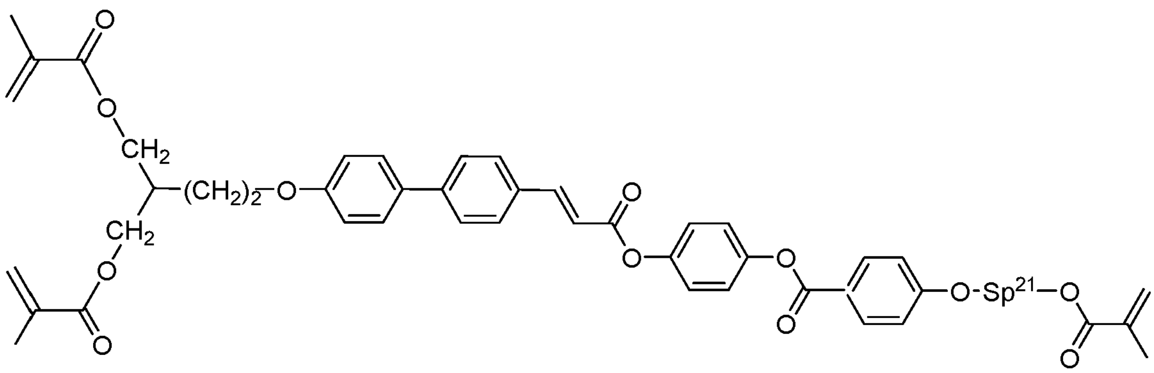

I-4-1a-1

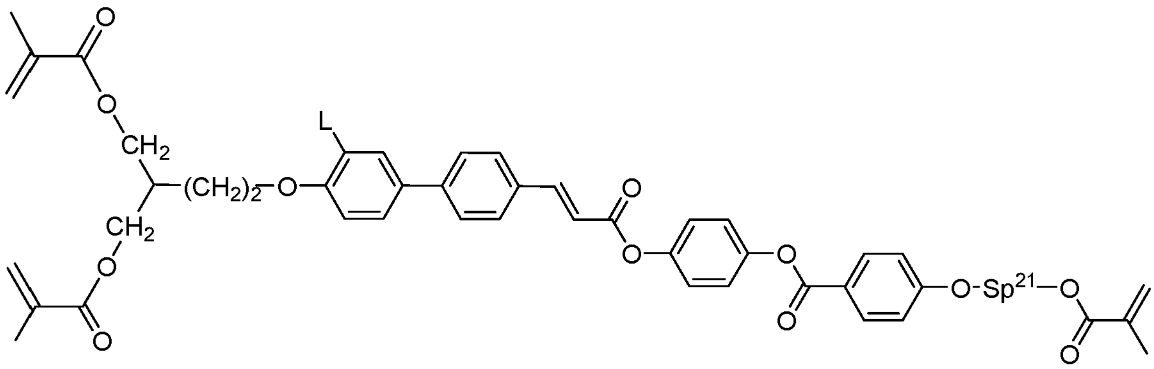

I-4-1a-2

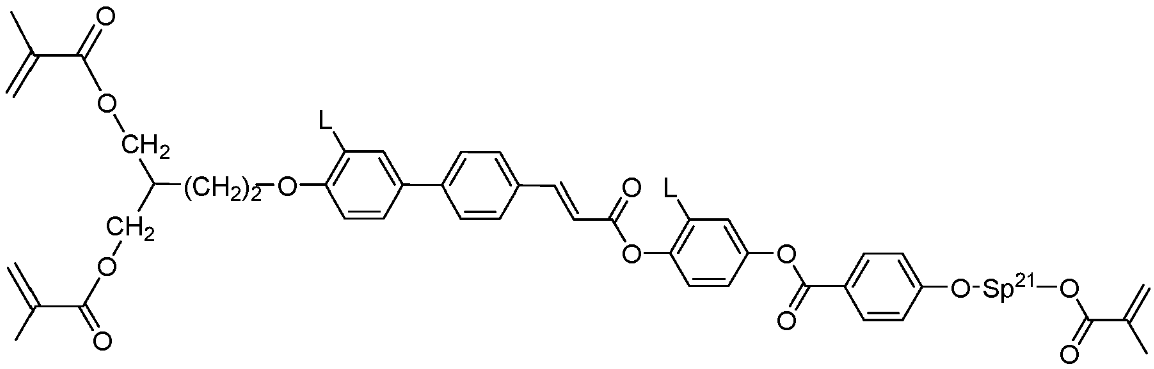

I-4-1a-3

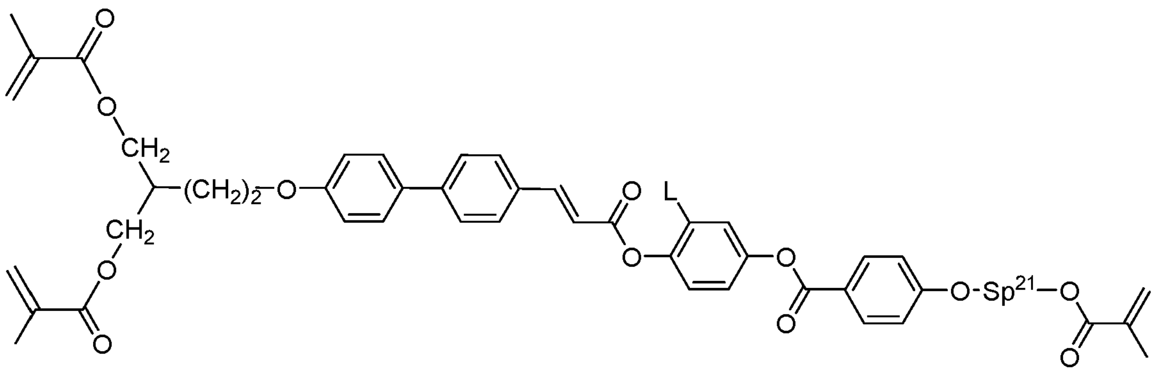

I-4-1a-4

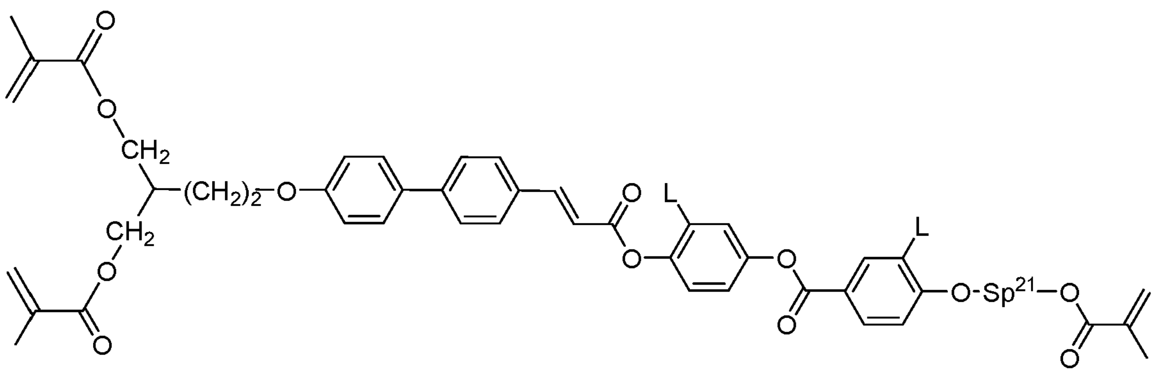

I-4-1a-5

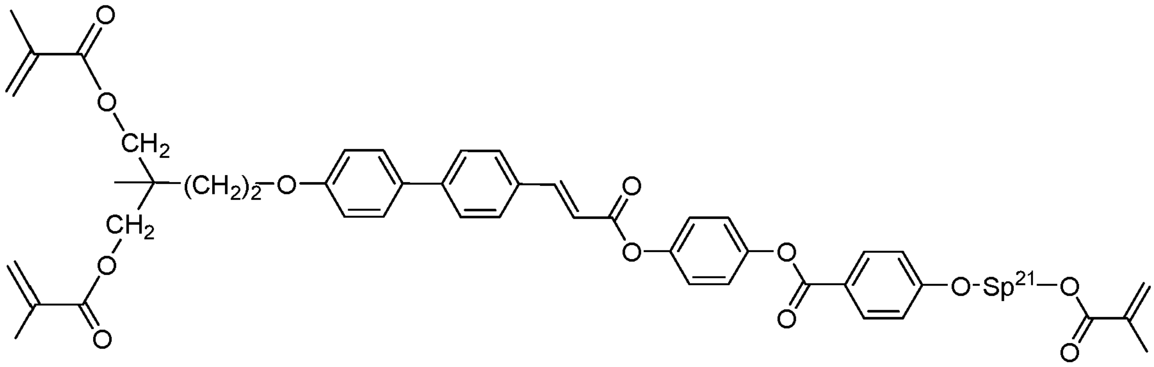

I-4-1a-6

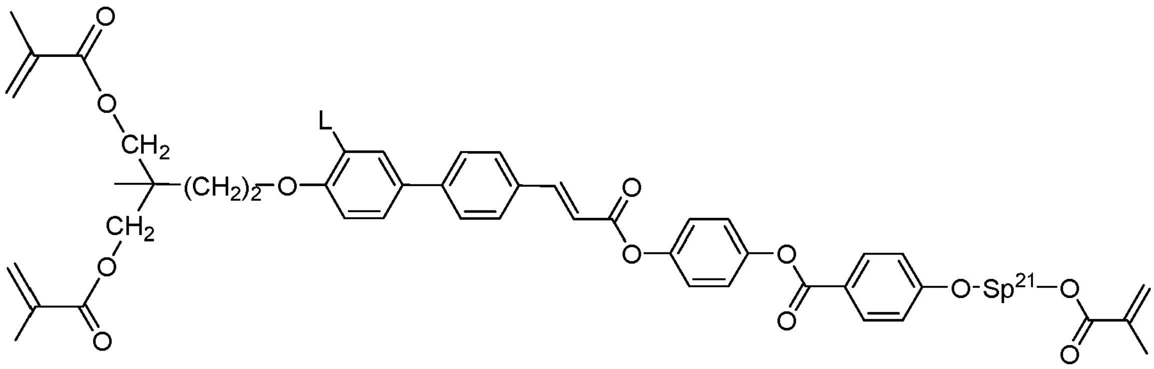

I-4-1a-7

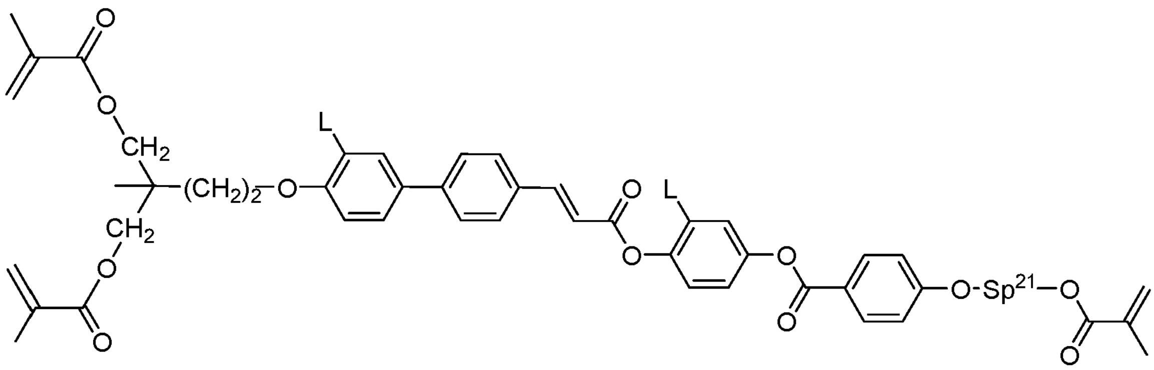

I-4-1a-8

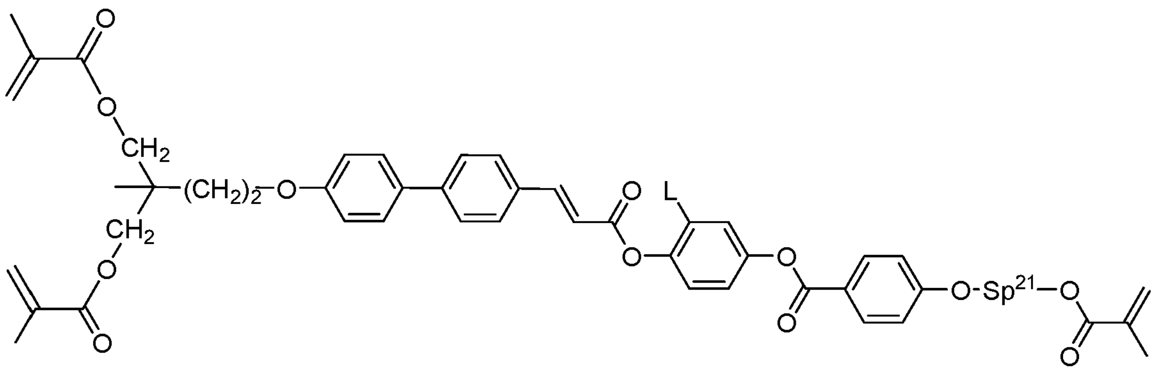

I-4-1a-9

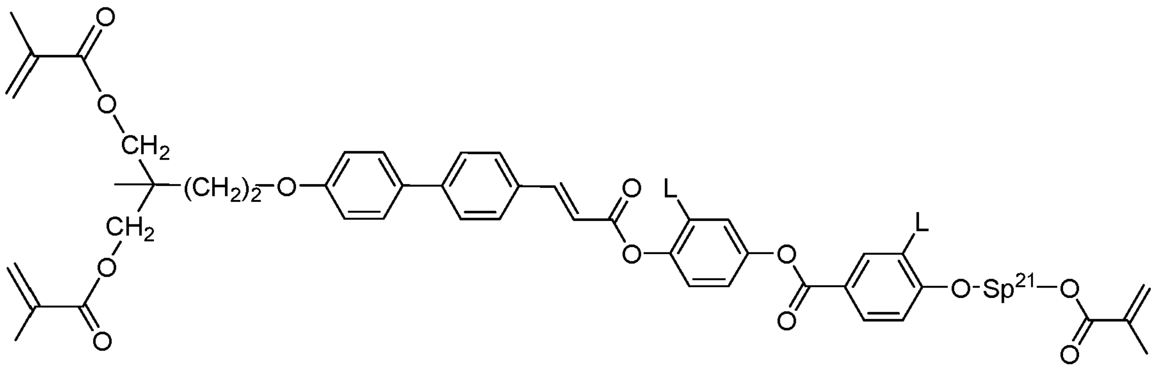

I-4-1a-10

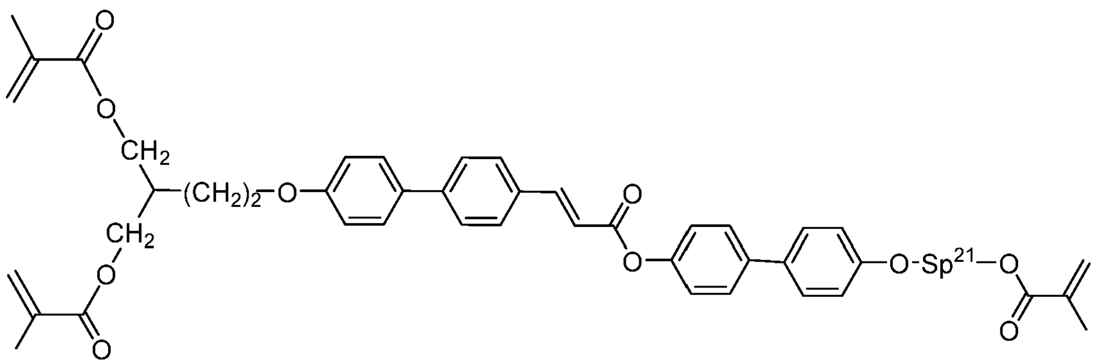

I-4-1a-1

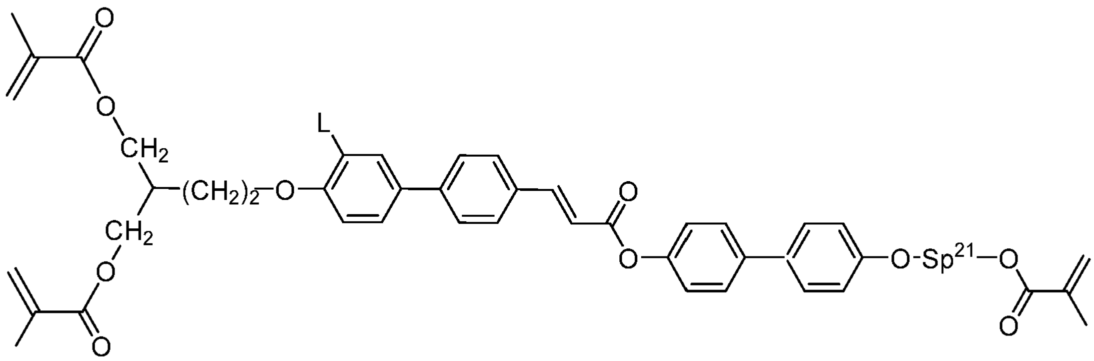

I-4-1a-2

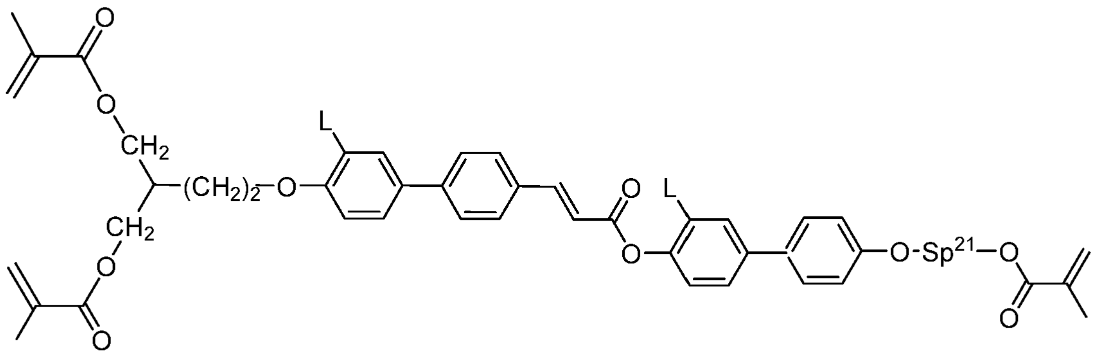

I-4-1a-3

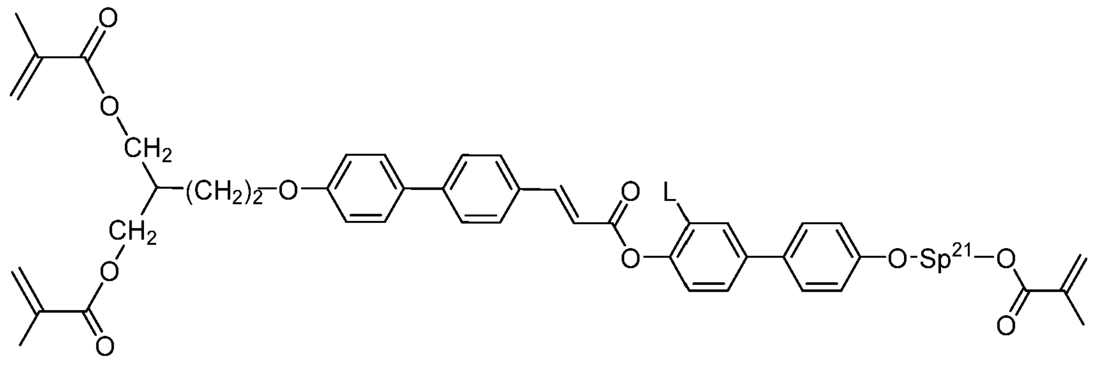

I-4-1a-4

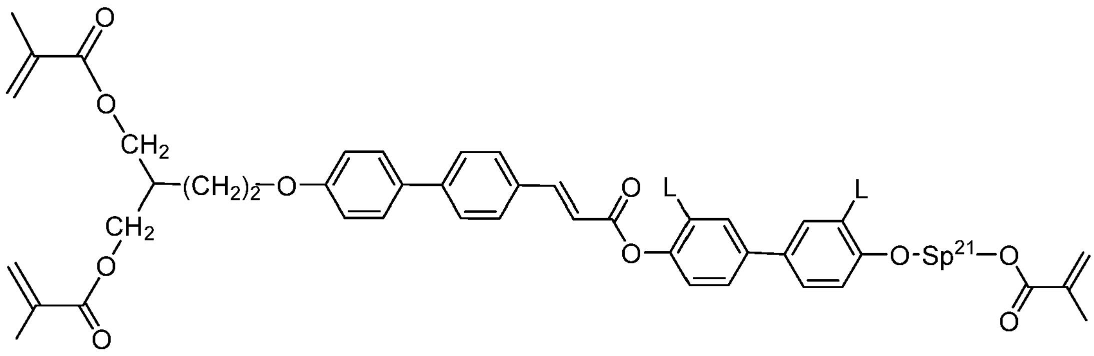

I-4-1a-5

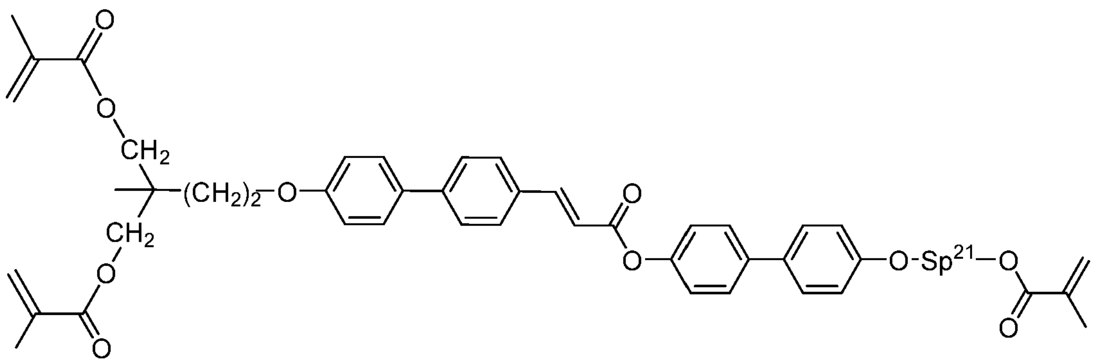

I-4-1a-6

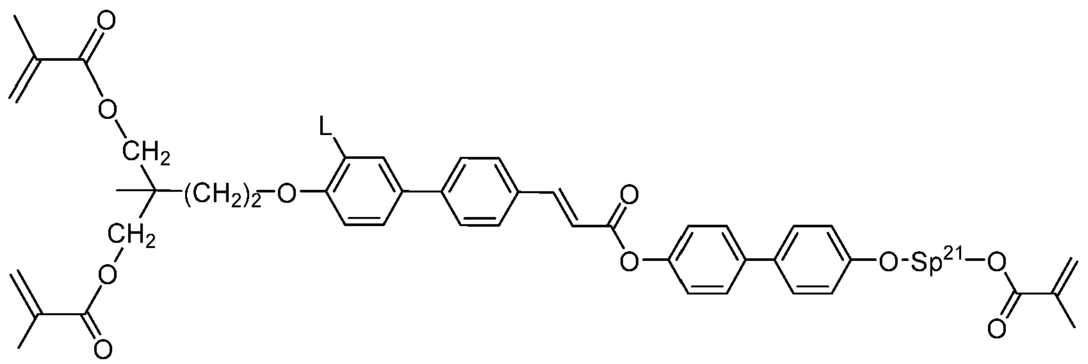

I-4-1a-7

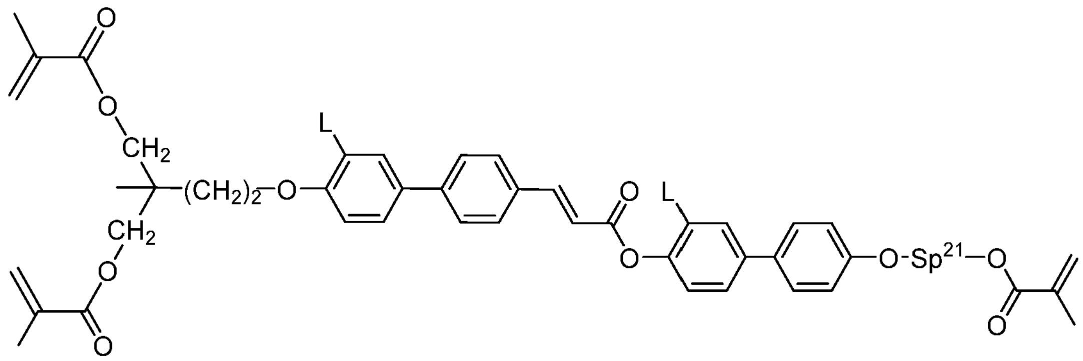

I-4-1a-8

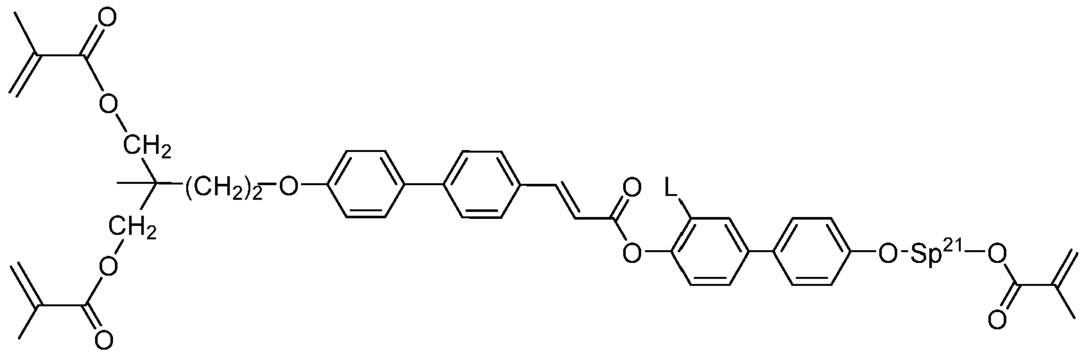

I-4-1a-9

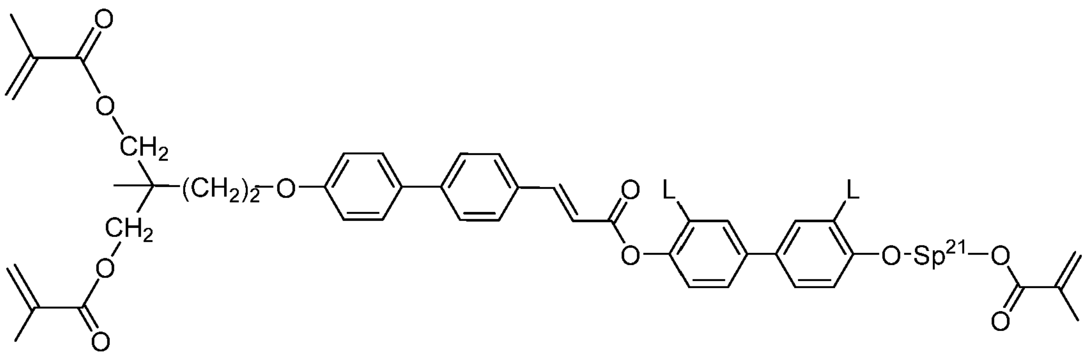

I-4-1a-10

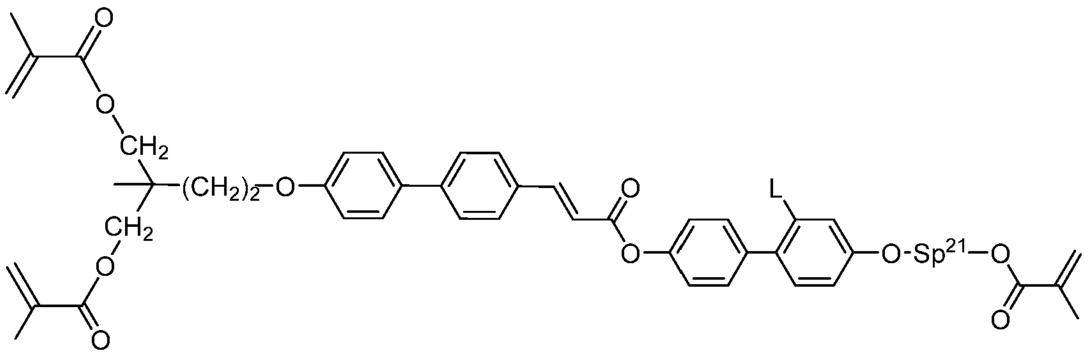

I-4-1a-11

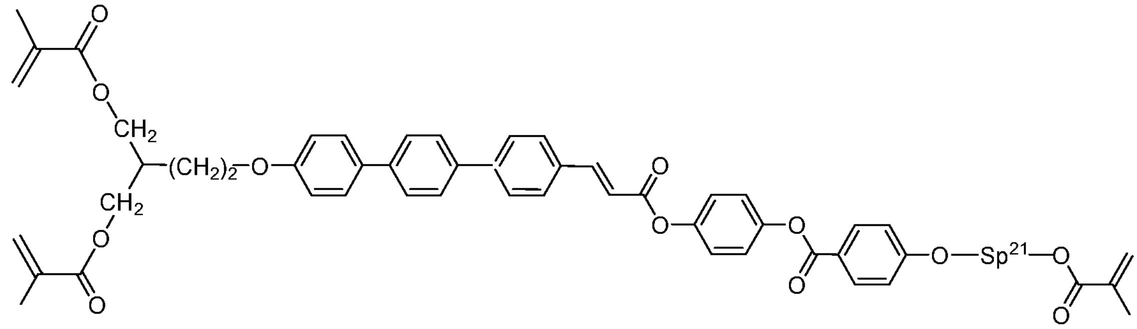

I-5-1a-1

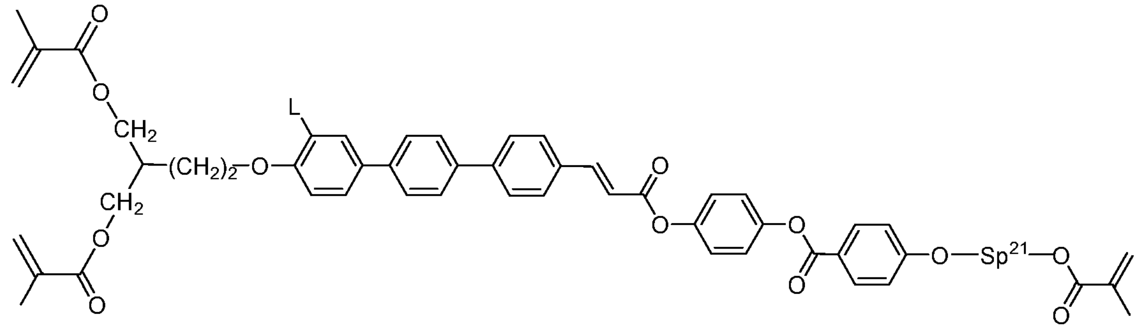

I-5-1a-2

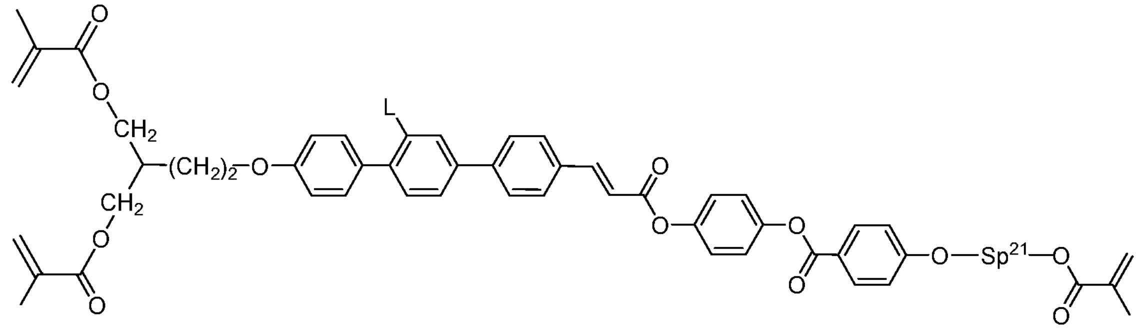

I-5-1a-3

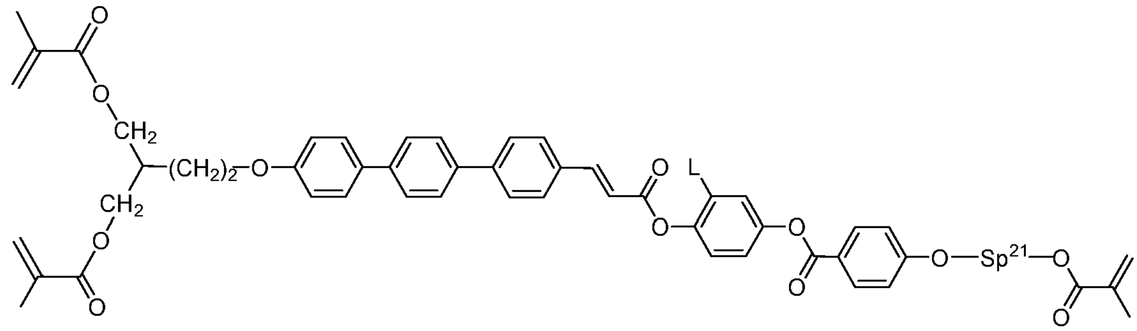

I-5-1a-4

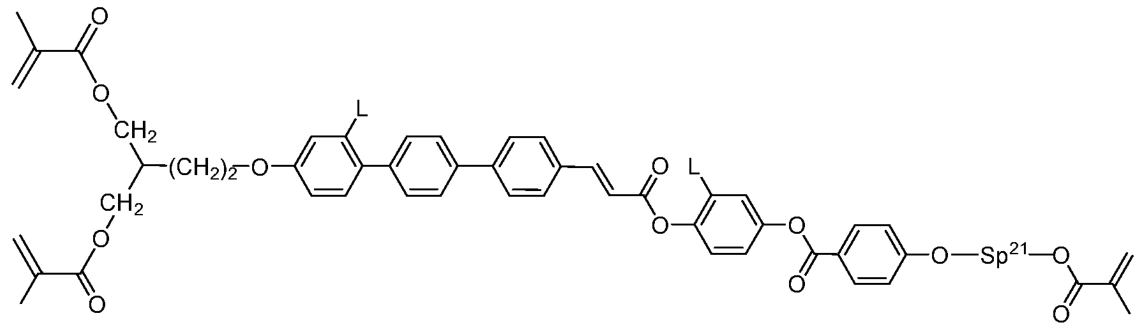

I-5-1a-5

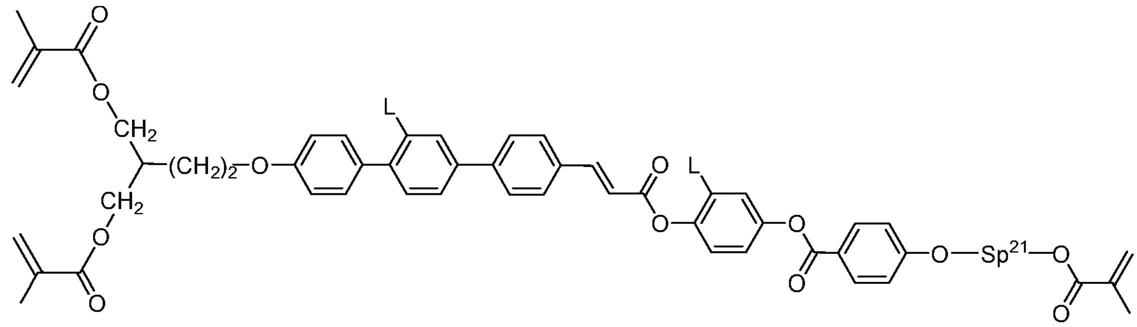

I-5-1a-6

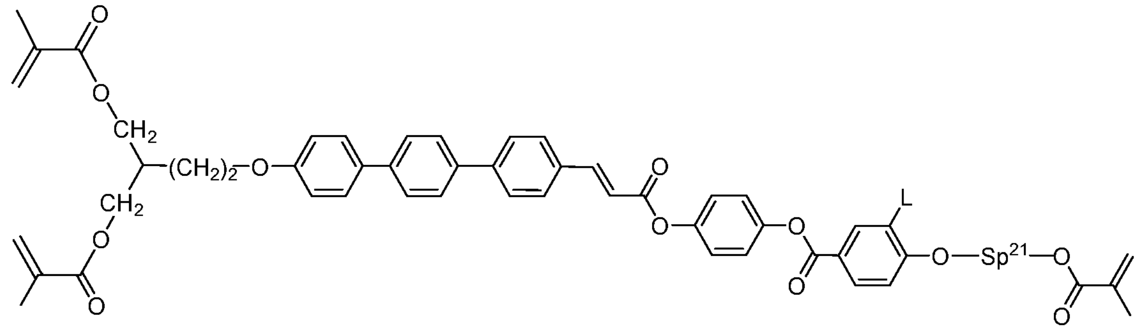

I-5-1a-7

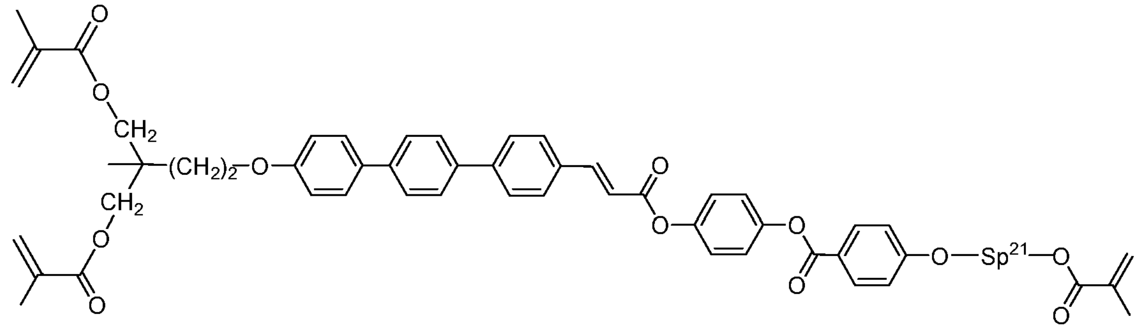

I-5-1a-8

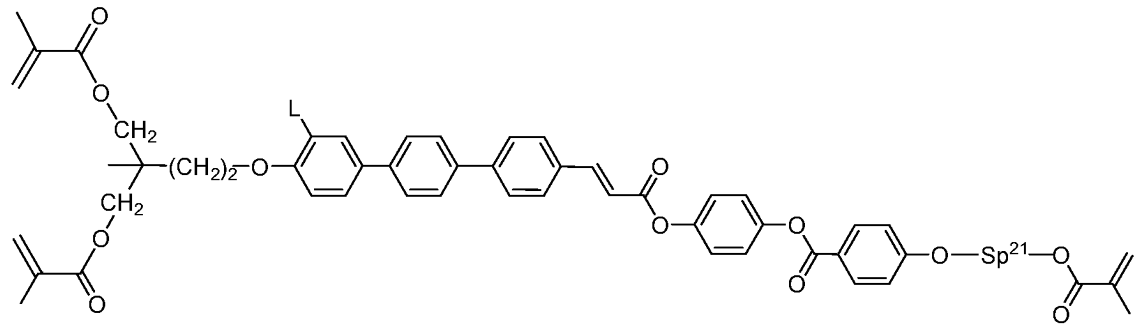

I-5-1a-9

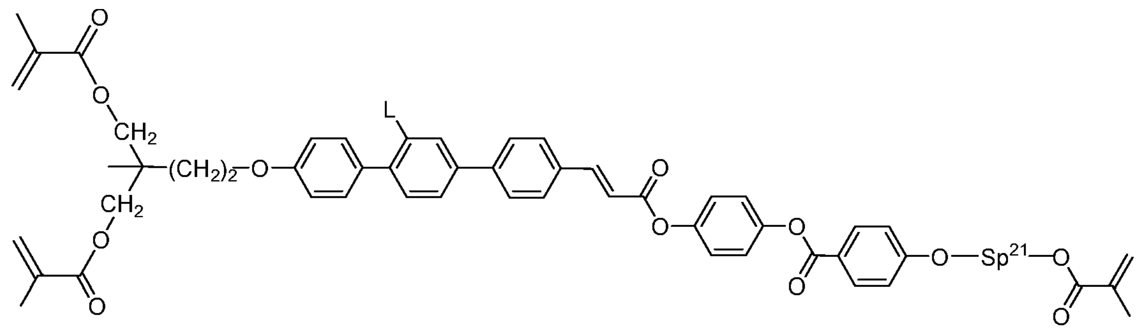

I-5-1a-10

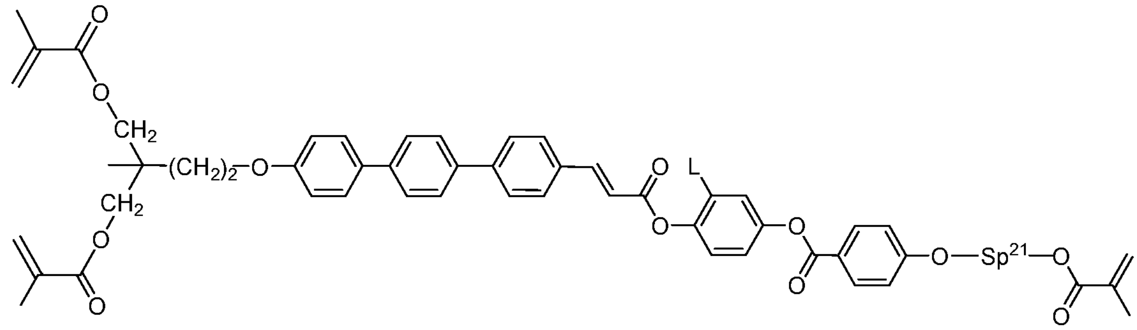

I-5-1a-11

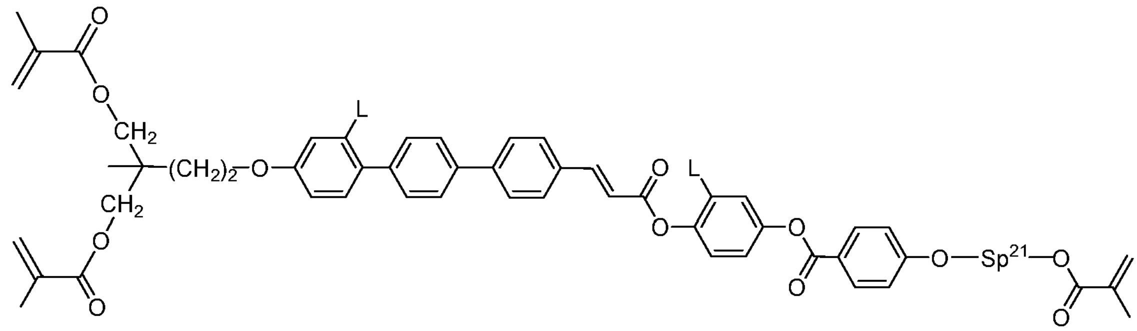

I-5-1a-12

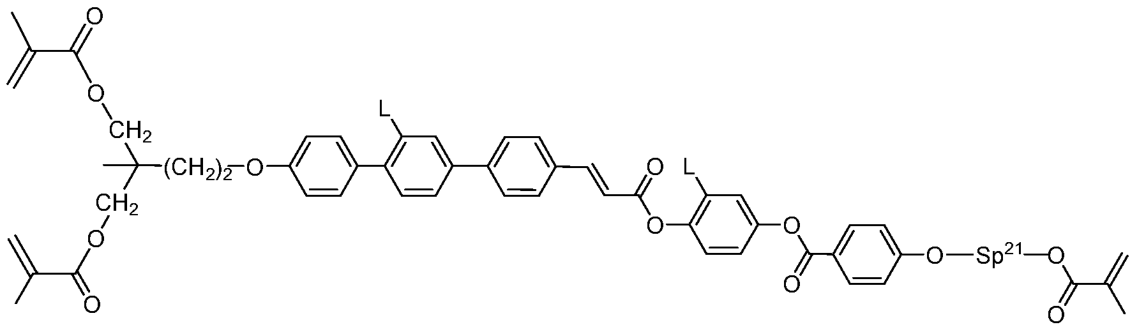

I-5-1a-13

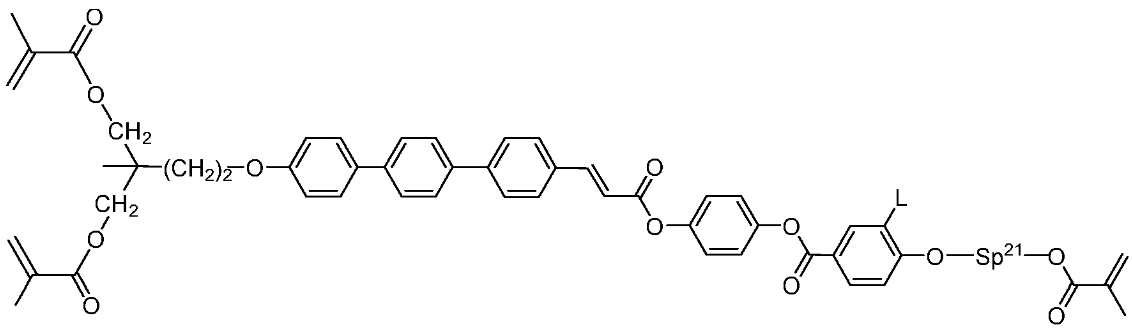

I-5-1a-14

L each and independently denotes F, Cl, alkoxy or alkyl both having 1 to 6 C Atoms,

$Sp^{21}$ denotes $-S^1-O-A^{Sp}$, or $-S^1-O-A^{Sp}-O-S^2-$ wherein $S^1$ is propylene, butylene, pentylene, hexylene, heptylene, octylene, nonylene, decylene, undecylene, dodecylene, $S^2$ is is propylene, butylene, pentylene, hexylene, heptylene, octylene, nonylene, decylene, undecylene, dodecylene,

$A^{Sp}$ denotes or

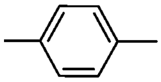 , 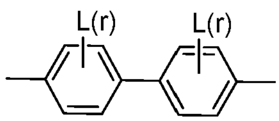 ,

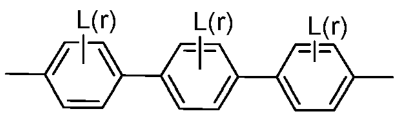

r denotes 0 or 1.

**5.** Use of compounds of formula I according to one or more of claims 1 to 4 in a liquid crystal mixture.

**6.** Liquid crystal mixture, **characterised in that** it comprises a component A) comprising one or more compounds of formula I according to one or more of claims 1 to 5, and a liquid-crystalline component B), comprising one or more mesogenic or liquid-crystalline compounds.

**7.** Liquid crystal mixture according to claim 6 **characterised in that** the total concentration of compounds of formula I in the mixture is in the range of from 0.01 to 10% by weight.

**8.** Liquid crystal mixture according to claim 6 or 7, **characterised in that** it additionally comprises a polymerizable component C) comprising one or more polymerizable mesogenic or polymerizable non-mesogenic compounds.

**9.** Liquid crystal mixture according to one or more of claims 6 to 8, **characterized in that** the LC host mixture has negative

dielectric anisotropy.

**10.** Liquid crystal mixture according to claim 9, **characterised in that** the LC host mixture comprises one or more compounds selected from the following formulae:

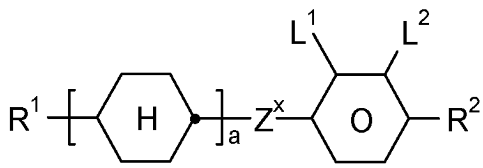

CY

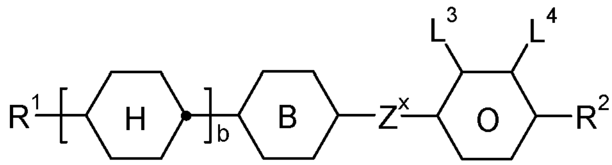

PY

wherein

a is 1 or 2,
b is 0 or 1, denotes

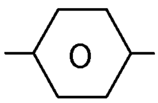 or 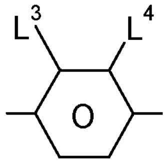

$R^1$ and $R^2$ each, independently of one another, denote alkyl having 1 to 12 C atoms, where, in addition, one or two non-adjacent $CH_2$ groups may be replaced independently of one another, by

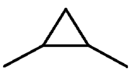, 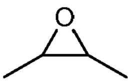, 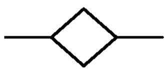,

-C≡C-, -

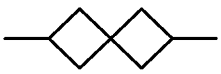, 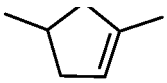, 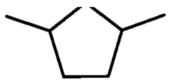,

$CF_2O$-, -$OCF_2$-, -CH=CH-, -O-, -CO-O- or -O-CO- in such a way that O atoms are not linked directly to one another,
$Z^X$ denotes -CH=CH-, -$CH_2O$-, -$OCH_2$-, -$CF_2O$- , -$OCF_2$-, -O-, -$CH_2$-, -$CH_2CH_2$- or a single bond,
$L^{1-4}$ each, independently of one another, denote F, Cl, $OCF_3$, $CF_3$, $CH_3$, $CH_2F$, $CHF_2$.

**11.** Liquid crystal mixture according to one or more of claims 6 to 8, **characterised in that** the LC host mixture has positive dielectric anisotropy.

**12.** Liquid crystal mixture according to claim 11, **characterised in that** the LC host mixture comprises one or more compounds selected from the group consisting of the compounds of the formulae II and III,

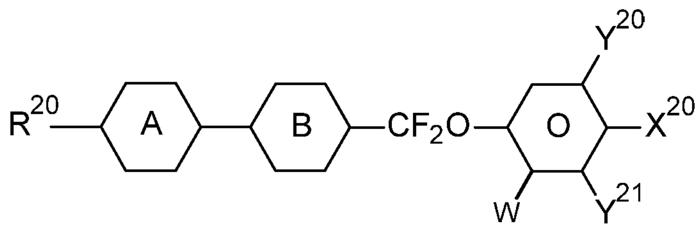

II

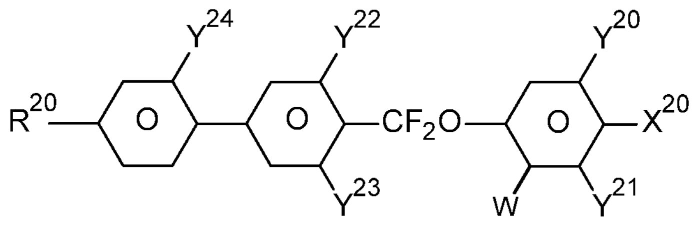

III

wherein

$R^{20}$ each, identically or differently, denote a halogenated or unsubstituted alkyl or alkoxy radical having 1 to 15 C atoms, where, in addition, one or more $CH_2$ groups in these radicals may each be replaced, independently of one another, by

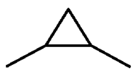 , 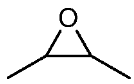 , 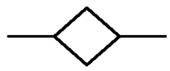 , 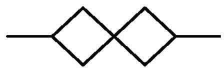 ,

-C≡C-, $-CF_2O-$, $-OCF_2-$, -CH=CH-,

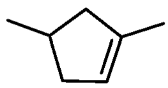 , 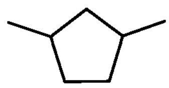 ,

-O-, -CO-O- or -O-CO- in such a way that O atoms are not linked directly to one another,
$X^{20}$ each, identically or differently, denote F, Cl, CN, $SF_5$, SCN, NCS, a halogenated alkyl radical, a halogenated alkenyl radical, a halogenated alkoxy radical or a halogenated alkenyloxy radical, each having up to 6 C atoms, and
$Y^{20-24}$ each, identically or differently, denote H or F,
W denotes H, methyl, ethyl, methoxy or ethoxy, each, identically or differently, denote

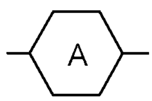 and 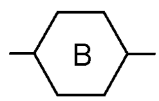

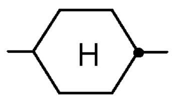 ,

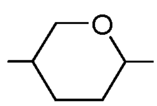 or 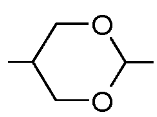 .

**13.** Liquid crystal mixture according to claim 11 or 12, **characterised in that** it comprises one or more compounds selected from the group consisting of compounds of formulae XI and XII

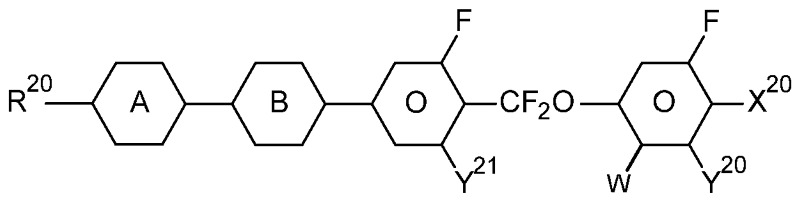

XI

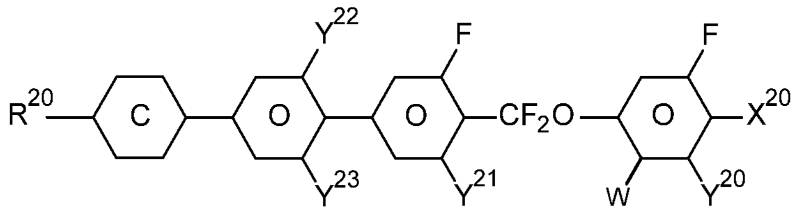

XII

wherein $R^{20}$, $X^{20}$, W and $Y^{20-23}$ have the meanings indicated in formula III in claim 12, and

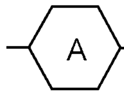 and 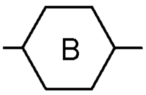

each, independently of one another, denote

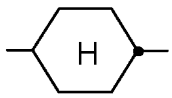 ,

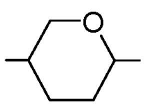 or 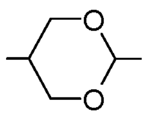

and

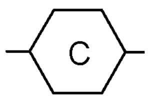

denotes

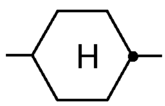 , 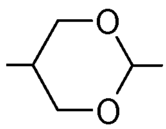 , 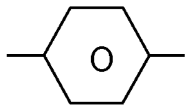

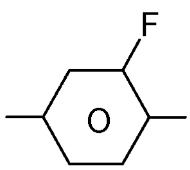 or 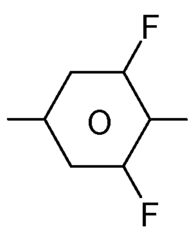

14. Liquid crystal mixture according to one or more of claims 6 to 13, **characterised in that** the LC host mixture comprises one or more compounds of the following formula:

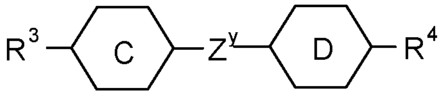

ZK

in which the individual radicals have the following meanings:

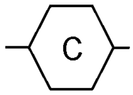

denotes

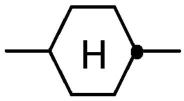 , 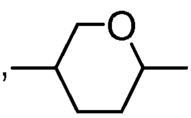 , 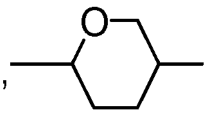 ,

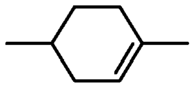 or 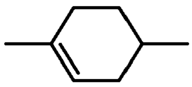 ,

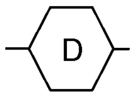

denotes

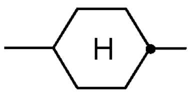 or 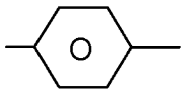 ,

$R^3$ and $R^4$ each, independently of one another, denote alkyl having 1 to 12 C atoms, in which, in addition, one or two non-adjacent $CH_2$ groups may be replaced independently of one another, by

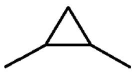 , 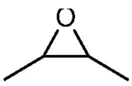 ,

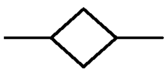 , 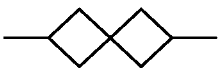 , 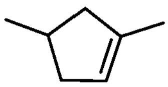 , 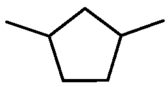

,-C≡C-, $-CF_2O-$, $-OCF_2-$, -CH=CH-, -O-, -CO-O- or -O-COin such a way that O atoms are not linked directly to one another,

$Z^y$ denotes $-CH_2CH_2-$, -CH=CH-, $-CF_2O-$, $-OCF_2-$, $-CH_2O-$, $-OCH_2-$, -CO-O-, -O-CO-, $-C_2F_4-$, -CF=CF-, -CH=CH-$CH_2O-$ or a single bond.

**15.** Liquid crystal mixture according to one or more of claims 6 to 14, **characterised in that** the LC host mixture comprises one or more compounds of the following formulae

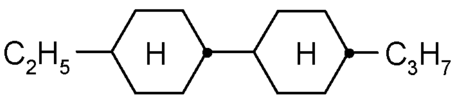

ZK1a

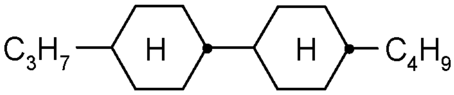

ZK1b

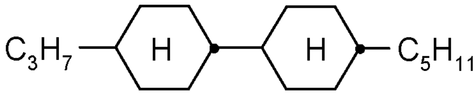

ZK1c

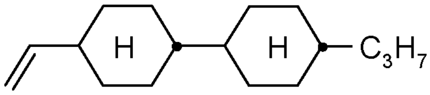

ZK3a

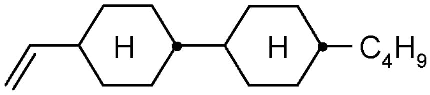

ZK3b

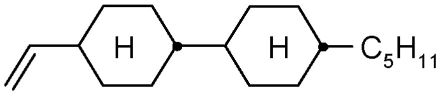

ZK3c

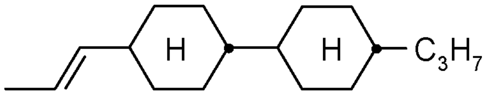

ZK3d

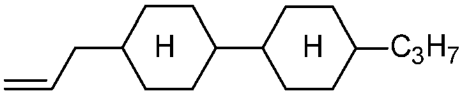

ZK3e

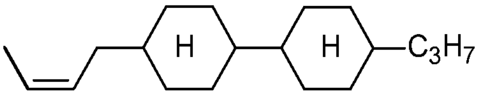

ZK3f

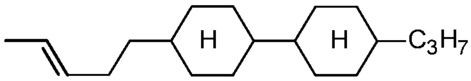

ZK3g

wherein the propyl, butyl and pentyl groups are straight-chain groups.

**16.** Liquid crystal mixture according to one or more of claims 6 to 15, **characterised in that** the LC host mixture comprises one or more compounds selected from the following formulae:

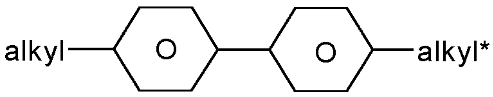

B1

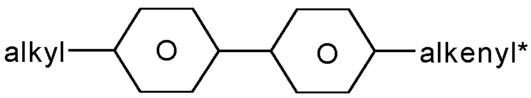

B2

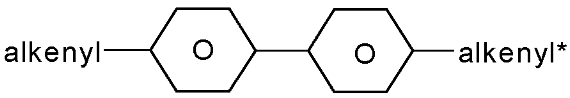

B3

in which alkyl and alkyl* each, independently of one another, denote a straight-chain alkyl radical having 1-6 C atoms,

and alkenyl and alkenyl* each, independently of one another, denote a straight-chain alkenyl radical having 2-6 C atoms.

**17.** Liquid crystal mixture according to one or more of claims 6 to 16, **characterised in that** the LC host mixture comprises one or more compounds selected from the following formulae:

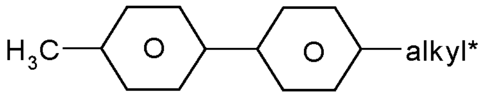

B1a

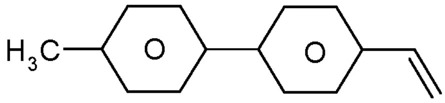

B2a

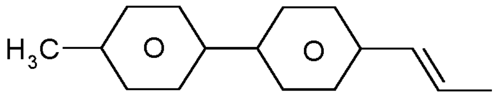

B2b

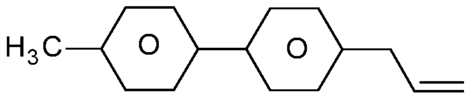

B2c

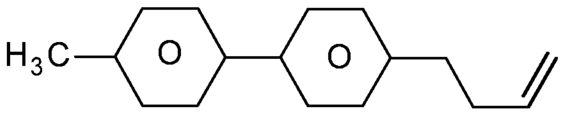

B2d

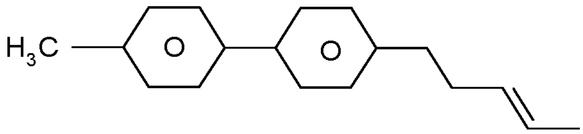

B2e

in which alkyl* denotes an alkyl radical having 1-6 C atoms.

**18.** Use of the liquid crystal mixture according to one or more of claims 6 to 17 for the fabrication of a liquid crystal display.

**19.** Process for the fabrication of a liquid crystal display, comprising at least the steps of:

- providing a first substrate which includes a pixel electrode and a common electrode for generating an electric field substantially parallel to a surface of the first substrate in the pixel region;
- providing a second substrate, the second substrate being disposed opposite to the first substrate;
- interposing a liquid crystal mixture according to one or more of claims 6 to 17;
- irradiating the liquid crystal mixture with linearly polarised light causing photoalignment of the liquid crystal;
- curing the polymerizable compounds of the liquid crystal mixture by irradiation with ultraviolet light or visible light having a wavelength of 450 nm or below.

**20.** Process according to claim 19, **characterised in that** the linearly polarised light is ultraviolet light or visible light having a wavelength of 450nm or below.

**21.** Display, obtainable by a process according to claim 19 or 20.

**Patentansprüche**

**1.** Verbindung der Formel I,

$$R^{11}\text{-}Sp^{11}\text{-}X^{11}[\text{-}A\text{-}Z]_o\text{-}A^{11}\text{-}CY^{11}{=}Cy^{12}[\text{-}C{=}O]_x[\text{-}O]_y\text{-}A[\text{-}Z\text{-}A]_p\text{-}X^{21}\text{-}Sp^{21}\text{-}R^{21} \qquad I$$

bei der

$A^{11}$ einen Rest bedeutet, der ausgewählt ist aus den folgenden Gruppen:

a) einer Gruppe bestehend aus 1,4-Phenylen und 1,3-Phenylen, bei denen gegebenenfalls zusätzlich eine oder zwei CH-Gruppen durch N ersetzt sind und bei denen gegebenenfalls zusätzlich ein oder mehrere H-Atome durch L ersetzt sind,

b) einer Gruppe ausgewählt aus der Gruppe bestehend aus

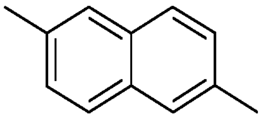,
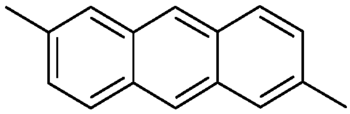,

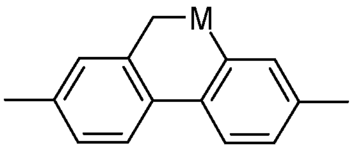,
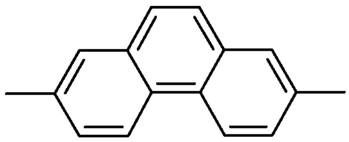,

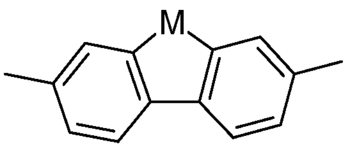,
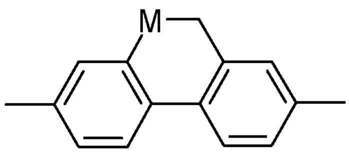,

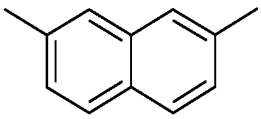,
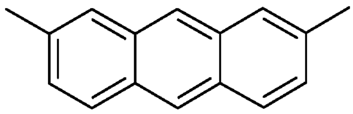,

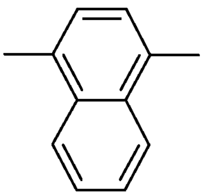,
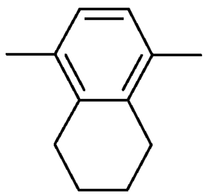,

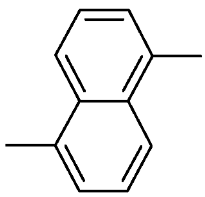,

wobei in diesen Resten gegebenenfalls zusätzlich ein oder mehrere H-Atome durch L ersetzt sind und/oder gegebenenfalls eine oder mehrere Doppelbindungen durch Einfachbindungen ersetzt sind und/oder gegebenenfalls eine oder mehrere CH-Gruppen durch N ersetzt sind,

A jeweils unabhängig voneinander bei jedem Auftreten eine der Bedeutungen für $A^{11}$ besitzen oder ausgewählt sind aus

a) einer Gruppe bestehend aus trans-1,4-Cyclohexylen, 1,4-Cyclohexenylen, bei denen gegebenenfalls zusätzlich eine oder mehrere nicht benachbarte $CH_2$-Gruppen durch -O- und/oder -S- ersetzt sind und bei denen gegebenenfalls zusätzlich ein oder mehrere H-Atome durch F ersetzt sind, oder

b) einer Gruppe bestehend aus Tetrahydropyran-2,5-diyl, 1,3-Dioxan-2,5-diyl, Tetrahydrofuran-2,5-diyl, Cyclobutan-1,3-diyl, Piperidin-1,4-diyl, Thiophen-2,5-diyl und Selenophen-2,5-diyl, die jeweils auch ein- oder mehrfach durch L substituiert sein können,

L bei jedem Auftreten gleich oder verschieden -OH, -F, -Cl, -Br, -I, -CN, $-NO_2$, $SF_5$, -NCO, -NCS, -OCN, -SCN, $-C(=O)N(R^z)_2$, $-C(=O)R^z$, $-N(R^z)_2$, gegebenenfalls substituiertes Silyl, gegebenenfalls substituiertes Aryl mit 6 bis 20 C-Atomen oder geradkettiges oder verzweigtes oder cyclisches Alkyl, Alkoxy, Alkylcarbonyl, Alkoxycarbonyl, Alkylcarbonyloxy oder Alkoxycarbonyloxy mit 1 bis 25 C-Atomen oder $X^{21}$-$Sp^{21}$-$R^{21}$ bedeutet,
M -O-, -S-, $-CH_2-$, $-CHR^z-$ oder $-CR^yR^z-$ bedeutet,
$R^y$ und $R^z$ jeweils unabhängig voneinander H, CN, F oder Alkyl mit 1-12 C-Atomen bedeuten, bei dem ein oder mehrere H-Atome gegebenenfalls durch F ersetzt sind,
$Y^{11}$ und $Y^{12}$ jeweils unabhängig voneinander H, F, Phenyl oder gegebenenfalls fluoriertes Alkyl mit 1-12 C-Atomen bedeuten,
Z unabhängig voneinander bei jedem Auftreten eine Einfachbindung, -COO-, -OCO-, -O-CO-O-, $-OCH_2-$, $-CH_2O-$, $-OCF_2-$, $-CF_2O-$, $-(CH_2)_n-$, $-CF_2CF_2-$, -CH=CH-, -CF=CF-, -CH=CH-COO-, -OCO-CH=CH-, -CO-S-, -S-CO-, -CS-S-, -S-CS-, -S-CSS- oder -C≡C- bedeutet,
n eine ganze Zahl zwischen 2 und 8 bedeutet,
o 0, 1 oder 2 bedeutet,
p 1 oder 2 bedeutet,
x und y jeweils und unabhängig 0 oder 1 bedeuten, jedoch unter der Bedingung, dass, wenn x 0 bedeutet, y nicht 1 bedeuten kann,
$Sp^{11}$ eine Spacergruppe mit 2 bis 20 C-Atomen bedeutet, bei der eine oder mehrere $CH_2$-Gruppen gegebenenfalls durch -O-, -S-, -NH-, $-N(CH_3)-$, -CO-, -O-CO-, -S-CO-, -O-COO-, -CO-S-, -CO-O-, $-CF_2-$, $-CF_2O-$, $-OCF_2-$ -CH(OH)-, -CH(Alkyl)-, -CH(Alkenyl)-, -CH(Alkoxyl)-, -CH(Oxaalkyl)-, -CH=CH- oder -C≡Cersetzt sind, jedoch derart, dass keine zwei O-Atome einander benachbart sind und keine zwei aus -O-CO-, -S-CO-, -O-COO-, -CO-S-, -CO-O- und -CH=CH- ausgewählten Gruppen einander benachbart sind, und
$Sp^{21}$ -S1-$A^{Sp}$-$S^2$-, -$S^1$-$X^{Sp}$-$A^{Sp}$-$X^{Sp}$-$S^2$-, -$S^1$-$A^{Sp}$-$X^{Sp}$-$S^2$ oder -$S^1$-$X^{Sp}$-$A^{Sp}$-$S^2$ bedeutet, bei denen $S^1$ $C_{3-12}$-Alkylen ist und $S^2$ eine Einfachbindung oder $C_{3-12}$-Alkylen ist, bei denen eine oder mehrere $CH_2$-Gruppen in $S^1$ oder $S^2$ gegebenenfalls durch -O-, -S-, -NH-, $-N(CH_3)-$, -CO-, -O-CO-, -S-CO-, -O-COO-, -CO-S-, -CO-O-, $-CF_2-$, $-CF_2O-$, $-OCF_2-$, -CH(OH)-, -CH(Alkyl)-, -CH(Alkenyl)-, -CH(Alkoxyl)-, -CH(Oxaalkyl)-, -CH=CH- oder -C≡Cersetzt sind, jedoch derart, dass keine zwei O-Atome einander benachbart sind und keine zwei aus -O-CO-, -S-CO-, -O-COO-, -CO-S-, -CO-O- und -CH=CH- ausgewählten Gruppen einander benachbart sind, und
$A^{Sp}$

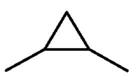, 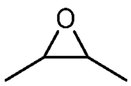, 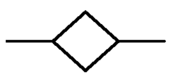, 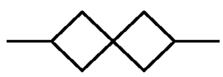, 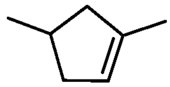,

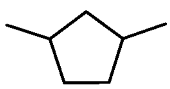, 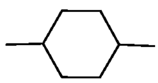, 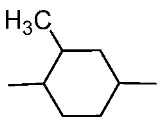, 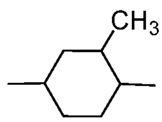,

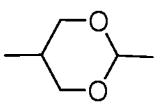, 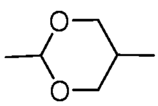, 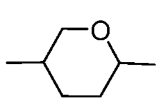, 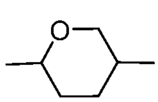,

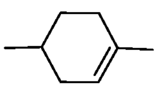, 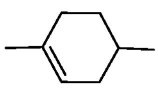, 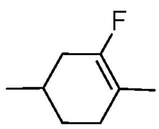, 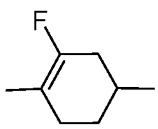,

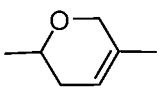, 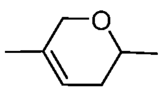, 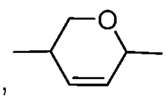, 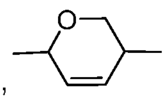,

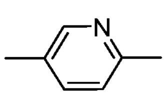 , 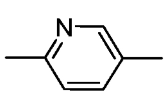 , 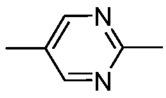 , 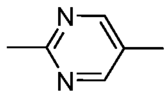 , 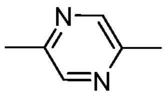 ,

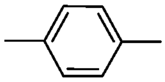 , 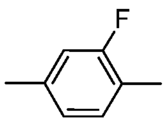 , 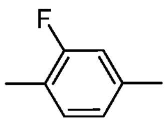 , 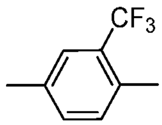 , 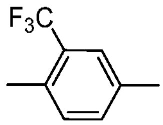 ,

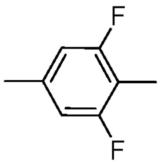 , 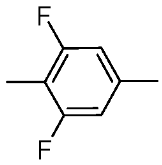 , 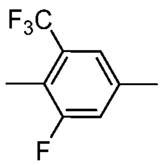 , 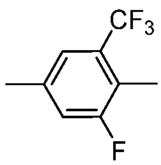 , 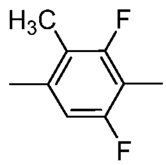 ,

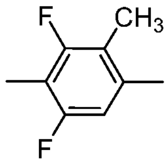 ,

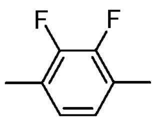 , 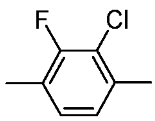 , 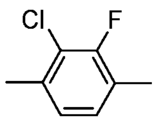 , 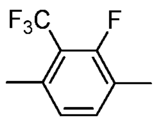 , 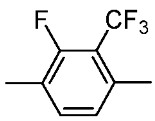 ,

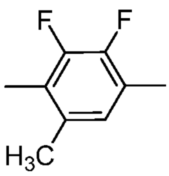 , 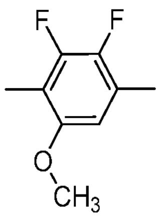 , 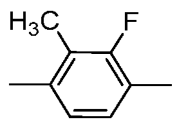 , 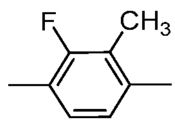 ,

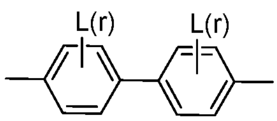 , 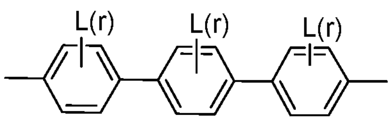 ,

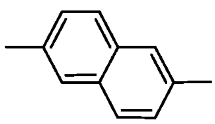 , 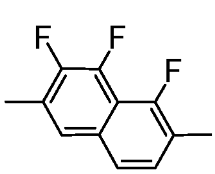 , 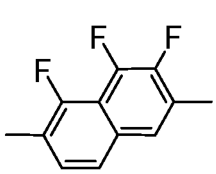 , 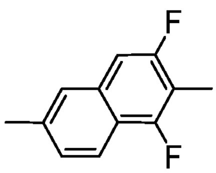 ,

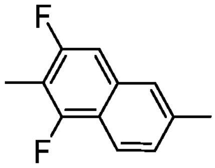 , 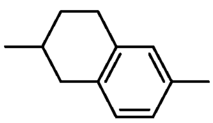 , 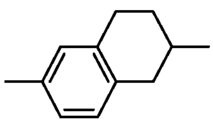 , 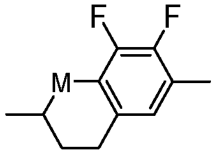 ,

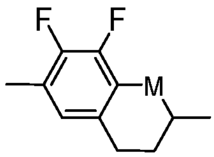 , 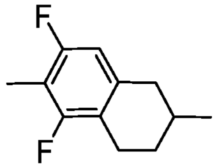 , 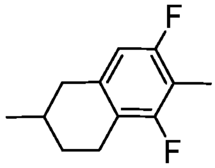 , 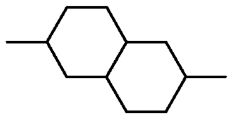 ,

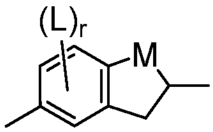 , 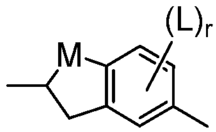 , 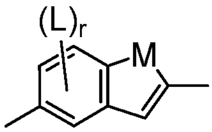 , 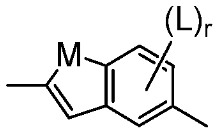 ,

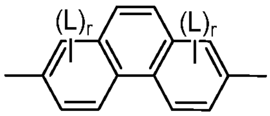 , 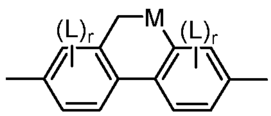 ,

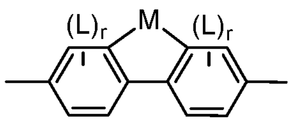 , 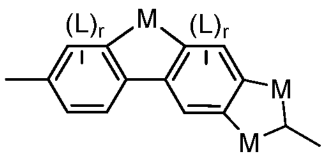 ,

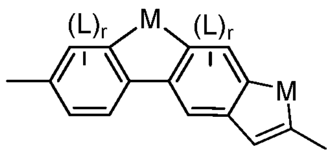

bedeutet,
L jeweils unabhängig voneinander Alkyl, Alkoxy, Halogen, $OCF_3$, $CF_3$, $CH_2F$, $CHF_2$ bedeutet,
r 0, 1, 2 oder 3 bedeutet,
M $CH_2$, CHF, $CF_2$, S oder O bedeutet,
$X^{Sp}$, $X^{11}$ und $X^{21}$ -CO-O-, -O-CO-, -O-COO-, -O-, -CH=CH-, -C≡C-, $-CF_2-O-$, $-O-CF_2-$, $-CF_2-CF_2-$, $-CH_2-O-$, $-O-CH_2-$, -CO-S-, -S-CO-, -CS-S-, -S-CS-, -S-CSS- oder -S-bedeuten,
$R^{11}$ und $R^{21}$ P, Halogen, CN oder gegebenenfalls fluoriertes Alkyl oder Alkenyl mit bis zu 15 C-Atomen, worin eine oder mehrere nicht benachbarte $CH_2$-Gruppen durch -O-, -S-, -CO-, -C(O)O-, -O-C(O)-, O-C(O)-O- ersetzt sein können, bedeuten, unter der Bedingung, dass mindestens einer von $R^{11}$ oder $R^{21}$ P bedeutet,
P eine polymerisierbare Gruppe bedeutet.

2. Verbindung nach Anspruch 1, **dadurch gekennzeichnet, dass** die Verbindung ausgewählt ist aus Verbindungen der folgenden Unterformeln

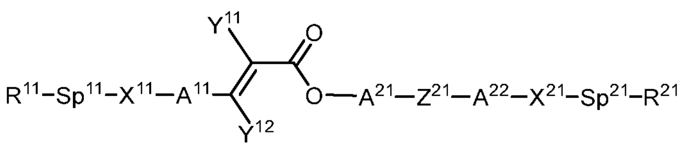

I-3

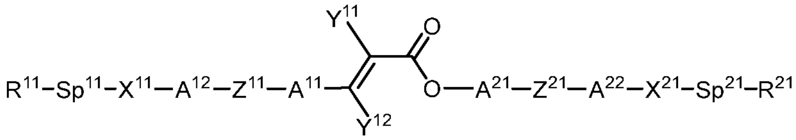

I-4

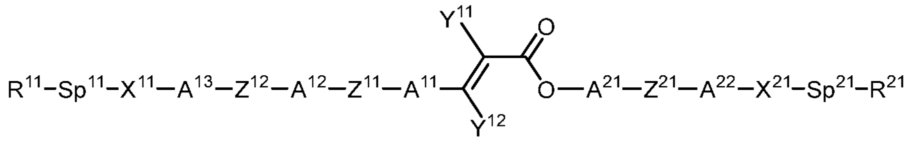

I-5

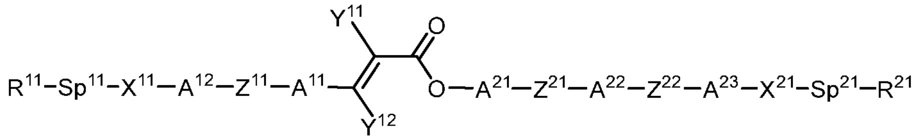

I-6

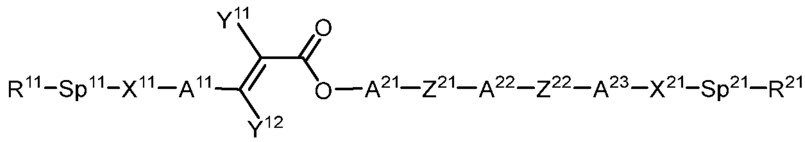

I-8

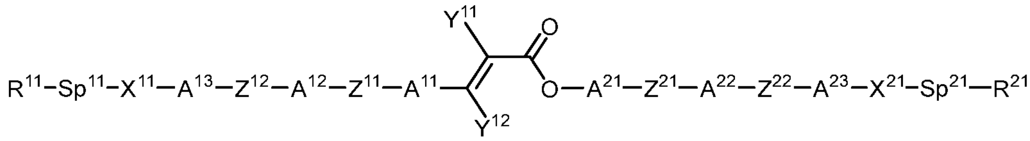

I-9

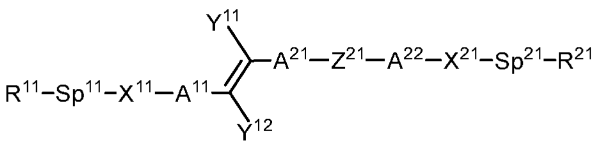

I-12

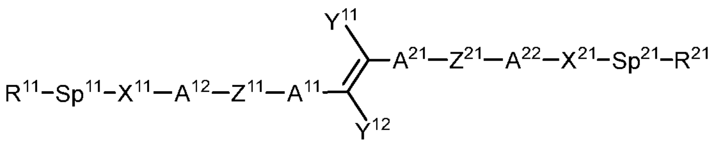

I-13

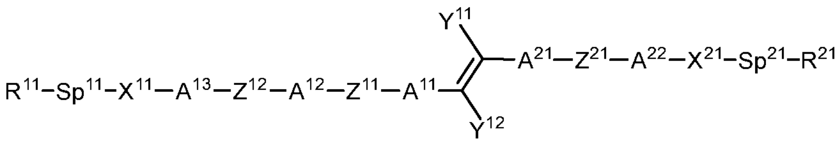

I-14

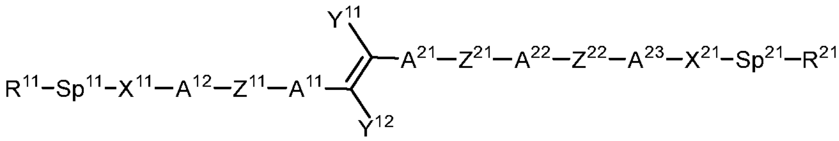

I-15

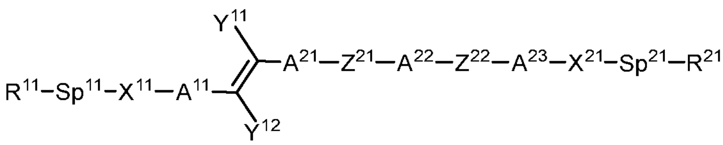

I-17

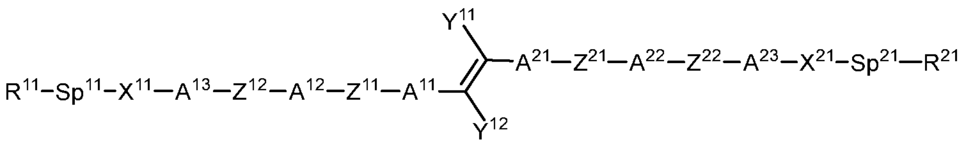

I-18

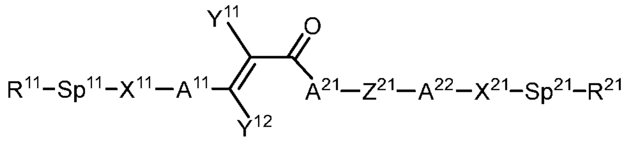

I-21

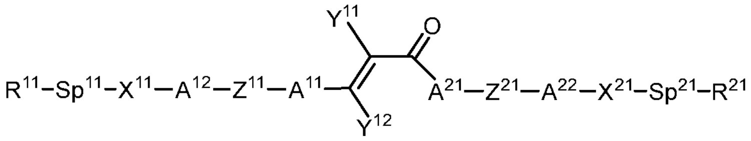

I-22

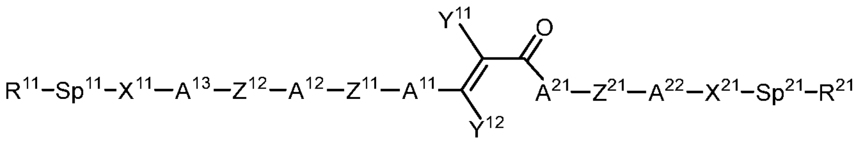

I-23

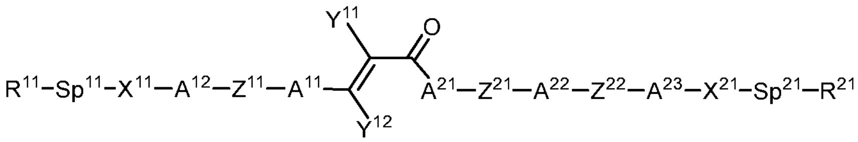

I-24

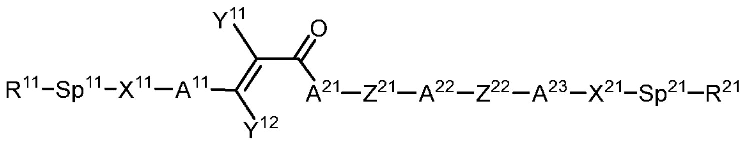

I-26

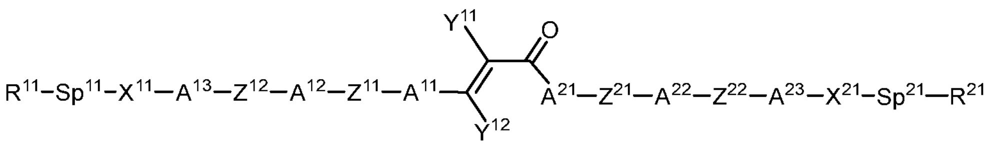

I-27

bei denen $R^{11}$, $R^{21}$, $A^{11}$, $X^{11}$, $X^{21}$, $Y^{11}$, $Y^{12}$, $Sp^{11}$ und $Sp^{21}$ bei jedem Auftreten und jeweils und unabhängig voneinander eine der Bedeutungen wie in Anspruch 1 genannt besitzen,

$A^{12}$ bis $A^{23}$ jeweils und unabhängig voneinander eine der Bedeutungen für A wie in Anspruch 1 genannt besitzen, und
$Z^{11}$ bis $Z^{22}$ jeweils und unabhängig voneinander eine der Bedeutungen für Z wie in Anspruch 1 genannt besitzen.

3. Verbindung nach Anspruch 1 oder 2, **dadurch gekennzeichnet, dass** die Verbindung ausgewählt ist aus den folgenden Verbindungen

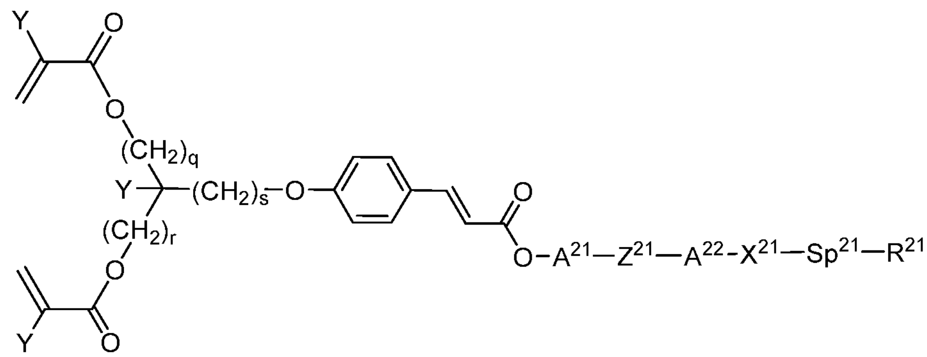

I-3-1

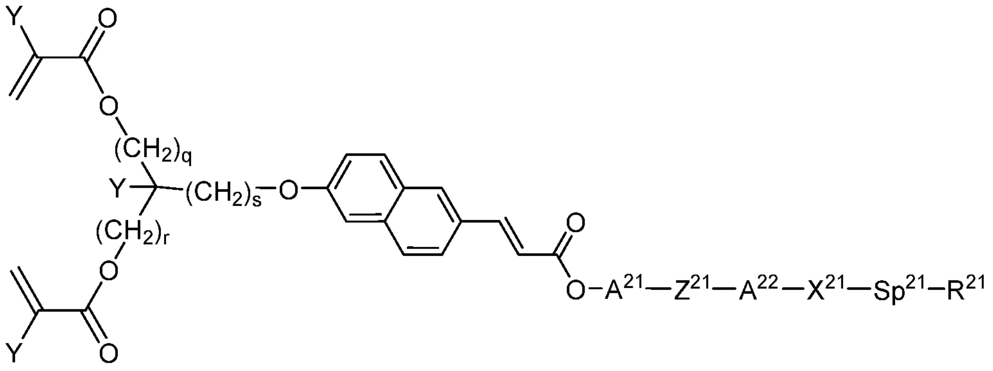

I-3-2

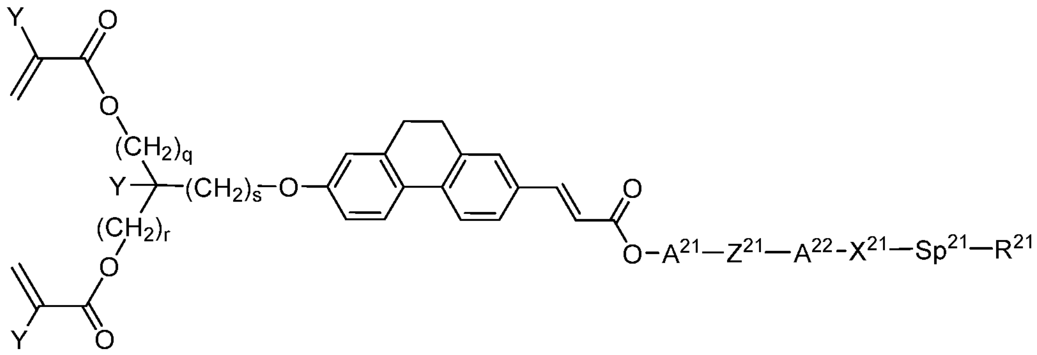

I-3-3

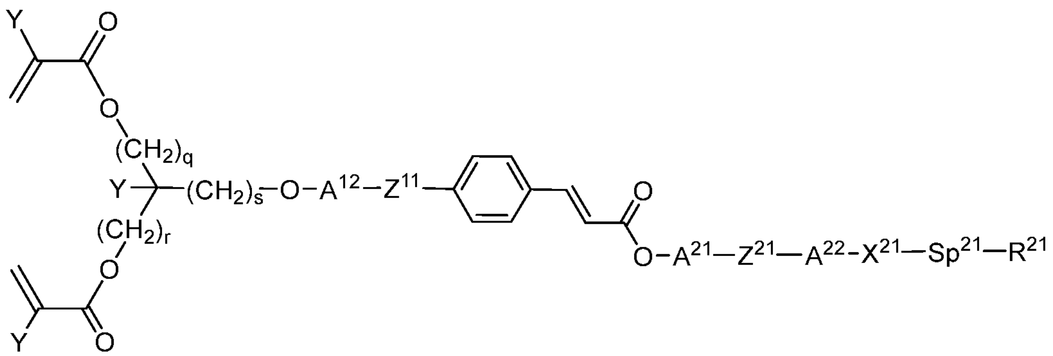

I-4-1

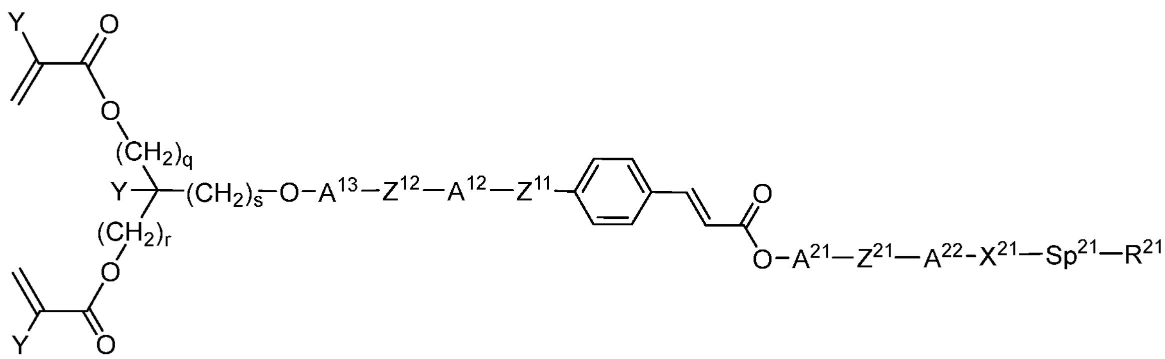

I-5-1

bei denen $R^{21}$, $X^{21}$ und $Sp^{21}$ eine der Bedeutungen wie in Anspruch 1 genannt besitzen, $Z^{11}$, $Z^{12}$ und $Z^{21}$ eine der

Bedeutungen für Z wie in Anspruch 1 unter Formel I genannt besitzen, r und q 1, 2 oder 3 bedeuten, s eine ganze Zahl von 1 bis 6 bedeutet und $A^{12}$, $A^{13}$, $A^{21}$ und $A^{22}$ eine der Bedeutungen für A wie in Anspruch 1 unter Formel I genannt besitzen und Y H, Methyl oder Ethyl bedeutet.

**4.** Verbindung nach einem oder mehreren der Ansprüche 1 bis 3, **dadurch gekennzeichnet, dass** sie ausgewählt ist aus Verbindungen der folgenden Unterformeln,

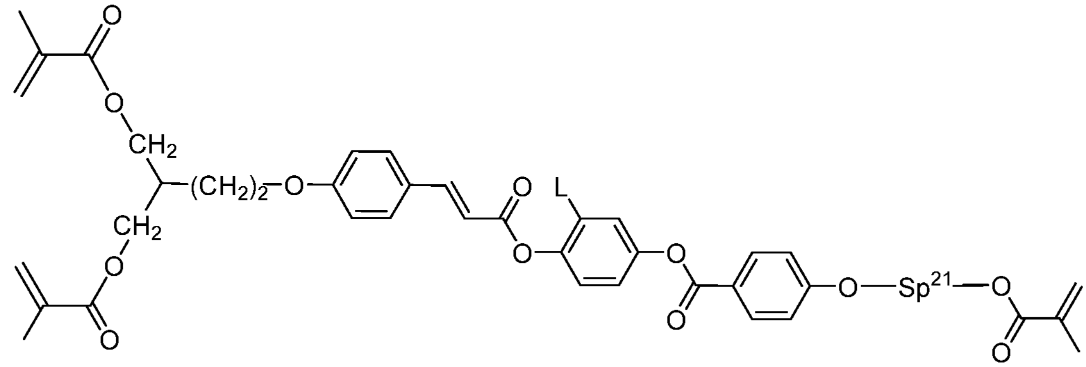

I-3-1a-1

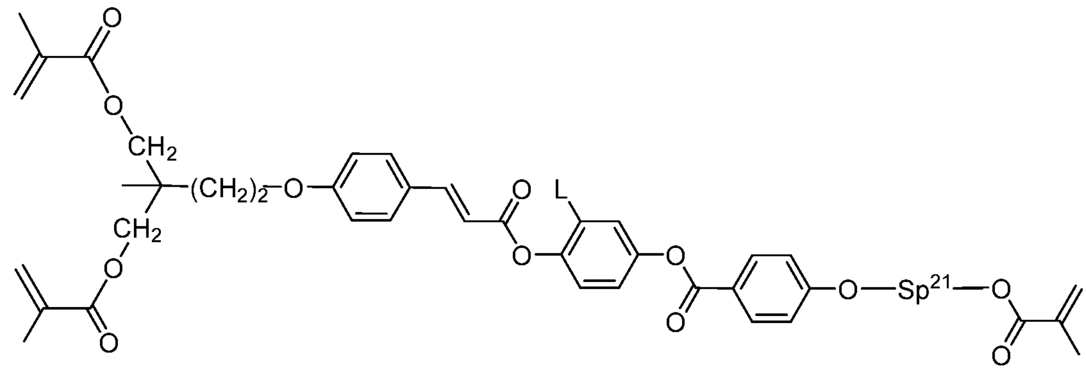

I-3-1a-2

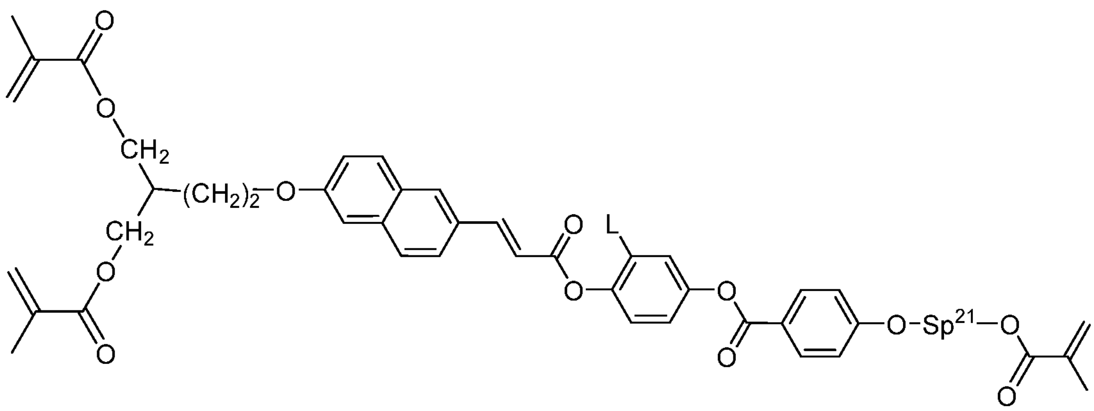

I-3-2a-3

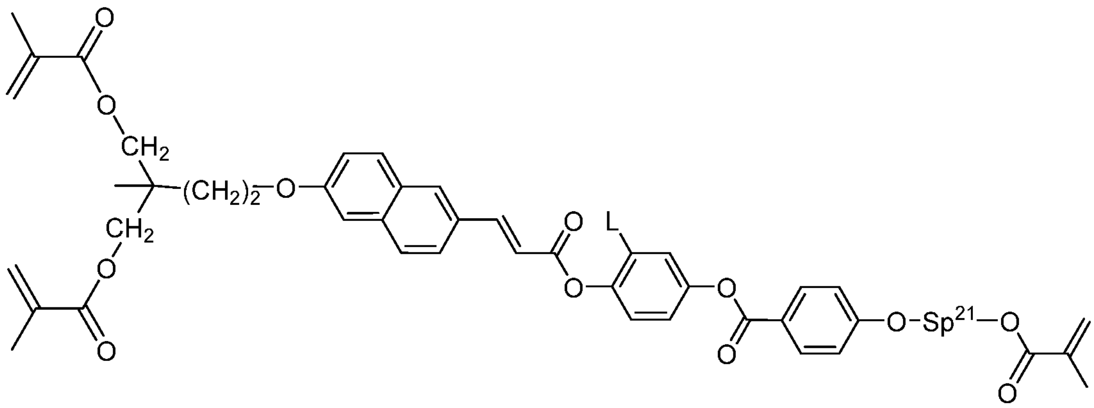

I-3-2a-4

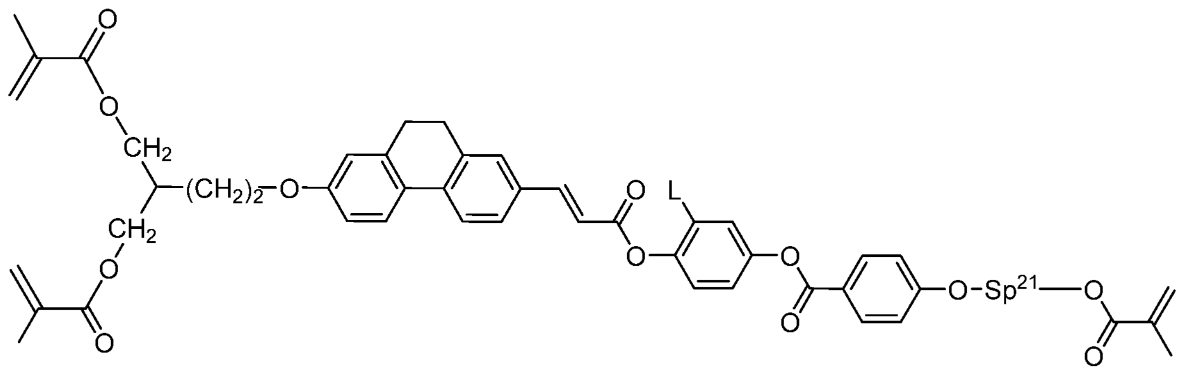

I-3-3a-5

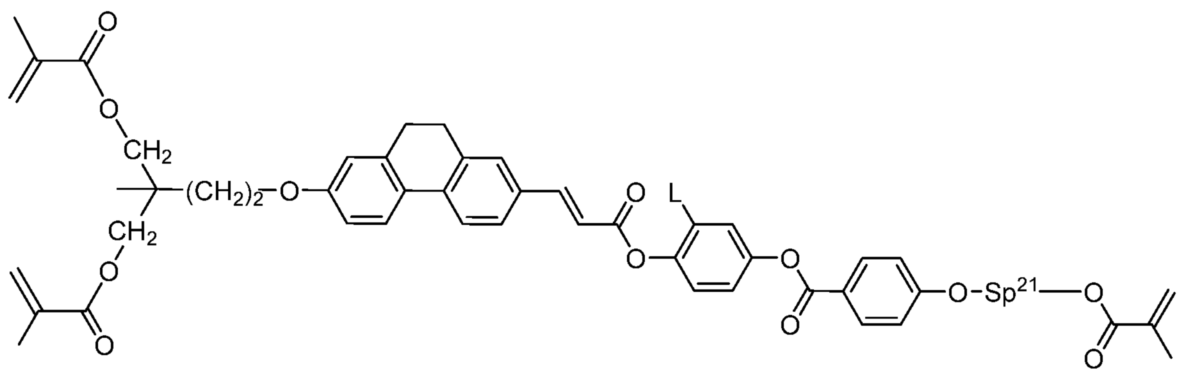

I-3-3a-6

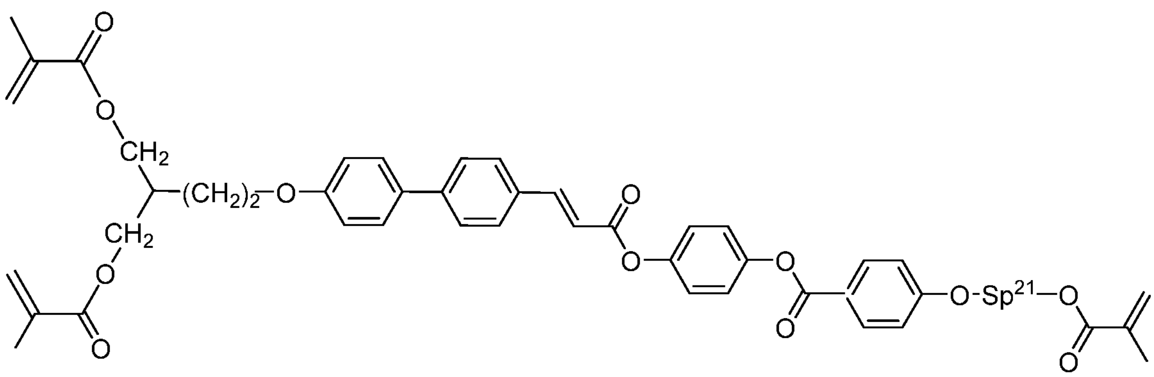

I-4-1a-1

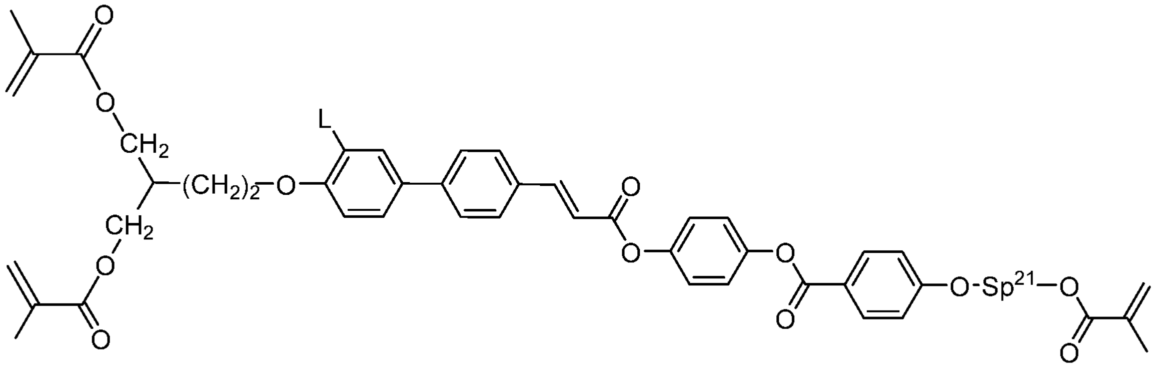

I-4-1a-2

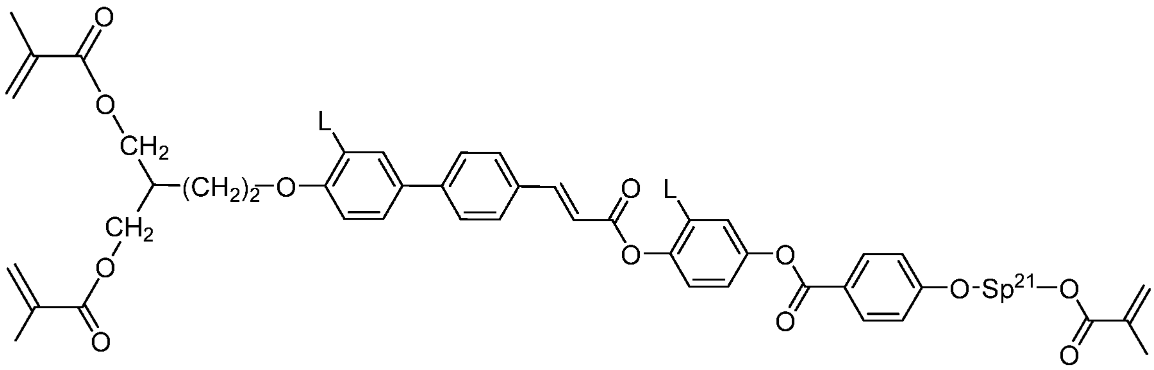

I-4-1a-3

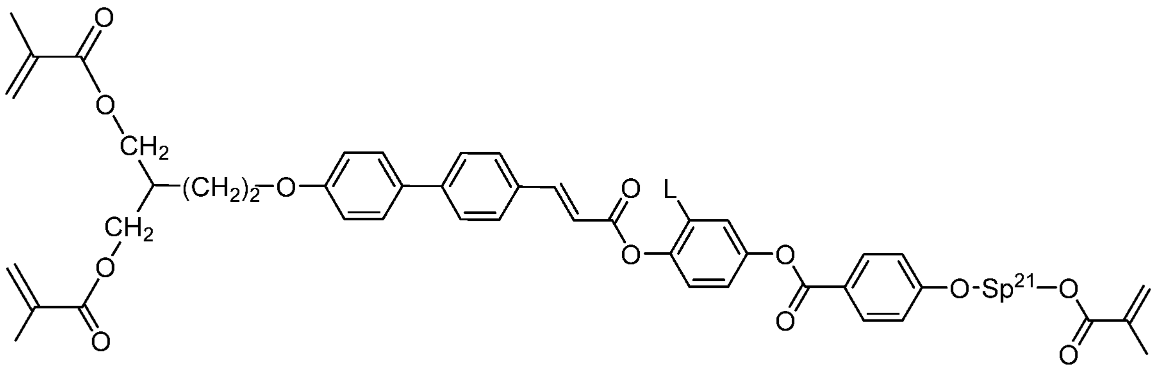

I-4-1a-4

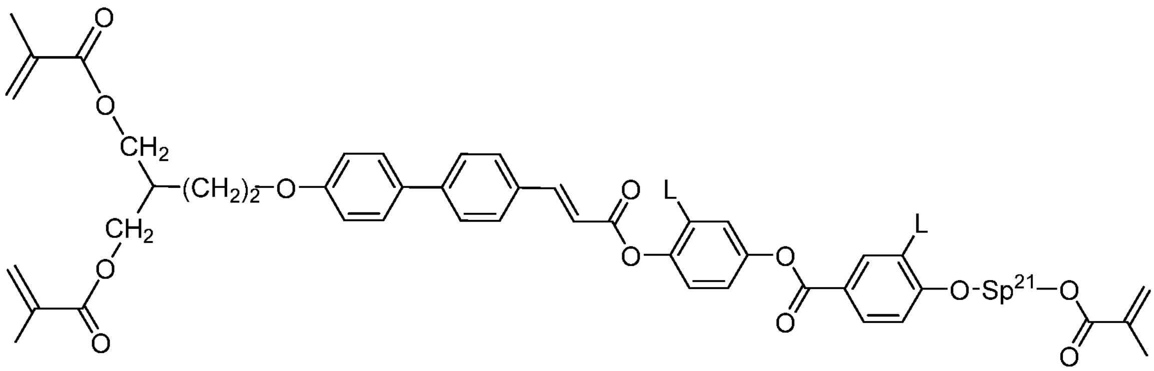

I-4-1a-5

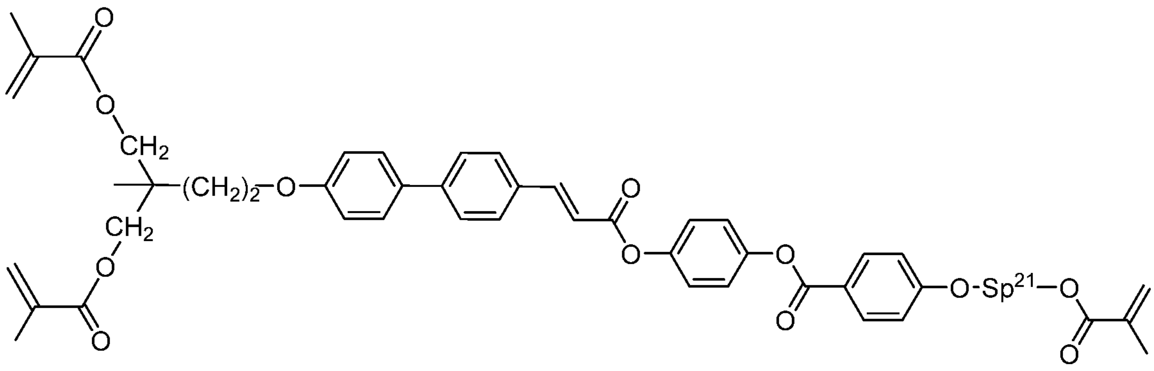

I-4-1a-6

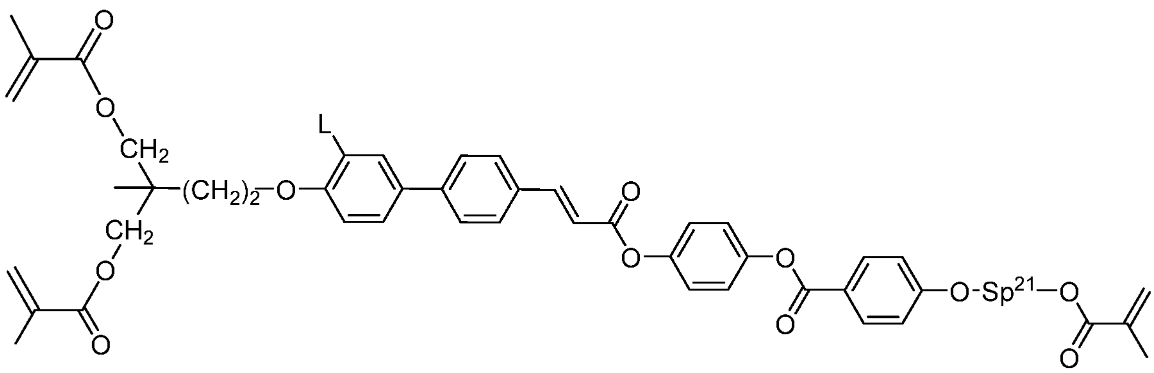

I-4-1a-7

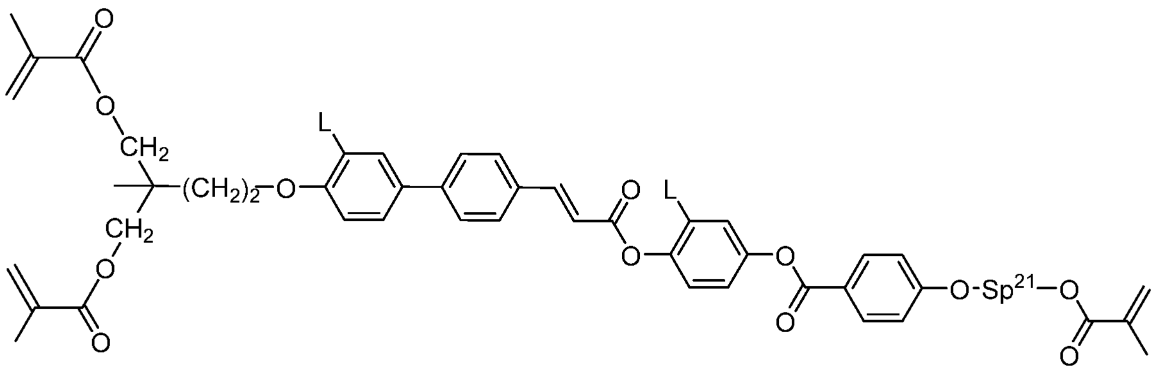

I-4-1a-8

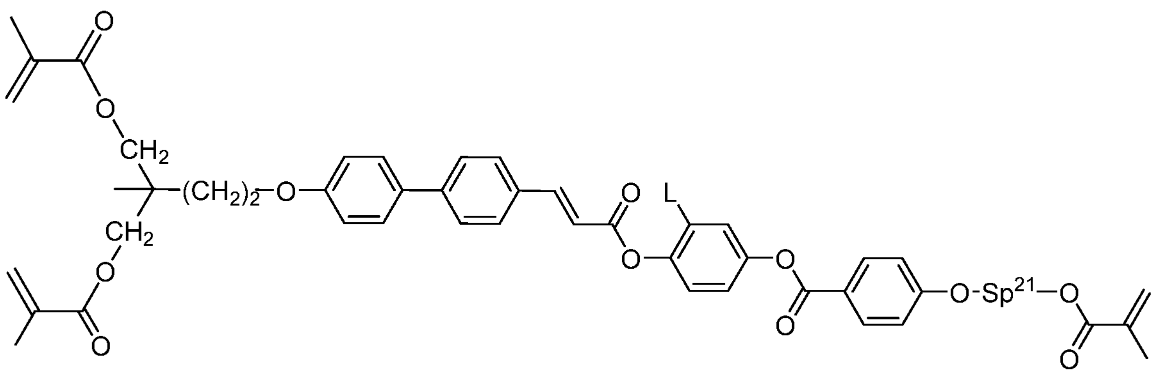

I-4-1a-9

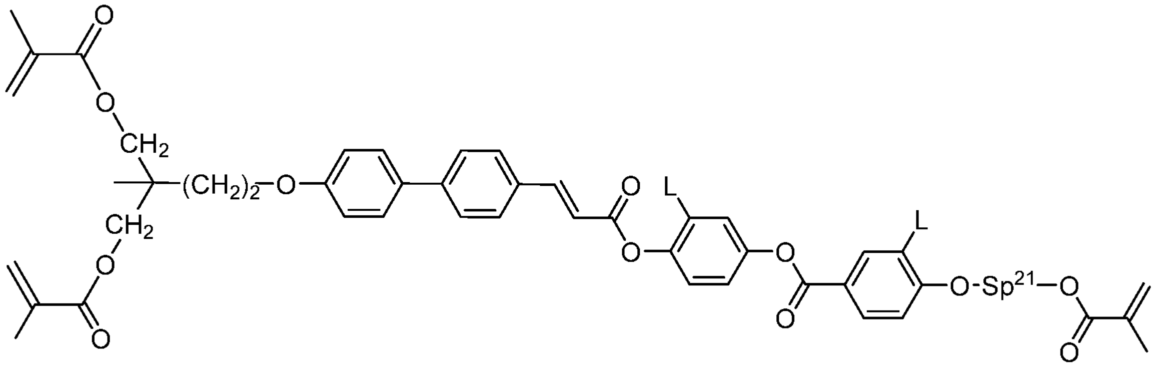

I-4-1a-10

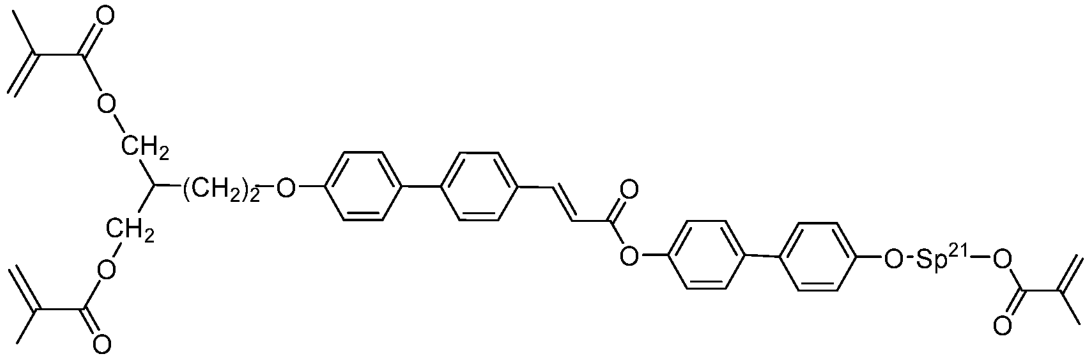

I-4-1a-1

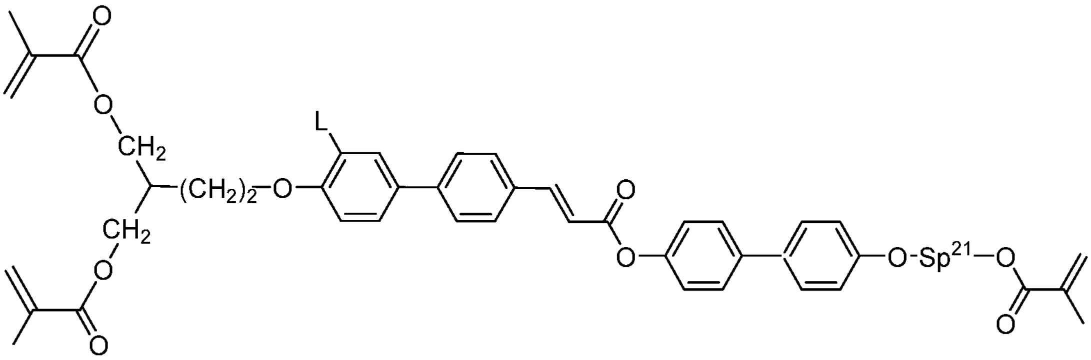

I-4-1a-2

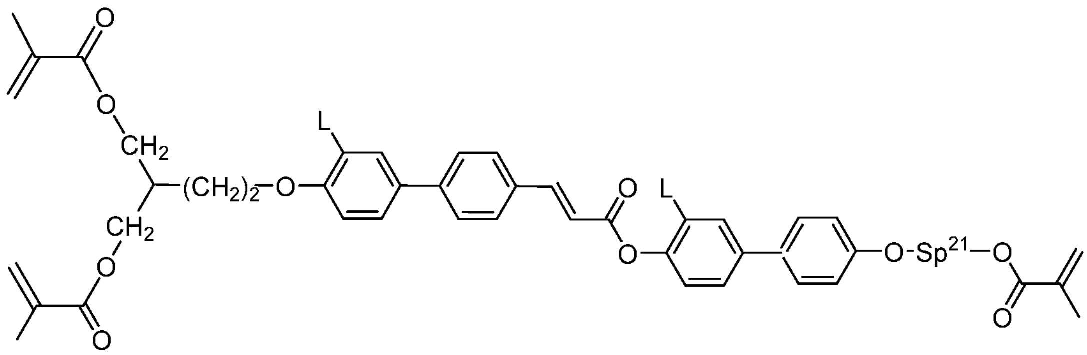

I-4-1a-3

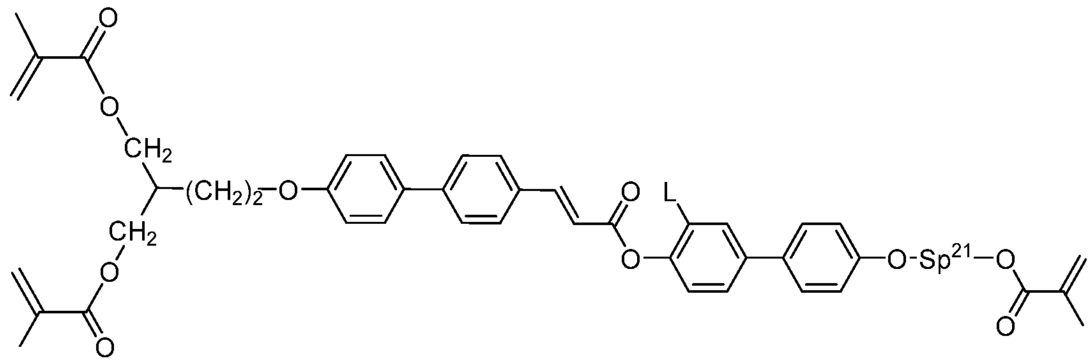

I-4-1a-4

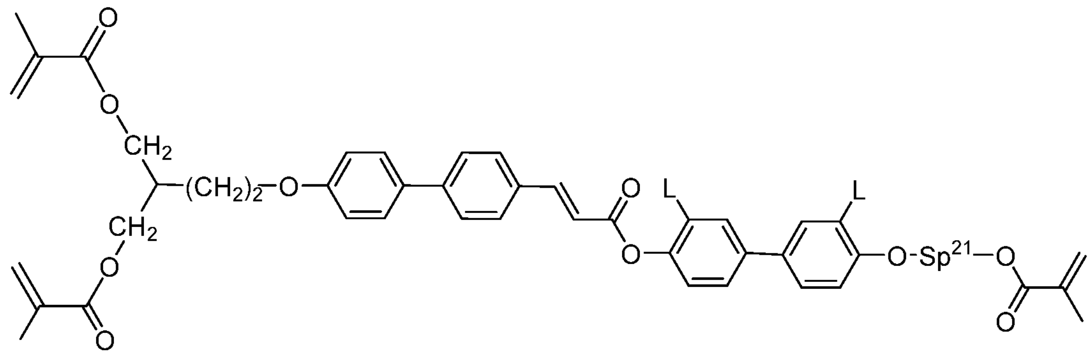

I-4-1a-5

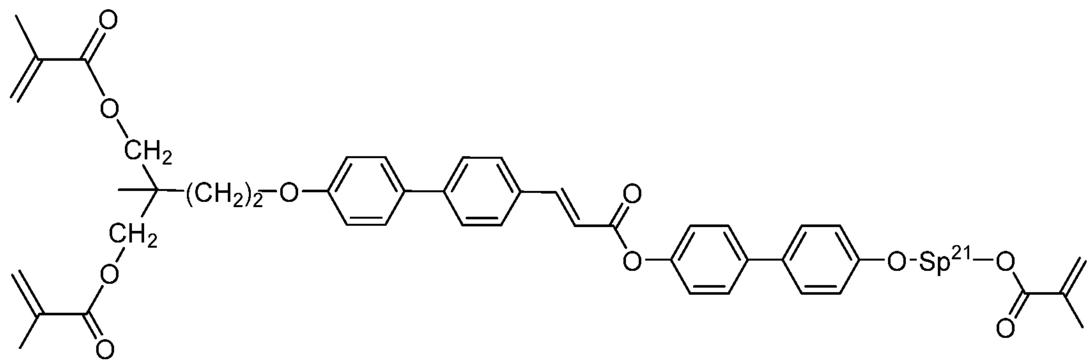

I-4-1a-6

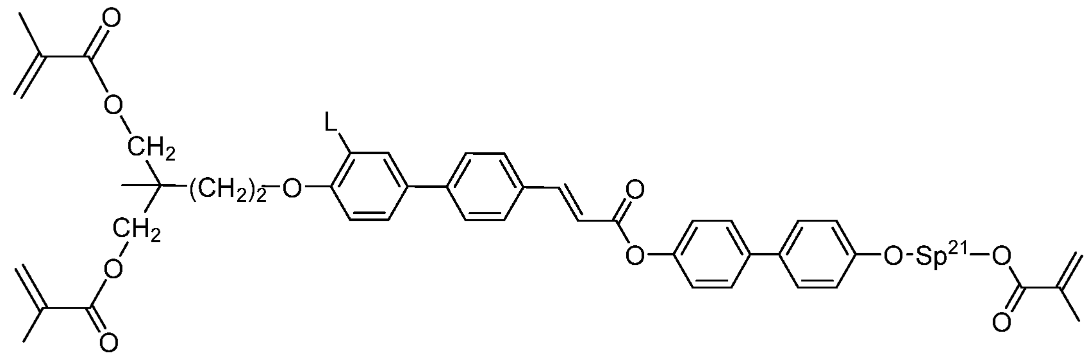

I-4-1a-7

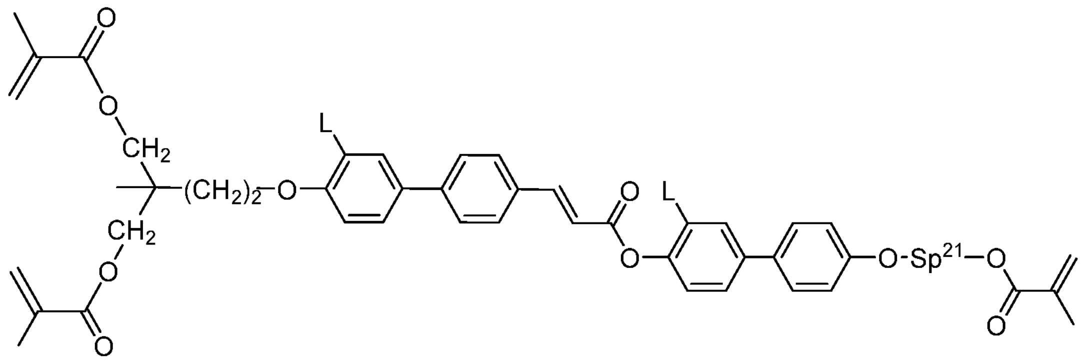

I-4-1a-8

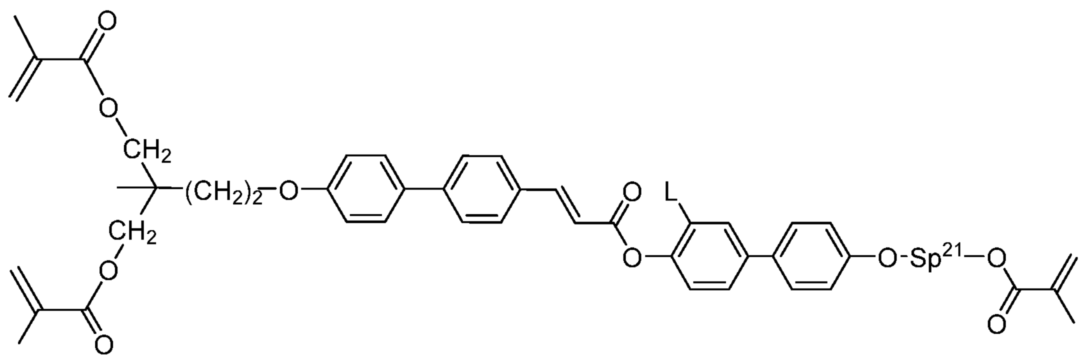

I-4-1a-9

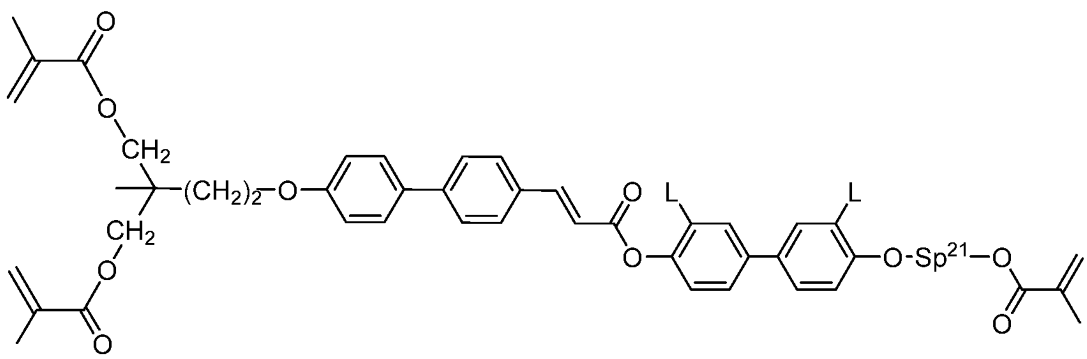

I-4-1a-10

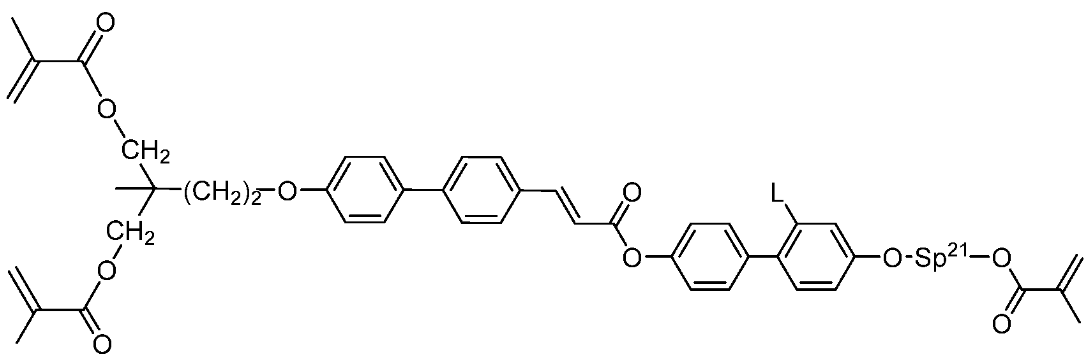

I-4-1a-11

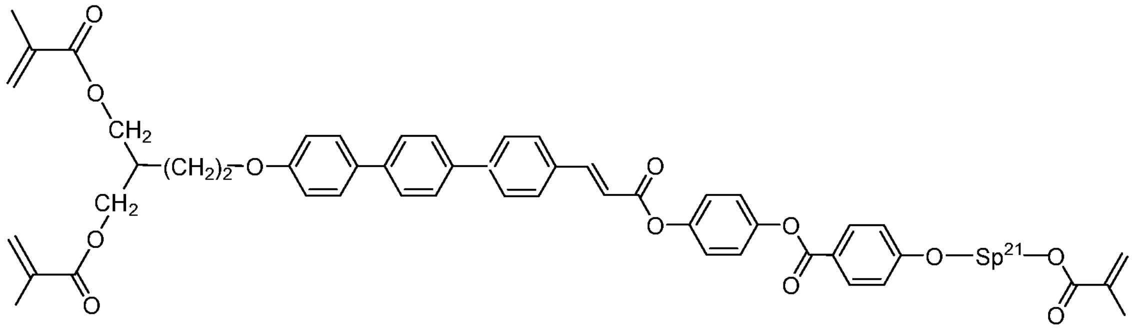

I-5-1a-1

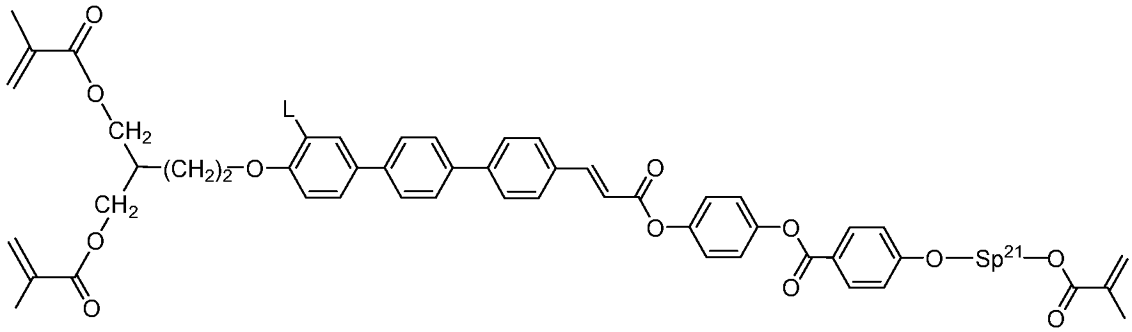

I-5-1a-2

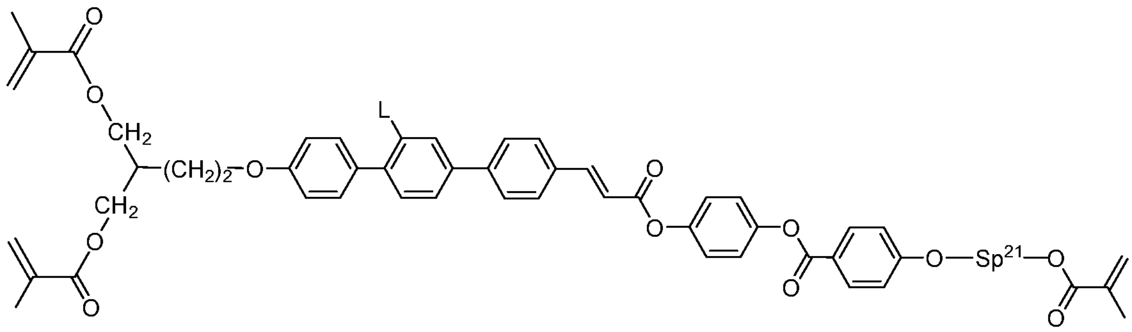

I-5-1a-3

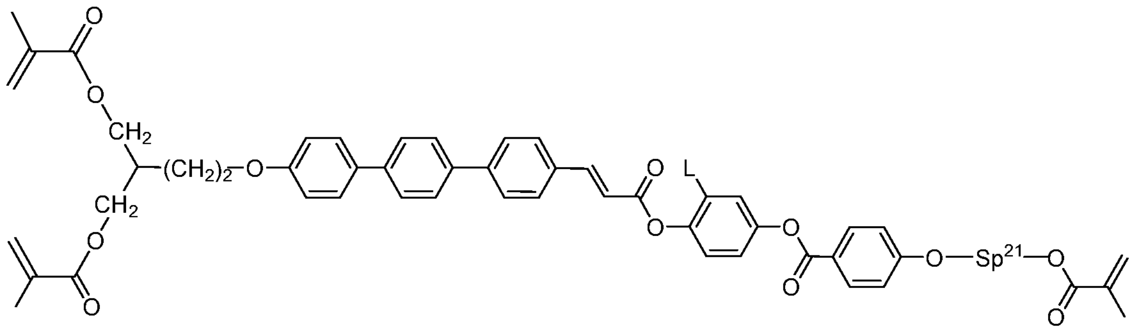

I-5-1a-4

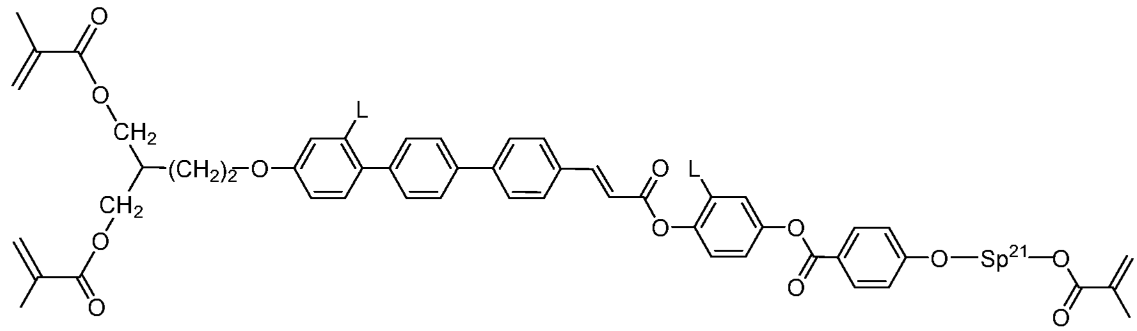

I-5-1a-5

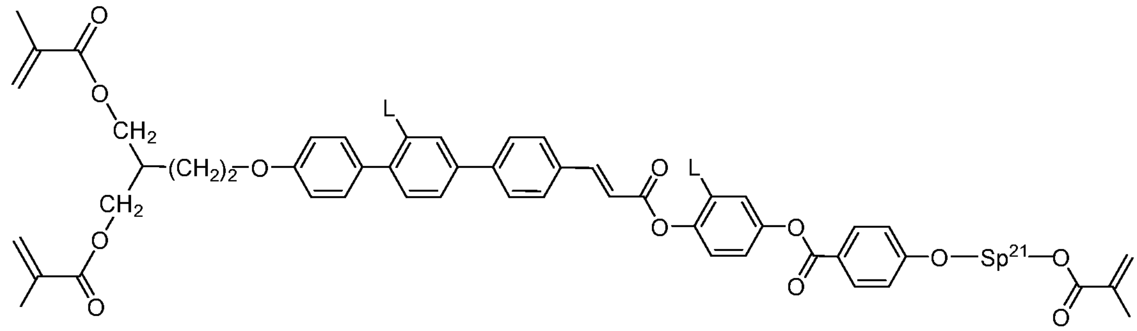

I-5-1a-6

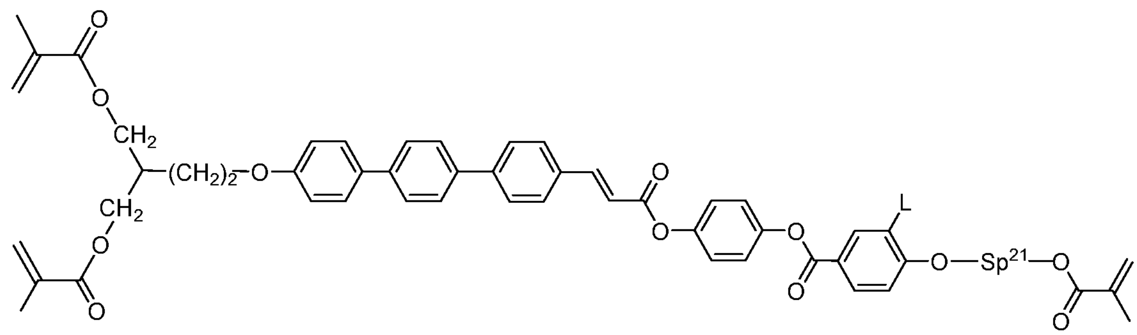

I-5-1a-7

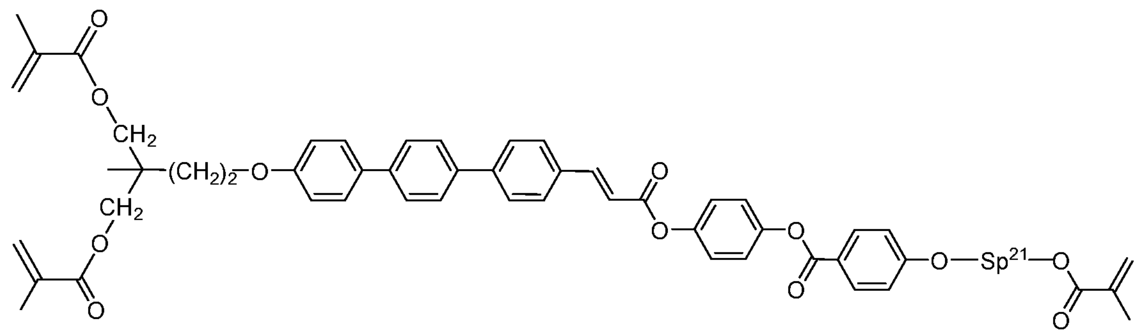

I-5-1a-8

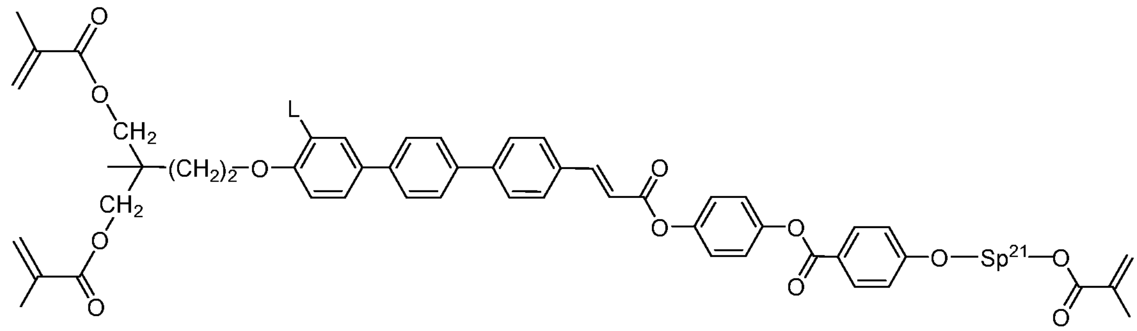

I-5-1a-9

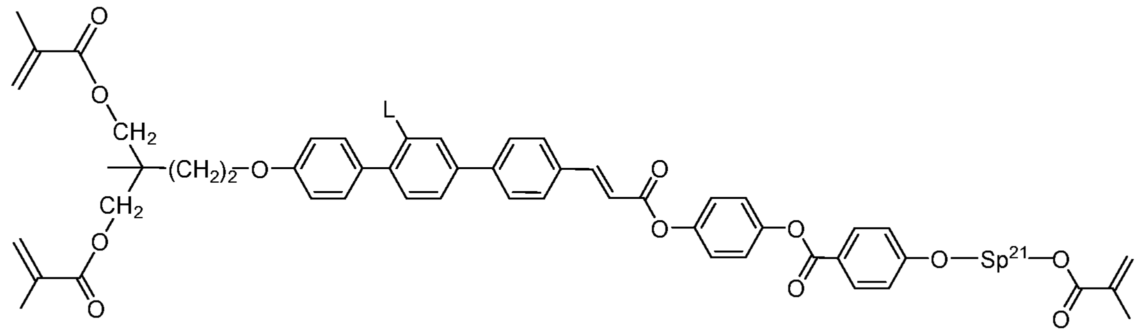

I-5-1a-10

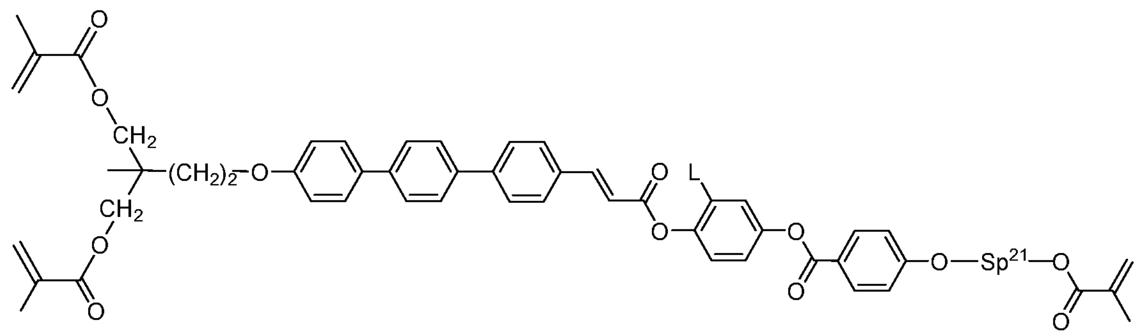

I-5-1a-11

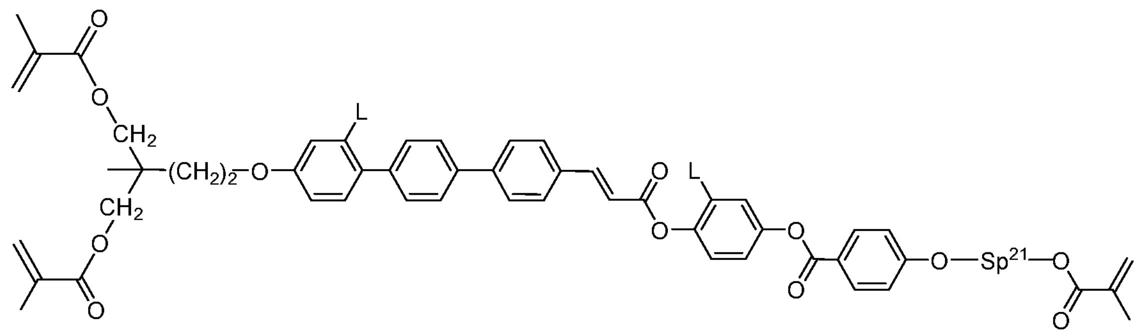

I-5-1a-12

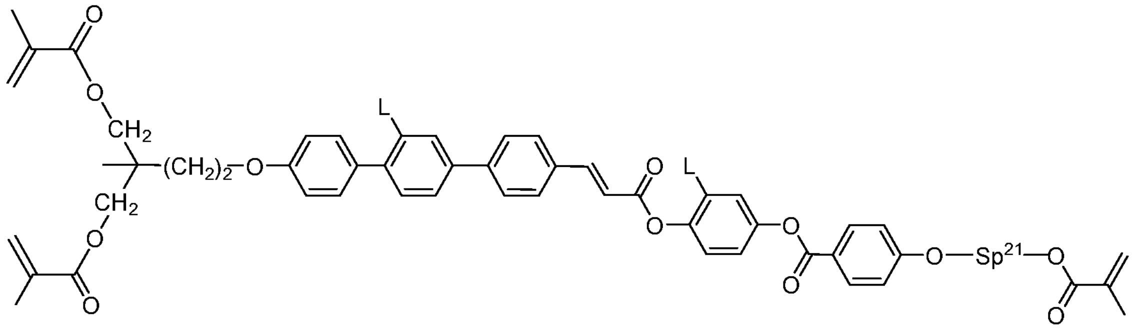

I-5-1a-13

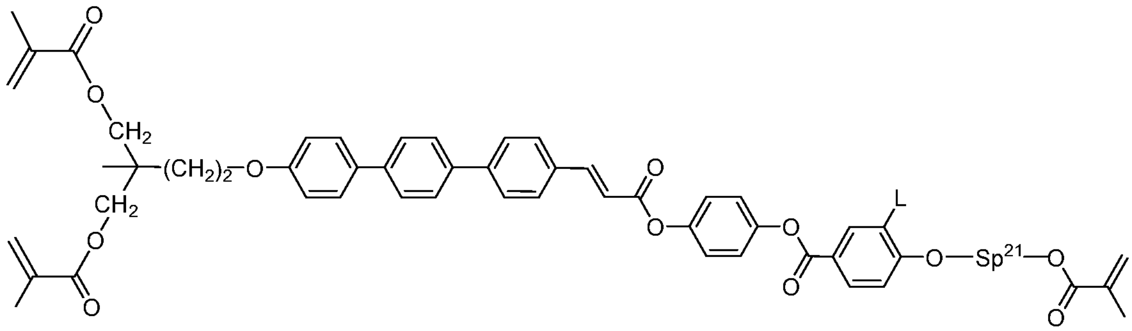

I-5-1a-14

bei denen

L jeweils und unabhängig F, Cl, Alkoxy oder Alkyl, beide mit 1 bis 6 C-Atomen, bedeutet,
$Sp^{21}$ -$S^1$-O-$A^{Sp}$ oder -$S^1$-O-$A^{Sp}$-O-$S^2$- bedeutet, bei denen $S^1$ Propylen, Butylen, Pentylen, Hexylen, Heptylen, Octylen, Nonylen, Decylen, Undecylen, Dodecylen ist, $S^2$ Propylen, Butylen, Pentylen, Hexylen, Heptylen, Octylen, Nonylen, Decylen, Undecylen, Dodecylen ist,
$A^{Sp}$ oder

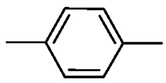 , 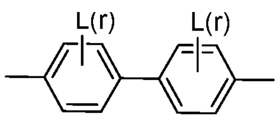

bedeutet,

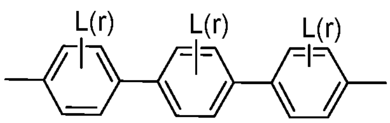

r 0 oder 1 bedeutet.

**5.** Verwendung von Verbindungen der Formel I nach einem oder mehreren der Ansprüche 1 bis 4 in einer Flüssigkristallmischung.

**6.** Flüssigkristallmischung, **dadurch gekennzeichnet, dass** sie eine Komponente A) enthaltend eine oder mehrere Verbindungen der Formel I nach einem oder mehreren der Ansprüche 1 bis 5 und eine flüssigkristalline Komponente B) enthaltend eine oder mehrere mesogene oder flüssigkristalline Verbindungen enthält.

**7.** Flüssigkristallmischung nach Anspruch 6, **dadurch gekennzeichnet, dass** die Gesamtkonzentration der Verbindungen der Formel I in der Mischung im Bereich von 0,01 bis 10 Gew.-% liegt.

**8.** Flüssigkristallmischung nach Anspruch 6 oder 7, **dadurch gekennzeichnet, dass** sie zusätzlich eine polymerisierbare Komponente C) enthaltend eine oder mehrere polymerisierbare mesogene oder polymerisierbare nichtmesogene Verbindungen enthält.

**9.** Flüssigkristallmischung nach einem oder mehreren der Ansprüche 6 bis 8, **dadurch gekennzeichnet, dass** die FK-Host-Mischung eine negative dielektrische Anisotropie aufweist.

**10.** Flüssigkristallmischung nach Anspruch 9, **dadurch gekennzeichnet, dass** die FK-Host-Mischung eine oder mehrere Verbindungen enthält, die ausgewählt sind aus den folgenden Formeln:

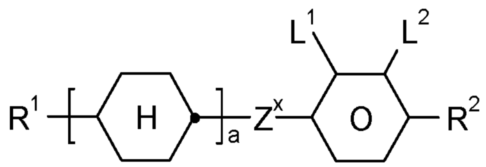

CY

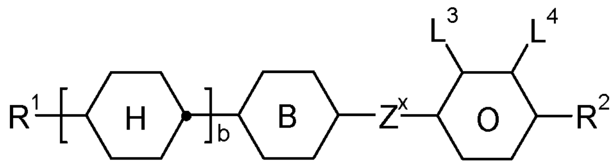

PY

bei denen

a 1 oder 2 ist,
b 0 oder 1 ist, bedeutet,

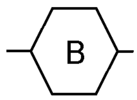

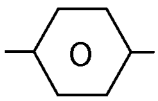

oder

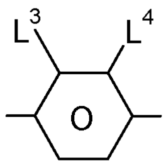

$R^1$ und $R^2$ jeweils unabhängig voneinander Alkyl mit 1 bis 12 C-Atomen bedeuten, wobei zusätzlich eine oder zwei nicht benachbarte $CH_2$-Gruppen unabhängig voneinander so durch

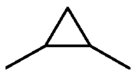,

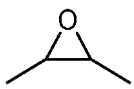,

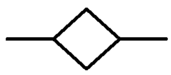,

-C≡C-,

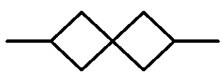,

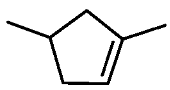,

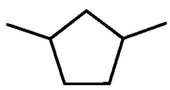,

$-CF_2O-$, $-OCF_2-$, -CH=CH-, -O-, -CO-O- oder -O-COersetzt sein können, dass O-Atome nicht direkt miteinander verknüpft sind,
$Z^x$ -CH=CH-, $-CH_2O-$, $-OCH_2-$, $-CF_2O-$, $-OCF_2-$, -O-, $-CH_2-$, $-CH_2CH_2-$ oder eine Einfachbindung bedeutet,
$L^{1-4}$ jeweils unabhängig voneinander F, Cl, $OCF_3$, $CF_3$, $CH_3$, $CH_2F$, $CHF_2$ bedeuten.

**11.** Flüssigkristallmischung nach einem oder mehreren der Ansprüche 6 bis 8, **dadurch gekennzeichnet, dass** die FK-Host-Mischung eine positive dielektrische Anisotropie aufweist.

**12.** Flüssigkristallmischung nach Anspruch 11, **dadurch gekennzeichnet, dass** die FK-Host-Mischung eine oder mehrere Verbindungen enthält, die ausgewählt sind aus der Gruppe bestehend aus den Verbindungen der Formeln

II und III,

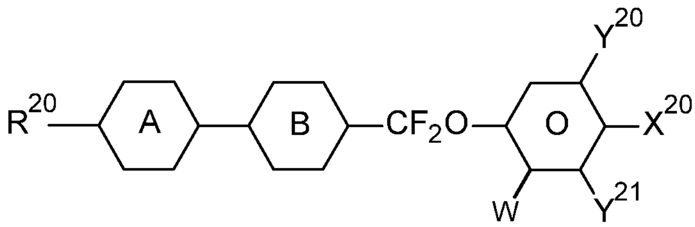

II

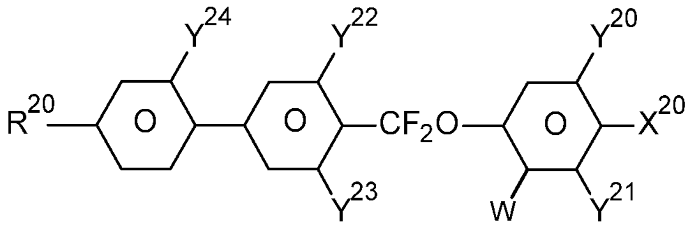

III

bei denen

$R^{20}$ jeweils gleich oder verschieden einen halogenierten oder unsubstituierten Alkyl- oder Alkoxyrest mit 1 bis 15 C-Atomen bedeuten, wobei in diesen Resten zusätzlich eine oder mehrere $CH_2$-Gruppen jeweils unabhängig voneinander so durch

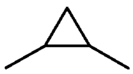 , 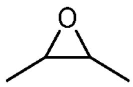 , 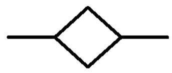 , 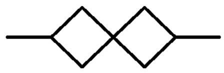 ,

-C≡C-, $-CF_2O-$, $-OCF_2-$, -CH=CH-,

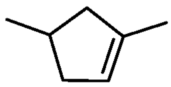 , 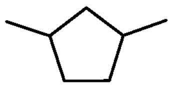 ,

-O-, -CO-O- oder -O-CO- ersetzt sein können, dass O-Atome nicht direkt miteinander verknüpft sind,

$X^{20}$ jeweils gleich oder verschieden F, Cl, CN, SFs, SCN, NCS, einen halogenierten Alkylrest, einen halogenierten Alkenylrest, einen halogenierten Alkoxyrest oder einen halogenierten Alkenyloxyrest mit jeweils bis zu 6 C-Atomen bedeuten, und

$Y^{20-24}$ jeweils gleich oder verschieden H oder F bedeuten,

W H, Methyl, Ethyl, Methoxy oder Ethoxy bedeutet, jeweils gleich oder verschieden

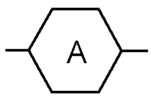 und 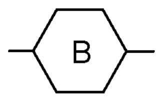

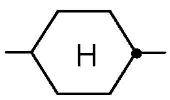 ,

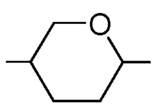 oder 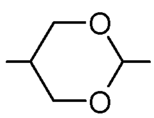

bedeuten.

**13.** Flüssigkristallmischung nach Anspruch 11 oder 12, **dadurch gekennzeichnet, dass** sie eine oder mehrere Verbindungen enthält, die ausgewählt sind aus der Gruppe bestehend aus Verbindungen der Formeln XI und XII

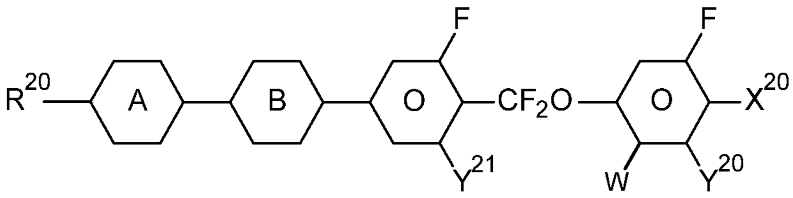

XI

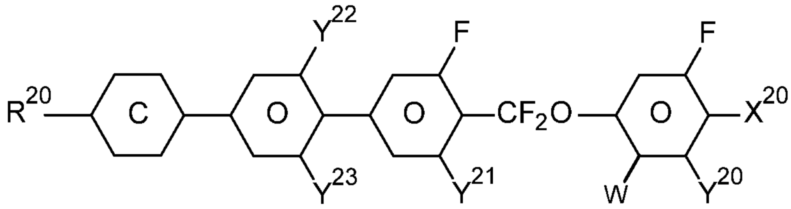

XII

bei denen $R^{20}$, $X^{20}$, W und $Y^{20-23}$ die in Formel III in Anspruch 12 angegebenen Bedeutungen besitzen, und

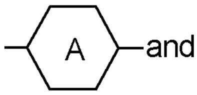 and 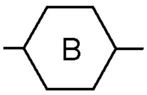

jeweils unabhängig voneinander

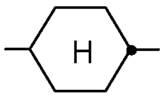 ,

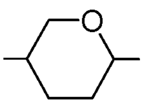 oder 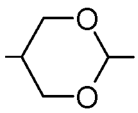

bedeuten, und

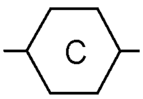

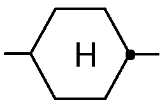 , 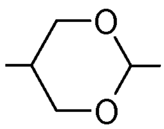 , 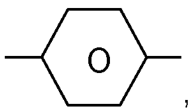 ,

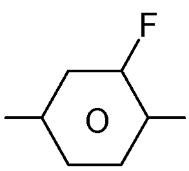 oder 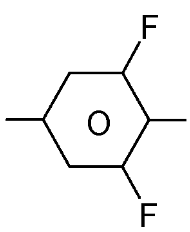

bedeutet.

**14.** Flüssigkristallmischung nach einem oder mehreren der Ansprüche 6 bis 13, **dadurch gekennzeichnet, dass** die FK-Host-Mischung eine oder mehrere Verbindungen der folgenden Formel enthält:

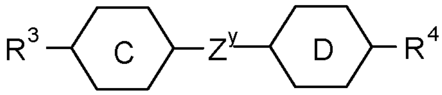

ZK

worin die einzelnen Reste die folgenden Bedeutungen besitzen:

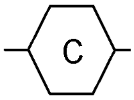 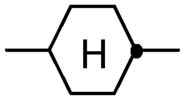, 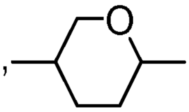, 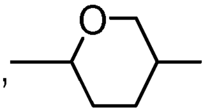,

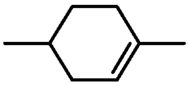 oder 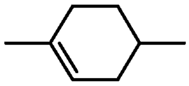

bedeutet,

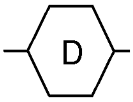 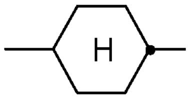 oder 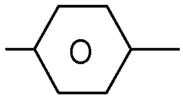

bedeutet, $R^3$ und $R^4$ bedeuten jeweils unabhängig voneinander Alkyl mit 1 bis 12 C-Atomen, worin zusätzlich eine oder zwei nicht benachbarte $CH_2$-Gruppen unabhängig voneinander so durch

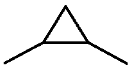, 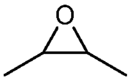, 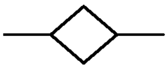,

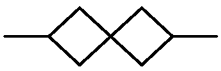, 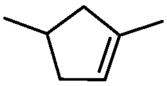, 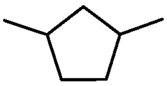,

-C≡C-, $-CF_2O-$, $-OCF_2-$, -CH=CH-, -O-, -CO-O- oder -O-CO- ersetzt sein können, dass O-Atome nicht direkt miteinander verknüpft sind,

$Z^y$ bedeutet $-CH_2CH_2-$, -CH=CH-, $-CF_2O-$, $-OCF_2-$, $-CH_2O-$, $-OCH_2-$, -CO-O-, -O-CO-, $-C_2F_4-$, -CF=CF-, $-CH=CH-CH_2O-$ oder eine Einfachbindung.

**15.** Flüssigkristallmischung nach einem oder mehreren der Ansprüche 6 bis 14, **dadurch gekennzeichnet, dass** die FK-Host-Mischung eine oder mehrere Verbindungen der folgenden Formeln

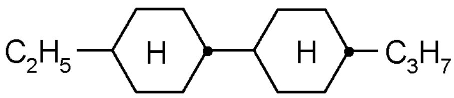

ZK1a

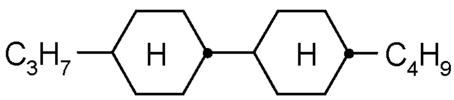

ZK1b

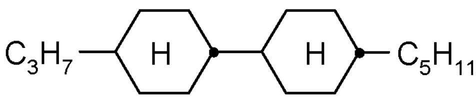

ZK1c

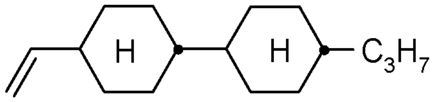

ZK3a

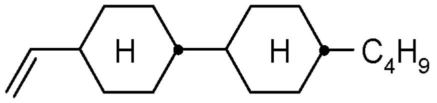

ZK3b

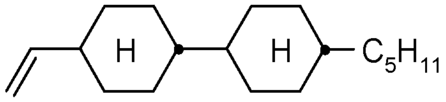

ZK3c

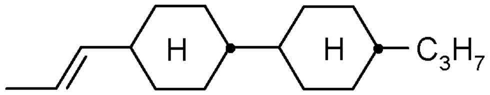

ZK3d

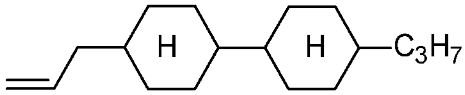

ZK3e

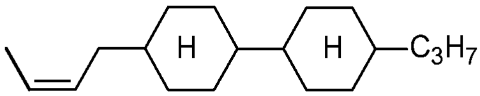

ZK3f

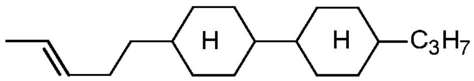

ZK3g

enthält, bei denen die Propyl-, Butyl- und Pentylgruppen geradkettige Gruppen sind.

**16.** Flüssigkristallmischung nach einem oder mehreren der Ansprüche 6 bis 15, **dadurch gekennzeichnet, dass** die FK-Host-Mischung eine oder mehrere Verbindungen enthält, die ausgewählt sind aus den folgenden Formeln:

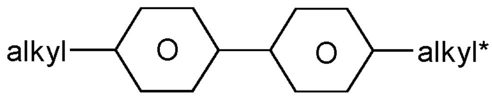

B1

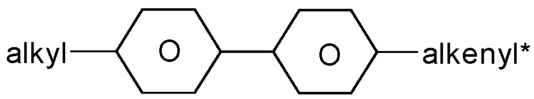

B2

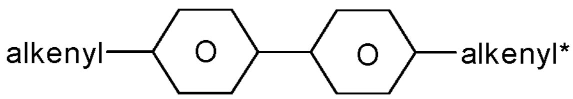

B3

worin alkyl und alkyl* jeweils unabhängig voneinander einen geradkettigen Alkylrest mit 1-6 C-Atomen bedeuten und alkenyl und alkenyl* jeweils unabhängig voneinander einen geradkettigen Alkenylrest mit 2-6 C-Atomen bedeuten.

**17.** Flüssigkristallmischung nach einem oder mehreren der Ansprüche 6 bis 16, **dadurch gekennzeichnet, dass** die FK-Host-Mischung eine oder mehrere Verbindungen enthält, die ausgewählt sind aus den folgenden Formeln:

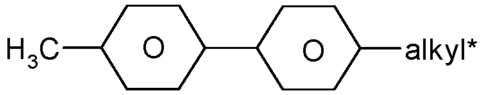

B1a

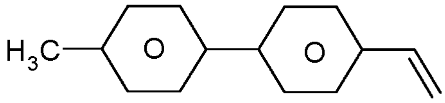

B2a

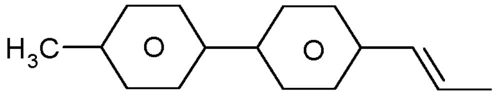

B2b

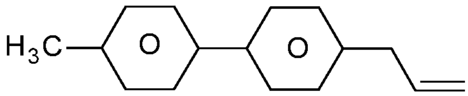

B2c

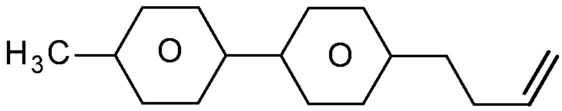

B2d

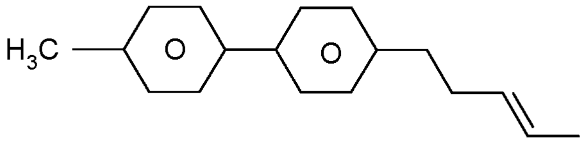

B2e

worin alkyl* einen Alkylrest mit 1-6 C-Atomen bedeutet.

**18.** Verwendung der Flüssigkristallmischung nach einem oder mehreren der Ansprüche 6 bis 17 zur Herstellung einer Flüssigkristallanzeige.

**19.** Verfahren zur Herstellung einer Flüssigkristallanzeige, umfassend mindestens die Schritte:

- Bereitstellen eines ersten Substrats, das eine Pixelelektrode und eine gemeinsame Elektrode zur Erzeugung eines elektrischen Feldes im Wesentlichen parallel zu einer Oberfläche des ersten Substrats im Pixelbereich umfasst;
- Bereitstellen eines zweiten Substrats, wobei das zweite Substrat gegenüber dem ersten Substrat angeordnet ist;
- Einfügen einer Flüssigkristallmischung nach einem oder mehreren der Ansprüche 6 bis 17;
- Bestrahlen der Flüssigkristallmischung mit linear polarisiertem Licht, was Photoorientierung des Flüssigkristalls bewirkt;
- Härten der polymerisierbaren Verbindungen der Flüssigkristallmischung durch Bestrahlen mit ultraviolettem Licht oder sichtbarem Licht mit einer Wellenlänge von 450 nm oder darunter.

**20.** Verfahren nach Anspruch 19, **dadurch gekennzeichnet, dass** das linear polarisierte Licht ultraviolettes Licht oder sichtbares Licht mit einer Wellenlänge von 450nm oder darunter ist.

**21.** Anzeige, erhältlich durch ein Verfahren nach Anspruch 19 oder 20.

## Revendications

**1.** Composé de formule I,

$$R^{11}\text{-}Sp^{11}X^{11}\ [\text{-}A\text{-}Z]_o\text{-}A^{11}\text{-}CY^{11}=CY^{12}[\text{-}C{=}O]_x[\text{-}O]_y\text{-}A[\text{-}Z\text{-}A]_p\text{-}X^{21}\text{-}Sp^{21}\text{-}R^{21} \qquad I$$

dans laquelle

$A^{11}$ désigne un radical choisi parmi les groupes suivants :

a) un groupe constitué par 1,4-phénylène et 1,3-phénylène, où, de plus, un ou deux groupements CH sont éventuellement remplacés par N et où, de plus, un ou plusieurs atomes de H sont éventuellement remplacés par L,
b) un groupement choisi dans le groupe constitué par

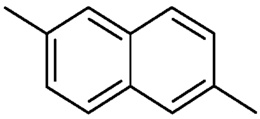
,
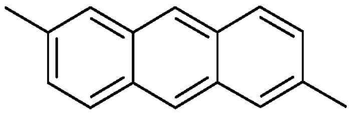
,
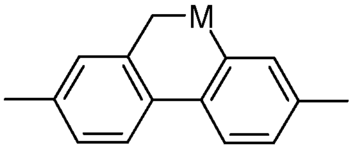
,
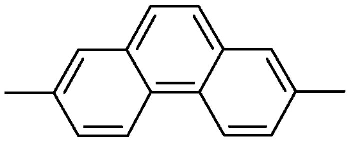
,
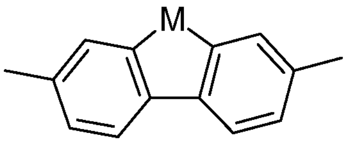
,
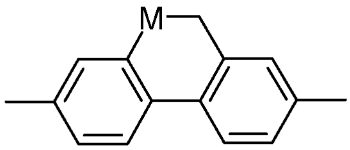
,
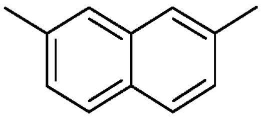
,
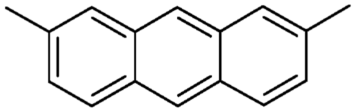
,
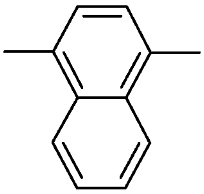
,
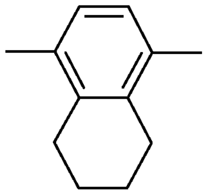
,
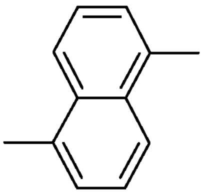
,

où, de plus, un ou plusieurs atomes de H dans ces radicaux sont éventuellement remplacés par L, et/ou une ou plusieurs doubles liaisons sont éventuellement remplacées par des liaisons simples, et/ou un ou plusieurs groupements CH sont éventuellement remplacés par N,

A revêtent chacun, indépendamment les uns des autres, à chaque occurrence l'une des significations pour $A^{11}$ ou sont choisis dans

a) un groupe constitué par trans-1,4-cyclo-hexylène, 1,4-cyclohexénylène, où, de plus, un ou plusieurs groupements $CH_2$ non adjacents sont éventuellement remplacés par -O- et/ou -Set où, de plus, un ou plusieurs atomes de H sont éventuellement remplacés par F, ou
b) un groupe constitué par tétrahydropyran-2,5-diyle, 1,3-dioxane-2,5-diyle, tétrahydrofuran-2,5-diyle,

cyclobutane-1,3-diyle, pipéridine-1,4-diyle, thiophène-2,5-diyle et sélénophène-2,5-diyle, chacun d'entre pouvant également être mono- ou polysubstitué par L,

L à chaque occurrence, de manière identique ou différente, désigne -OH, -F, -Cl, -Br, -I, -CN, $-NO_2$, SFs, -NCO, -NCS, -OCN, -SCN, $-C(=O)N(R^z)_2$, $-C(=O)R^z$, $-N(R^z)_2$, silyle éventuellement substitué, aryle éventuellement substitué ayant de 6 à 20 atomes de C, ou alkyle, alcoxy, alkylcarbonyle, alcoxycarbonyle, alkylcarbonyloxy ou alcoxycarbonyloxy à chaîne linéaire ou ramifiée ou cyclique ayant de 1 à 25 atomes de C, ou $X^{21}$ $-Sp^{21}-R^{21}$
M désigne -O-, -S-, $-CH_2-$, $-CHR^z-$ ou $-CR^yR^z-$,
$R^y$ et $R^z$ désignent chacun, indépendamment l'un de l'autre, H, CN, F ou alkyle ayant 1-12 atomes de C, où un ou plusieurs atomes de H sont éventuellement remplacés par F,
$Y^{11}$ et $Y^{12}$ désignent chacun, indépendamment l'un de l'autre, H, F, phényle ou alkyle éventuellement fluoré ayant 1-12 atomes de C,
Z désigne, indépendamment les uns des autres, à chaque occurrence, une liaison simple, -COO-, -OCO-, -O-CO-O-, $-OCH_2-$, $-CH_2O-$, $-OCF_2-$, $-CF_2O-$, $-(CH_2)_n-$, $-CF_2CF_2-$, -CH=CH-, -CF=CF-, -CH=CH-COO-, -OCO-CH=CH-, -CO-S-, -S-CO-, -CS-S-, -S-CS-, -S-CSS- ou -C≡C-,
n désigne un nombre entier compris entre 2 et 8,
o désigne 0, 1 ou 2,
p désigne 1 ou 2,
x et y désignent chacun et indépendamment 0 ou 1, à condition cependant que si x désigne 0, y ne puisse pas désigner 1,
$Sp^{11}$ désigne un groupement espaceur comprenant de 2 à 20 atomes de C, où un ou plusieurs groupements $CH_2$ sont éventuellement remplacés par -O-, -S-, -NH-, $-N(CH_3)-$, -CO-, -O-CO-, -S-CO-, -O-COO-, -CO-S-, -CO-O-, $-CF_2-$, $-CF_2O-$, $-OCF_2-$, -CH(OH)-, -CH(alkyl)-, -CH(alcényl)-, -CH(alcoxy)-, -CH(oxaalkyl)-, -CH=CHou -C≡C-, cependant d'une façon telle que deux atomes de O ne soient pas adjacents l'un avec l'autre et que deux groupements choisis parmi -O-CO-, -S-CO-, -O-COO-, -CO-S-, -CO-O- et -CH=CH- ne soient pas adjacents l'un avec l'autre, et
$Sp^{21}$ désigne $-S^1-A^{Sp}-S^2-$, $-S^1-X^{Sp}-A^{sp}-X^{Sp}-S^2-$ , $-S^1-A^{Sp}-X^{Sp}-S^2$ ou $-S^1-X^{Sp}-A^{Sp}-S^2$ où $S^1$ est $C_{3-12}$-alkylène et $S^2$ est une liaison simple ou $C_{3-12}$-alkylène, où dans $S^1$ ou $S^2$, un ou plusieurs groupements $CH_2$ sont éventuellement remplacés par -O-, -S-, -NH-, $-N(CH_3)-$, -CO-, -O-CO-, -S-CO-, -O-COO-, -CO-S-, -CO-O-, $-CF_2-$, $-CF_2O-$, $-OCF_2-$, -CH(OH)-, -CH(alkyl)-, -CH(alcényl)-, -CH(alcoxy)-, -CH(oxaalkyl)-, -CH=CH- ou -C≡C-, cependant d'une façon telle que deux atomes de O ne soient pas adjacents l'un avec l'autre et que deux groupements choisis parmi -O-CO-, -S-CO-, -O-COO-, -CO-S-, -CO-O- et -CH=CH- ne soient pas adjacents l'un avec l'autre, et
$A^{Sp}$ désigne

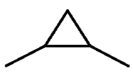 , 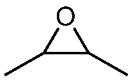 , 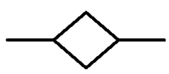 , 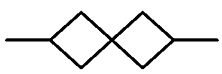 , 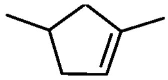 ,

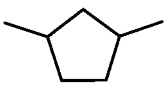 , 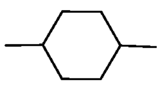 , 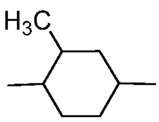 , 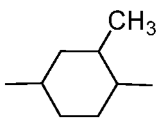 ,

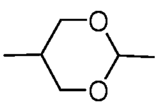 , 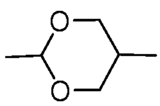 , 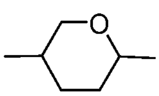 , 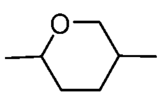 ,

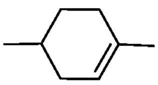 , 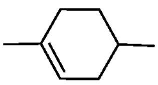 , 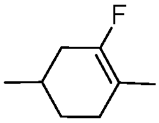 , 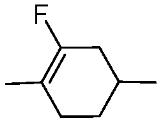 ,

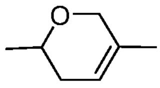, 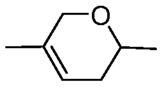, 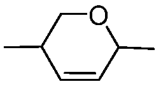, 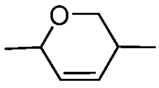,

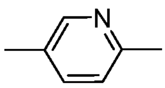, 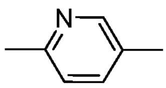, 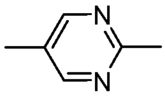, 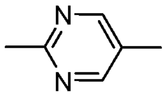, 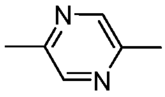,

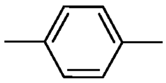, 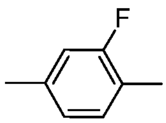, 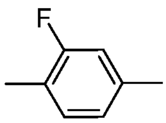, 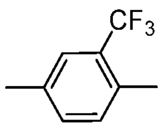, 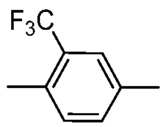,

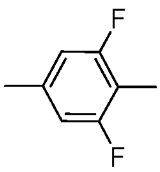, 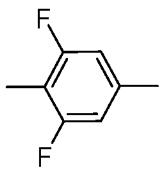, 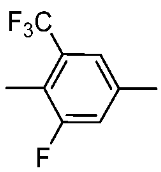, 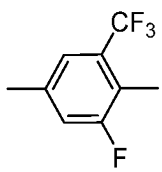, 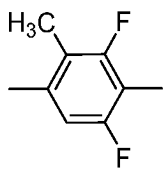,

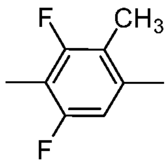,

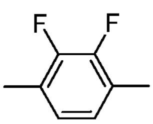, 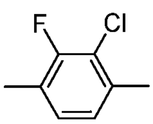, 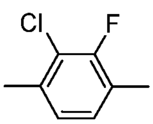, 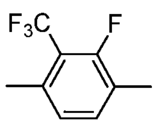, 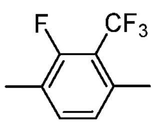,

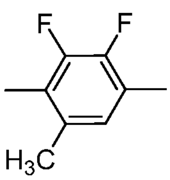, 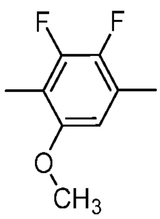, 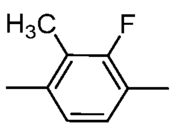, 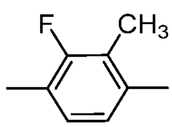,

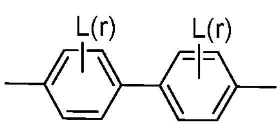, 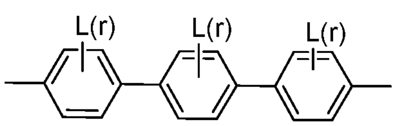,

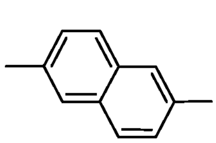, 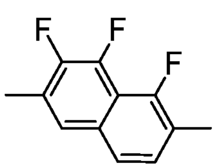, 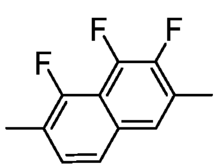, 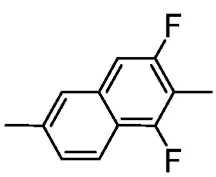,

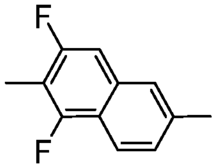 , 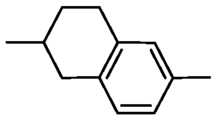 , 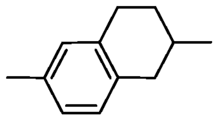 , 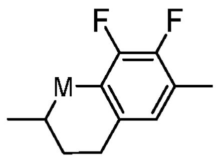 ,

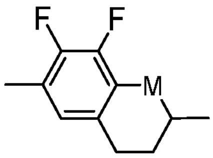 , 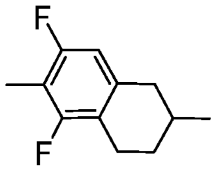 , 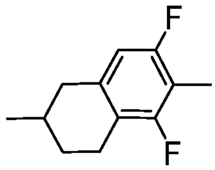 , 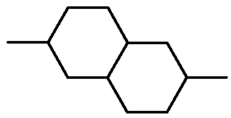

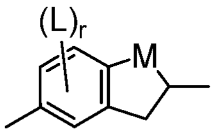 , 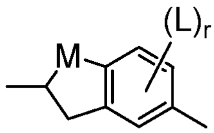 , 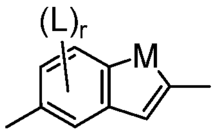 , 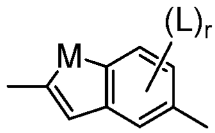 ,

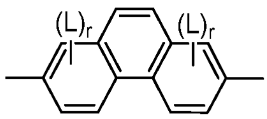 , 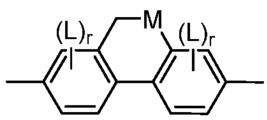 ,

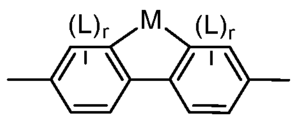 , 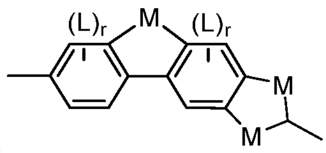 ,

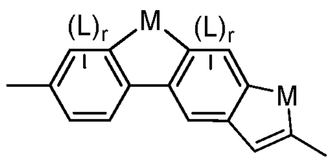

L désigne chacun, indépendamment les uns des autres, alkyle, alcoxy, halogène, $OCF_3$, $CF_3$, $CH_2F$, $CHF_2$,
r désigne 0,1, 2, ou 3,
M désigne $CH_2$, CHF, $CF_2$, S ou O,
$X^{Sp}$, $X^{11}$ et $X^{21}$ désignent -CO-O-, -O-CO-, -O-COO-, -O-, -CH=CH-, -C≡C-, $-CF_2-O-$, $-O-CF_2-$, $-CF_2-CF_2-$, $-CH_2-O-$, $-O-CH_2-$, -CO-S-, -S-CO-, -CS-S-, -S-CS-, -S-CSS- ou -S-,
$R^{11}$ et $R^{21}$ désignent P, halogène, CN, ou alkyle ou alcényle éventuellement fluoré ayant jusqu'à 15 atomes de C où un ou plusieurs groupements $CH_2$ non adjacents peuvent être remplacés par -O-, -S-, -CO-, -C(O)O-, -O-C(O)-, O-C(O)-O-, à condition qu'au moins l'un parmi $R^{11}$ ou $R^{21}$ désigne P,
P désigne un groupement polymérisable.

2. Composé selon la revendication 1, **caractérisé en ce que** le composé est choisi parmi les composés des sous-formules suivantes

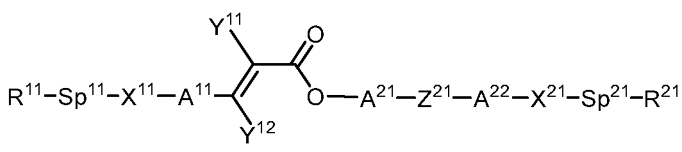

I-3

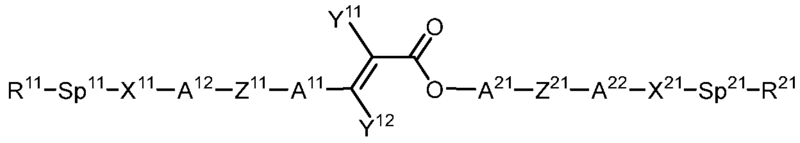

I-4

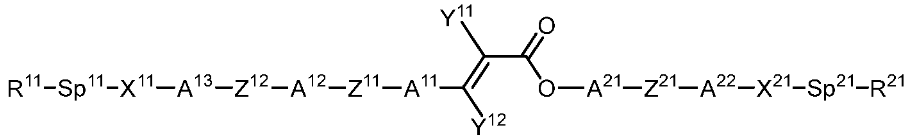

I-5

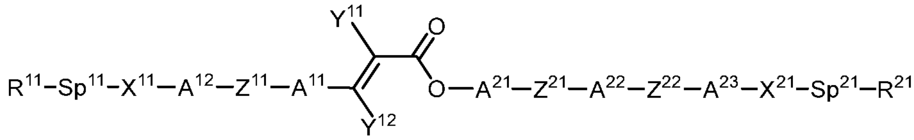

I-6

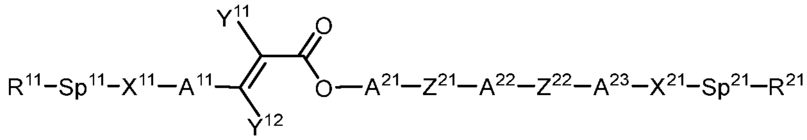

I-8

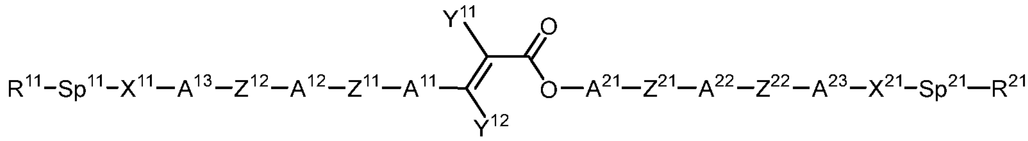

I-9

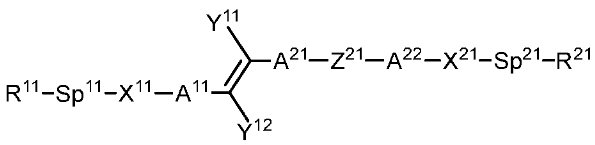

I-12

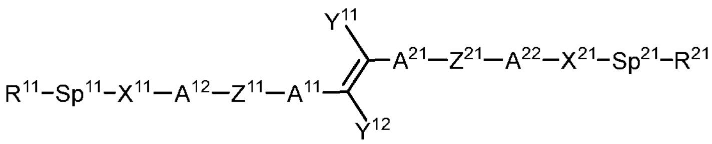

I-13

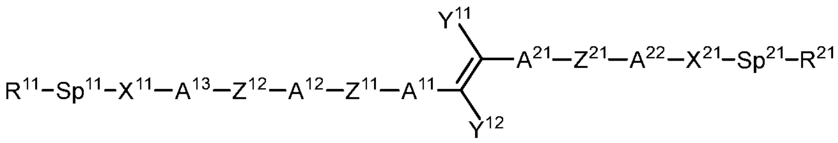

I-14

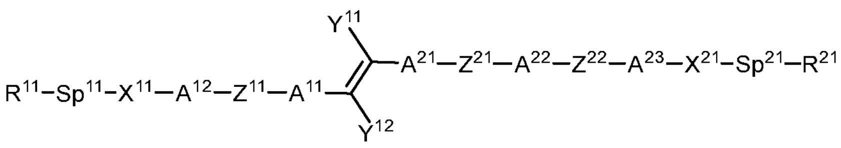

I-15

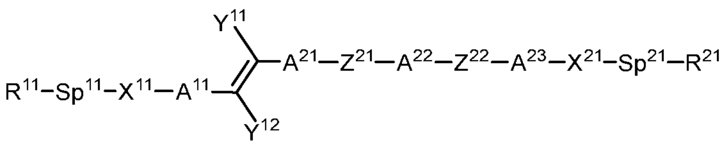

I-17

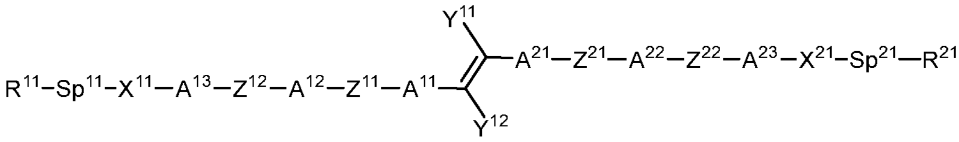

I-18

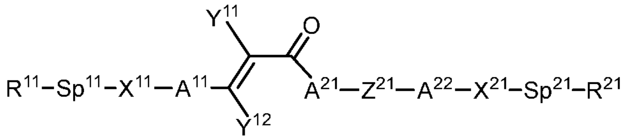

I-21

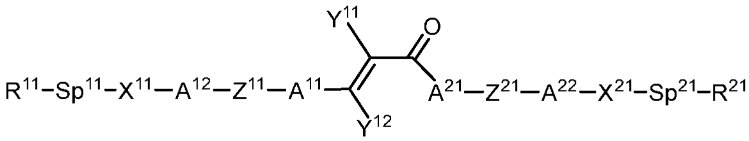

I-22

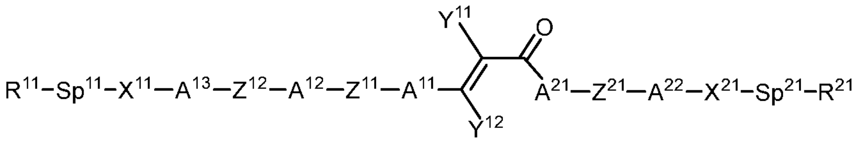

I-23

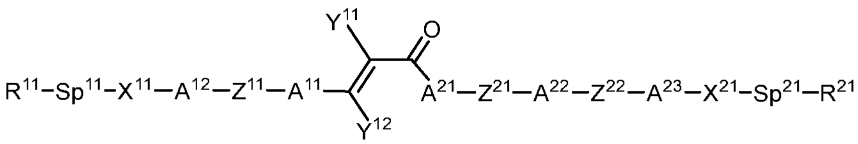

I-24

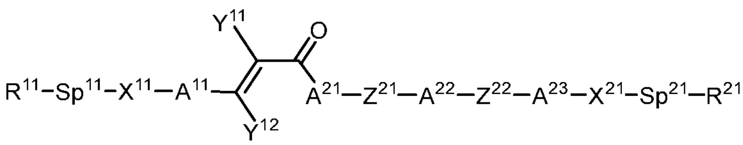

I-26

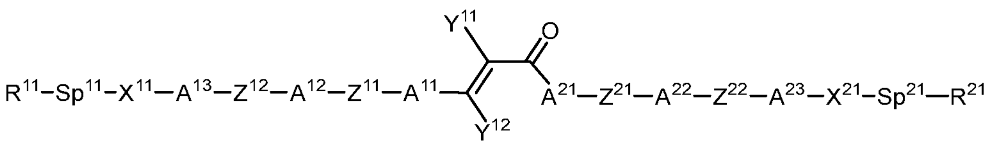

I-27

dans lesquelles $R^{11}$, $R^{21}$, $A^{11}$, $X^{11}$, $X^{21}$, $Y^{11}$, $Y^{12}$, $Sp^{11}$ et $Sp^{21}$ revêtent à chaque occurrence et chacun indépendamment les uns des autres l'une des significations telles que données selon la revendication 1,

$A^{12}$ à $A^{23}$ revêtent chacun et indépendamment les uns des autres l'une des significations pour A telles que données selon la revendication 1, et
$Z^{11}$ à $Z^{22}$ revêtent chacun et indépendamment les uns des autres l'une des significations pour Z telles que données selon la revendication 1.

**3.** Composé selon la revendication 1 ou 2, **caractérisé en ce que** le composé est choisi parmi les composés suivants

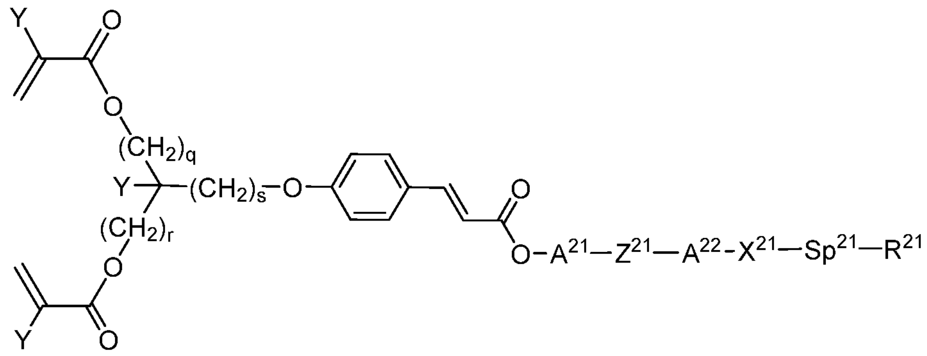

I-3-1

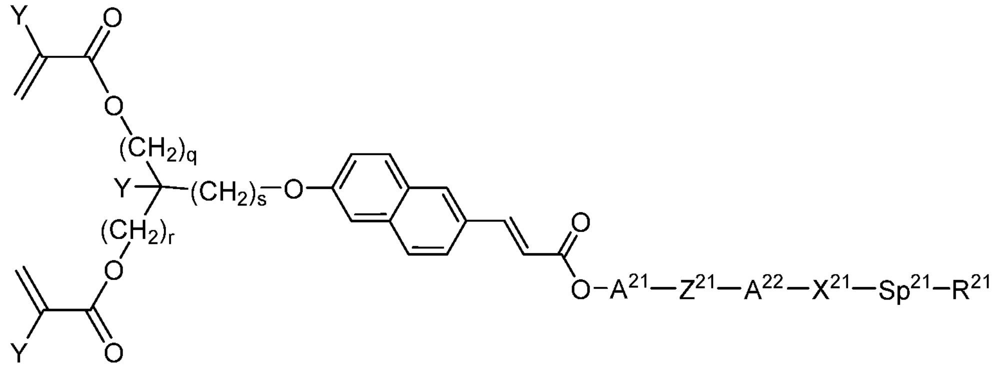

I-3-2

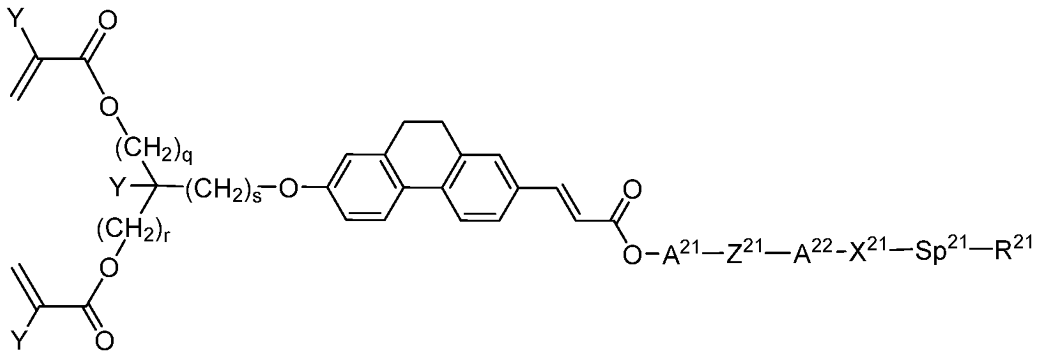

I-3-3

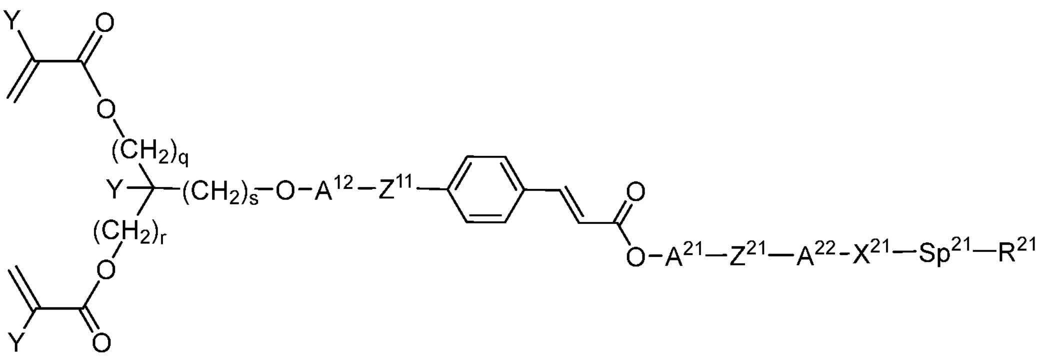

I-4-1

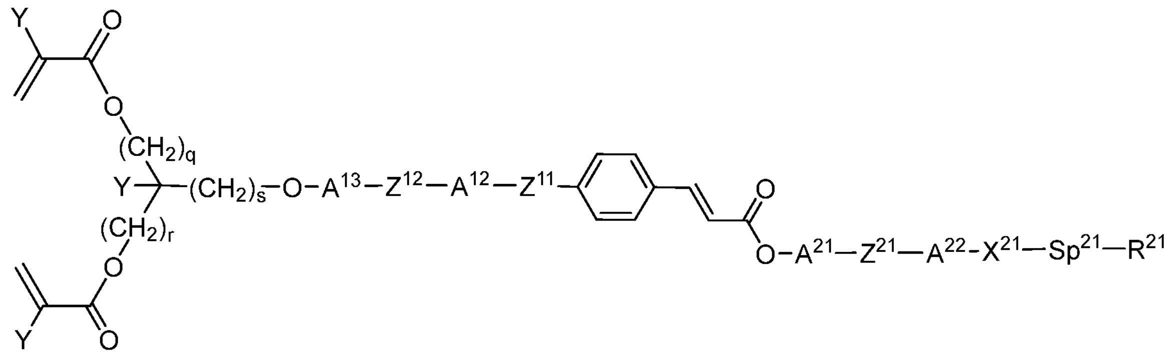

I-5-1

dans lesquels $R^{21}$, $X^{21}$, et $Sp^{21}$ revêtent l'une des significations telles que données selon la revendication 1, $Z^{11}$, $Z^{12}$ et $Z^{21}$ revêtent l'une des significations pour Z telles que données selon la revendication 1 pour la formule I, r et q désignent 1, 2 ou 3, s désigne un nombre entier allant de 1 à 6, et $A^{12}$, $A^{13}$, $A^{21}$ et $A^{22}$ revêtent l'une des significations pour A telles que données selon la revendication 1 pour la formule I, et Y désigne H, méthyle ou éthyle.

**4.** Composé selon l'une ou plusieurs parmi les revendications 1 à 3, **caractérisé en ce qu'**il est choisi parmi les composés des sous-formules suivantes,

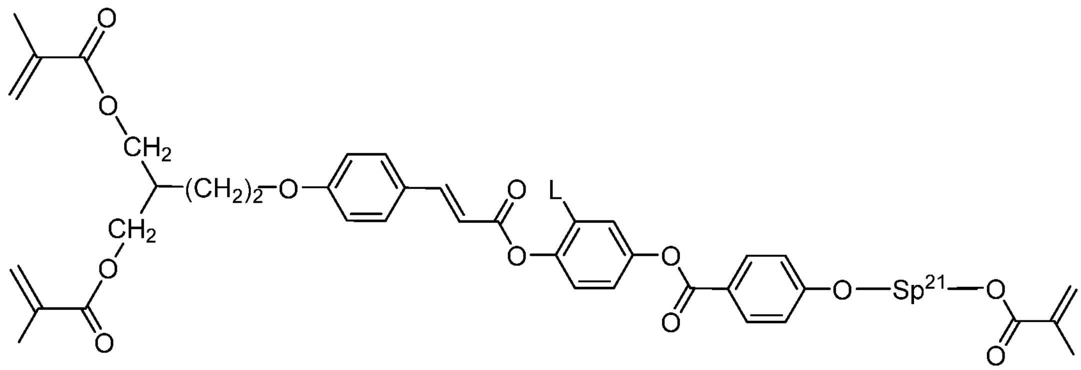

I-3-1a-1

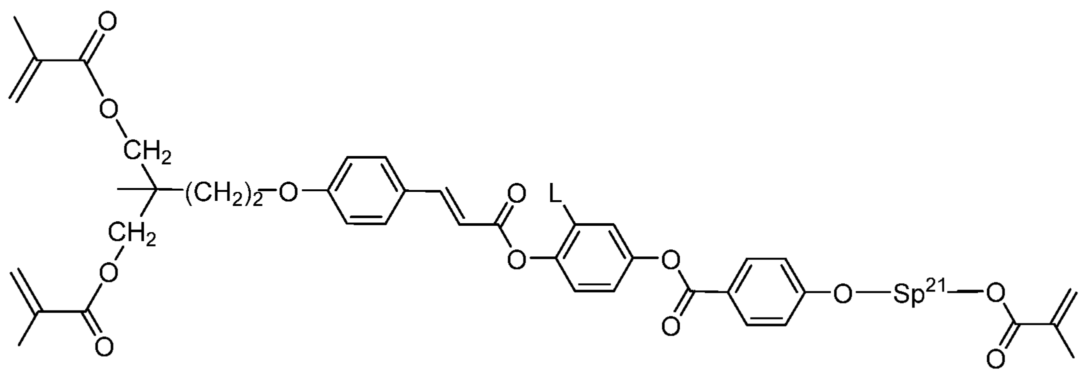

I-3-1a-2

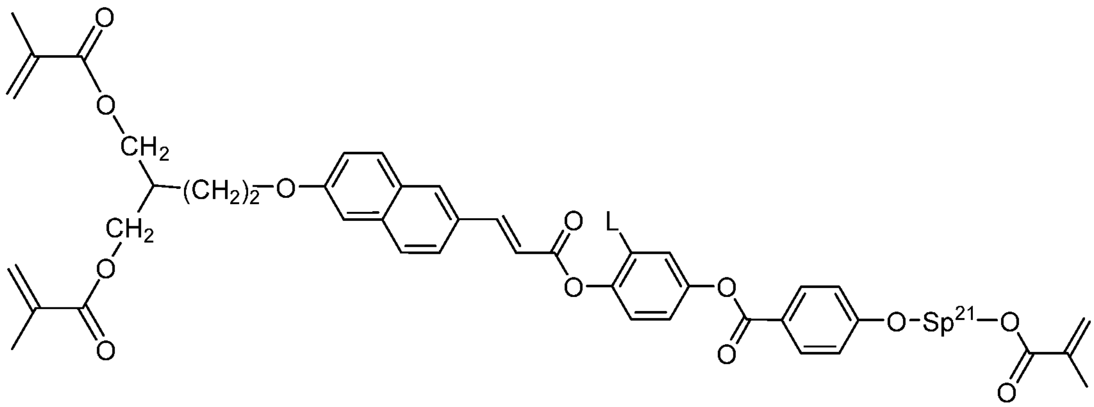

I-3-2a-3

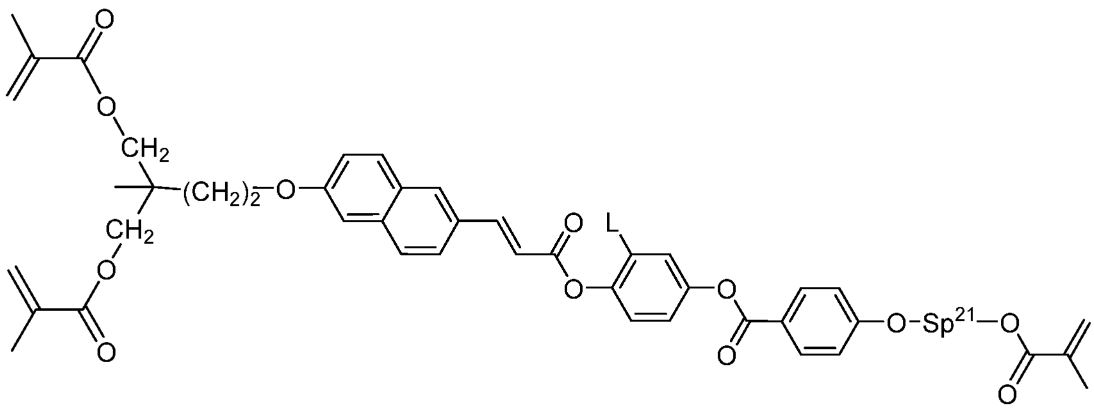

I-3-2a-4

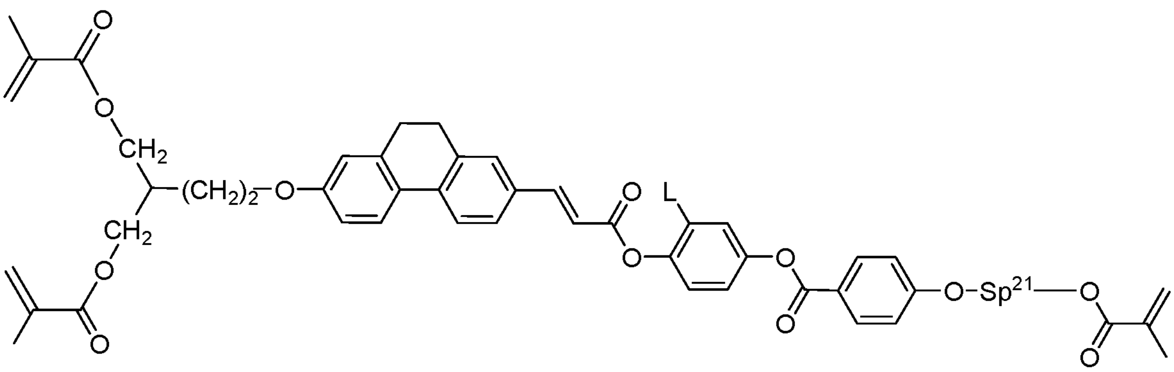

I-3-3a-5

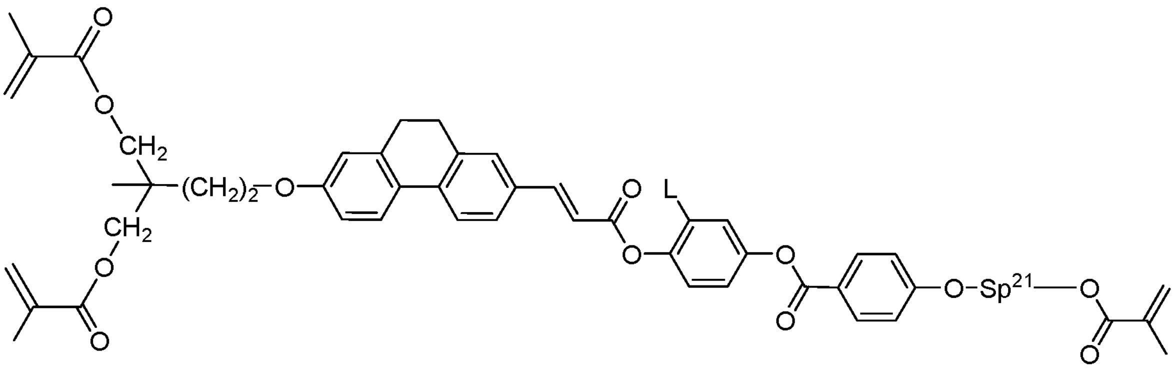

I-3-3a-6

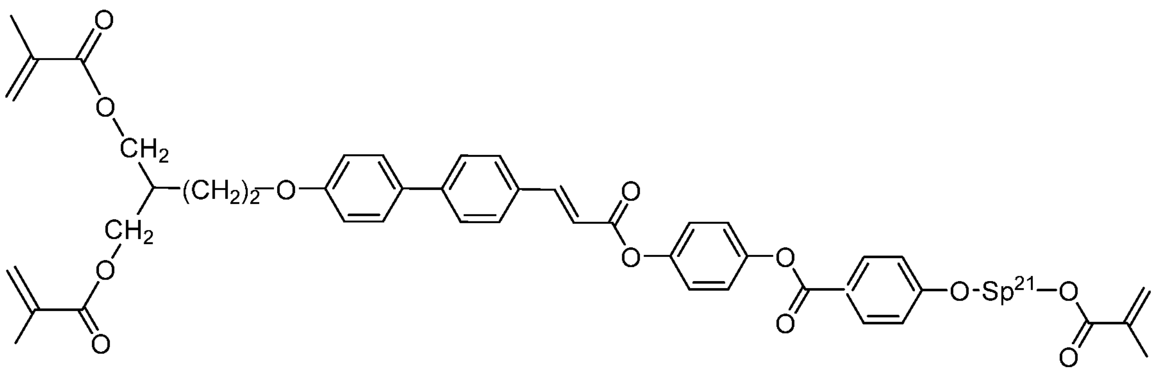

I-4-1a-1

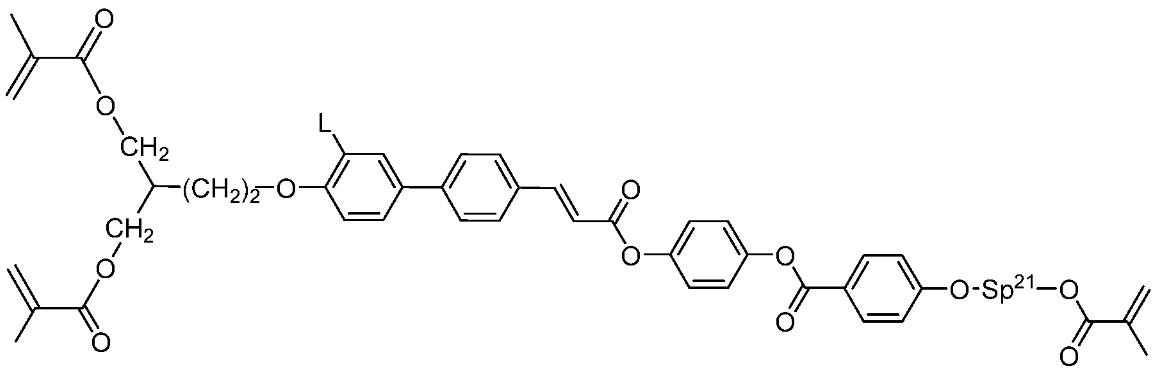

I-4-1a-2

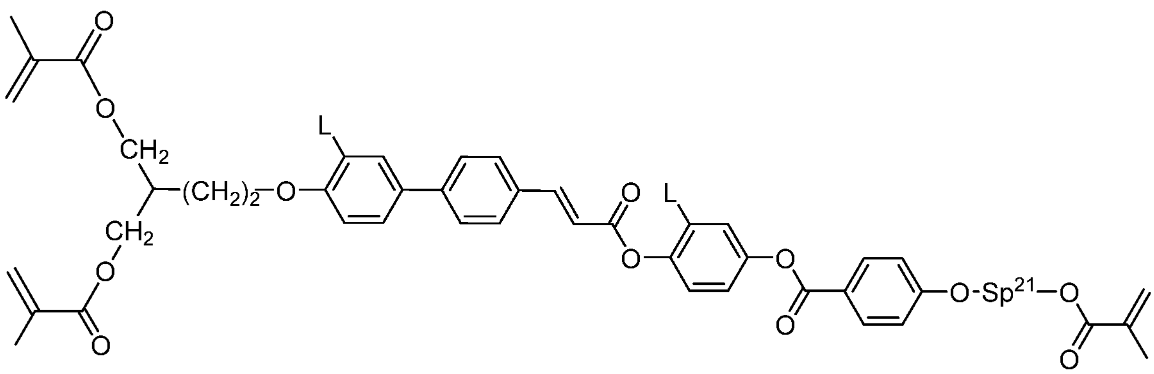

I-4-1a-3

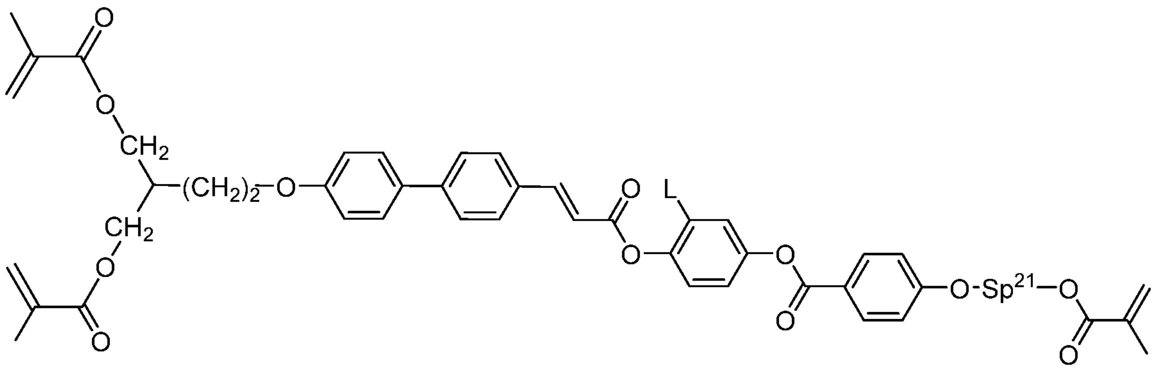

I-4-1a-4

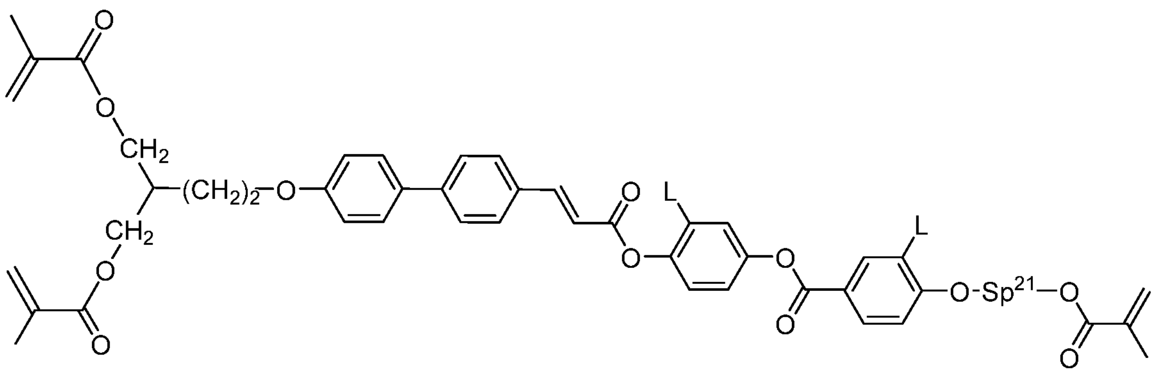

I-4-1a-5

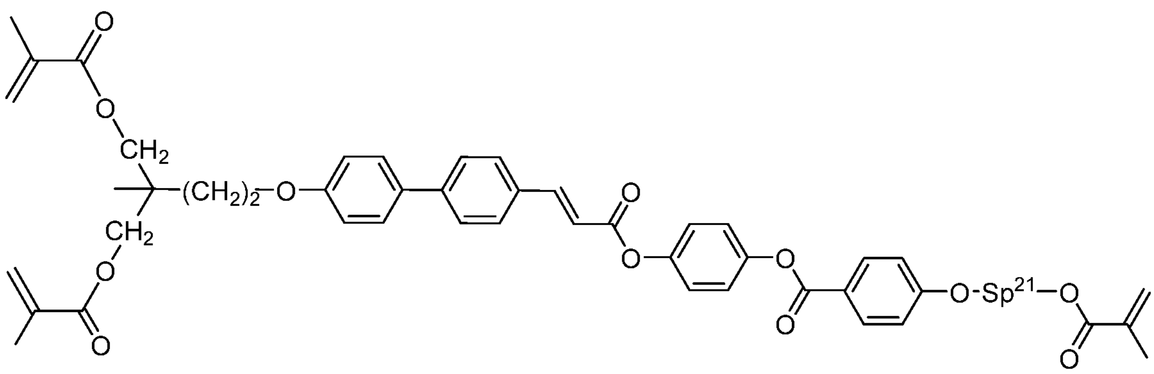

I-4-1a-6

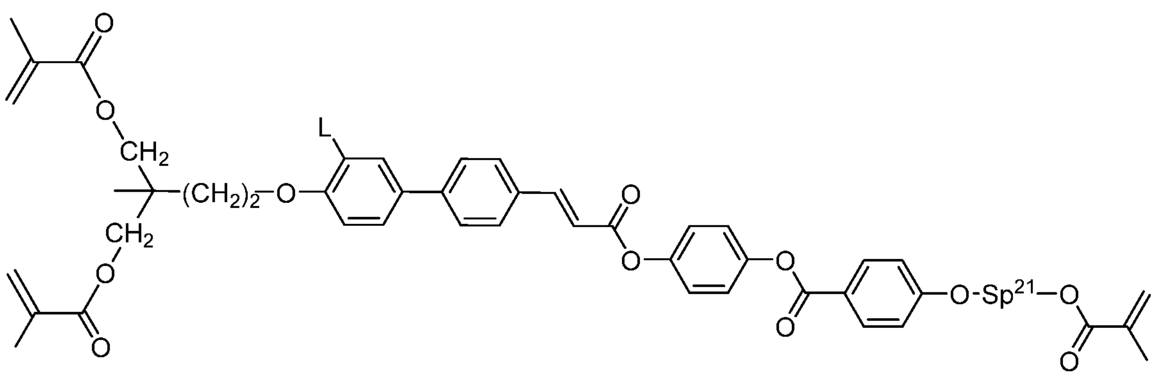

I-4-1a-7

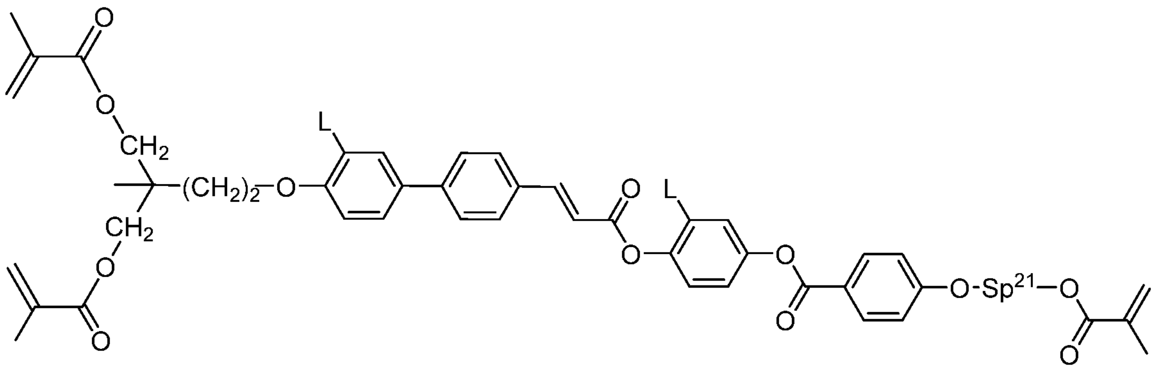

I-4-1a-8

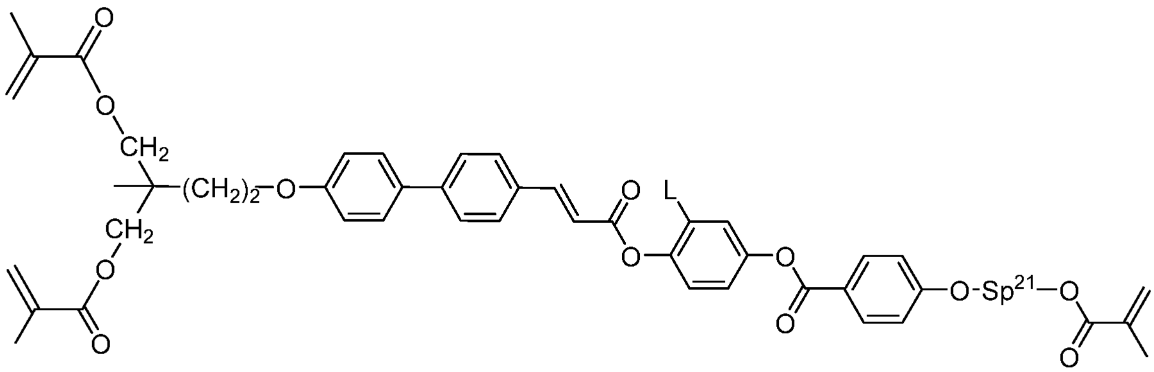

I-4-1a-9

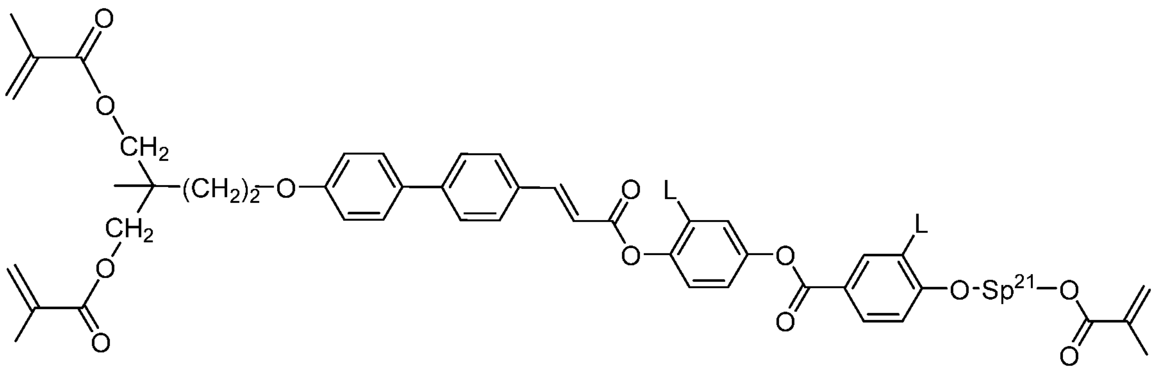

I-4-1a-10

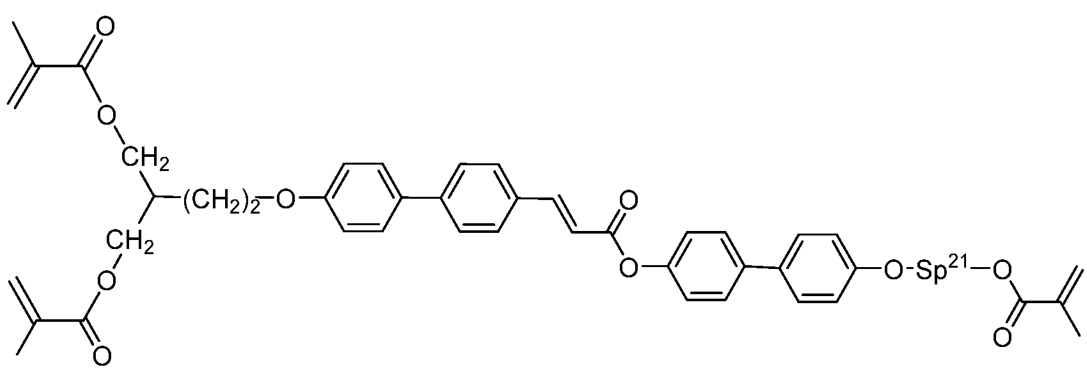

I-4-1a-1

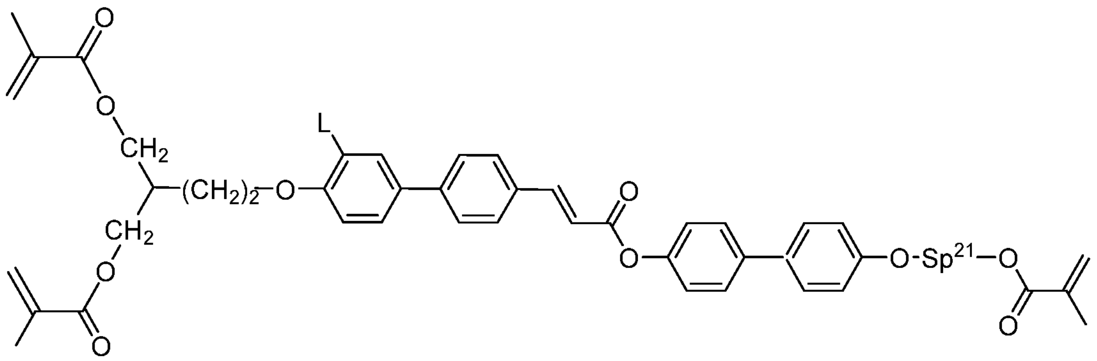

I-4-1a-2

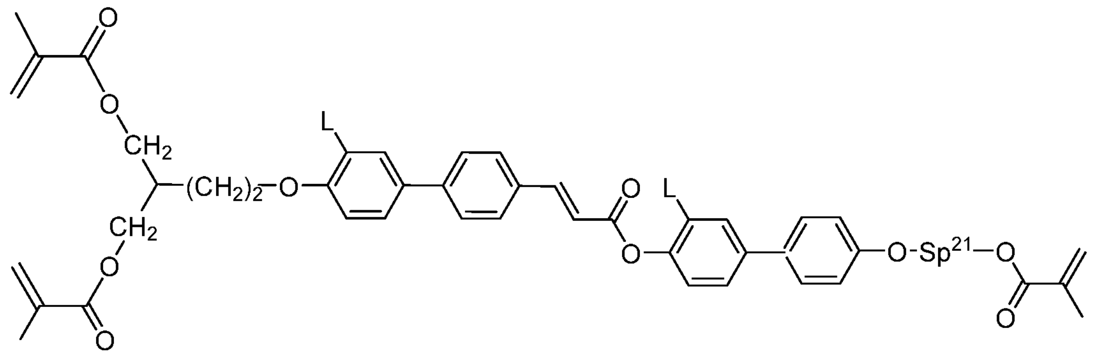

I-4-1a-3

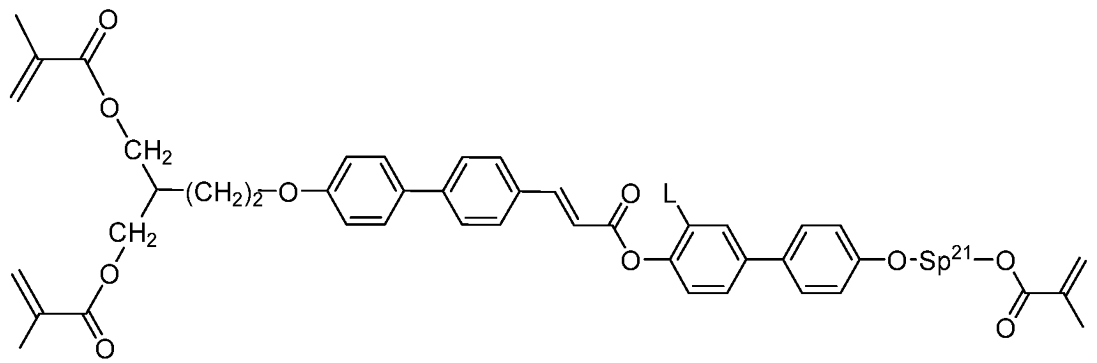

I-4-1a-4

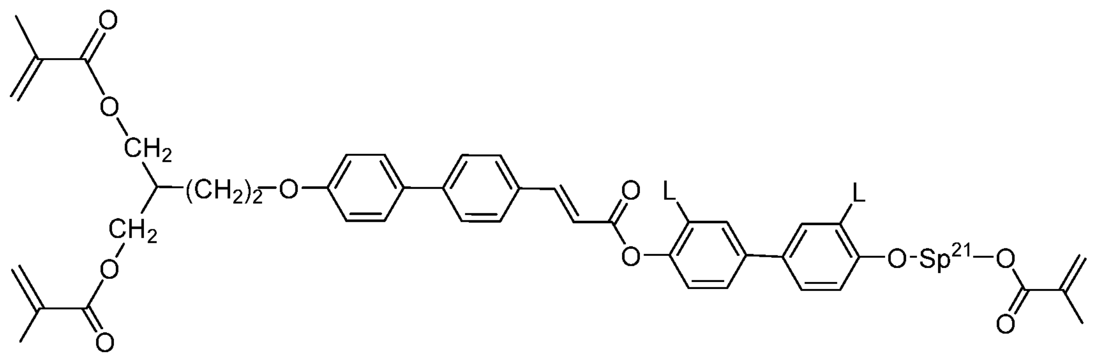

I-4-1a-5

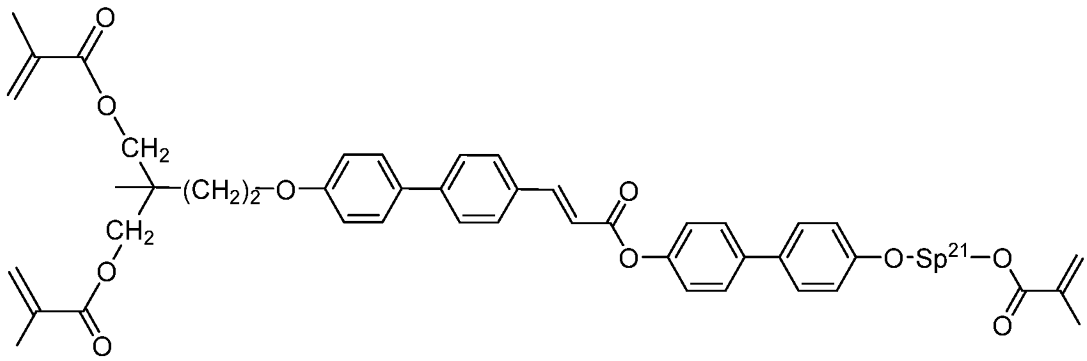

I-4-1a-6

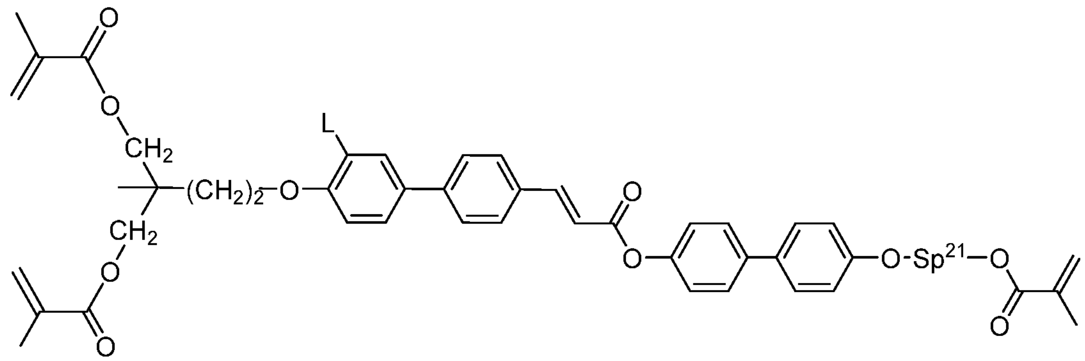

I-4-1a-7

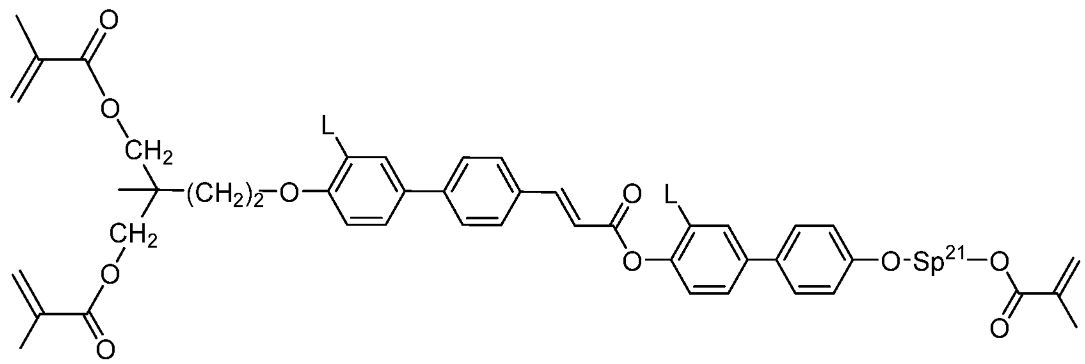

I-4-1a-8

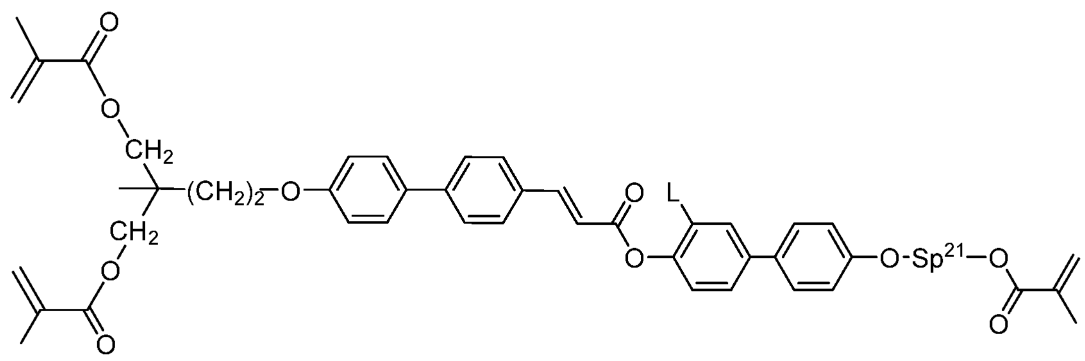

I-4-1a-9

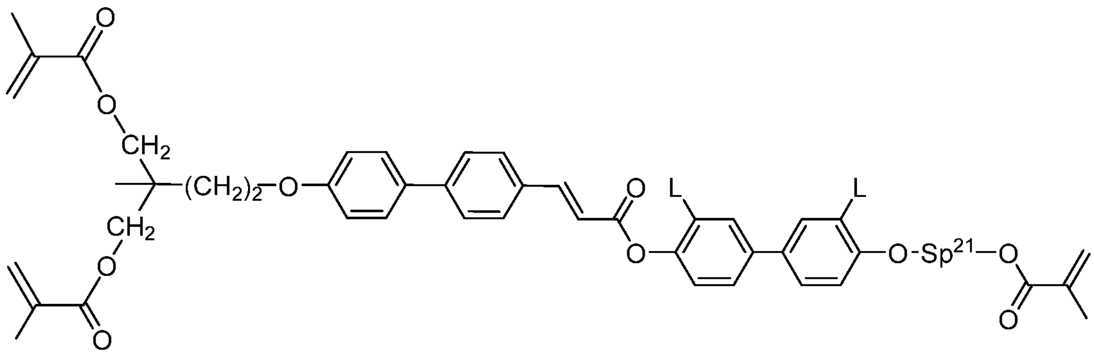

I-4-1a-10

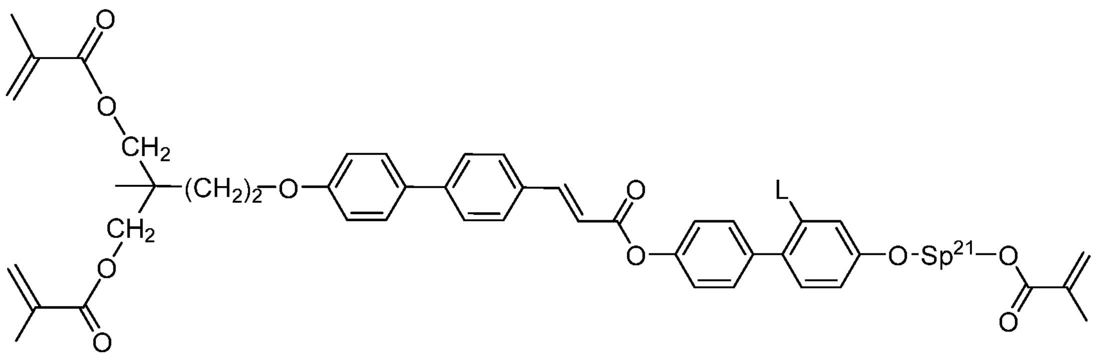

I-4-1a-11

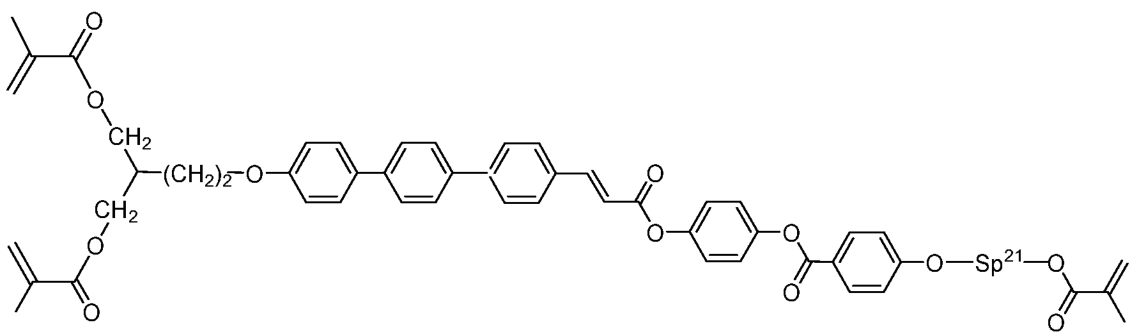

I-5-1a-1

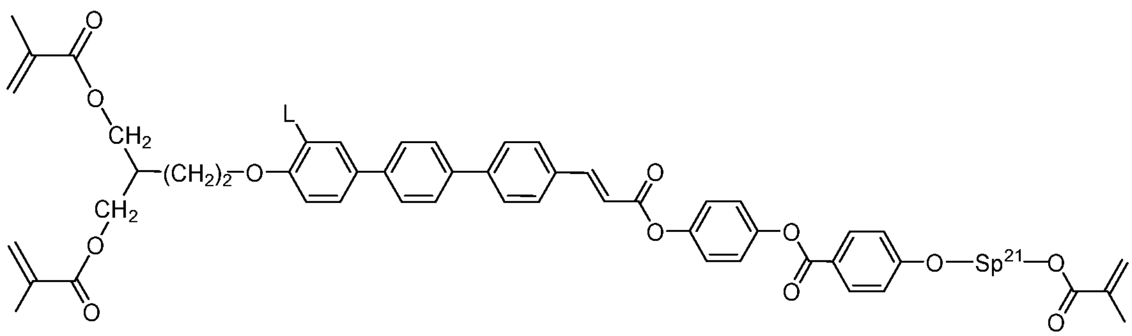

I-5-1a-2

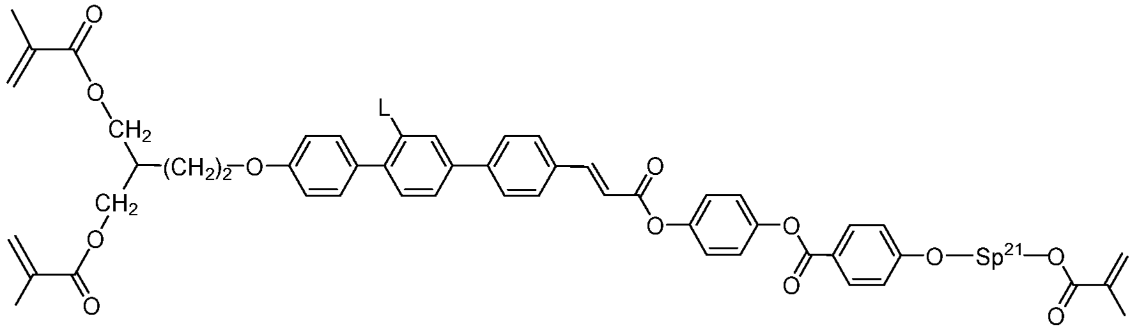

I-5-1a-3

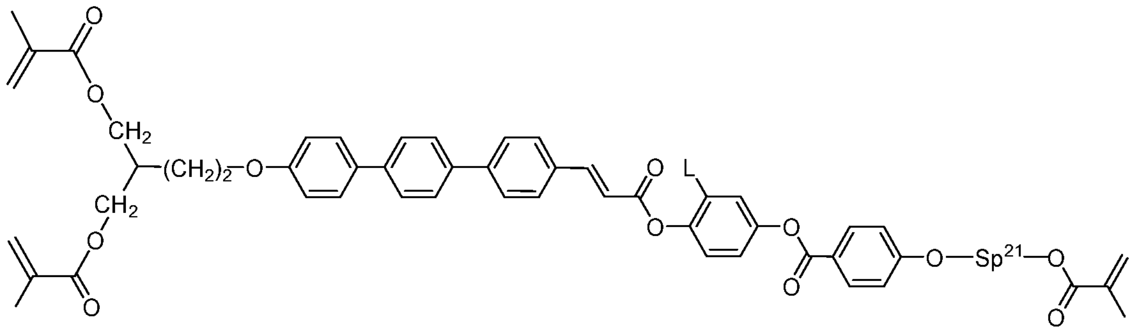

I-5-1a-4

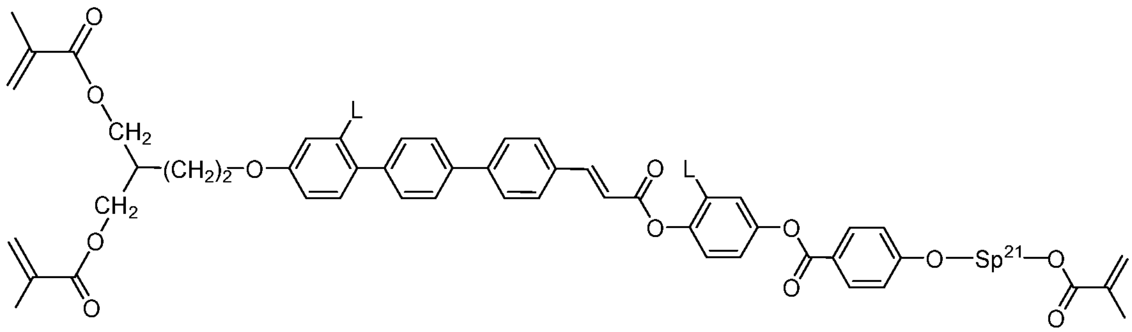

I-5-1a-5

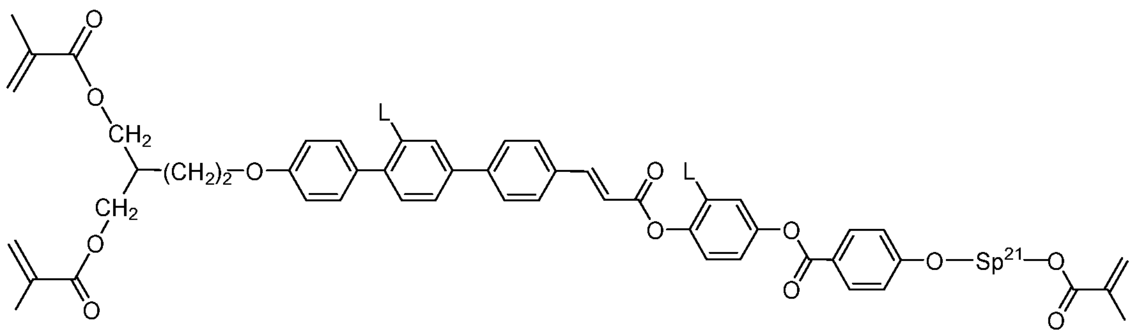

I-5-1a-6

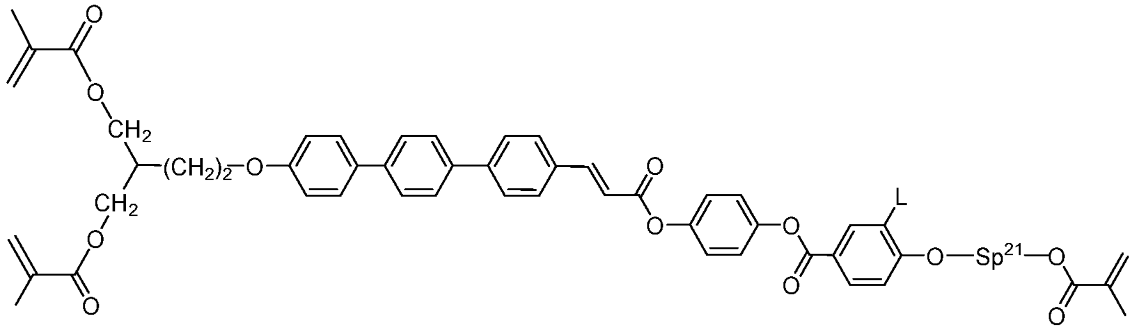

I-5-1a-7

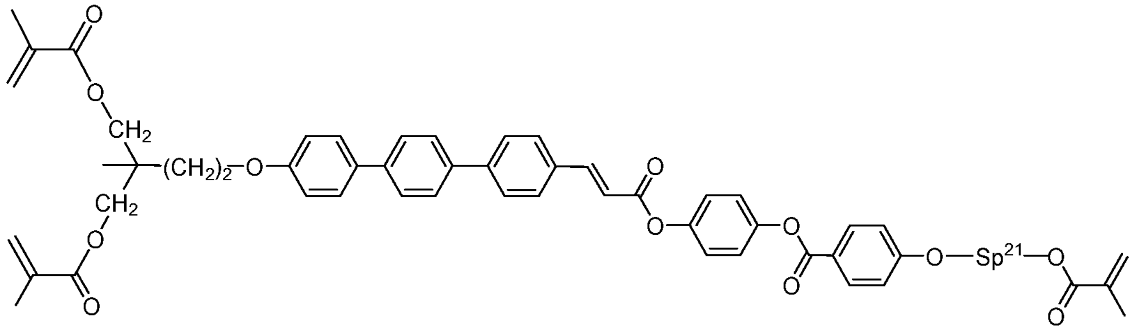

I-5-1a-8

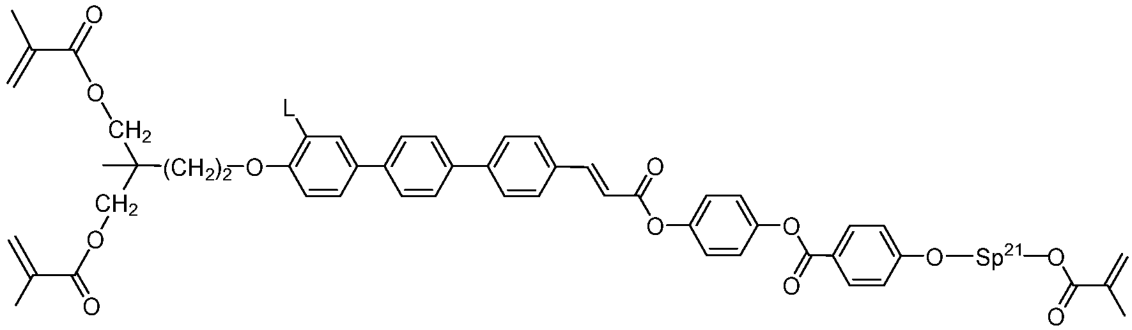

I-5-1a-9

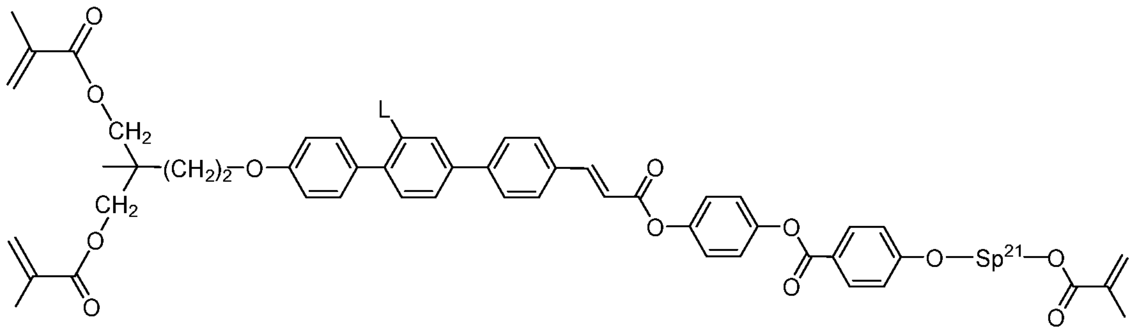

I-5-1a-10

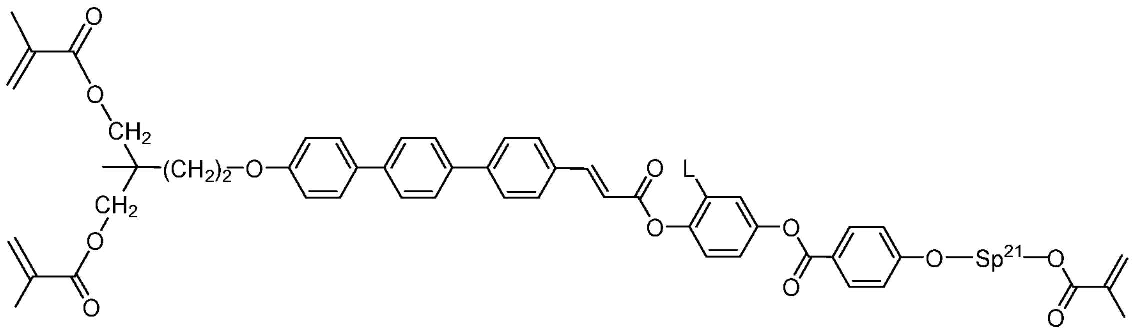

I-5-1a-11

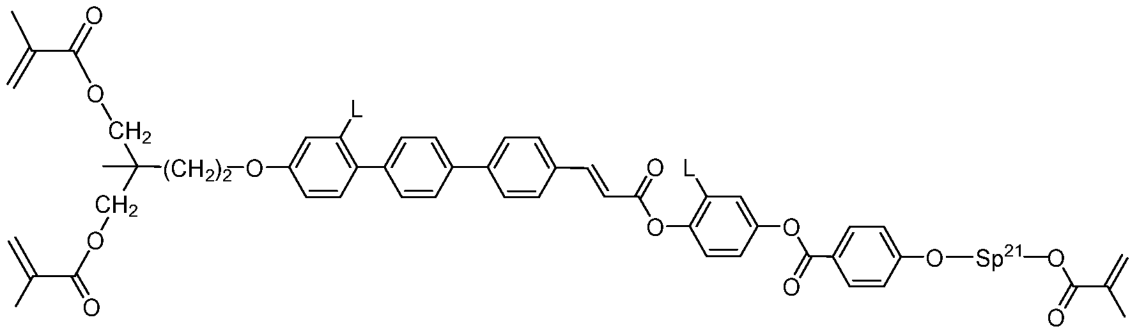

I-5-1a-12

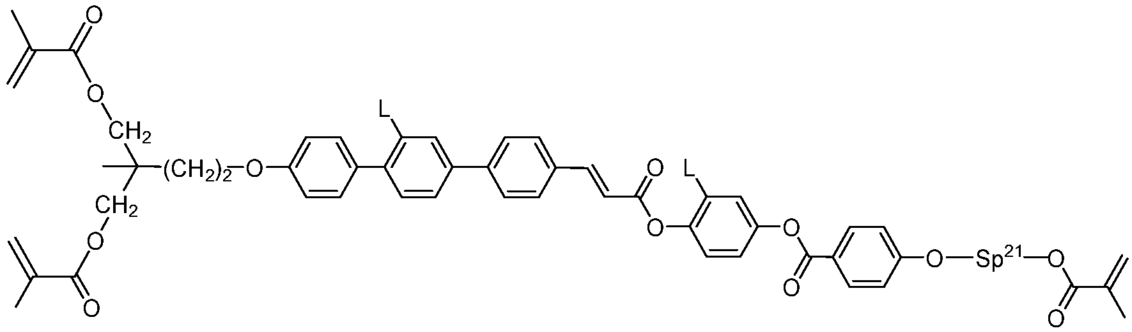

I-5-1a-13

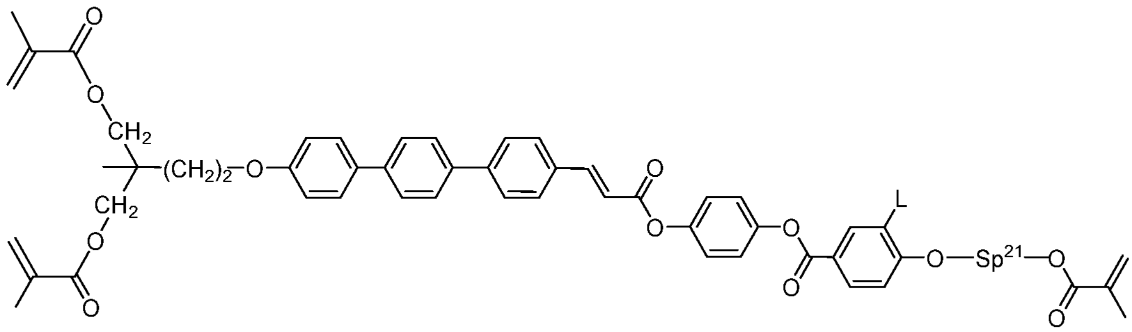

I-5-1a-14

dans lesquelles

L désigne chacun et indépendamment F, Cl, alcoxy ou alkyle ayant tous deux de 1 à 6 atomes de C,
$Sp^{21}$ désigne $-S^1-O-A^{Sp}$, ou $-S^1-O-A^{Sp}-O-S^2-$ où $S^1$ est propylène, butylène, pentylène, hexylène, heptylène, octylène, nonylène, décylène, undécylène, dodécylène, $S^2$ est propylène, butylène, pentylène, hexylène,

heptylène, octylène, nonylène, décylène, undécylène, dodécylène,
$A^{Sp}$ désigne ou

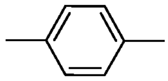

,

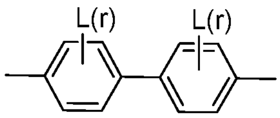

,

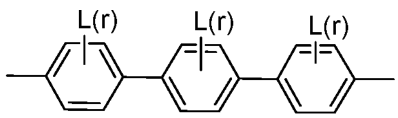

r désigne 0 ou 1.

**5.** Utilisation de composés de formule I selon l'une ou plusieurs parmi les revendications 1 à 4, dans un mélange de cristaux liquides.

**6.** Mélange de cristaux liquides, **caractérisé en ce qu'**il comprend un composant A) comprenant un ou plusieurs composés de formule I selon l'une ou plusieurs parmi les revendications 1 à 5, et un composant à cristaux liquides B), comprenant un ou plusieurs composés mésogènes ou à cristaux liquides.

**7.** Mélange de cristaux liquides selon la revendication 6, **caractérisé en ce que** la concentration totale en composés de formule I dans le mélange se trouve dans la plage allant de 0,01 à 10% en poids.

**8.** Mélange de cristaux liquides selon la revendication 6 ou 7, **caractérisé en ce qu'**il comprend en outre un composant polymérisable C) comprenant un ou plusieurs composés mésogènes polymérisables ou non mésogènes polymérisables.

**9.** Mélange de cristaux liquides selon l'une ou plusieurs parmi les revendications 6 à 8, **caractérisé en ce que** le mélange hôte de LC présente une anisotropie diélectrique négative.

**10.** Mélange de cristaux liquides selon la revendication 9, **caractérisé en ce que** le mélange hôte de LC comprend un ou plusieurs composés choisis parmi les formules suivantes :

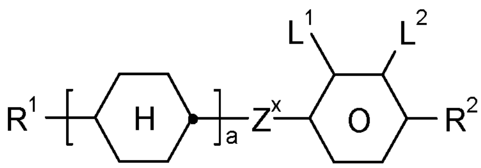

CY

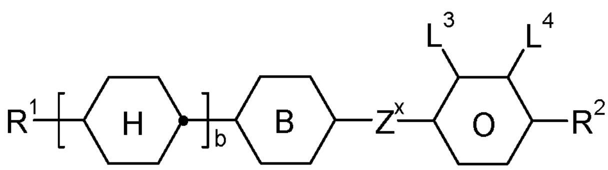

PY

dans lesquelles

a vaut 1 ou 2,
b vaut 0 ou 1,

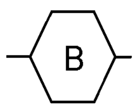

désigne

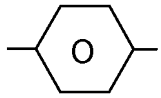 ou 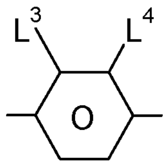

$R^1$ et $R^2$ désignent chacun, indépendamment l'un de l'autre, alkyle ayant de 1 à 12 atomes de C, où, de plus, un ou deux groupements $CH_2$ non adjacents peuvent être remplacés, indépendamment l'un de l'autre, par

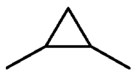, 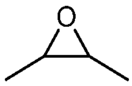, 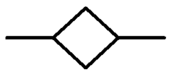, 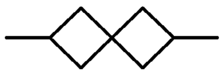,

$-C{\equiv}C-$, $-CF_2O-$, $-OCF_2-$,

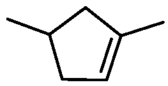, 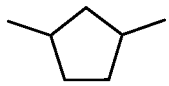,

-CH=CH-, -O-, -CO-O- ou -O-CO- de telle façon que les atomes de O ne soient pas liés directement l'un à l'autre,
$Z^x$ désigne -CH=CH-, $-CH_2O-$, $-OCH_2-$, $-CF_2O-$ , $-OCF_2-$, -O-, $-CH_2-$, $-CH_2CH_2-$ ou une liaison simple,
$L^{1-4}$ désignent chacun, indépendamment les uns des autres, F, Cl, $OCF_3$, $CF_3$, $CH_3$, $CH_2F$, $CHF_2$.

**11.** Mélange de cristaux liquides selon l'une ou plusieurs parmi les revendications 6 à 8, **caractérisé en ce que** le mélange hôte de LC présente une anisotropie diélectrique positive.

**12.** Mélange de cristaux liquides selon la revendication 11, **caractérisé en ce que** le mélange hôte de LC comprend un ou plusieurs composés choisis dans le groupe constitué par les composés de formules II et III,

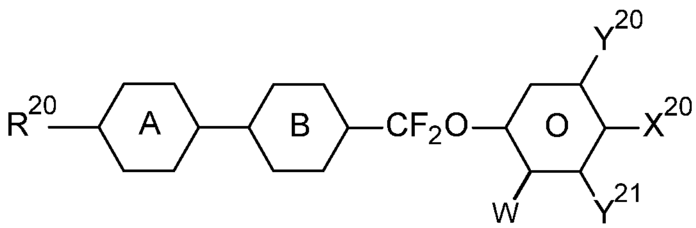

II

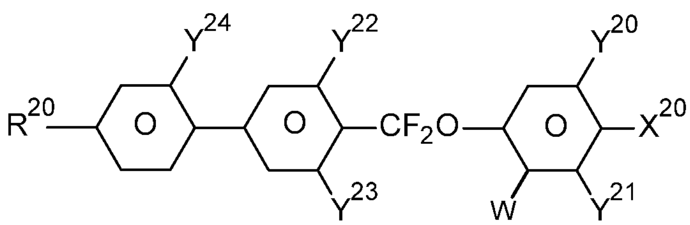

III

dans lesquelles

$R^{20}$ désignent chacun, de manière identique ou différente, un radical alkyle ou alcoxy halogéné ou non substitué ayant de 1 à 15 atomes de C, où, de plus, un ou plusieurs groupements $CH_2$ dans ces radicaux peuvent chacun être remplacés, indépendamment les uns des autres, par

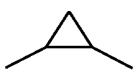,

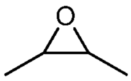, 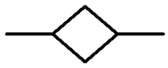, 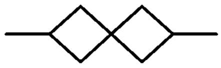, 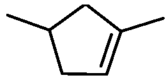,

$-C{\equiv}C-$, $-CF_2O-$, $-OCF_2-$, $-CH{=}CH-$, $-O-$, $-CO-O-$

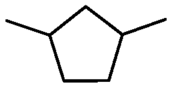,

ou -O-CO- de telle façon que les atomes de O ne soient pas liés directement l'un à l'autre,

$X^{20}$ désignent chacun, de manière identique ou différente, F, Cl, CN, SFs, SCN, NCS, un radical alkyle halogéné, un radical alcényle halogéné, un radical alcoxy halogéné ou un radical alcényloxy halogéné, chacun ayant jusqu'à 6 atomes de C, et

$Y^{20-24}$ désignent chacun, de manière identique ou différente, H ou F,

W désigne H, méthyle, éthyle, méthoxy ou éthoxy, désignent chacun, de manière identique ou différente,

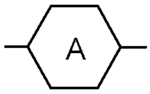 et 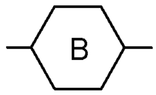

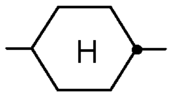,

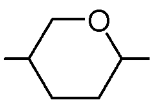 ou 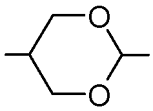.

**13.** Mélange de cristaux liquides selon la revendication 11 ou 12, **caractérisé en ce qu'**il comprend un ou plusieurs composés choisis dans le groupe constitué par les composés de formules XI et XII

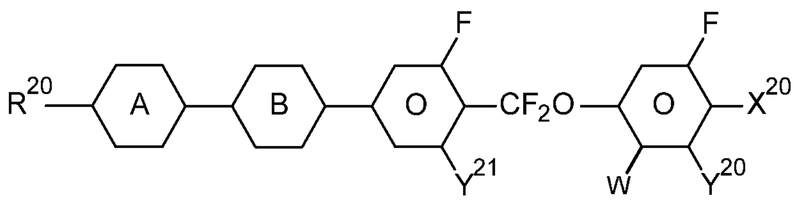 XI

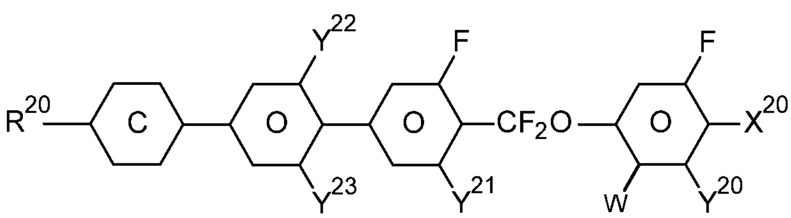 XII

dans lesquelles $R^{20}$, $X^{20}$, W et $Y^{20-23}$ revêtent les significations indiquées dans la formule III selon la revendication 12, et

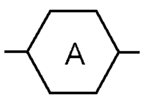 et 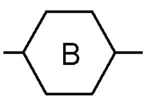

désignent chacun, indépendamment l'un de l'autre,

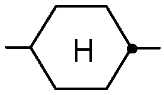 ,

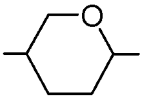 ou 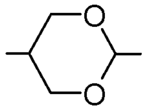

et

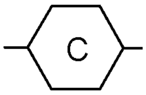

désigne

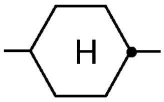 , 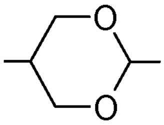 , 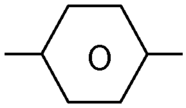

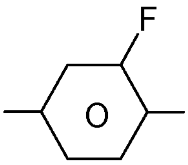 ou 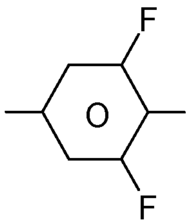

**14.** Mélange de cristaux liquides selon l’une ou plusieurs parmi les revendications 6 à 13, **caractérisé en ce que** le mélange hôte de LC comprend un ou plusieurs composés de formule suivante :

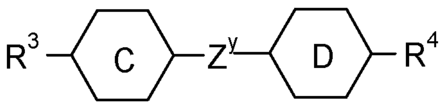 ZK

dans laquelle les radicaux individuels revêtent les significations suivantes :

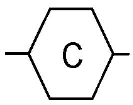

désigne

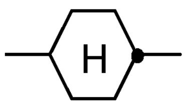 , 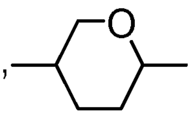 , 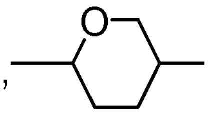 ,

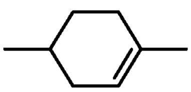 ou 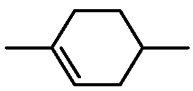 ,

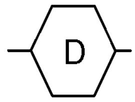

désigne

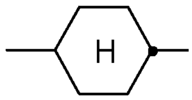 ou 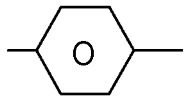 ,

$R^3$ et $R^4$ désignent chacun, indépendamment l'un de l'autre, alkyle ayant de 1 à 12 atomes de C, où, de plus, un ou deux groupements $CH_2$ non adjacents peuvent être remplacés, indépendamment l'un de l'autre, par

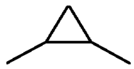

, 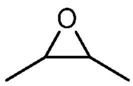 , 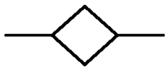 , 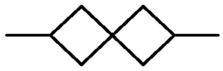 , 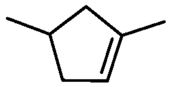 ,

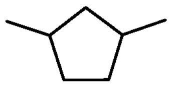 ,

$-C \equiv C-$, $-CF_2O-$, $-OCF_2-$, $-CH=CH-$, $-O-$, $-CO-O-$ ou $-O-CO-$ de telle façon que les atomes de O ne soient pas liés directement l'un à l'autre,

$Z^y$ désigne $-CH_2CH_2-$, $-CH=CH-$, $-CF_2O-$, $-OCF_2-$, $-CH_2O-$, $-OCH_2-$, $-CO-O-$, $-O-CO-$, $-C_2F_4-$, $-CF=CF-$, $-CH=CH-CH_2O-$ ou une liaison simple.

**15.** Mélange de cristaux liquides selon l'une ou plusieurs parmi les revendications 6 à 14, **caractérisé en ce que** le mélange hôte de LC comprend un ou plusieurs composés de formules suivantes

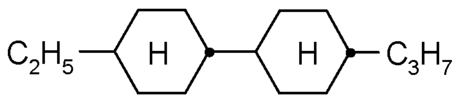 ZK1a

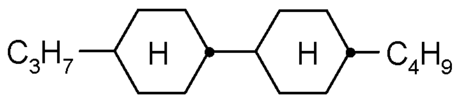 ZK1b

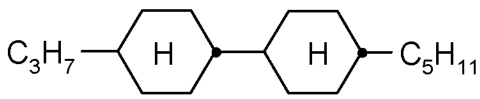 ZK1c

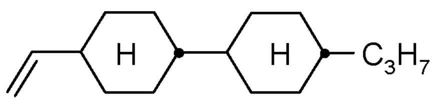 ZK3a

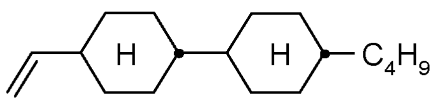 ZK3b

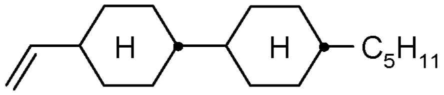

ZK3c

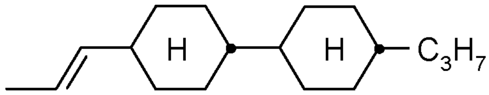

ZK3d

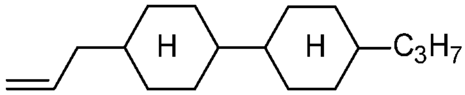

ZK3e

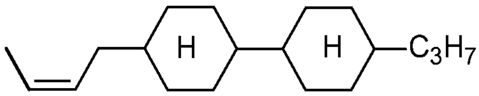

ZK3f

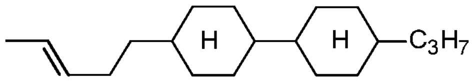

ZK3g

dans lesquelles les groupements propyle, butyle et pentyle sont des groupements à chaîne linéaire.

**16.** Mélange de cristaux liquides selon l'une ou plusieurs parmi les revendications 6 à 15, **caractérisé en ce que** le mélange hôte de LC comprend un ou plusieurs composés choisis parmi les formules suivantes :

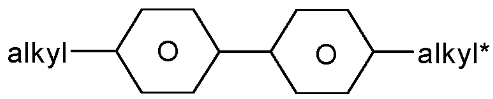

B1

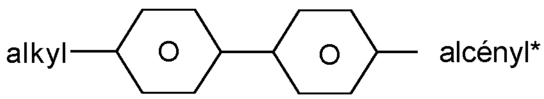

B2

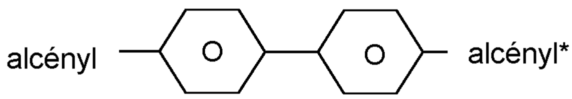

B3

dans lesquelles alkyl et alkyl* désignent chacun, indépendamment l'un de l'autre, un radical alkyle à chaîne linéaire ayant 1-6 atomes de C, et alcényl et alcényl* désignent chacun, indépendamment l'un de l'autre, un radical alcényle à chaîne linéaire ayant 2-6 atomes de C.

**17.** Mélange de cristaux liquides selon l'une ou plusieurs parmi les revendications 6 à 16, **caractérisé en ce que** le mélange hôte de LC comprend un ou plusieurs composés choisis parmi les formules suivantes :

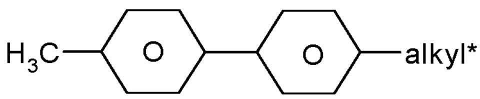

B1a

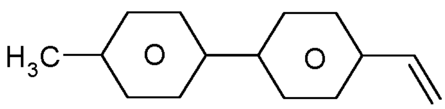

B2a

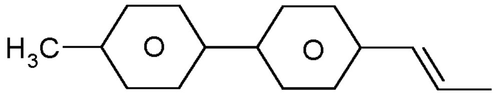

B2b

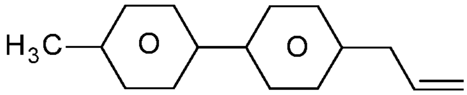

B2c

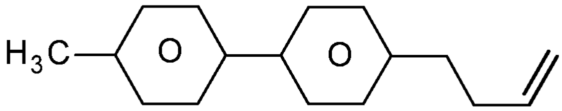

B2d

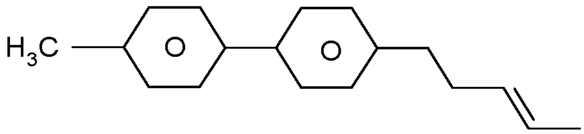

B2e

dans lesquelles alkyl* désigne un radical alkyle ayant 1-6 atomes de C.

**18.** Utilisation du mélange de cristaux liquides selon l'une ou plusieurs parmi les revendications 6 à 17, pour la fabrication d'un affichage à cristaux liquides.

**19.** Procédé de fabrication d'un affichage à cristaux liquides, comprenant au moins les étapes :

- de mise à disposition d'un premier substrat qui comporte une électrode de pixel et une électrode commune pour la génération d'un champ électrique sensiblement parallèle à une surface du premier substrat dans la région de pixel ;
- de mise à disposition d'un deuxième substrat, le deuxième substrat étant disposé à l'opposé du premier substrat ;
- d'interposition d'un mélange de cristaux liquides selon l'une ou plusieurs parmi les revendications 6 à 17;
- d'irradiation du mélange de cristaux liquides par une lumière polarisée linéairement, conduisant au photo-alignement du cristal liquide ;
- de durcissement des composés polymérisables du mélange de cristaux liquides par irradiation par de la lumière ultraviolette ou de la lumière visible ayant une longueur d'onde de 450 nm ou moins.

**20.** Procédé selon la revendication 19, **caractérisé en ce que** la lumière polarisée linéairement est une lumière ultraviolette ou une lumière visible ayant une longueur d'onde de 450 nm ou moins.

**21.** Affichage, pouvant être obtenu par un procédé selon la revendication 19 ou 20.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10036847 A
- EP 1170626 A2
- US 6861107 B
- US 7169449 B
- US 20040191428 A1
- US 20060066793 A1
- US 20060103804 A1
- US 6177972 B
- WO 2010089092 A1
- WO 2012104008 A
- WO 2012038026 A
- EP 0763552 A
- WO 9949360 A
- WO 0005189 A
- GB 2306470 A
- WO 2020245084 A1
- WO 2019206791 A1
- WO 2017102068 A1
- WO 2018008581 A1
- WO 2018139507 A1
- WO 2017102068 A
- JP 20066232809 B
- EP 1378557 A1
- JP 7181439 A
- EP 0667555 A
- EP 0673986 A
- DE 19509410
- DE 19528106
- DE 19528107
- WO 9623851 A
- WO 9628521 A
- WO 2012079676 A


### Non-patent literature cited in the description


- **S.H. JUNG et al.** *Jpn. J. Appl. Phys.*, 2004, vol. 43 (3), 1028
- **S.H. LEE et al.** *Appl. Phys. Lett.*, 1998, vol. 73 (20), 2882-2883
- **S.H. LEE et al.** *Liquid Crystals*, 2012, vol. 39 (9), 1141-1148
- **T.-J- CHEN et al.** *Jpn. J. Appl. Phys.*, 2006, vol. 45, 2702-2704
- **S. H. KIM** ; **L.-C- CHIEN**. *Jpn. J. Appl. Phys.*, 2004, vol. 43, 7643-7647
- *Appl. Phys. Lett.*, 1999, vol. 75 (21), 3264
- *Optics Express*, 2004, vol. 12 (7), 1221
- **N.A. CLARK et al.** *Langmuir*, 2010, vol. 26 (22), 17482-17488
- **B.M.I. VAN DER ZANDE et al.** *Liquid Crystals*, June 2006, vol. 33 (6), 723-737
- **M.H. LEE et al.** *Liquid Crystals*, https://doi.org/10.1080/02678292.2018.1441459
- *Pure Appl. Chem.*, 2001, vol. 73 (5), 888
- **C. TSCHIERSKE** ; **G. PELZL** ; **S. DIELE**. *Angew. Chem.*, 2004, vol. 116, 6340-6368